(19) Europäisches Patentamt
European Patent Office
Office européen des brevets

(11) **EP 4 742 160 A1**

(12) **EUROPEAN PATENT APPLICATION**
published in accordance with Art. 153(4) EPC

(43) Date of publication:
**13.05.2026 Bulletin 2026/20**

(21) Application number: **24836096.8**

(22) Date of filing: **04.07.2024**

(51) International Patent Classification (IPC):
*G06T 9/00* (2006.01)    *H04N 19/52* (2014.01)
*H04N 19/54* (2014.01)

(52) Cooperative Patent Classification (CPC):
**G06T 9/00; H04N 19/52; H04N 19/54**

(86) International application number:
**PCT/JP2024/024204**

(87) International publication number:
**WO 2025/009584 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.07.2023 US 202363524990 P**

(71) Applicant: **Panasonic Intellectual Property
Corporation
of America
Torrance, CA 90504 (US)**

(72) Inventors:
• **SUGIO, Toshiyasu**
**Kadoma-shi, Osaka 571-0057 (JP)**
• **IGUCHI, Noritaka**
**Kadoma-shi, Osaka 571-0057 (JP)**
• **NISHI, Takahiro**
**Kadoma-shi, Osaka 571-0057 (JP)**
• **ITO, Atsushi**
**Kadoma-shi, Osaka 571-0057 (JP)**

(74) Representative: **Grünecker Patent- und
Rechtsanwälte
PartG mbB
Leopoldstraße 4
80802 München (DE)**

(54) **ENCODING METHOD, DECODING METHOD, ENCODING DEVICE, AND DECODING DEVICE**

(57)     An encoding method executed by an encoding device that encodes a motion vector of a vertex included in a three-dimensional mesh includes: determining on a per group basis, from among a plurality of predetermined prediction modes, a prediction mode to be used for determining a prediction vector which is a prediction value of the motion vector, the group being a unit for determining the prediction vector (S3701); and transmitting (i) information indicating the determined prediction mode and (ii) the total number of the plurality of predetermined prediction modes to a decoding device (S3702).

FIG. 150

```
          START
            │
            ▼
┌──────────────────────────────────────┐  ⟋S3701
│ Determine prediction mode on per group│
│  basis from plurality of predetermined│
│          prediction modes             │
└──────────────────────────────────────┘
            │
            ▼
┌──────────────────────────────────────┐  ⟋S3702
│  Transmit information indicating      │
│  prediction mode, total number of     │
│  predetermined prediction modes       │
│        to decoding device             │
└──────────────────────────────────────┘
            │
            ▼
           END
```

**Description**

[Technical Field]

The present disclosure relates to, for example, an encoding method.

[Background Art]

PTL 1 proposes a method and a device for encoding and decoding three-dimensional mesh data.

[Citation List]

[Patent Literature]

[PTL 1] Japanese Unexamined Patent Application Publication No. 2006-187015

[Summary of Invention]

[Technical Problem]

There is a demand for further improvement in an encoding or decoding process related to three-dimensional data. An object of the present disclosure is to improve the encoding or decoding process related to three-dimensional data.

[Solution to Problem]

An encoding method according to one aspect of the present invention is executed by an encoding device that encodes a motion vector of a vertex included in a three-dimensional mesh, and includes: determining on a per group basis, from among a plurality of predetermined prediction modes, a prediction mode to be used for determining a prediction vector which is a prediction value of the motion vector, the group being a unit for determining the prediction vector; and transmitting (i) information indicating the prediction mode determined and (ii) a total number of the plurality of predetermined prediction modes to a decoding device.

Note that these general or specific aspects may be implemented using a system, a device, an integrated circuit, a computer program, or a computer-readable recording medium such as a CD-ROM, or any combination of systems, devices, integrated circuits, computer programs, and recording media.

[Advantageous Effects of Invention]

The present disclosure can contribute toward improving processing of encoding three-dimensional data and the like.

[Brief Description of Drawings]

[FIG. 1]

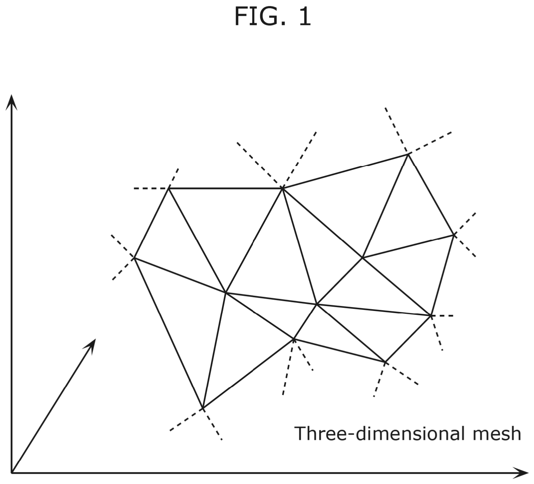

FIG. 1 is a conceptual diagram illustrating a three-dimensional mesh according to an embodiment.
[FIG. 2]

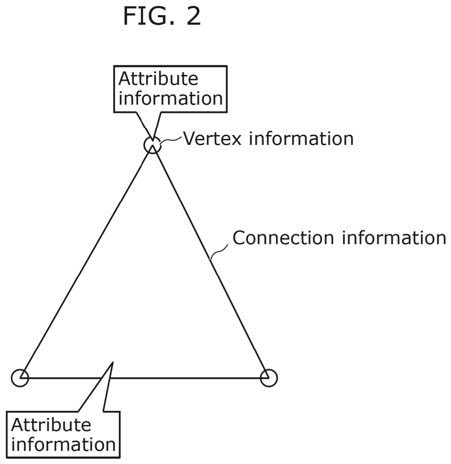

FIG. 2 is a conceptual diagram illustrating basic elements of the three-dimensional mesh according to the embodiment.
[FIG. 3]

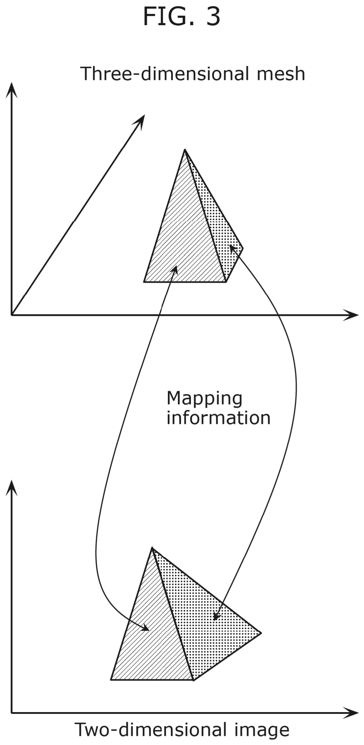

FIG. 3 is a conceptual diagram illustrating mapping according to the embodiment.
[FIG. 4]

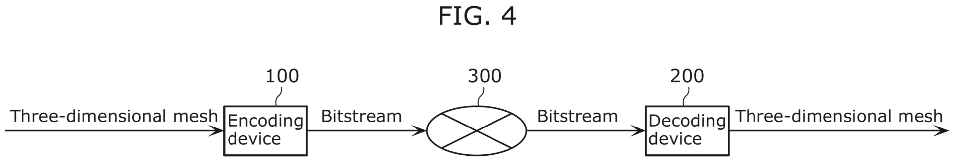

FIG. 4 is a block diagram illustrating a configuration example of an encoding/decoding system according to the embodiment.
[FIG. 5]

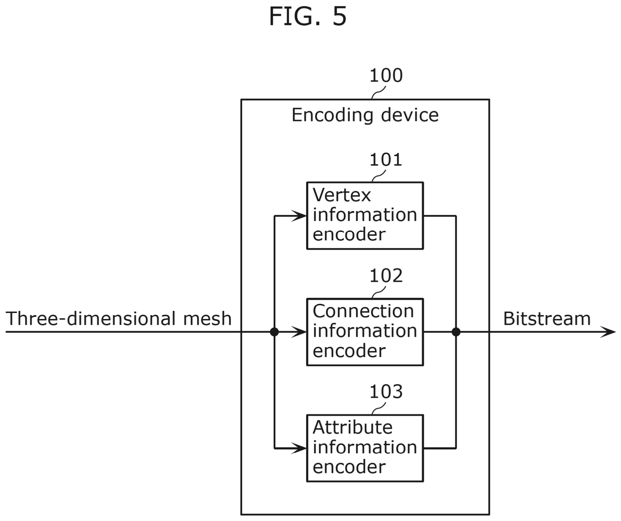

FIG. 5 is a block diagram illustrating a configuration example of an encoding device according to the embodiment.
[FIG. 6]

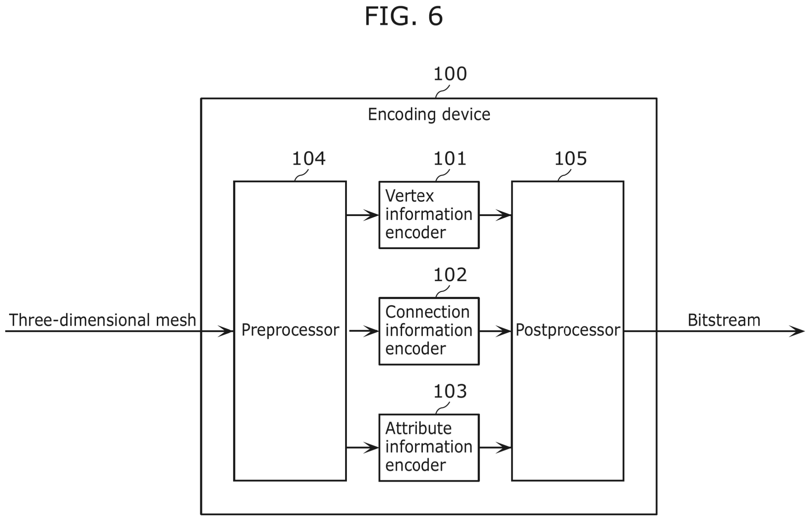

FIG. 6 is a block diagram illustrating another configuration example of the encoding device according to the embodiment.

[FIG. 7]

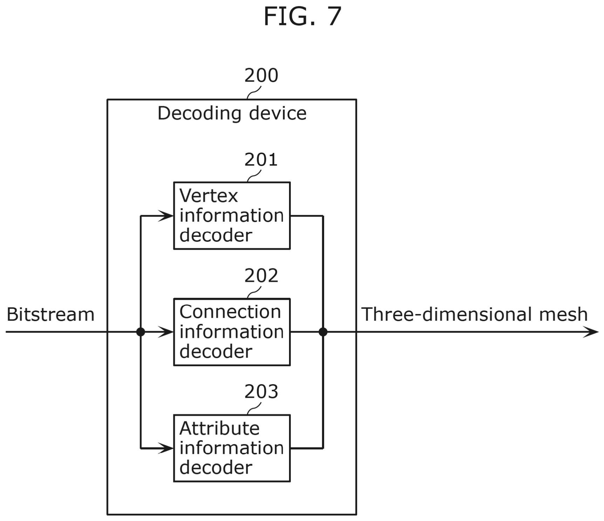

FIG. 7 is a block diagram illustrating a configuration example of a decoding device according to the embodiment.

[FIG. 8]

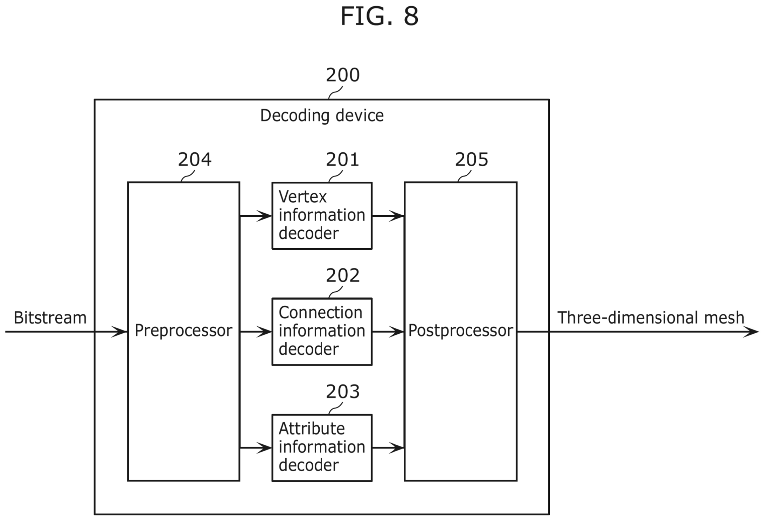

FIG. 8 is a block diagram illustrating another configuration example of the decoding device according to the embodiment.

[FIG. 9]

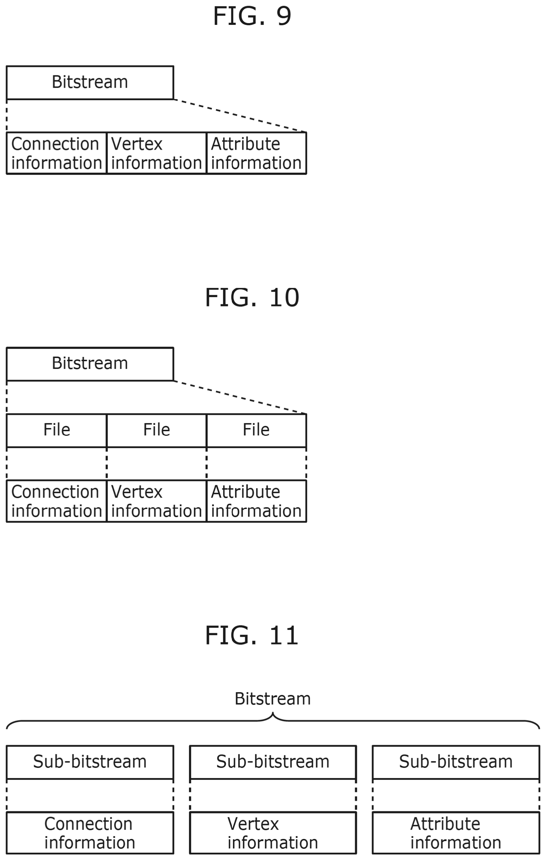

FIG. 9 is a conceptual diagram illustrating a configuration example of a bitstream according to the embodiment.

[FIG. 10]

FIG. 10 is a conceptual diagram illustrating another configuration example of the bitstream according to the embodiment.

[FIG. 11]

FIG. 11 is a conceptual diagram illustrating yet another configuration example of the bitstream according to the embodiment.

[FIG. 12]

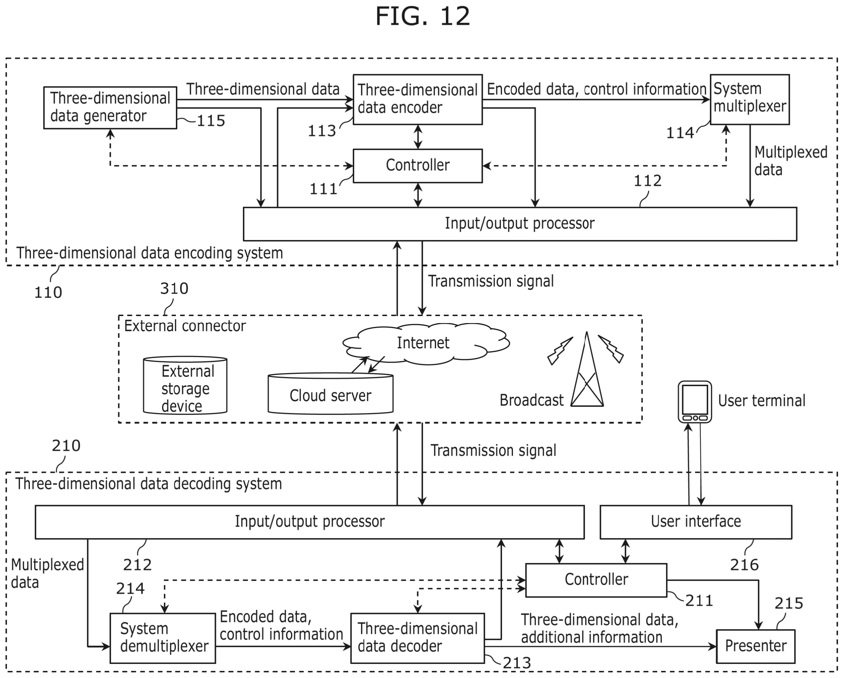

FIG. 12 is a block diagram illustrating a specific example of the encoding/decoding system according to the embodiment.

[FIG. 13]

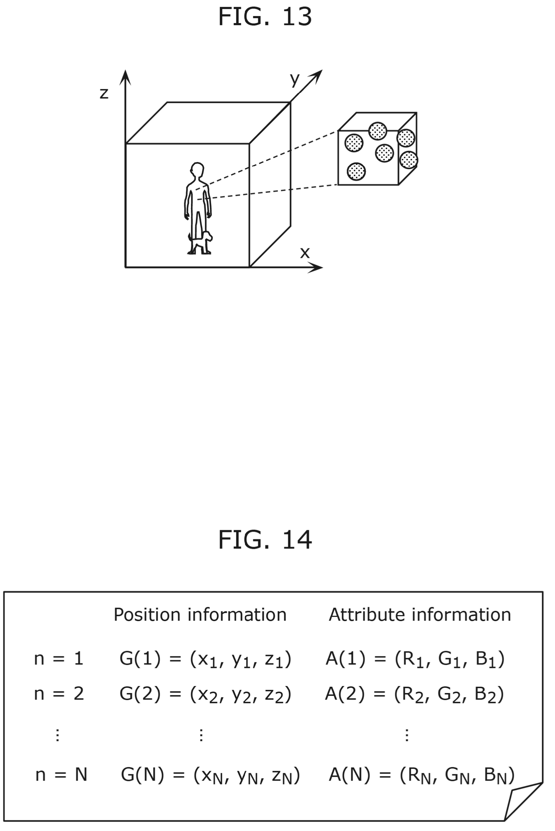

FIG. 13 is a conceptual diagram illustrating a configuration example of point cloud data according to the embodiment.

[FIG. 14]

FIG. 14 is a conceptual diagram illustrating a data file example of the point cloud data according to the embodiment.

[FIG. 15]

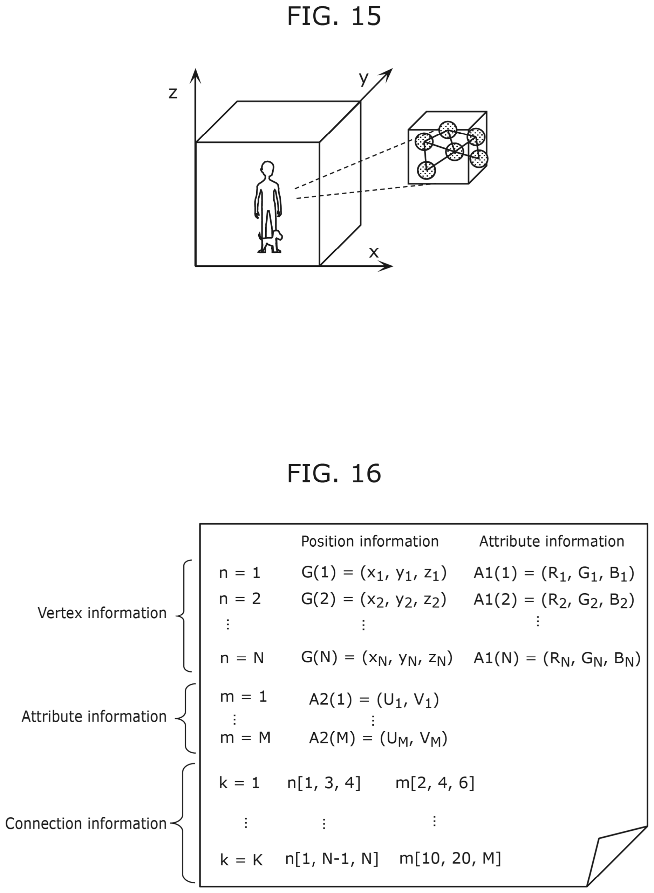

FIG. 15 is a conceptual diagram illustrating a configuration example of mesh data according to the embodiment.

[FIG. 16]

FIG. 16 is a conceptual diagram illustrating a data file example of the mesh data according to the embodiment.

[FIG. 17]

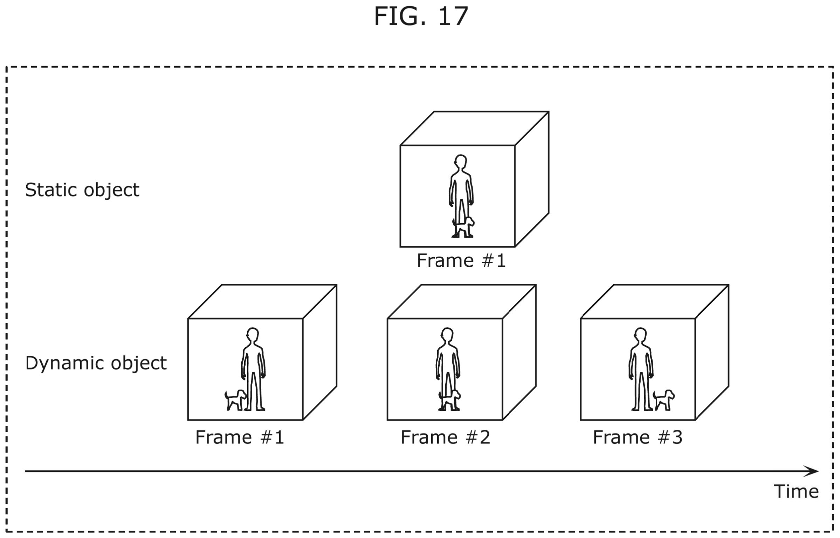

FIG. 17 is a conceptual diagram illustrating a type of three-dimensional data according to the embodiment.

[FIG. 18]

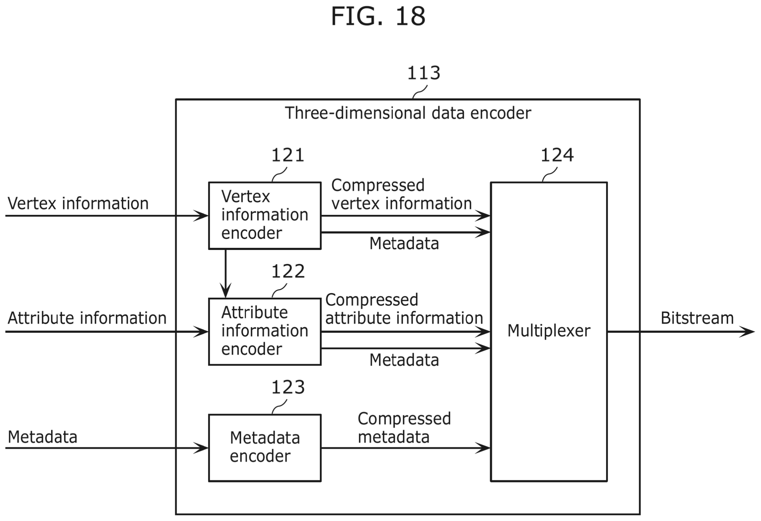

FIG. 18 is a block diagram illustrating a configuration example of a three-dimensional data encoder according to the embodiment.

[FIG. 19]

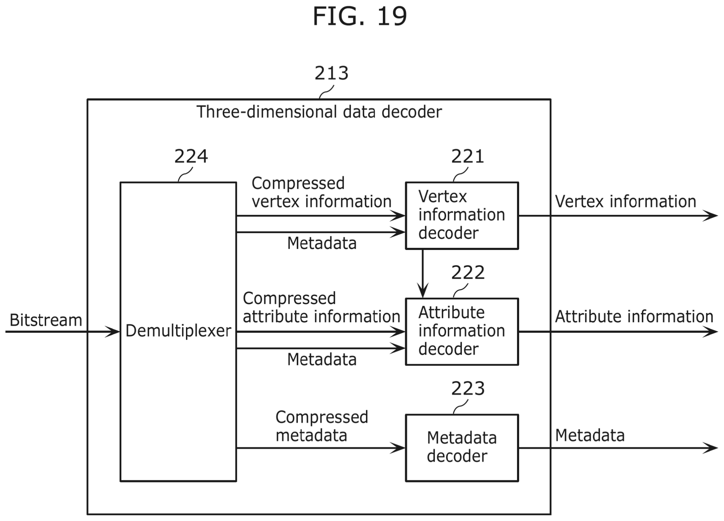

FIG. 19 is a block diagram illustrating a configuration example of a three-dimensional data decoder according to the embodiment.

[FIG. 20]

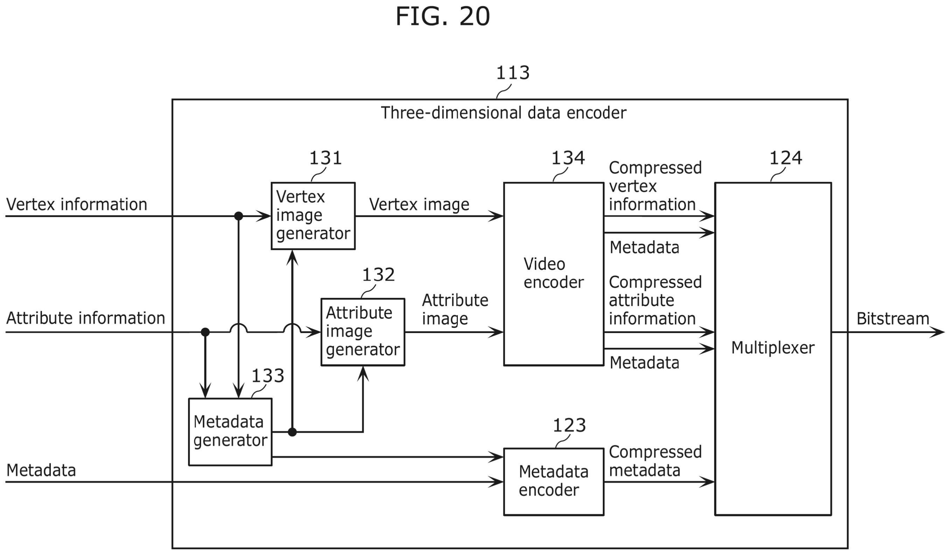

FIG. 20 is a block diagram illustrating another configuration example of the three-dimensional data encoder according to the embodiment.

[FIG. 21]

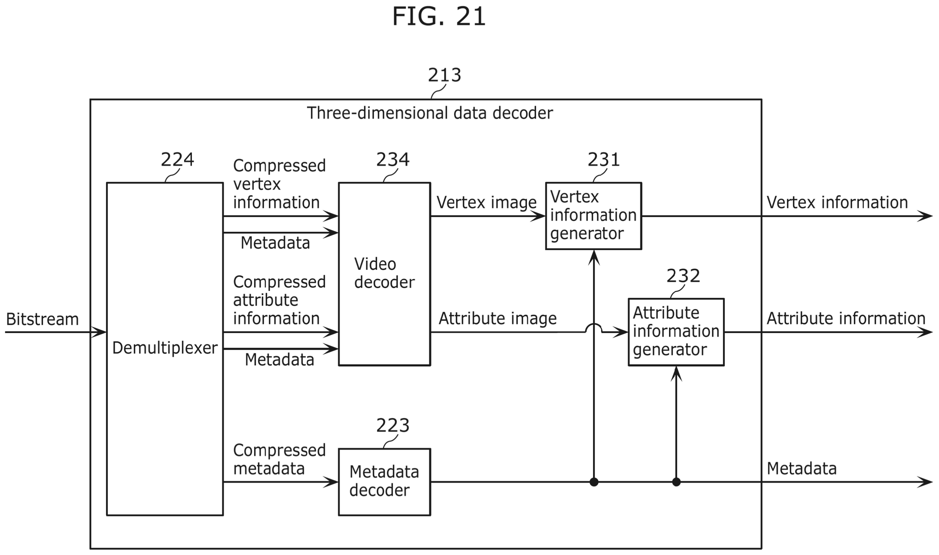

FIG. 21 is a block diagram illustrating another configuration example of the three-dimensional data decoder according to the embodiment.

[FIG. 22]

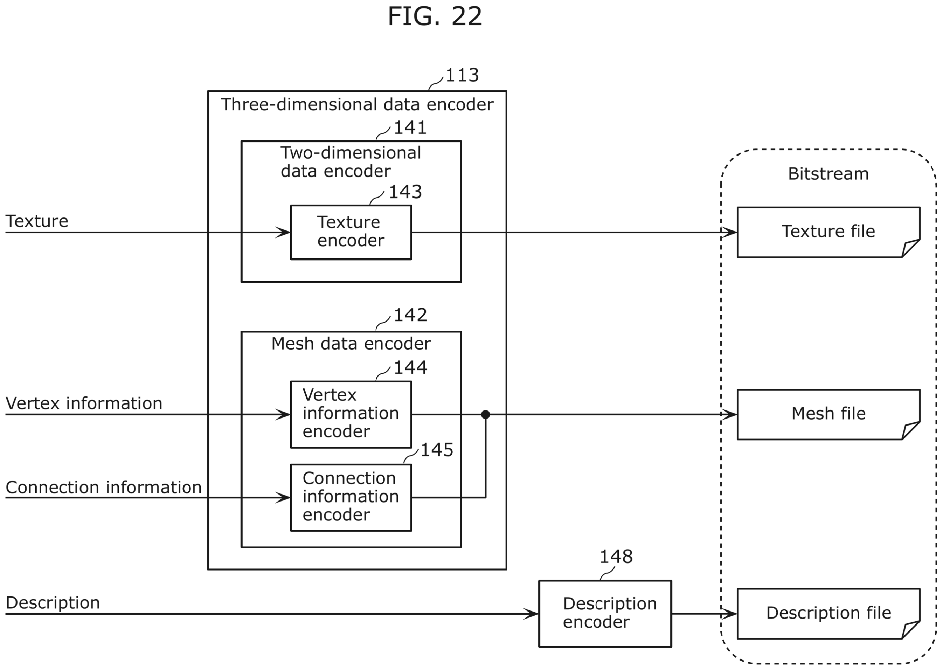

FIG. 22 is a conceptual diagram illustrating a specific example of encoding processing according to the embodiment.

[FIG. 23]

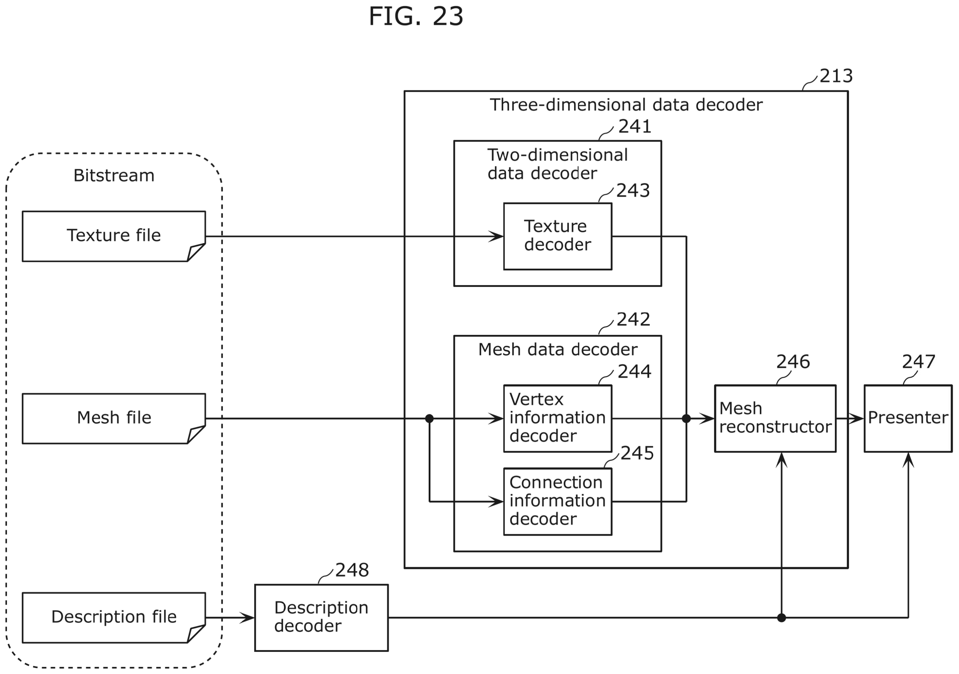

FIG. 23 is a conceptual diagram illustrating a specific example of decoding processing according to the embodiment.

[FIG. 24]

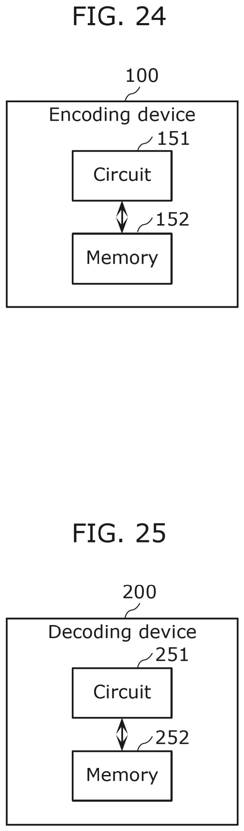

FIG. 24 is a block diagram illustrating an implementation example of the encoding device according to the embodiment.

[FIG. 25]

FIG. 25 is a block diagram illustrating an implementation example of the decoding device according to the embodiment.

[FIG. 26]

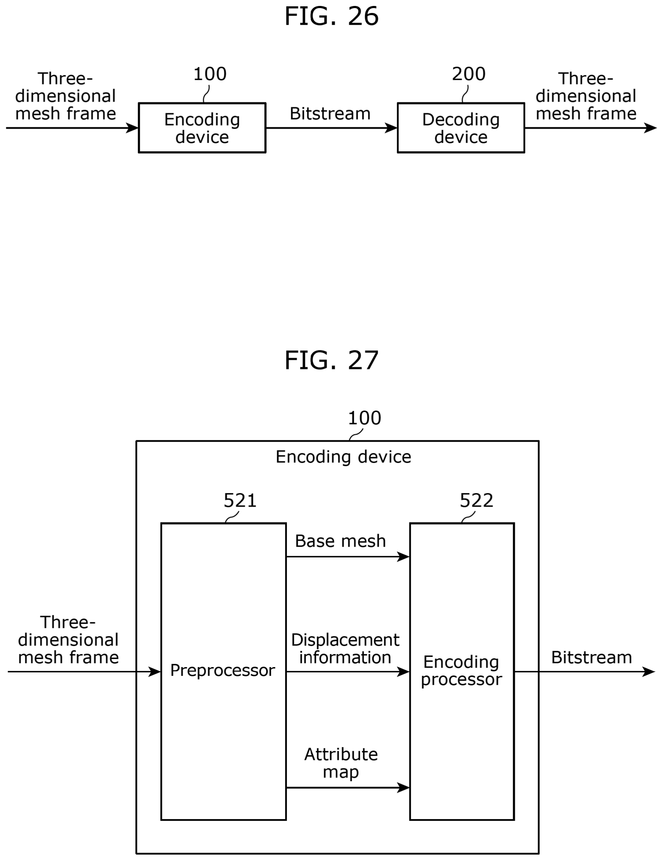

FIG. 26 is a block diagram illustrating a configuration example of the encoding/decoding system according to the embodiment.

[FIG. 27]

FIG. 27 is a block diagram illustrating another configuration example of the encoding device according to the embodiment.

[FIG. 28]

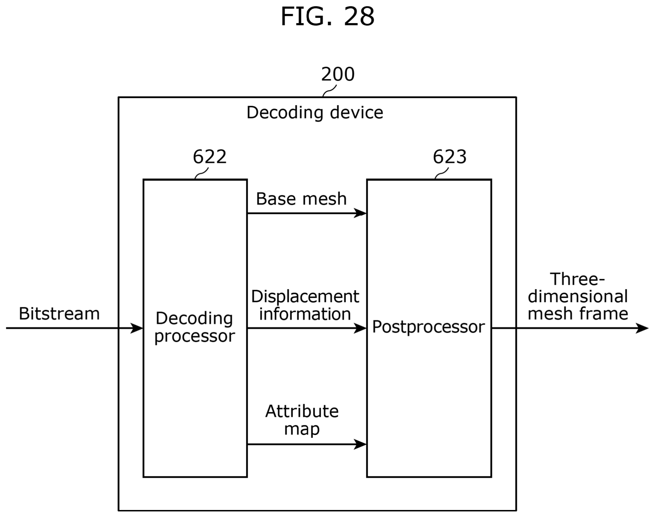

FIG. 28 is a block diagram illustrating another configuration example of the decoding device according to the embodiment.

[FIG. 29]

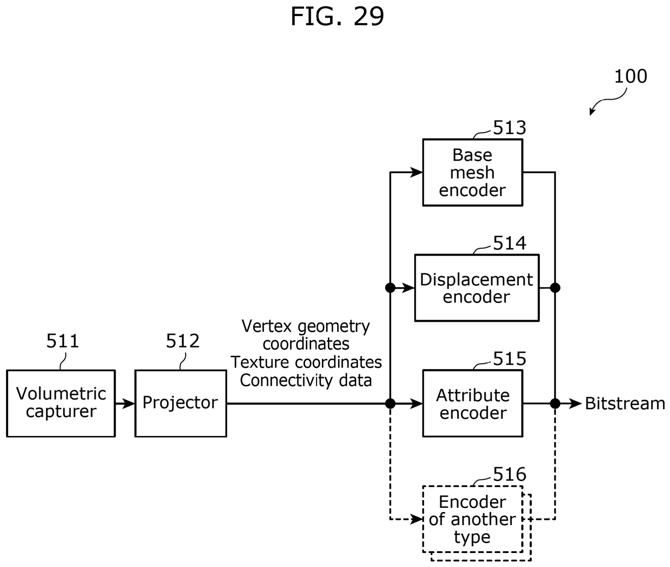

FIG. 29 is a block diagram illustrating yet another configuration example of the encoding device according to the embodiment.
[FIG. 30]

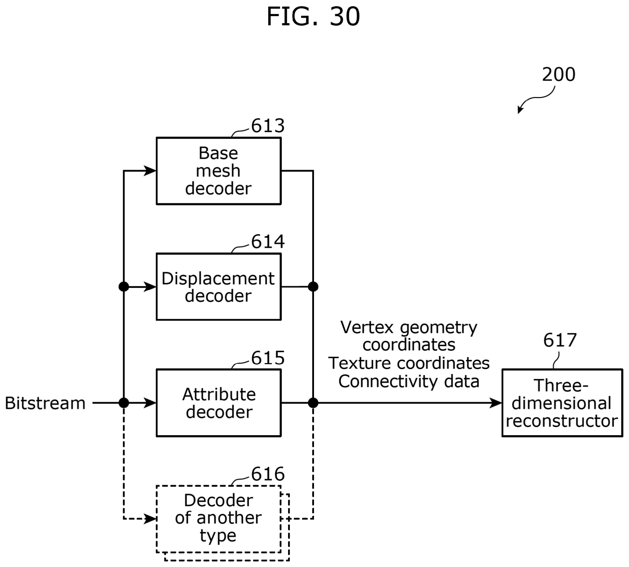

FIG. 30 is a block diagram illustrating yet another configuration example of the decoding device according to the embodiment.
[FIG. 31]

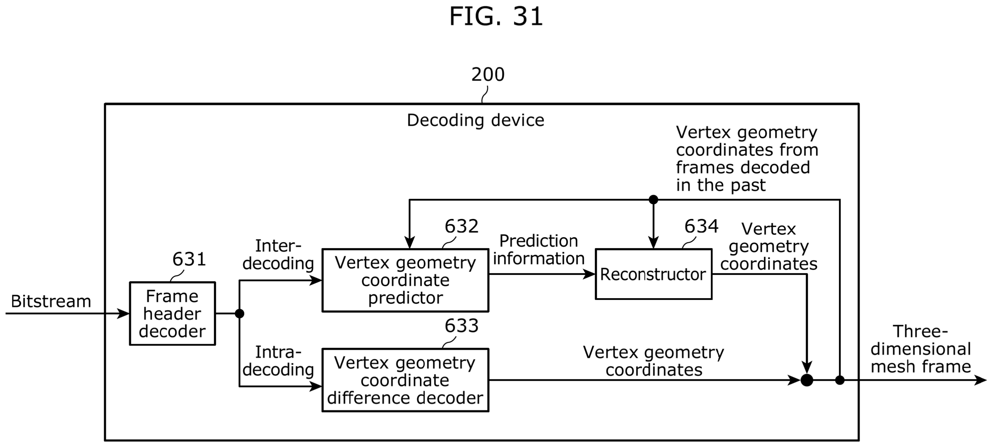

FIG. 31 is a block diagram illustrating a detailed configuration example of the decoding device according to the embodiment.
[FIG. 32]

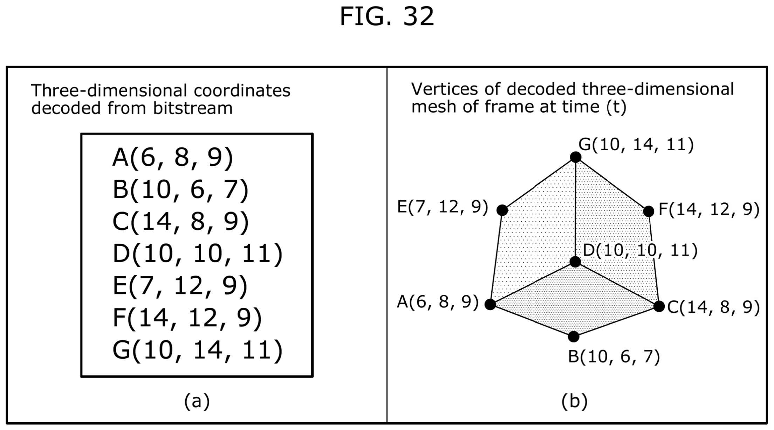

FIG. 32 is an explanatory diagram illustrating coordinates of vertices in a three-dimensional mesh according to the embodiment.
[FIG. 33]

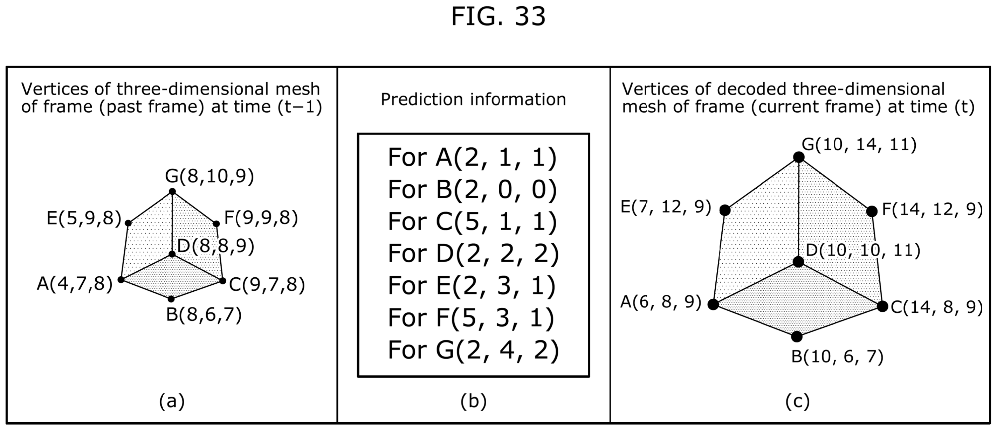

FIG. 33 is an explanatory diagram illustrating prediction information according to the embodiment.
[FIG. 34]

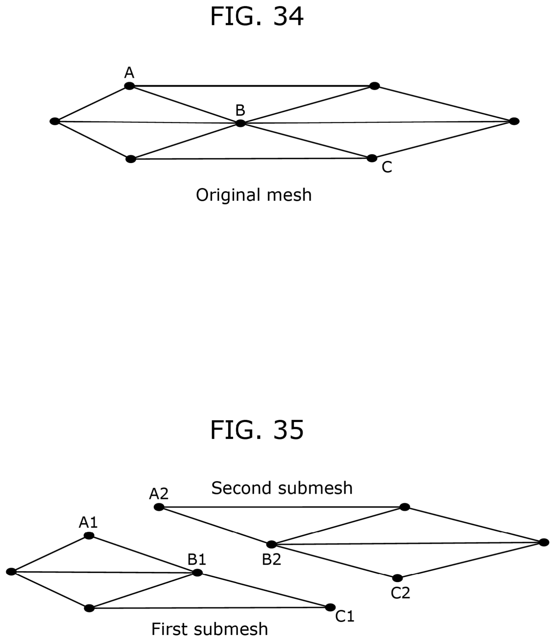

FIG. 34 is an explanatory diagram illustrating an example of a mesh according to the embodiment.
[FIG. 35]
FIG. 35 is an explanatory diagram illustrating an example of the division of a mesh into submeshes according to the embodiment.
[FIG. 36]

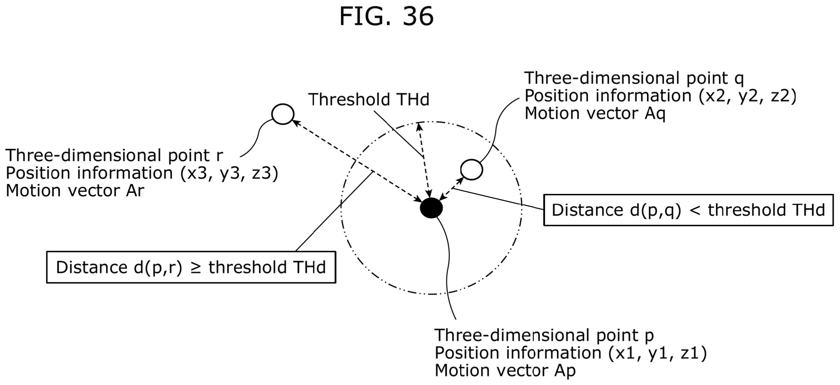

FIG. 36 is an explanatory diagram illustrating the positional relationship of three-dimensional points according to the embodiment.
[FIG. 37]

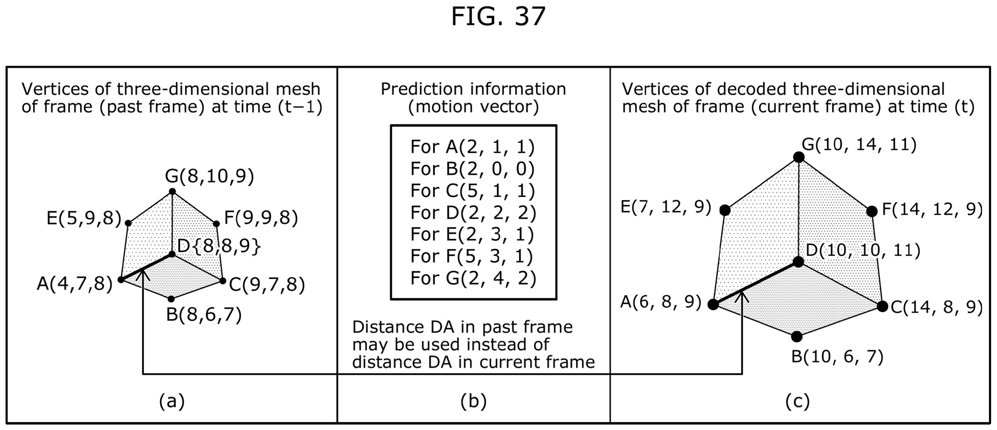

FIG. 37 is an explanatory diagram illustrating the distance between three-dimensional points according to the embodiment.
[FIG. 38]

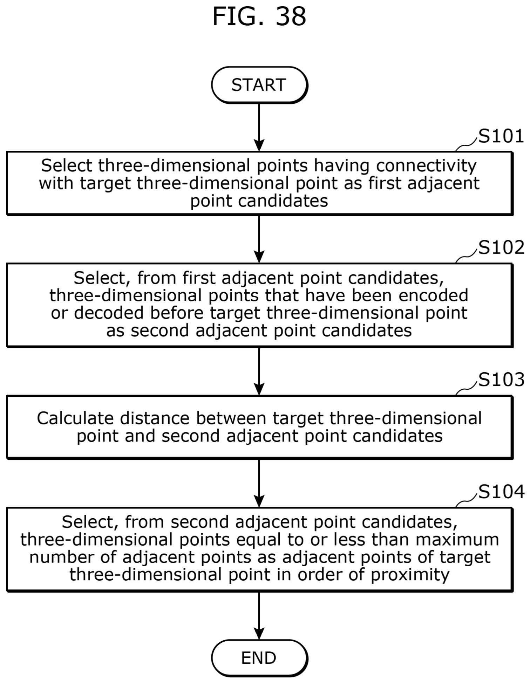

FIG. 38 is a flowchart illustrating processing for selecting adjacent points according to the embodiment.
[FIG. 39]

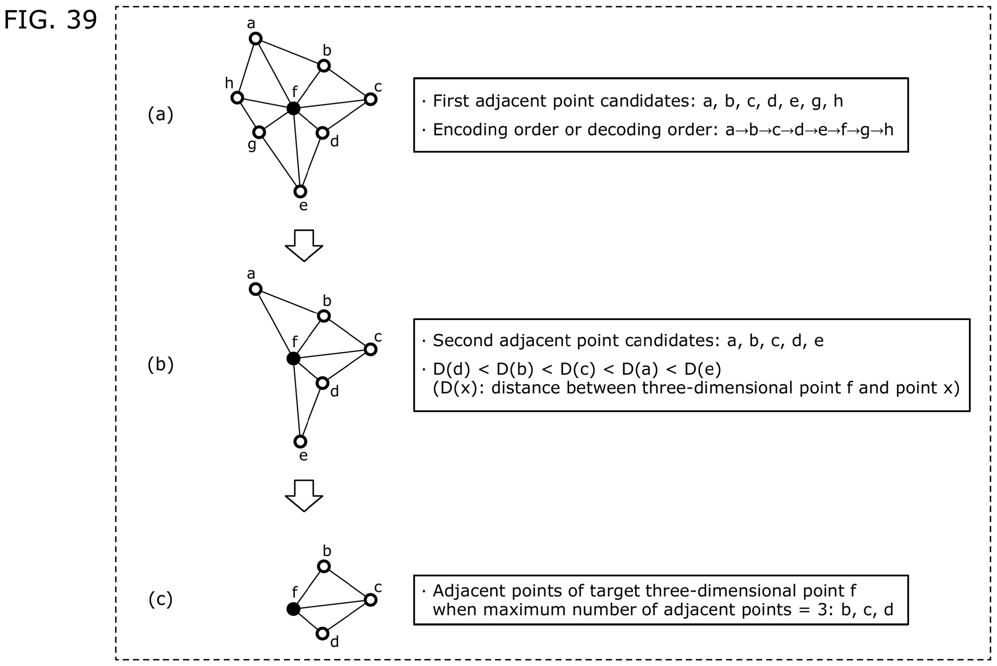

FIG. 39 is an explanatory diagram illustrating processing for selecting adjacent points according to the embodiment.
[FIG. 40]

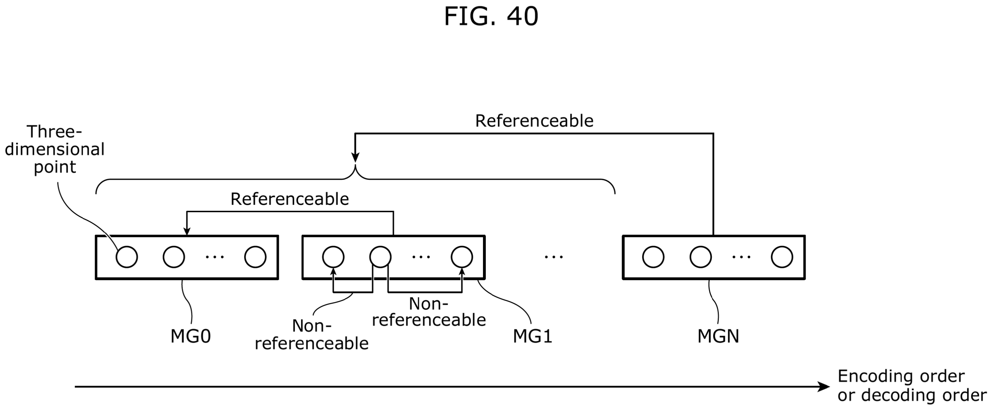

FIG. 40 illustrates a first example of reference destinations of motion groups according to the embodiment.
[FIG. 41]

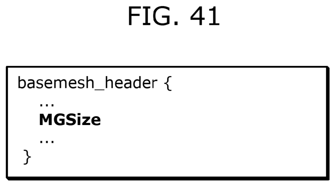

FIG. 41 illustrates an example of the syntax of a base mesh header according to the embodiment.
[FIG. 42]

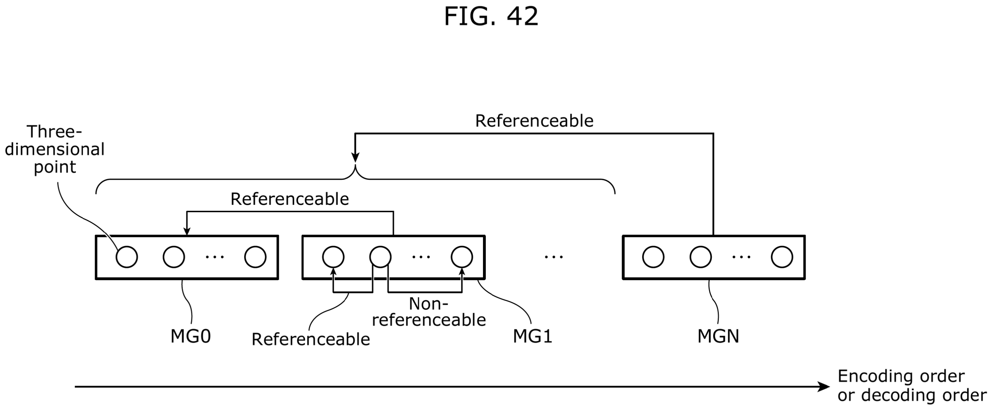

FIG. 42 illustrates a second example of reference destinations of motion groups according to the embodiment.
[FIG. 43]

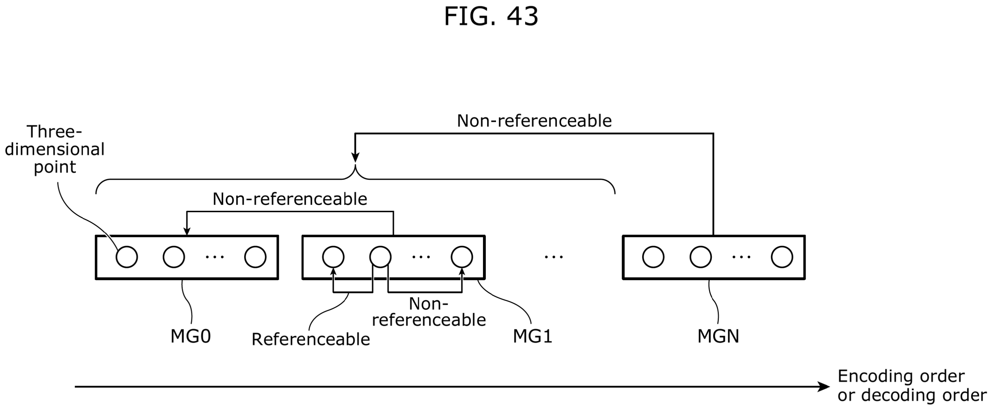

FIG. 43 illustrates a third example of reference destinations of motion groups according to the embodiment.
[FIG. 44]

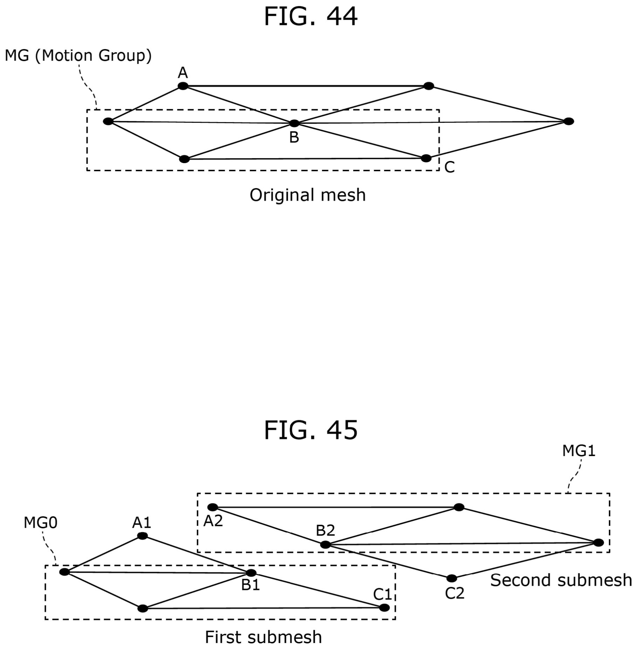

FIG. 44 is an explanatory diagram illustrating the relationship between vertices constituting a mesh and motion groups according to the embodiment.
[FIG. 45]
FIG. 45 is an explanatory diagram illustrating the relationship between vertices constituting a submesh and motion groups according to the embodiment.
[FIG. 46]

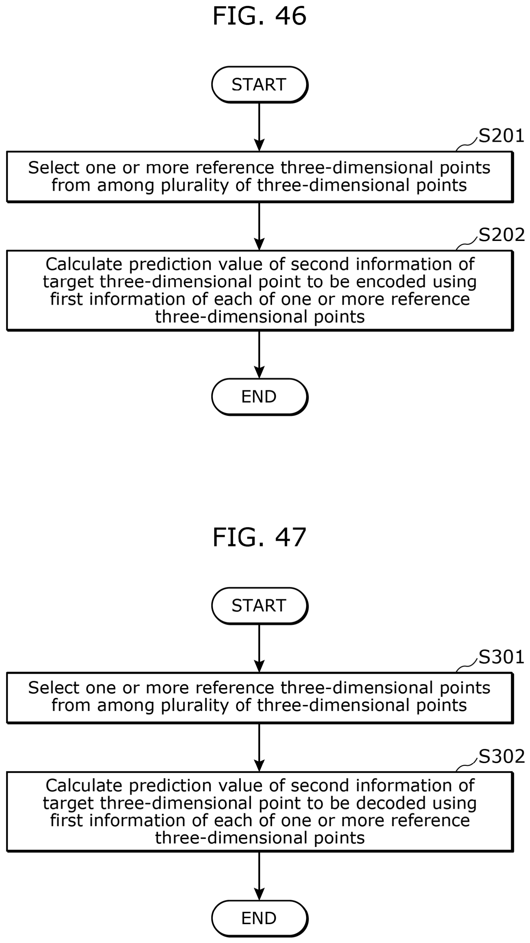

FIG. 46 is a flowchart illustrating an example of basic encoding processing according to the embodiment.
[FIG. 47]
FIG. 47 is a flowchart illustrating an example of basic decoding processing according to the embodiment.
[FIG. 48]

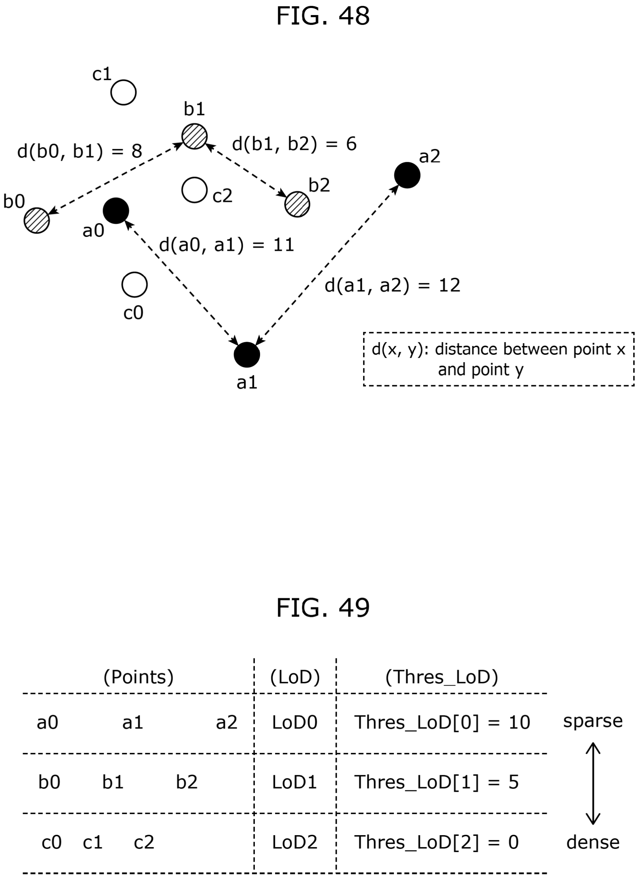

FIG. 48 is an explanatory diagram illustrating a method of generating LoD according to the embodiment.
[FIG. 49]
FIG. 49 is an explanatory diagram illustrating a method of generating LoD according to the embodiment.
[FIG. 50]

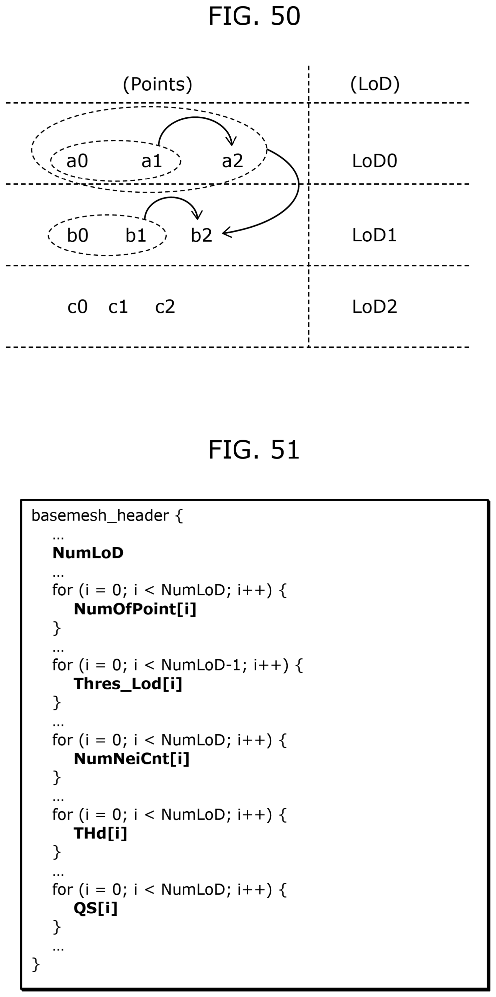

FIG. 50 is an explanatory diagram illustrating a method for generating a prediction value of a motion vector according to the embodiment.
[FIG. 51]
FIG. 51 is an explanatory diagram illustrating an example of syntax according to the embodiment.
[FIG. 52]

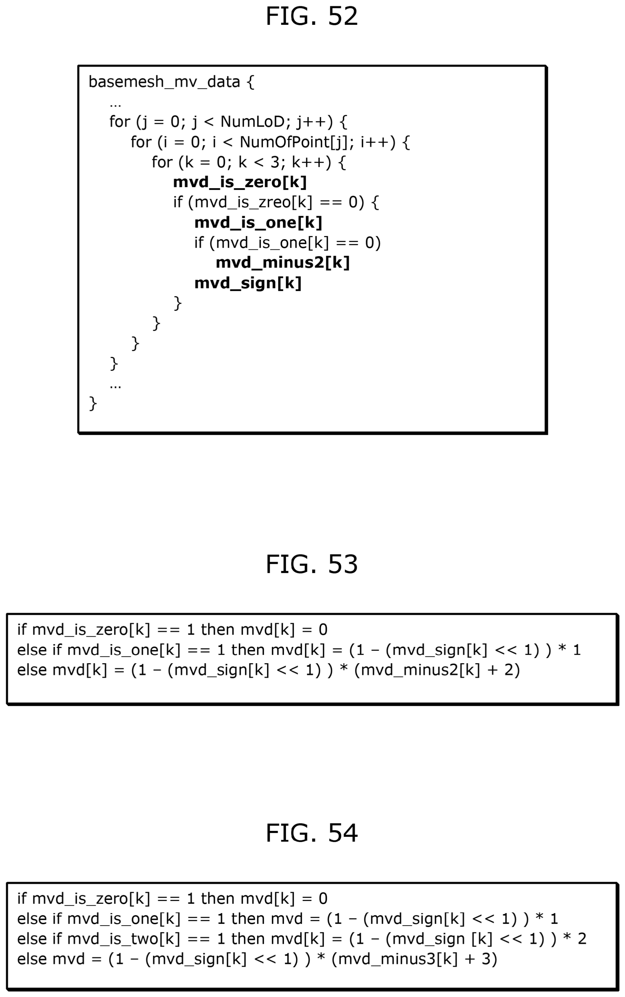

FIG. 52 is an explanatory diagram illustrating an example of syntax according to the embodiment.

[FIG. 53]
FIG. 53 is an explanatory diagram illustrating an example of calculation of a prediction residual according to the embodiment.

[FIG. 54]
FIG. 54 is an explanatory diagram illustrating an example of calculation of a prediction residual according to the embodiment.

[FIG. 55]

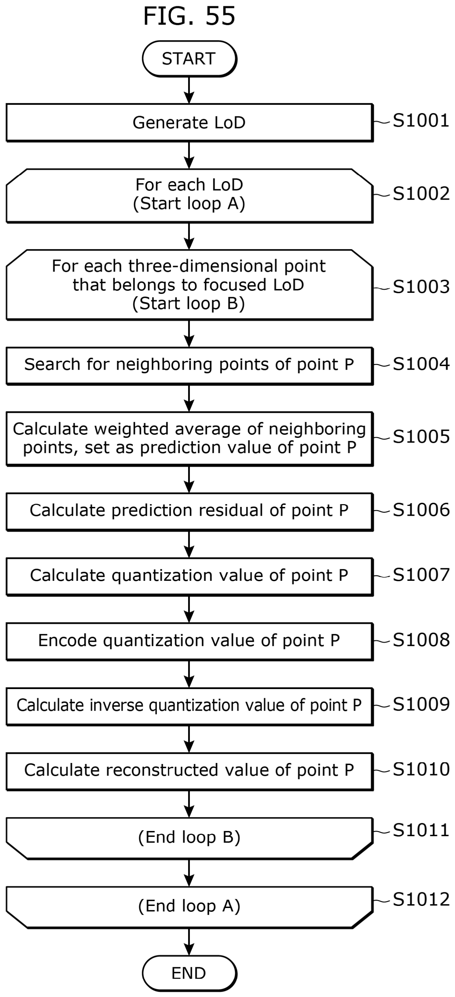

FIG. 55 is a flowchart illustrating an example of processing by the encoding device according to the embodiment.

[FIG. 56]

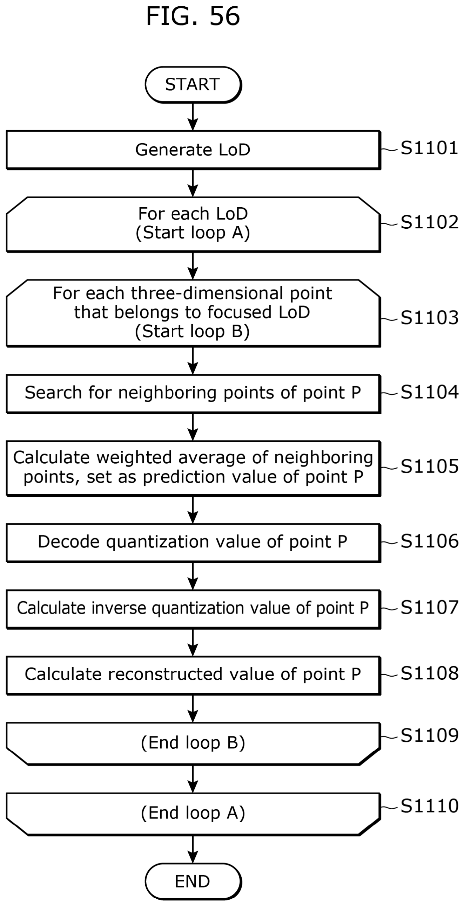

FIG. 56 is a flowchart illustrating an example of a process by the decoding device according to the embodiment.

[FIG. 57]

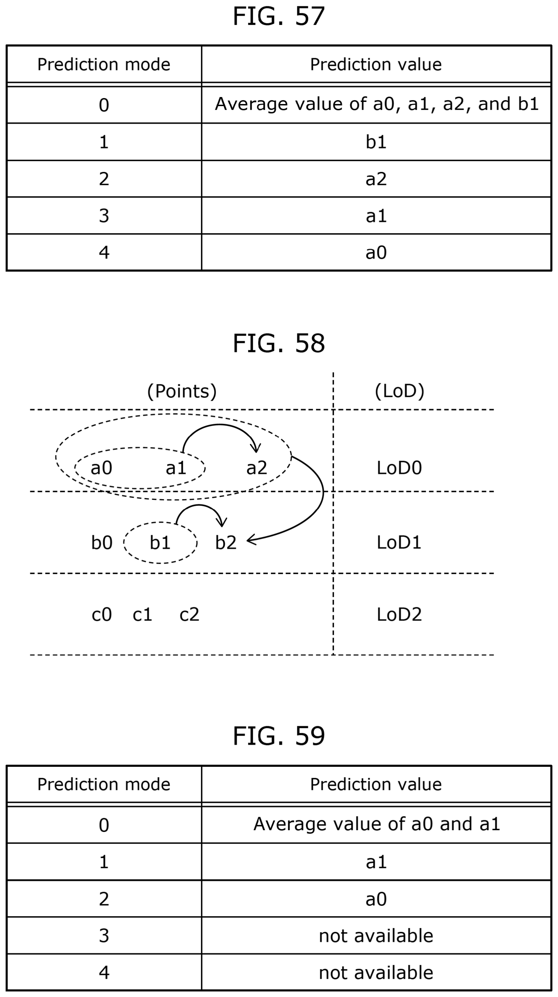

FIG. 57 is an explanatory diagram illustrating an example of prediction value information of motion vectors according to the embodiment.

[FIG. 58]
FIG. 58 is an explanatory diagram illustrating a method for generating a prediction value of a motion vector according to the embodiment.

[FIG. 59]
FIG. 59 is an explanatory diagram illustrating an example of prediction value information of motion vectors according to the embodiment.

[FIG. 60]

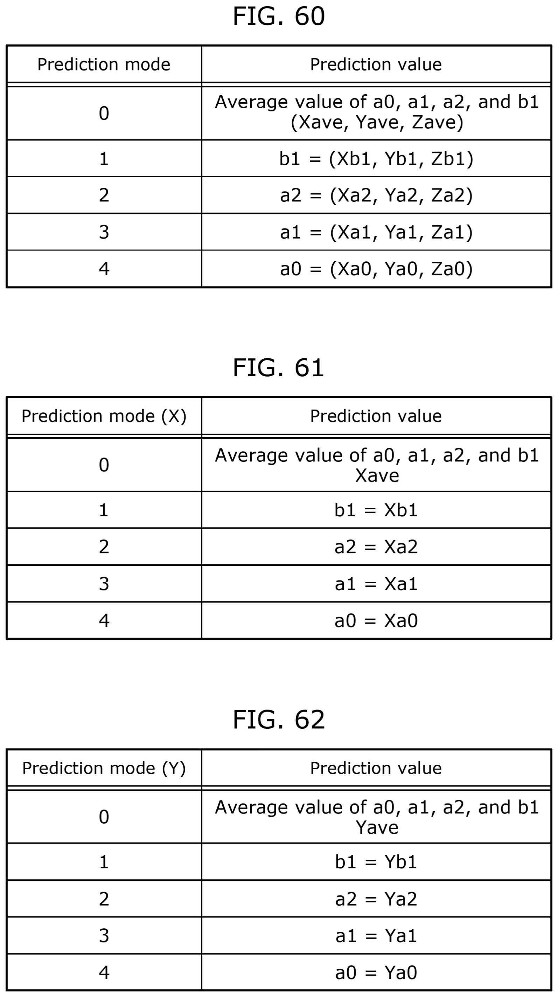

FIG. 60 is an explanatory diagram illustrating an example of prediction value information of motion vectors according to the embodiment.

[FIG. 61]
FIG. 61 is an explanatory diagram illustrating an example of prediction value information for the X component of motion vectors according to the embodiment.

[FIG. 62]
FIG. 62 is an explanatory diagram illustrating an example of prediction value information for the Y component of motion vectors according to the embodiment.

[FIG. 63]

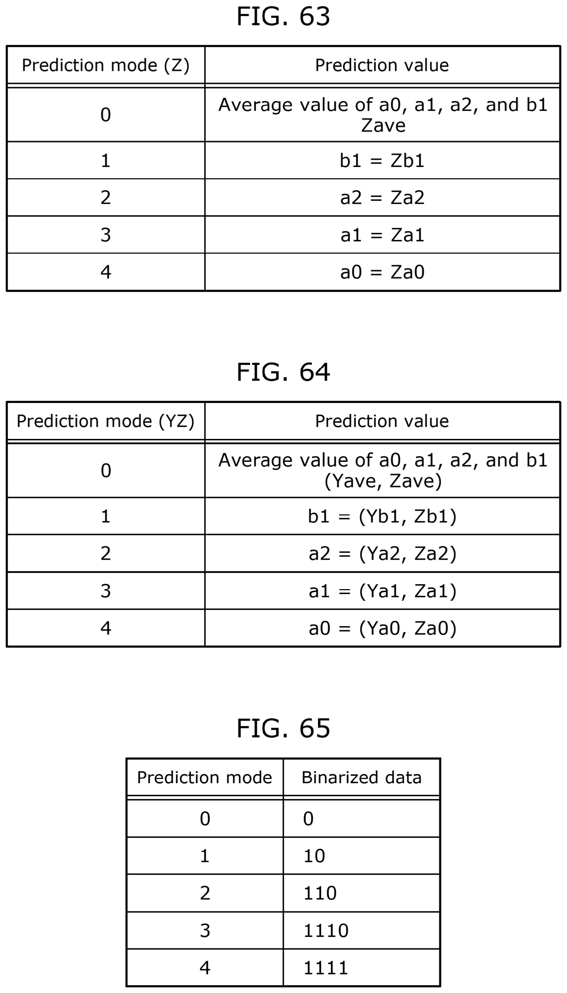

FIG. 63 is an explanatory diagram illustrating an example of prediction value information for the Z component of motion vectors according to the embodiment.

[FIG. 64]
FIG. 64 is an explanatory diagram illustrating an example of prediction value information for the YZ component of motion vectors according to the embodiment.

[FIG. 65]
FIG. 65 is an explanatory diagram illustrating an example of prediction modes and binarized data according to the embodiment.

[FIG. 66]

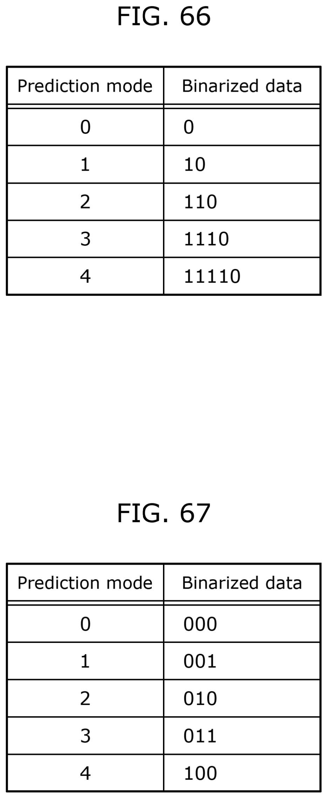

FIG. 66 is an explanatory diagram illustrating an example of prediction modes and binarized data according to the embodiment.

[FIG. 67]
FIG. 67 is an explanatory diagram illustrating an example of prediction modes and binarized data according to the embodiment.

[FIG. 68]

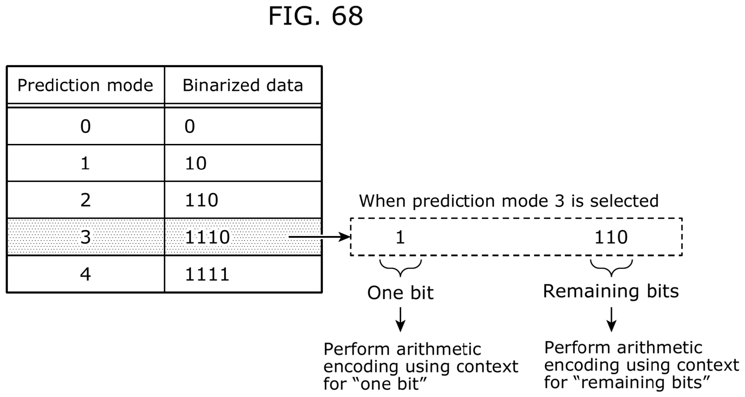

FIG. 68 is an explanatory diagram illustrating an example of prediction modes and binarized data according to the embodiment.

[FIG. 69]

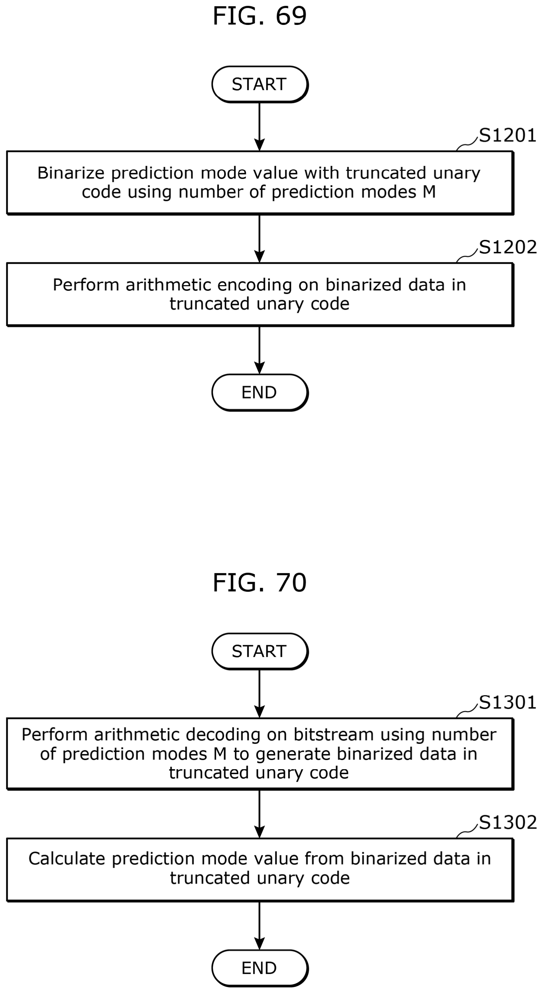

FIG. 69 is a flowchart illustrating an example of encoding processing of prediction mode values according to the embodiment.

[FIG. 70]
FIG. 70 is a flowchart illustrating an example of decoding processing of prediction mode values according to the embodiment.

[FIG. 71]

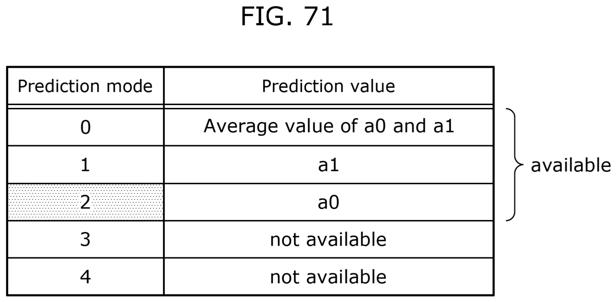

FIG. 71 is an explanatory diagram illustrating an example of prediction value information of motion vectors according to the embodiment.

[FIG. 72]

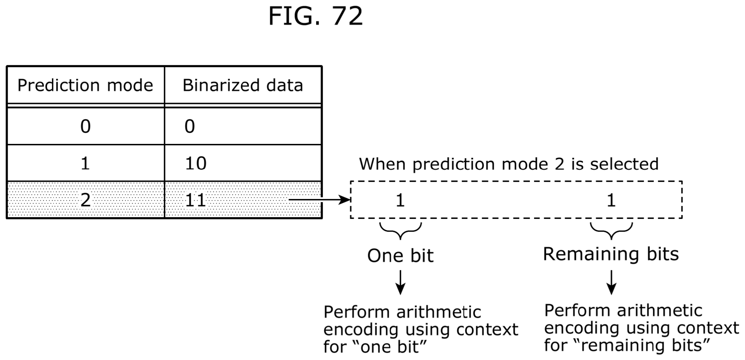

FIG. 72 is an explanatory diagram illustrating an example of prediction modes and binarized data according to the embodiment.

[FIG. 73]

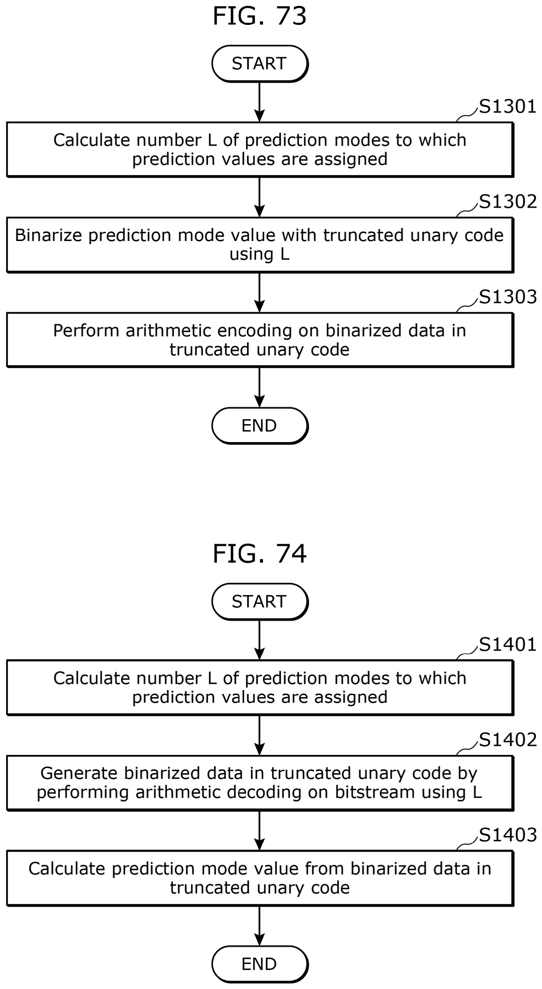

FIG. 73 is a flowchart illustrating an example of encoding processing of prediction mode values according to the embodiment.
[FIG. 74]
FIG. 74 is a flowchart illustrating an example of decoding processing of prediction mode values according to the embodiment.
[FIG. 75]

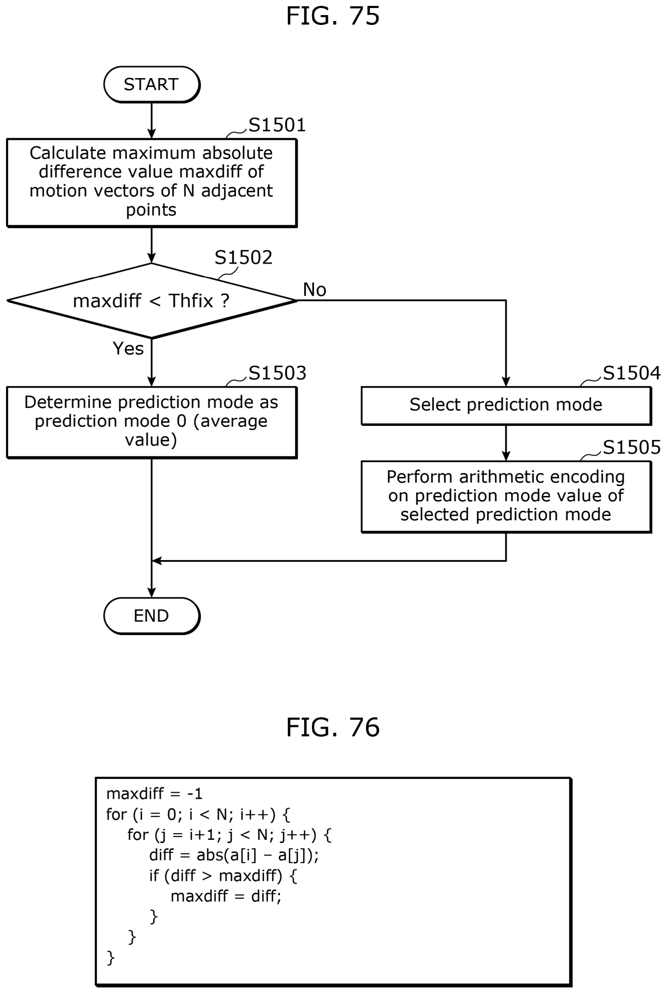

FIG. 75 is a flowchart illustrating an example of processing by which the encoding device according to the embodiment determines a prediction mode.
[FIG. 76]
FIG. 76 is an explanatory diagram illustrating an example of a process in which the encoding device calculates a maximum absolute difference value of motion vectors according to the embodiment.
[FIG. 77]

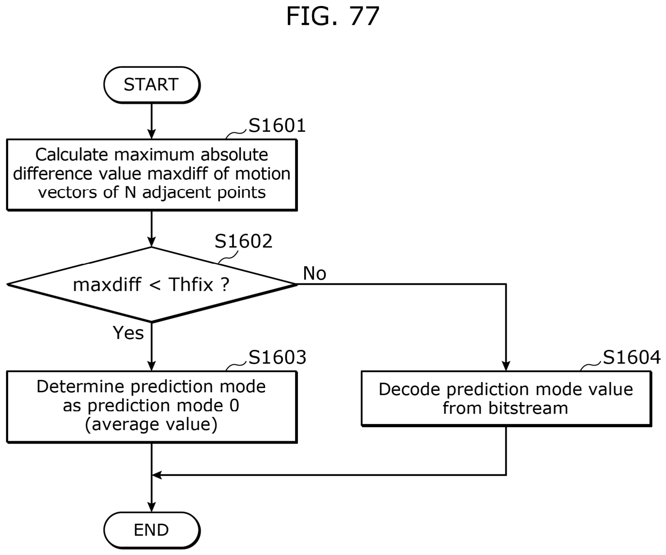

FIG. 77 is a flowchart illustrating an example of processing by which the decoding device according to the embodiment determines a prediction mode.
[FIG. 78]

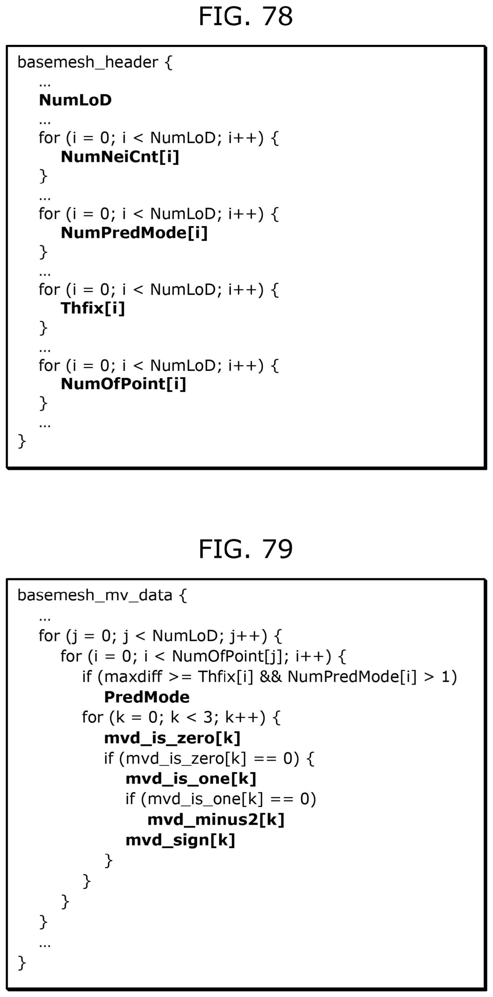

FIG. 78 is an explanatory diagram illustrating an example of syntax according to the embodiment.
[FIG. 79]
FIG. 79 is an explanatory diagram illustrating an example of syntax according to the embodiment.
[FIG. 80]

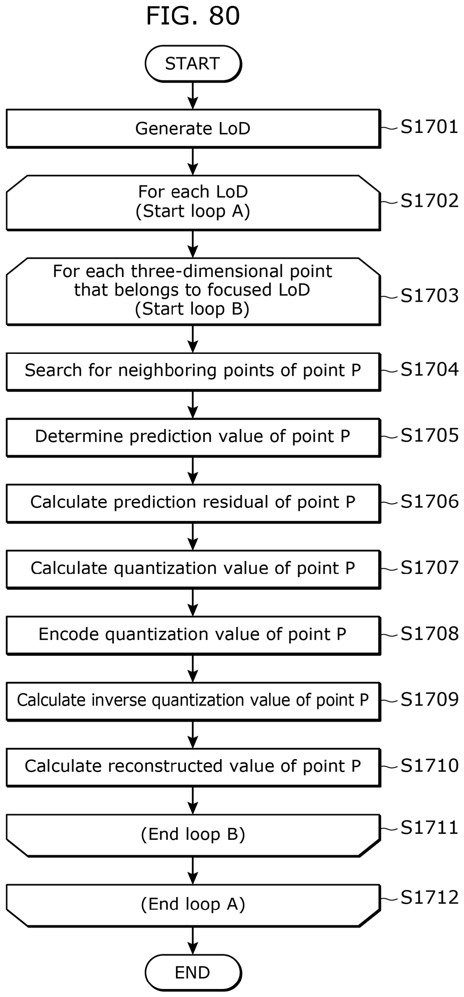

FIG. 80 is a flowchart illustrating an example of processing by the encoding device according to the embodiment.
[FIG. 81]

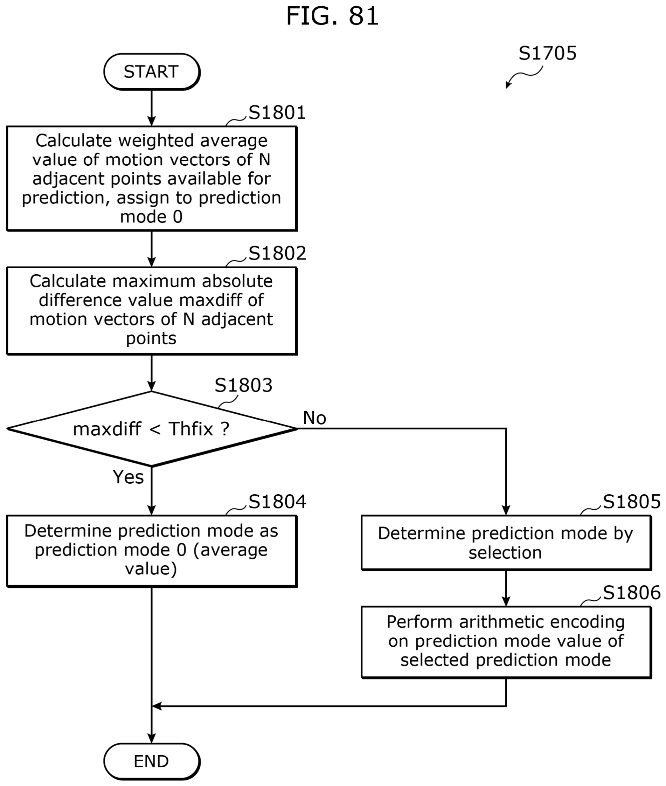

FIG. 81 is a flowchart illustrating an example of processing by the encoding device according to the embodiment.
[FIG. 82]

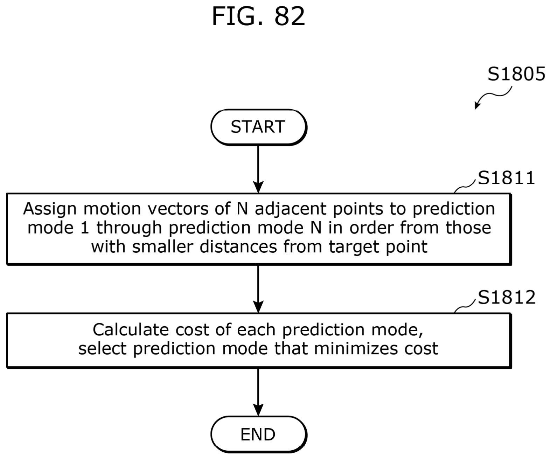

FIG. 82 is a flowchart illustrating an example of processing by the encoding device according to the embodiment.
[FIG. 83]

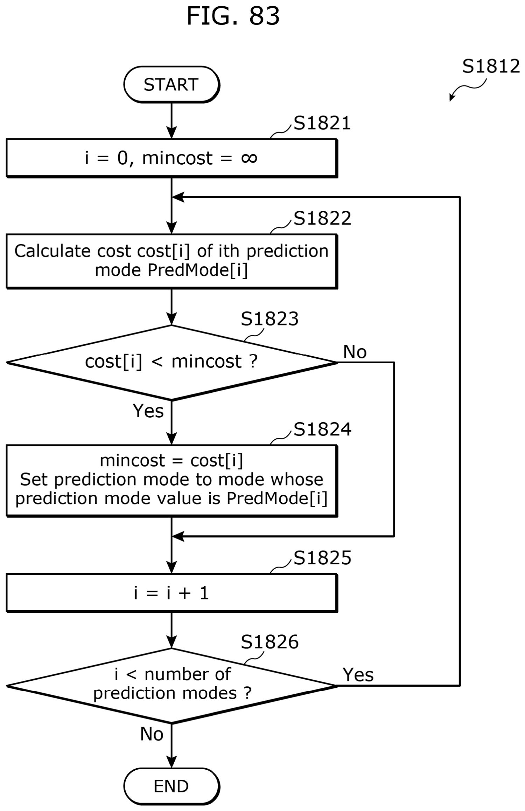

FIG. 83 is a flowchart illustrating an example of processing by the encoding device according to the embodiment.
[FIG. 84]

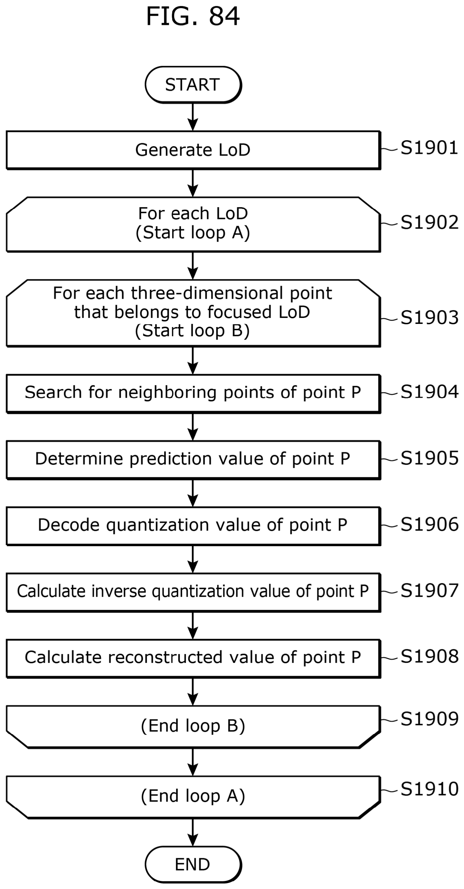

FIG. 84 is a flowchart illustrating an example of a process by the decoding device according to the embodiment.
[FIG. 85]

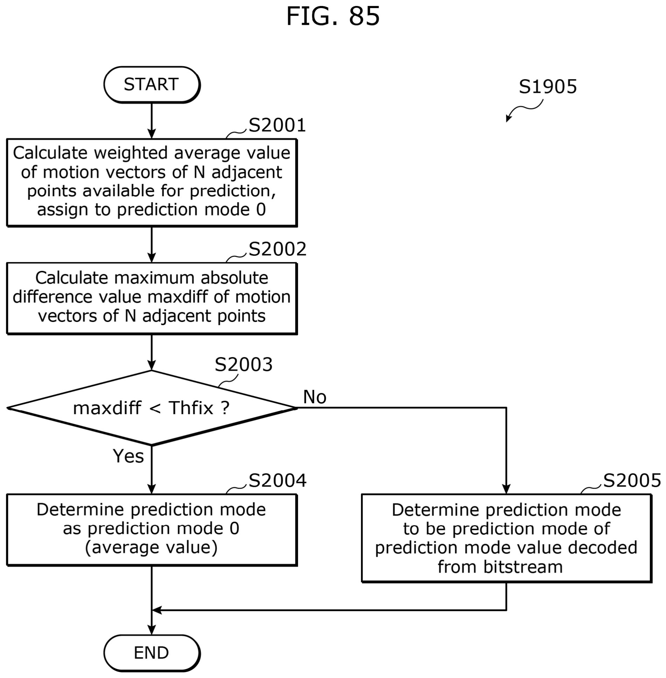

FIG. 85 is a flowchart illustrating an example of a process by the decoding device according to the embodiment.
[FIG. 86]

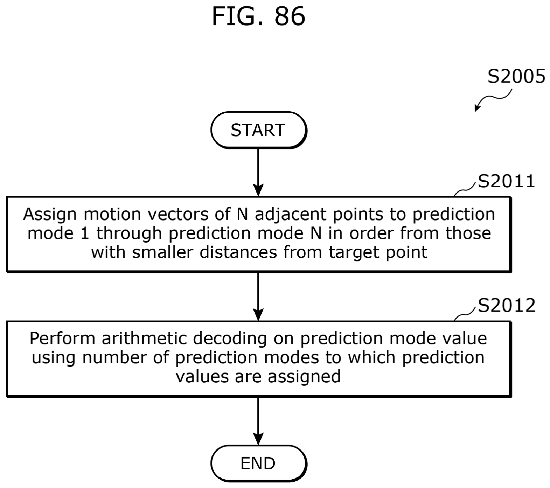

FIG. 86 is a flowchart illustrating an example of a process by the decoding device according to the embodiment.
[FIG. 87]

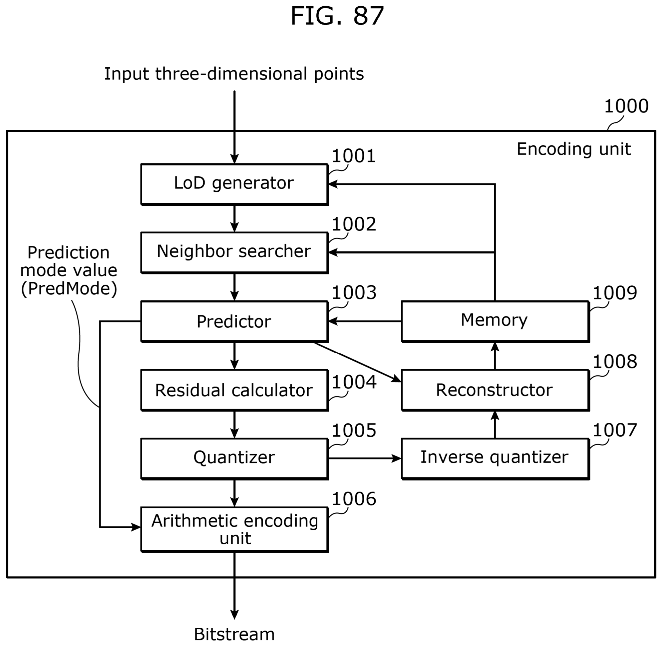

FIG. 87 is a block diagram illustrating an example of a configuration of an encoding unit according to the embodiment.
[FIG. 88]

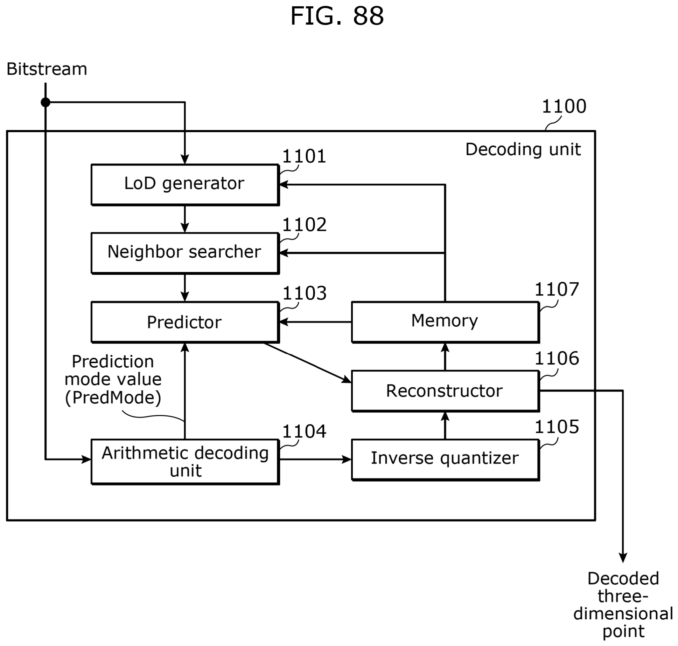

FIG. 88 is a block diagram illustrating an example of a configuration of a decoding unit according to the embodiment.
[FIG. 89]

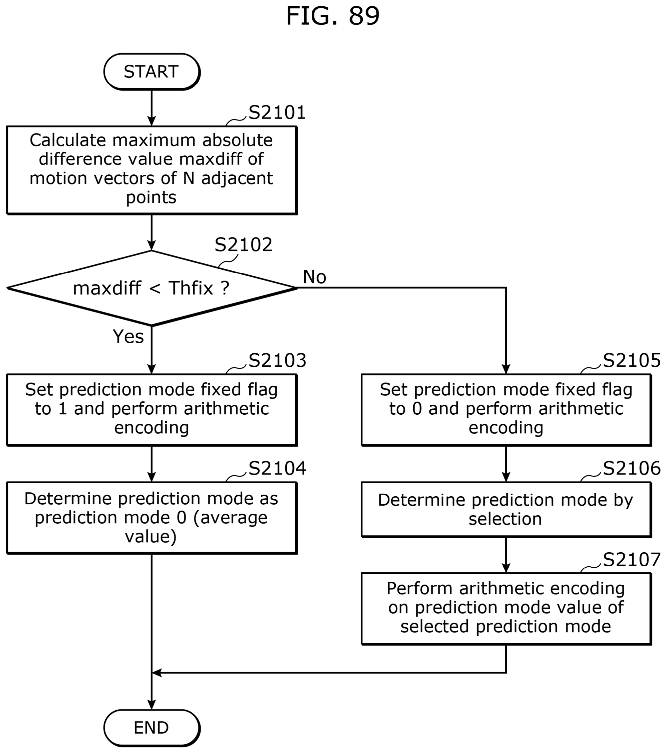

FIG. 89 is a flowchart illustrating an example of processing by which the encoding device according to the embodiment determines a prediction mode.
[FIG. 90]

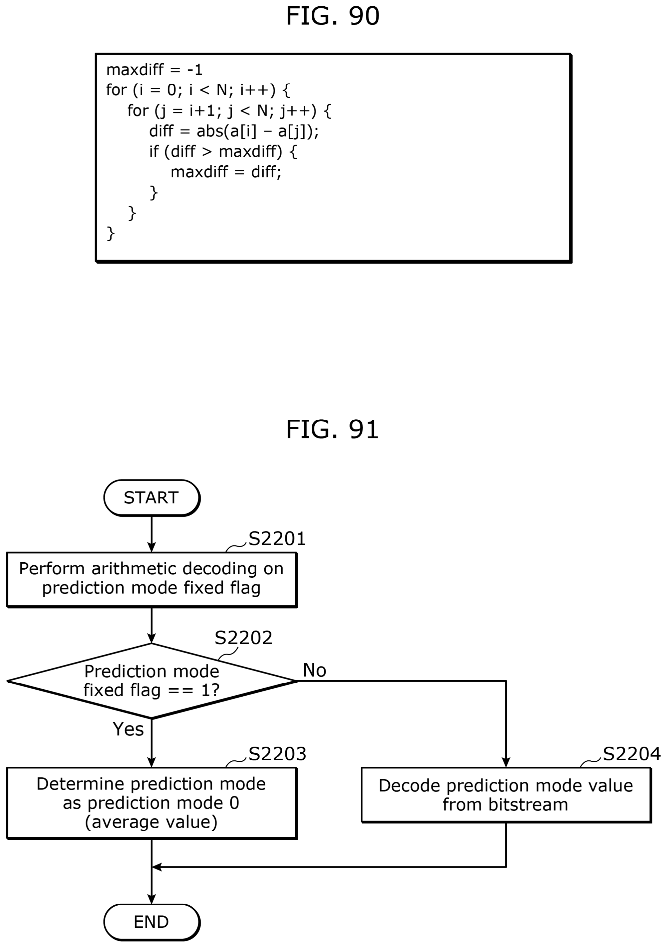

FIG. 90 is an explanatory diagram illustrating an example of a process in which the encoding device calculates a maximum absolute difference value of motion vectors according to the embodiment.
[FIG. 91]
FIG. 91 is a flowchart illustrating an example of processing by which the decoding device according to the embodiment determines a prediction mode.
[FIG. 92]

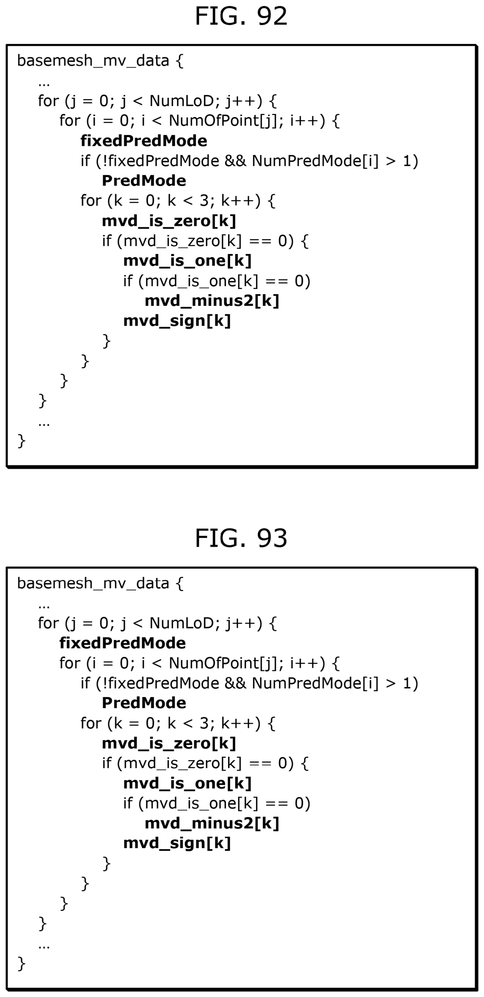

FIG. 92 is an explanatory diagram illustrating an example of syntax according to the embodiment.
[FIG. 93]
FIG. 93 is an explanatory diagram illustrating an example of syntax according to the embodiment.
[FIG. 94]

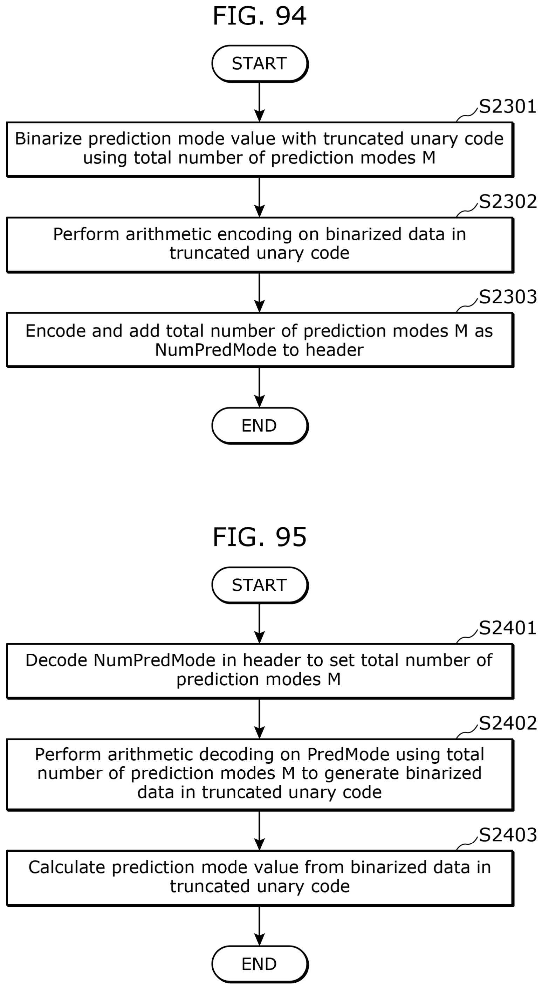

FIG. 94 is an explanatory diagram illustrating an example of encoding processing of prediction mode values according to the embodiment.
[FIG. 95]
FIG. 95 is an explanatory diagram illustrating an example of decoding processing of prediction mode values according to the embodiment.
[FIG. 96]

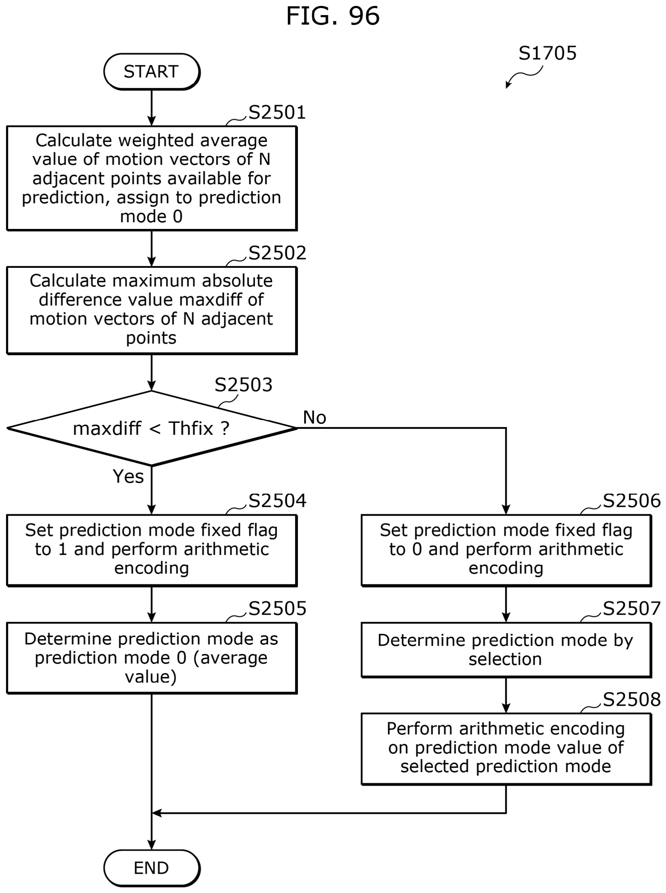

FIG. 96 is a flowchart illustrating an example of processing by the encoding device according to the embodiment.

[FIG. 97]

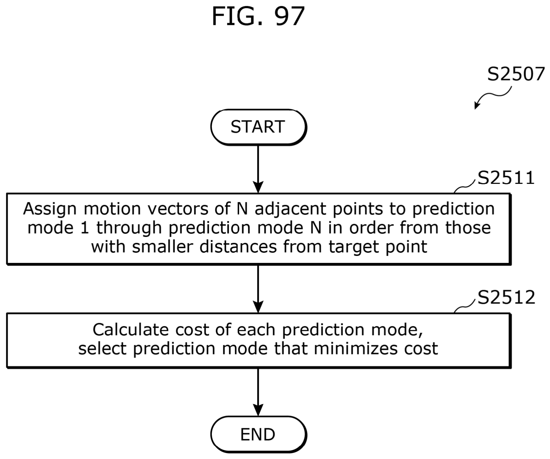

FIG. 97 is a flowchart illustrating an example of processing by the encoding device according to the embodiment.
[FIG. 98]

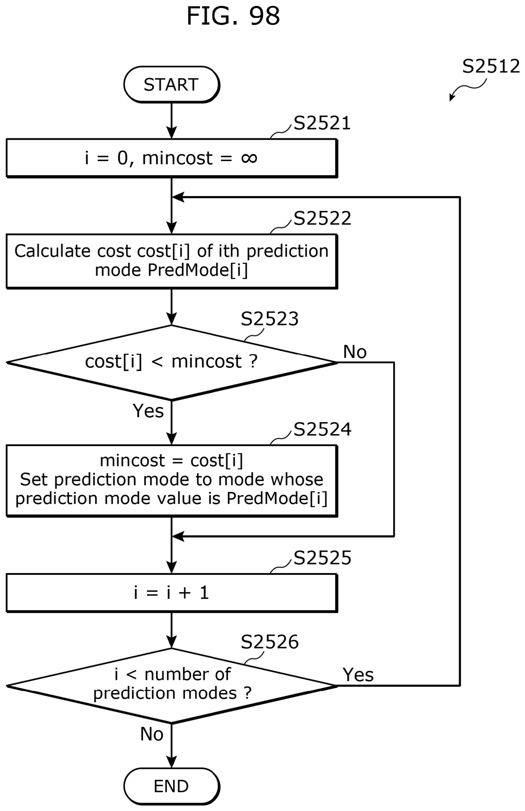

FIG. 98 is a flowchart illustrating an example of processing by the encoding device according to the embodiment.
[FIG. 99]

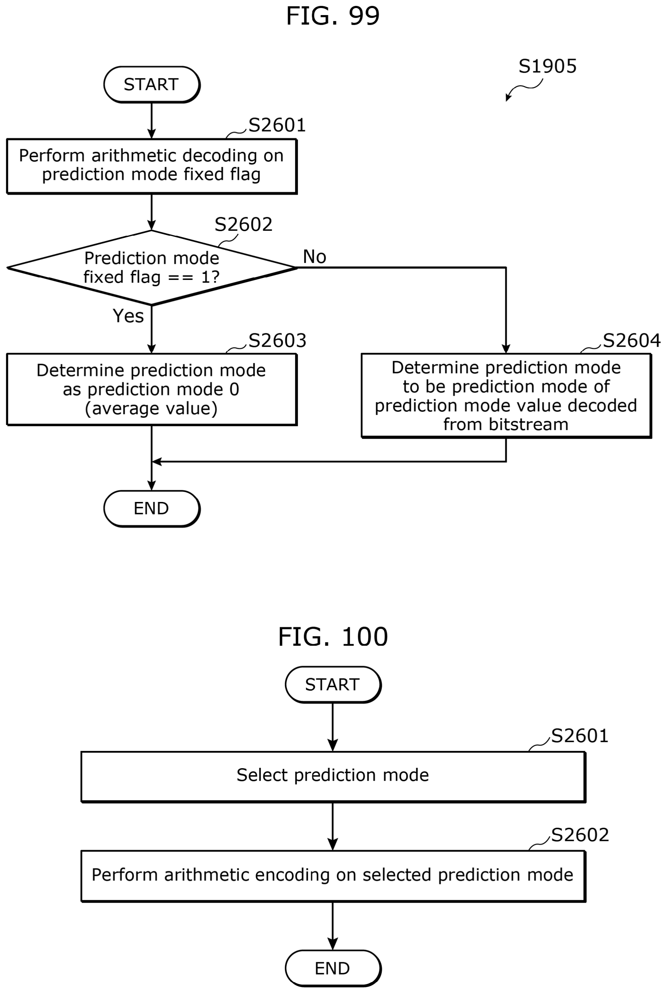

FIG. 99 is a flowchart illustrating an example of a process by the decoding device according to the embodiment.
[FIG. 100]
FIG. 100 is a flowchart illustrating an example of processing by which the encoding device according to the embodiment determines a prediction mode.
[FIG. 101]

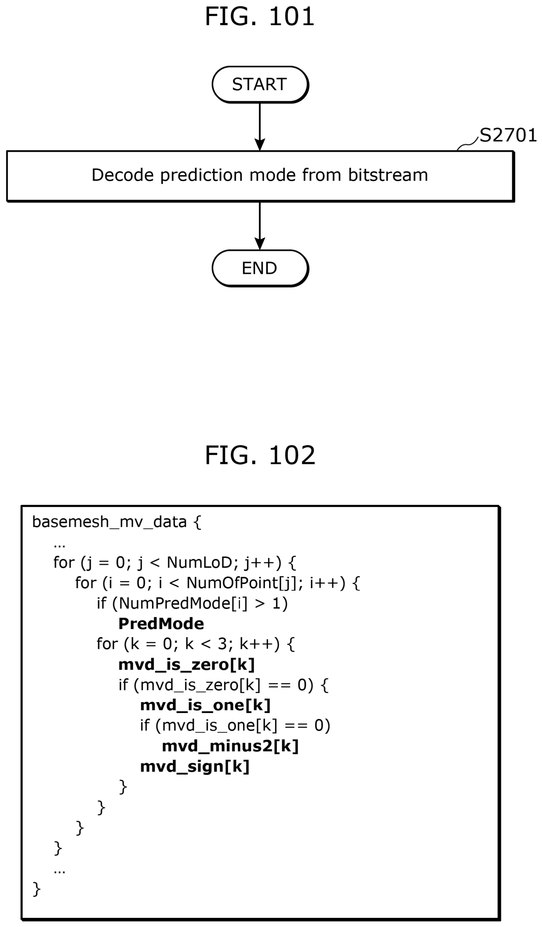

FIG. 101 is a flowchart illustrating an example of processing by which the decoding device according to the embodiment determines a prediction mode.
[FIG. 102]
FIG. 102 is an explanatory diagram illustrating an example of syntax according to the embodiment.
[FIG. 103]

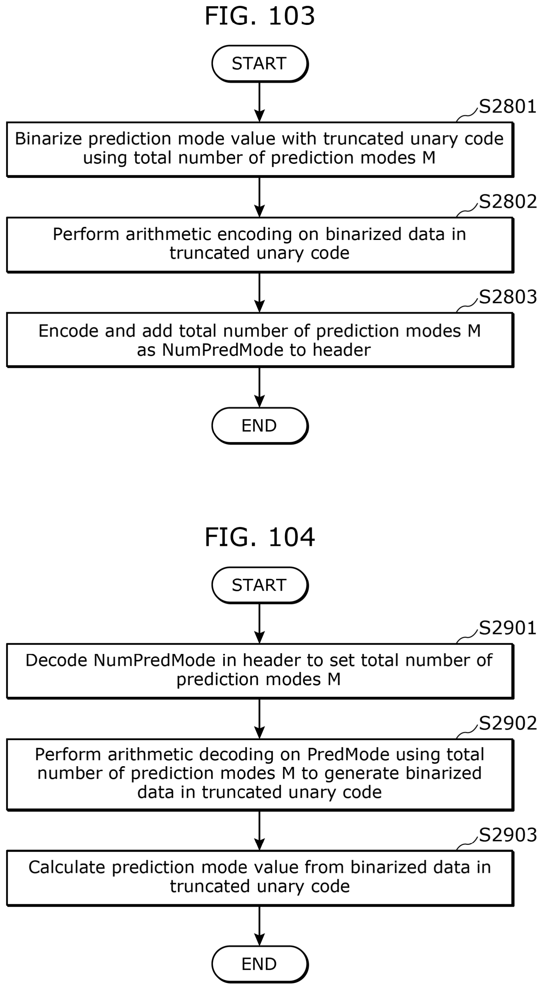

FIG. 103 is an explanatory diagram illustrating an example of encoding processing of prediction mode values according to the embodiment.
[FIG. 104]
FIG. 104 is an explanatory diagram illustrating an example of decoding processing of prediction mode values according to the embodiment.
[FIG. 105]

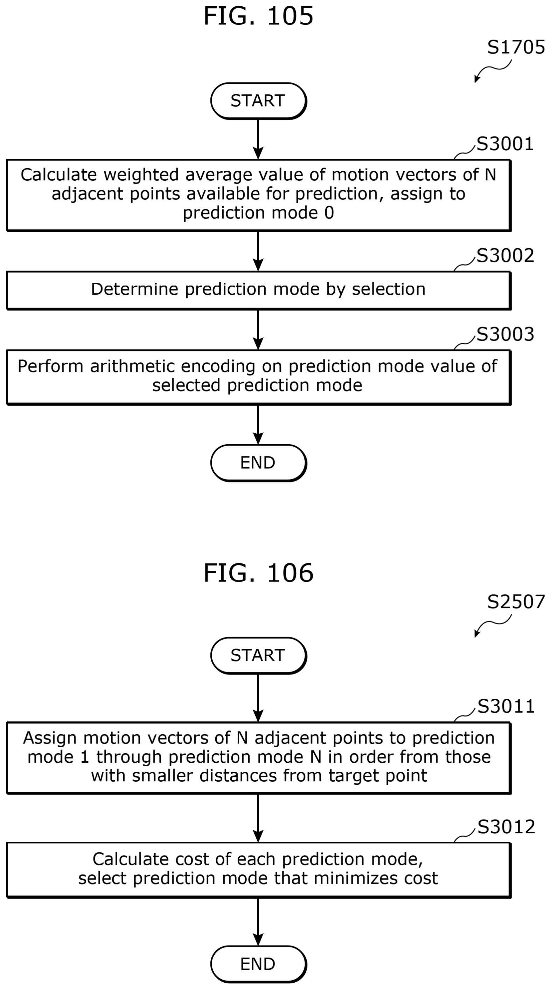

FIG. 105 is a flowchart illustrating an example of processing by the encoding device according to the embodiment.
[FIG. 106]
FIG. 106 is a flowchart illustrating an example of processing by the encoding device according to the embodiment.
[FIG. 107]

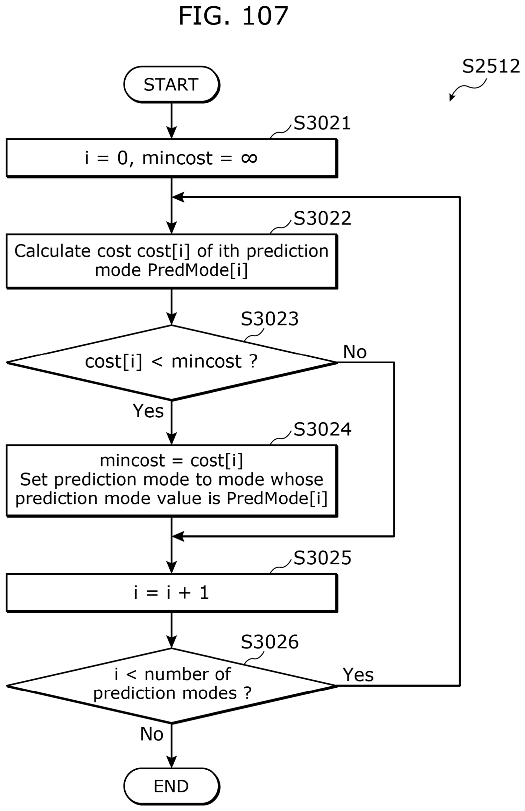

FIG. 107 is a flowchart illustrating an example of processing by the encoding device according to the embodiment.
[FIG. 108]

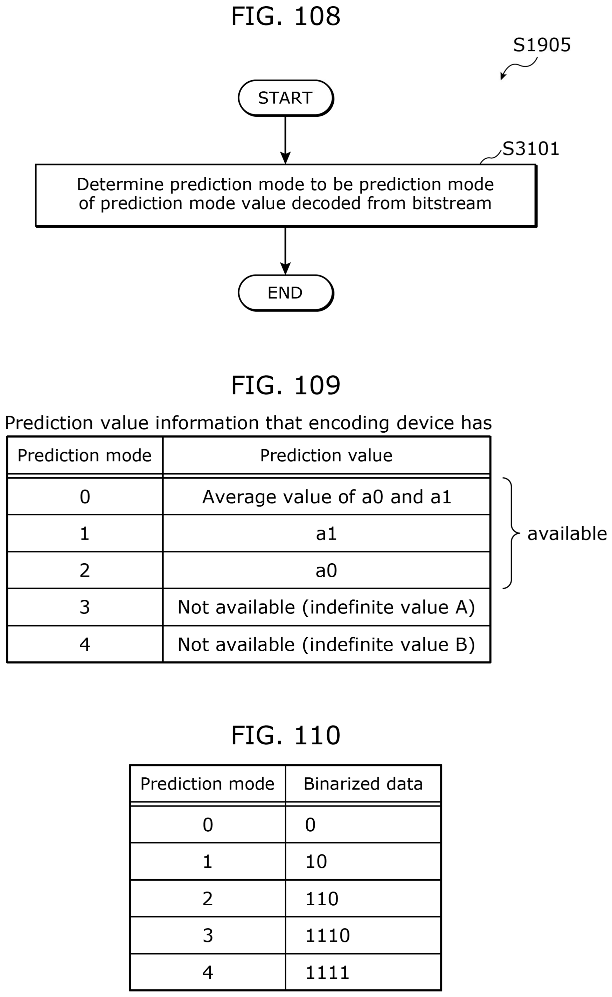

FIG. 108 is a flowchart illustrating an example of a process by the decoding device according to the embodiment.
[FIG. 109]
FIG. 109 is an explanatory diagram illustrating an example of prediction value information of motion vectors according to the embodiment.
[FIG. 110]
FIG. 110 is an explanatory diagram illustrating an example of prediction modes and binarized data according to the embodiment.
[FIG. 111]

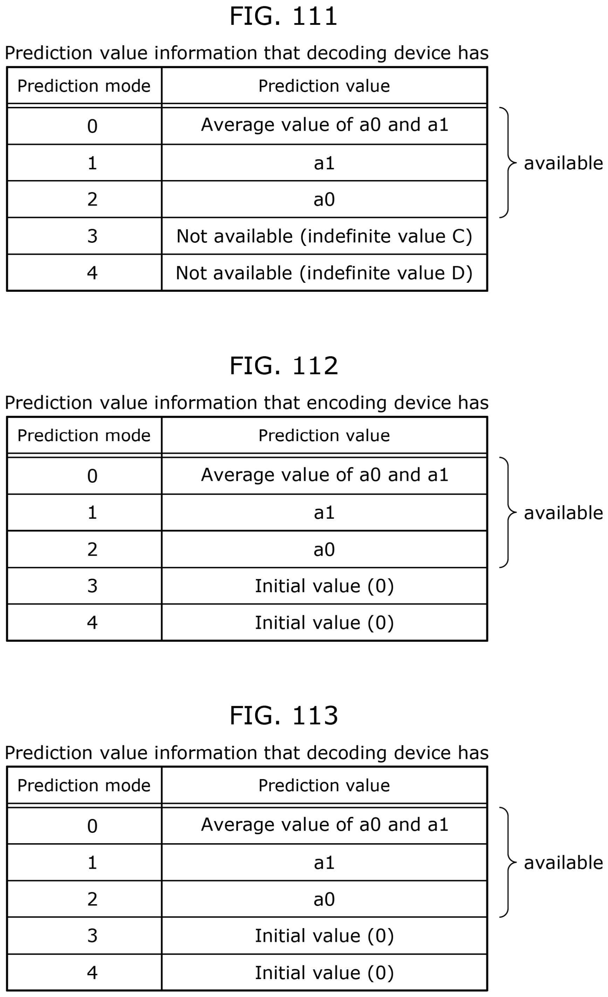

FIG. 111 is an explanatory diagram illustrating an example of prediction value information of motion vectors according to the embodiment.
[FIG. 112]
FIG. 112 is an explanatory diagram illustrating an example of prediction value information of motion vectors according to the embodiment.
[FIG. 113]
FIG. 113 is an explanatory diagram illustrating an example of prediction value information of motion vectors according to the embodiment.
[FIG. 114]

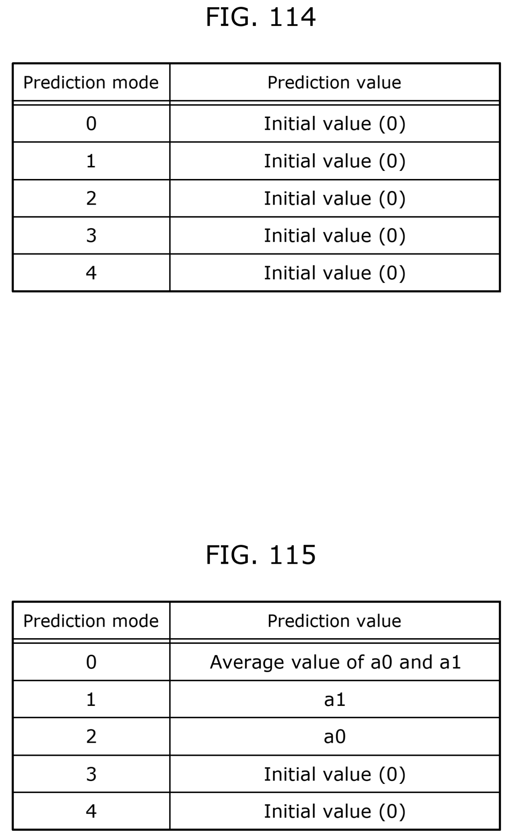

FIG. 114 is an explanatory diagram illustrating an example of prediction value information of motion vectors according to the embodiment.
[FIG. 115]
FIG. 115 is an explanatory diagram illustrating an example of prediction value information of motion vectors according to the embodiment.
[FIG. 116]

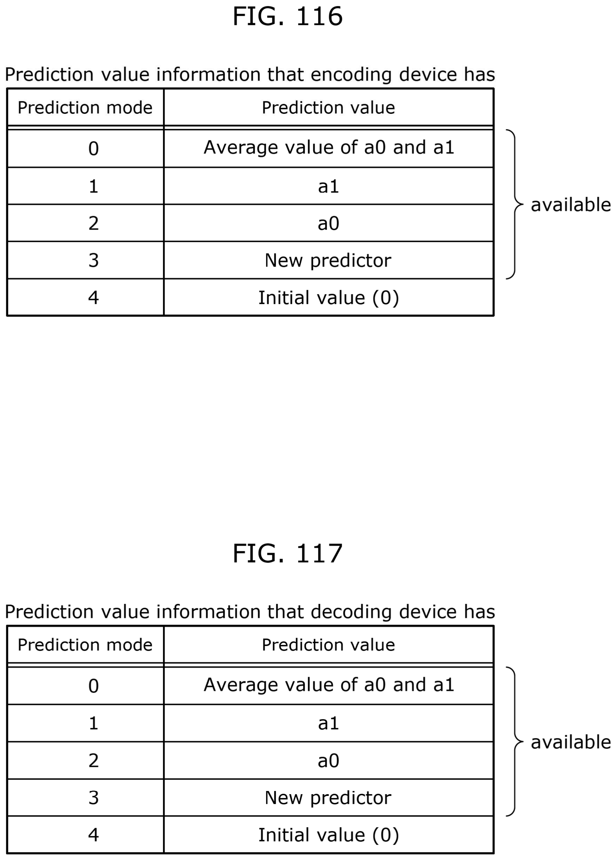

FIG. 116 is an explanatory diagram illustrating an example of prediction value information of motion vectors according to the embodiment.
[FIG. 117]
FIG. 117 is an explanatory diagram illustrating an example of prediction value information of motion vectors according to the embodiment.
[FIG. 118]

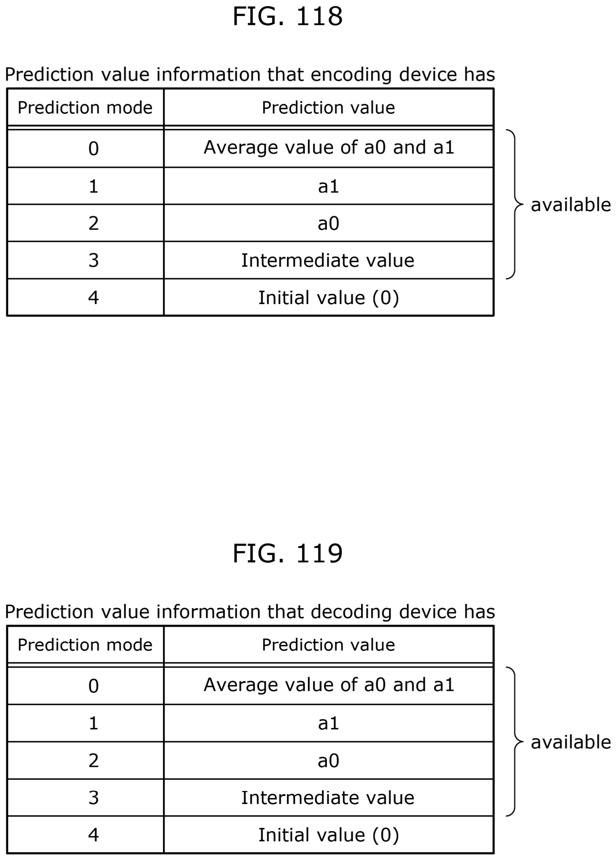

FIG. 118 is an explanatory diagram illustrating an example of prediction value information of motion vectors according to the embodiment.

[FIG. 119]
FIG. 119 is an explanatory diagram illustrating an example of prediction value information of motion vectors according to the embodiment.
[FIG. 120]

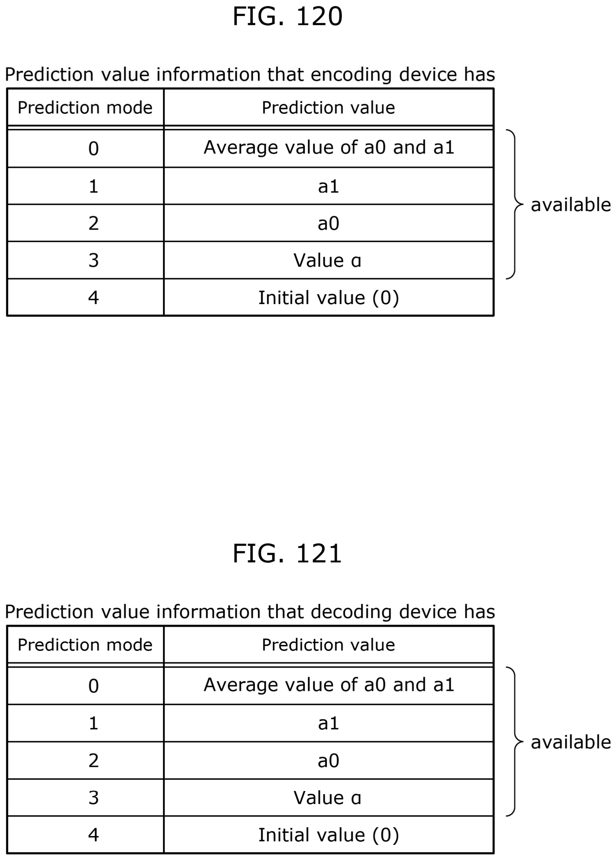

FIG. 120 is an explanatory diagram illustrating an example of prediction value information of motion vectors according to the embodiment.
[FIG. 121]
FIG. 121 is an explanatory diagram illustrating an example of prediction value information of motion vectors according to the embodiment.
[FIG. 122]

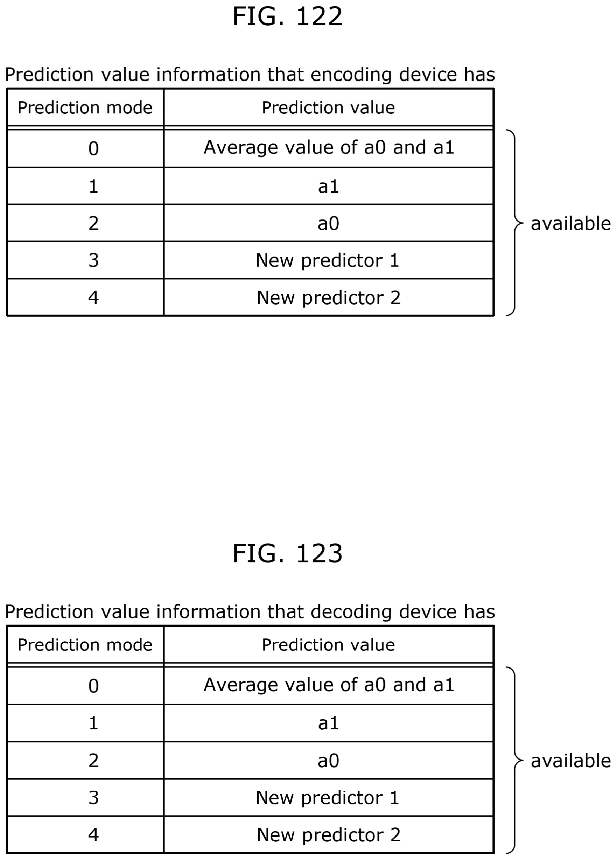

FIG. 122 is an explanatory diagram illustrating an example of prediction value information of motion vectors according to the embodiment.
[FIG. 123]
FIG. 123 is an explanatory diagram illustrating an example of prediction value information of motion vectors according to the embodiment.
[FIG. 124]

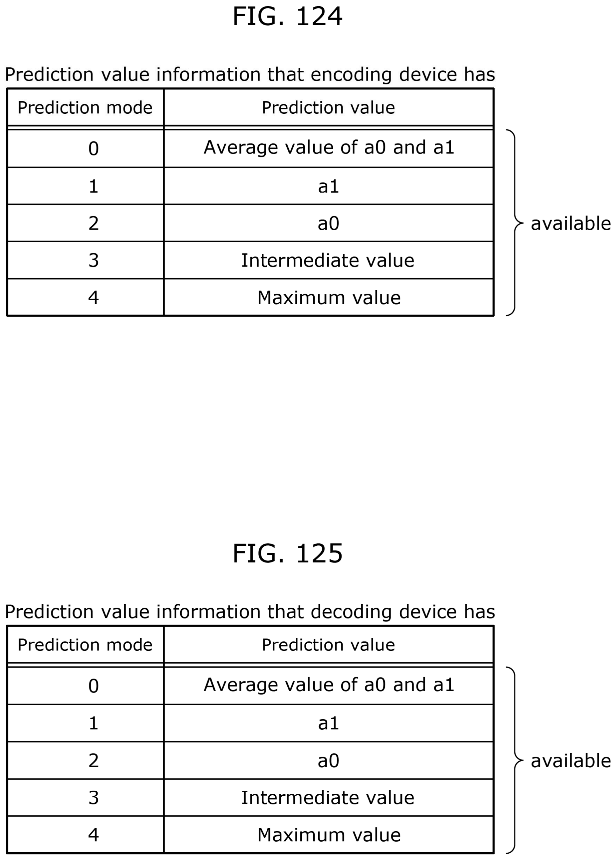

FIG. 124 is an explanatory diagram illustrating an example of prediction value information of motion vectors according to the embodiment.
[FIG. 125]
FIG. 125 is an explanatory diagram illustrating an example of prediction value information of motion vectors according to the embodiment.
[FIG. 126]

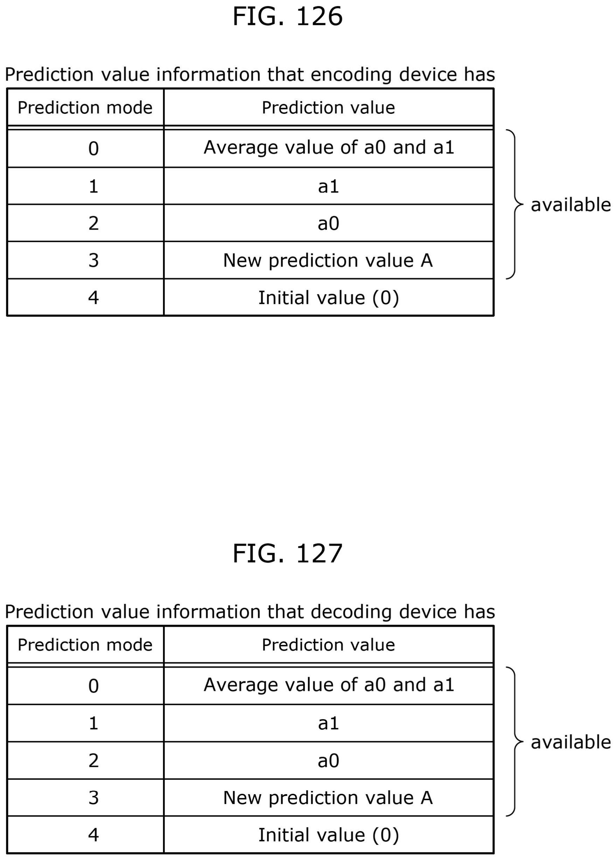

FIG. 126 is an explanatory diagram illustrating an example of prediction value information of motion vectors according to the embodiment.
[FIG. 127]
FIG. 127 is an explanatory diagram illustrating an example of prediction value information of motion vectors according to the embodiment.
[FIG. 128]

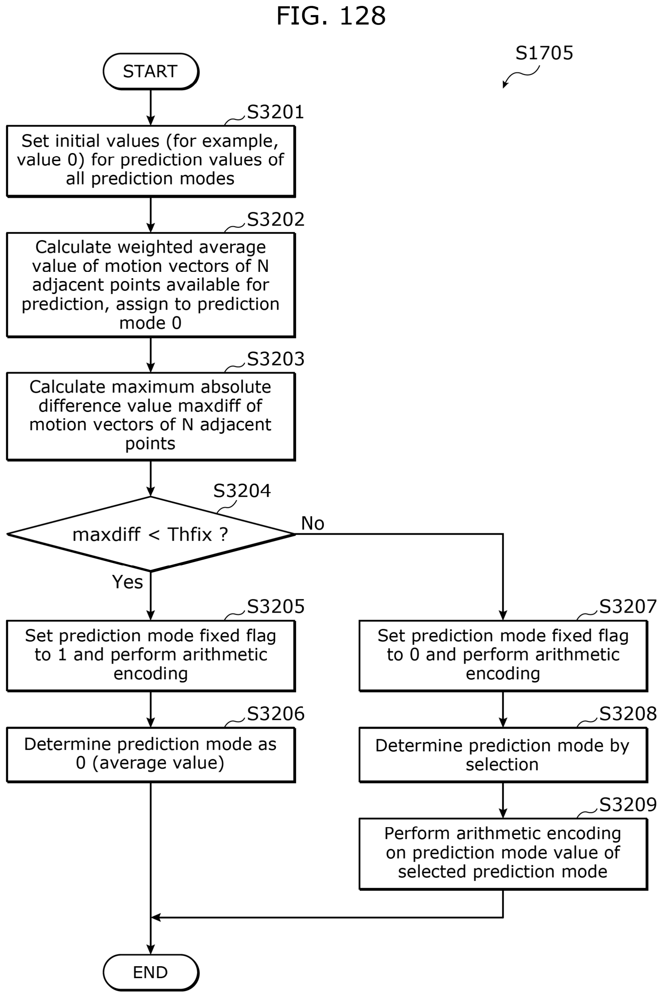

FIG. 128 is a flowchart illustrating an example of processing by the encoding device according to the embodiment.
[FIG. 129]

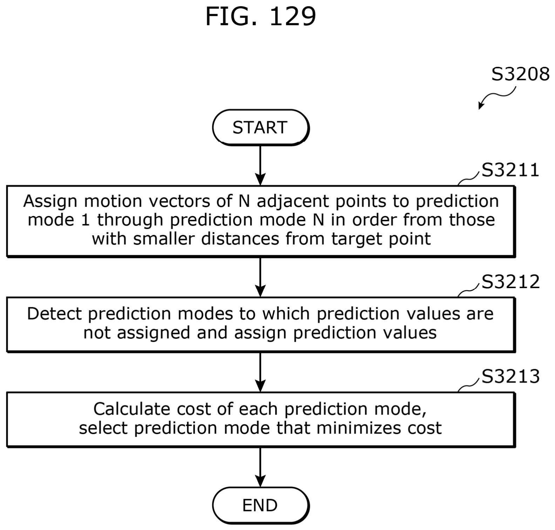

FIG. 129 is a flowchart illustrating an example of processing by the encoding device according to the embodiment.
[FIG. 130]

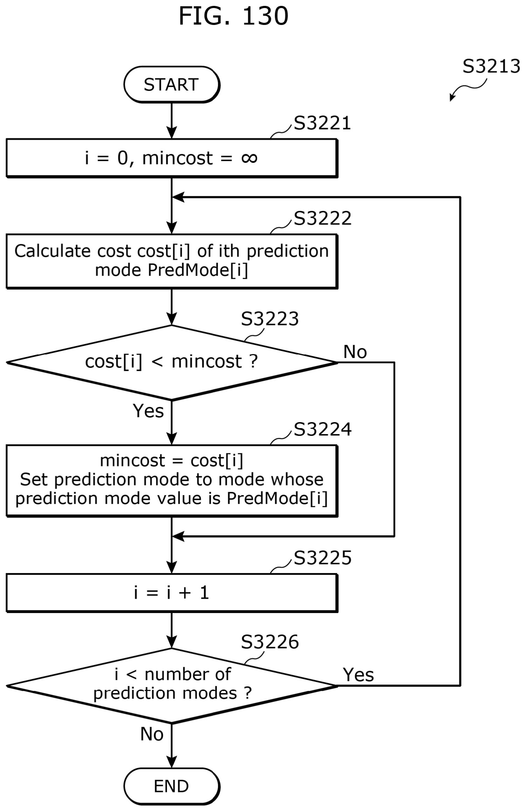

FIG. 130 is a flowchart illustrating an example of processing by the encoding device according to the embodiment.
[FIG. 131]

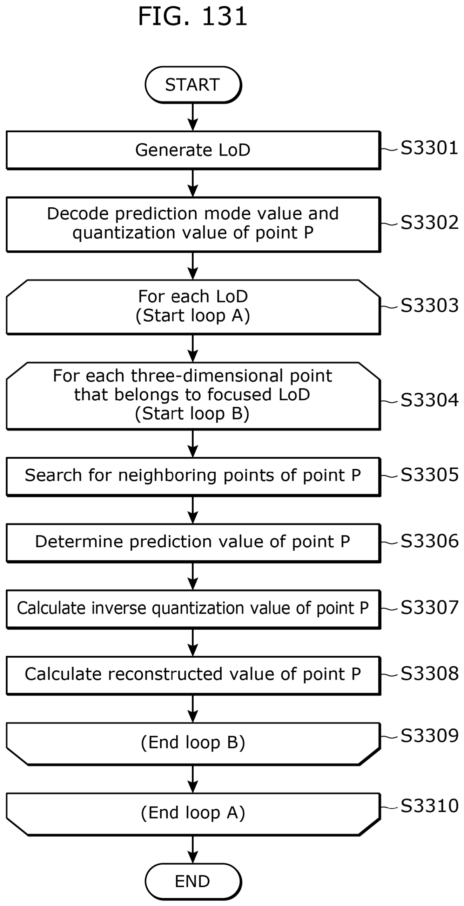

FIG. 131 is a flowchart illustrating an example of a process by the decoding device according to the embodiment.
[FIG. 132]

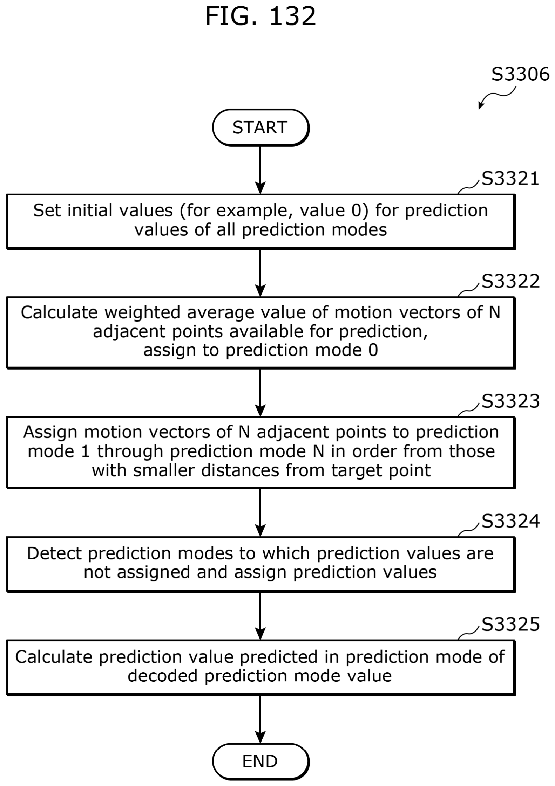

FIG. 132 is a flowchart illustrating an example of a process by the decoding device according to the embodiment.
[FIG. 133]

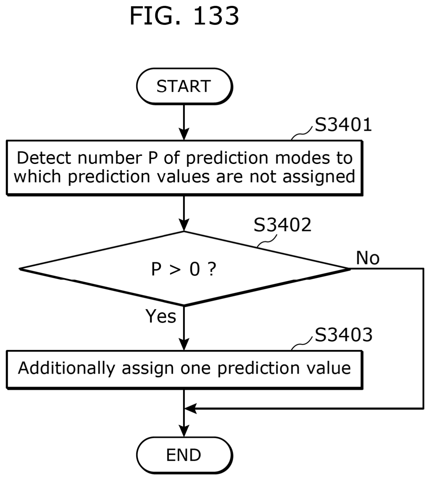

FIG. 133 is a flowchart illustrating an example of processing for assigning prediction values according to the embodiment.
[FIG. 134]

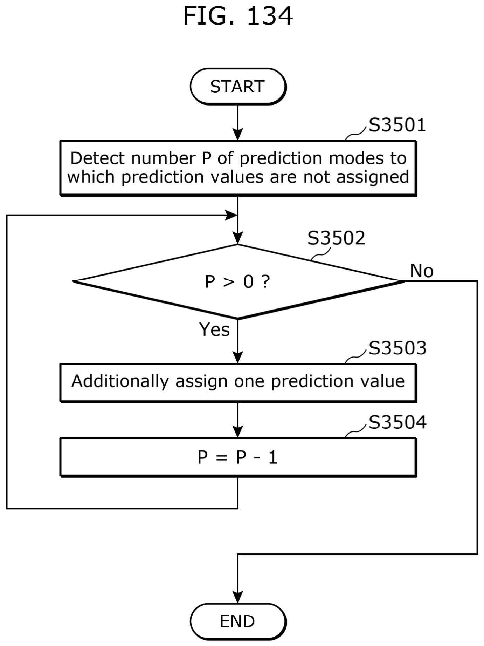

FIG. 134 is a flowchart illustrating an example of processing for assigning prediction values according to the embodiment.
[FIG. 135]

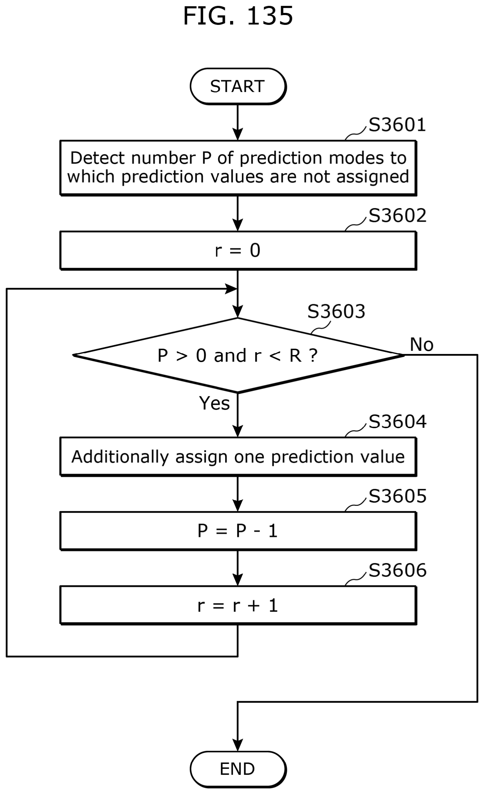

FIG. 135 is a flowchart illustrating an example of processing for assigning prediction values according to the embodiment.
[FIG. 136]

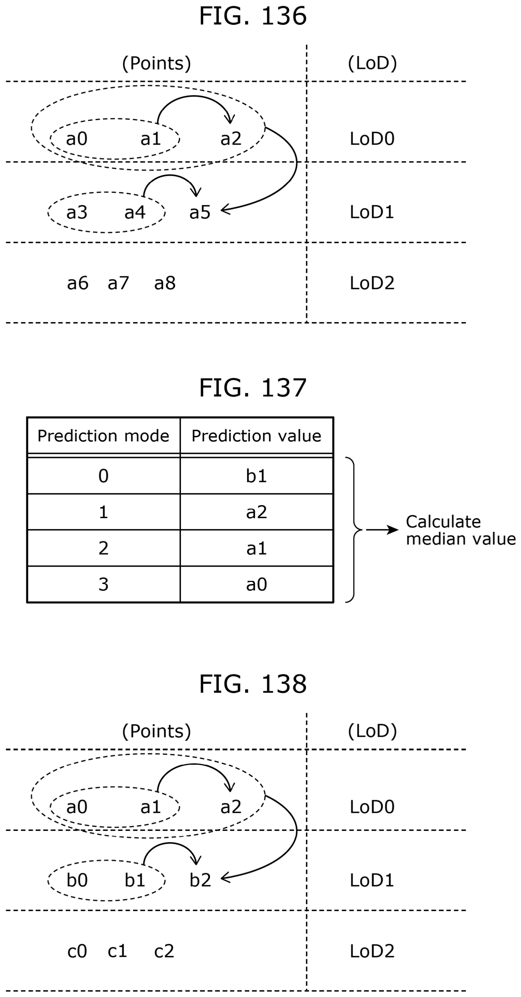

FIG. 136 is an explanatory diagram illustrating a method for calculating a prediction value according to the embodiment.
[FIG. 137]
FIG. 137 is an explanatory diagram illustrating an example of prediction value information of motion vectors according to the embodiment.
[FIG. 138]
FIG. 138 is an explanatory diagram illustrating a method for generating a prediction value of a motion vector according to the embodiment.
[FIG. 139]

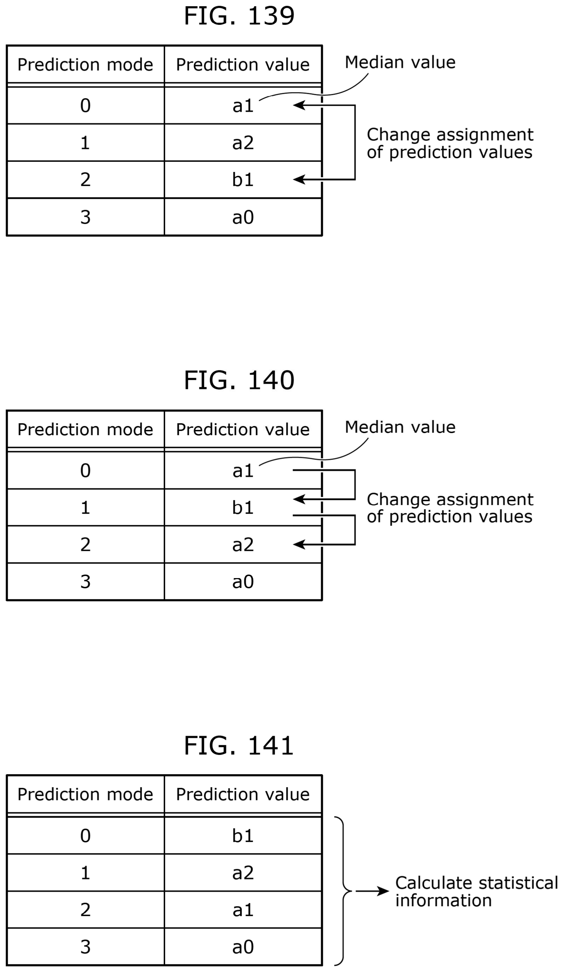

FIG. 139 is an explanatory diagram illustrating an example of prediction value information of motion vectors according to the embodiment.

[FIG. 140]
FIG. 140 is an explanatory diagram illustrating an example of prediction value information of motion vectors according to the embodiment.
[FIG. 141]
FIG. 141 is an explanatory diagram illustrating an example of prediction value information of motion vectors according to the embodiment.
[FIG. 142]

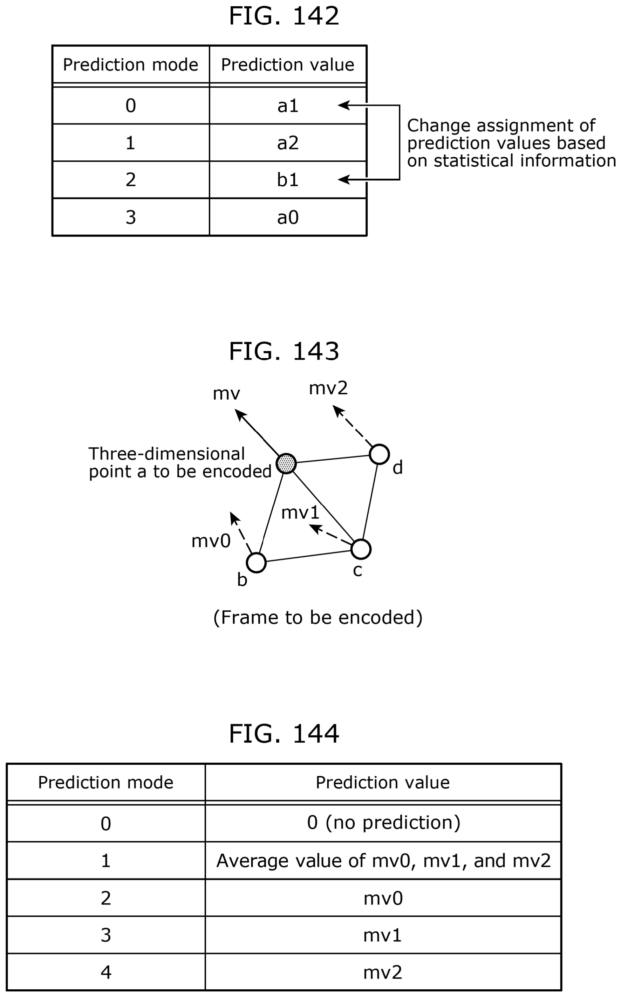

FIG. 142 is an explanatory diagram illustrating an example of prediction value information of motion vectors according to the embodiment.
[FIG. 143]
FIG. 143 is an explanatory diagram illustrating an example of points to be encoded according to the embodiment.
[FIG. 144]
FIG. 144 is an explanatory diagram illustrating an example of prediction value information of motion vectors according to the embodiment.
[FIG. 145]

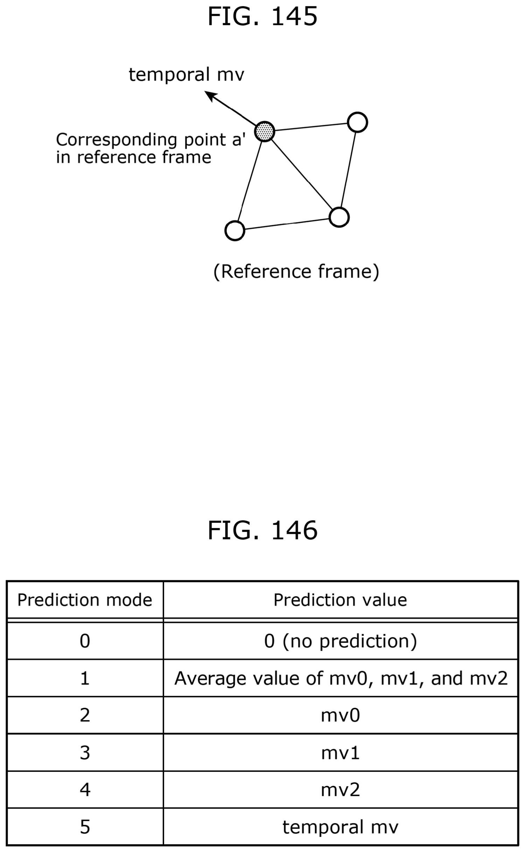

FIG. 145 is an explanatory diagram illustrating an example of temporal mv according to the embodiment.
[FIG. 146]
FIG. 146 is an explanatory diagram illustrating an example of prediction value information of motion vectors according to the embodiment.
[FIG. 147]

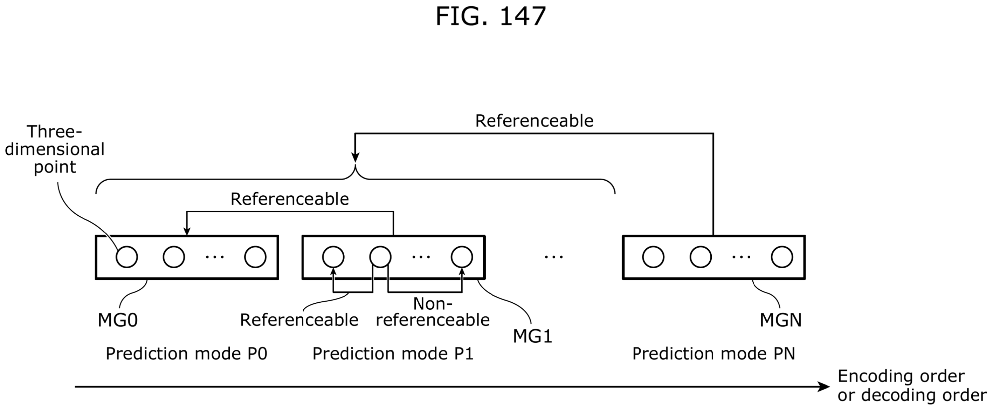

FIG. 147 is an explanatory diagram illustrating an example of reference destinations of motion groups according to the embodiment.
[FIG. 148]

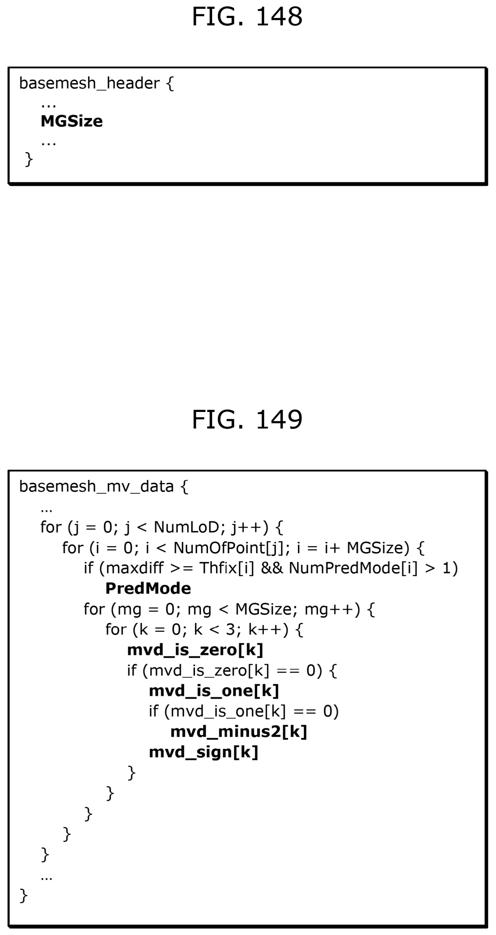

FIG. 148 is an explanatory diagram illustrating an example of syntax according to the embodiment.
[FIG. 149]
FIG. 149 is an explanatory diagram illustrating an example of syntax according to the embodiment.
[FIG. 150]

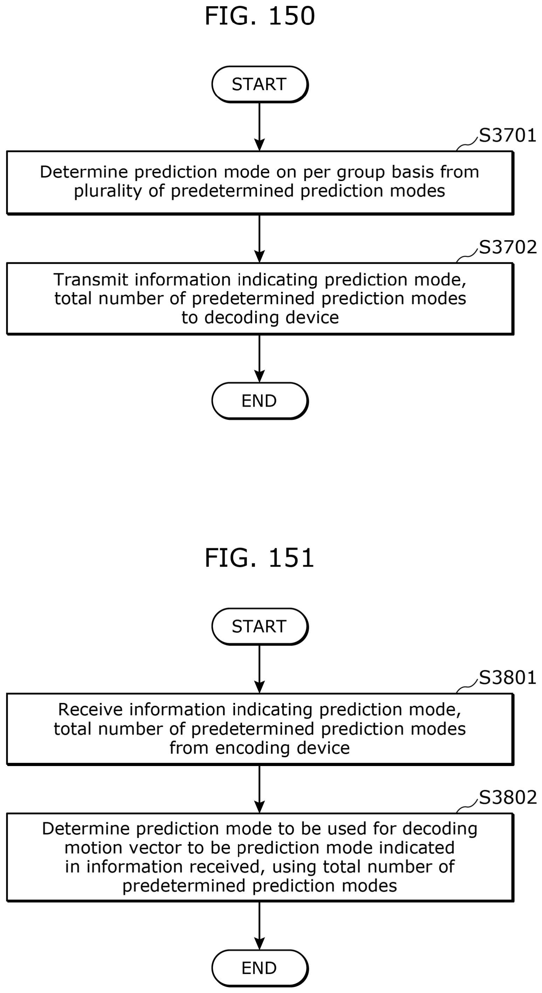

FIG. 150 is a flowchart illustrating an example of encoding processing according to the embodiment.
[FIG. 151]
FIG. 151 is a flowchart illustrating an example of decoding processing according to the embodiment.

[Description of Embodiments]

<Overview of Present Disclosure>

A three-dimensional (3D) mesh is used for a computer graphics video, for example. For example, the computer graphics video is formed by a plurality of frames that temporally differs from each other, and each frame may be represented by a three-dimensional mesh.

In addition, the three-dimensional mesh is formed by vertex information that indicates a position of each of a plurality of vertices in a three-dimensional space, connection information that indicates a connection relationship between the plurality of vertices, and attribute information that indicates an attribute of each vertex or each face. Each face is constructed according to a connection relationship between a plurality of vertices. Such a three-dimensional mesh can represent various computer graphics videos.

Furthermore, for transmission and storage of a three-dimensional mesh, efficient encoding and decoding of a three-dimensional mesh is expected. For efficient encoding and decoding of a three-dimensional mesh, arithmetic encoding and arithmetic decoding may be used.

There is a demand for further improvement in an encoding or decoding process related to three-dimensional data. An object of the present disclosure is to improve the encoding or decoding process related to three-dimensional data.

Hereinafter, aspects of the present invention derived from the content of the disclosure of the present description will be described by way of example, and the effects and the like derived from the aspect of the invention will be described.

(1) An encoding method that is executed by an encoding device that encodes a motion vector of a vertex included in a three-dimensional mesh, the encoding method including: determining on a per group basis, from among a plurality of predetermined prediction modes, a prediction mode to be used for determining a prediction vector which is a prediction value of the motion vector, the group being a unit for determining the prediction vector; and transmitting (i) information indicating the prediction mode determined and (ii) a total number of the plurality of predetermined prediction modes to a decoding device.

According to the above aspect, the encoding device transmits the prediction mode determined for each group and the total number of prediction modes to the decoding device during encoding of the motion vector, and thus may be able to reduce the amount of information to be transmitted. If the encoding device were to determine a prediction mode for each vertex, it may be necessary to transmit information indicating the prediction mode determined for each vertex to the decoding device. According to this aspect, the encoding device transmits information indicating the prediction mode determined for each group, and thus may be able to reduce the amount of information to be transmitted compared to a case where information indicating the prediction mode determined for each vertex is transmitted. As seen from the above, the encoding device is capable of improving encoding processing related to three-dimensional data.

(2) The encoding method according to (1), wherein the motion vector includes an X component, a Y component, and a Z component, the determining includes determining, as the prediction mode, on the per group basis, a first prediction mode that is a prediction mode for the X component, a second prediction mode that is a prediction mode for the Y component, and a third prediction mode that is a prediction mode for the Z component, and the transmitting includes transmitting, as the information indicating the prediction mode, first information indicating the first prediction mode, second information indicating the second prediction mode, and third information indicating the third prediction mode.

According to this aspect, when the encoding device encodes a motion vector having an X component, a Y component, and a Z component, the encoding device encodes the motion vector using an appropriate prediction mode for each component, and thus may be able to reduce the amount of encoded data by reducing the prediction residual. Accordingly, the encoding device is capable of improving encoding processing related to three-dimensional data.

(3) The encoding method according to (1) or (2), wherein the plurality of predetermined prediction modes include at least a prediction mode that uses, as the prediction value, a median value of motion vectors of a plurality of points adjacent to the vertex.

According to this aspect, when the encoding device encodes a motion vector, the encoding device encodes the motion vector using the median value of motion vectors of a plurality of points as a prediction value, and thus may be able to reduce the amount of encoded data by reducing the prediction residual. For example, when the motion vector to be encoded is relatively close to the median value of motion vectors of a plurality of points, it may be possible to reduce the amount of encoded data. Accordingly, the encoding device is capable of improving encoding processing related to three-dimensional data.

(4) The encoding method according to (1) or (2), wherein the plurality of predetermined prediction modes include at least a prediction mode that uses, as the prediction value, a motion vector of a vertex corresponding to the vertex in a reference frame that is referenced during encoding of a frame including the vertex.

According to this aspect, when the encoding device encodes a motion vector, the encoding device encodes the motion vector using the motion vector of a vertex in the reference frame that corresponds to the vertex to be encoded as a prediction value, and thus may be able to reduce the amount of encoded data by reducing the prediction residual. For example, when the motion vector to be encoded is relatively close to the motion vector of the vertex corresponding to the vertex to be encoded in the reference frame, it may be possible to reduce the amount of encoded data. Accordingly, the encoding device is capable of improving encoding processing related to three-dimensional data.

(5) The encoding method according to (1) or (2), wherein the plurality of predetermined prediction modes include at least a prediction mode that uses a fixed value as the prediction value.

According to this aspect, when the encoding device encodes a motion vector, the encoding device encodes the motion vector using a fixed value as a prediction value, and thus may be able to reduce the amount of encoded data by reducing the prediction residual. For example, when the motion vector to be encoded is relatively close to a fixed value, it may be possible to reduce the amount of encoded data. Accordingly, the encoding device is capable of improving encoding processing related to three-dimensional data.

(6) The encoding method according to (1) or (2), further including: among the plurality of predetermined prediction modes, setting a prediction value of each of one or more prediction modes to which prediction values are not assigned to 0, wherein in the determining, the prediction mode is determined using the plurality of predetermined prediction modes after the setting.

According to the above aspect, since the prediction values of one or more prediction modes to which prediction values are not assigned are set to 0, the encoding device can avoid encoding a motion vector using an indefinite value as a prediction value, even when encoding a motion vector using a prediction mode to which prediction values are not assigned. Accordingly, the encoding device is capable of improving encoding processing related to three-dimensional data.

(7) A decoding method executed by a decoding device that decodes a motion vector of a vertex included in a three-dimensional mesh, the decoding method including: receiving, from an encoding device, (i) information indicating a prediction mode that is used for determining a prediction vector which is a prediction value of the motion vector, the prediction mode being determined from among a plurality of predetermined prediction modes on a per group basis, the group being a unit for determining the prediction vector, and (ii) a total number of the plurality of predetermined prediction modes; and determining a prediction mode to be used for decoding the motion vector to be the prediction mode indicated in the information received, using the total number of the plurality of predetermined prediction modes. According to the above aspect, the decoding device receives the prediction mode determined for each group and the total number of prediction modes from the encoding device during decoding of the motion vector, and thus may be able to reduce the amount of information to be received. If a prediction mode were to be determined for each vertex, it may be necessary to receive information indicating the prediction mode determined for each vertex. According to this aspect, the decoding device receives information indicating the prediction mode determined for each group, and thus may be able to reduce the amount of information to be received compared to a case where information indicating the prediction mode determined for each vertex is received. As seen from the above, the decoding device is capable of improving decoding processing related to three-dimensional data.

(8) The decoding method according to (7), wherein the motion vector includes an X component, a Y component, and a Z component, the receiving includes receiving, as the information indicating the prediction mode, on the per group basis, first information indicating a first prediction mode that is a prediction mode for the X component, second information indicating a second prediction mode that is a prediction mode for the Y component, and third information indicating a third prediction mode that is a prediction mode for the Z component, and determining prediction modes to be used for decoding the X component, the Y component, and the Z component of the motion vector to respectively be the first prediction mode, the second prediction mode, and the third prediction mode indicated in the information received, using the total number of the plurality of predetermined prediction modes.

According to the above aspect, when the decoding device decodes a motion vector having an X component, a Y component, and a Z component, the decoding device may be able to receive less encoded data transmitted from the encoding device and decode the motion vector using an appropriate prediction mode for each component. Accordingly, the decoding device is capable of improving decoding processing related to three-dimensional data.

(9) The decoding method according to (7) or (8), wherein the plurality of predetermined prediction modes include at least a prediction mode that uses, as the prediction value, a median value of motion vectors of a plurality of points adjacent to the vertex.

According to this aspect, when the decoding device decodes a motion vector, the decoding device decodes the motion vector using the median value of the motion vectors of a plurality of points as a prediction value, and thus may be able to decode the motion vector using a smaller prediction residual included in less encoded data transmitted from the encoding device. For example, when the motion vector to be encoded is relatively close to the median value of motion vectors of a plurality of points, it may be possible to decode the motion vector from less encoded data. Accordingly, the decoding device is capable of improving decoding processing related to three-dimensional data.

(10) The decoding method according to (7) or (8), wherein the plurality of predetermined prediction modes include at least a prediction mode that uses, as the prediction value, a motion vector of a vertex corresponding to the vertex in a reference frame that is referenced during encoding of a frame including the vertex.

According to this aspect, when the decoding device decodes a motion vector, the decoding device decodes the motion vector using the motion vector of a vertex in the reference frame that corresponds to the vertex to be decoded as a prediction value, and thus may be able to decode the motion vector using a smaller prediction residual included in less encoded data transmitted from the encoding device. For example, when the motion vector to be decoded is relatively close to the motion vector of the vertex corresponding to the vertex to be decoded in the reference frame, it may be possible to decode the motion vector from less encoded data. Accordingly, the decoding device is capable of improving decoding processing related to three-dimensional data.

(11) The decoding method according to (7) or (8), wherein the plurality of predetermined prediction modes include at least a prediction mode that uses a fixed value as the prediction value.

According to this aspect, when the decoding device decodes a motion vector, the decoding device decodes the motion vector using a fixed value as a prediction value, and thus may be able to decode the motion vector using a smaller prediction residual included in less encoded data transmitted from the encoding device. For example, when the motion vector to be decoded is relatively close to a fixed value, it may be possible to decode the motion vector from less encoded data. Accordingly, the decoding device is capable of improving decoding processing related to three-dimensional data.

(12) The decoding method according to (7) or (8), further including: among the plurality of predetermined prediction modes, setting a prediction value of each of one or more prediction modes to which prediction values are not assigned to 0, wherein in the determining, the prediction mode to be used for decoding the motion vector is determined using the plurality of predetermined prediction modes after the setting.

According to the above aspect, since the prediction values of one or more prediction modes to which prediction values are not assigned are set to 0, the decoding device can avoid decoding a motion vector using an indefinite value as a prediction value, even when decoding a motion vector using a prediction mode to which prediction values are not assigned. Accordingly, the decoding device is capable of improving decoding processing related to three-dimensional data.

(13) An encoding device that encodes a motion vector of a vertex included in a three-dimensional mesh, the encoding device including: memory; and a circuit having access to the memory, wherein in operation, the circuit: determines on a per group basis, from among a plurality of predetermined prediction modes, a prediction mode to be used for determining a prediction vector which is a prediction value of the motion vector, the group being a unit for determining the prediction vector; and transmits (i) information indicating the prediction mode determined and (ii) a total number of the plurality of predetermined prediction modes to a decoding device.

This aspect produces the same advantageous effects as with the above encoding method.

(14) A decoding device that decodes a motion vector of a vertex included in a three-dimensional mesh, the decoding device including: memory; and a circuit having access to the memory, wherein in operation, the circuit: receives, from an encoding device, (i) information indicating a prediction mode that is used for determining a prediction vector which is a prediction value of the motion vector, the prediction mode being determined from among a plurality of predetermined prediction modes on a per group basis, the group being a unit for determining the prediction vector, and (ii) a total number of the plurality of predetermined prediction modes; and determines a prediction mode to be used for decoding the motion vector to be the prediction mode indicated in the information received, using the total number of the plurality of predetermined prediction modes.

This aspect produces the same advantageous effects as with the above decoding method.

(15) An encoding method that is executed by an encoding device that encodes information of a three-dimensional point, the encoding method including: determining on a per group basis, from among a plurality of predetermined prediction modes, a prediction mode to be used for determining a prediction value of the information of the three-dimensional point, the group being a unit for prediction processing; and transmitting (i) information indicating the prediction mode determined and (ii) a total number of the plurality of predetermined prediction modes to a decoding device.

According to the above aspect, the encoding device transmits the prediction mode determined for each group and the total number of prediction modes to the decoding device during encoding of the information of the three-dimensional points, and thus may be able to reduce the amount of information to be transmitted. If the encoding device were to determine a prediction mode for each three-dimensional point, it may be necessary to transmit information indicating the prediction mode determined for each three-dimensional point to the decoding device. According to this aspect, the encoding device transmits information indicating the prediction mode determined for each group, and thus may be able to reduce the amount of information to be transmitted compared to a case where information indicating the prediction mode determined for each three-dimensional point is transmitted. As seen from the above, the encoding device is capable of improving encoding processing related to three-dimensional data.

(16) The encoding method according to (15), wherein the information of the three-dimensional point is attribute information or position information.

According to this aspect, the encoding device may be able to reduce the amount of information to be transmitted by using attribute information or position information as the information of the three-dimensional points. As seen from the above, the encoding device is capable of improving encoding processing related to three-dimensional data.

(17) A decoding method executed by a decoding device that decodes information of a three-dimensional point, the decoding method including: receiving, from an encoding device, (i) information indicating a prediction mode that is used for determining a prediction value of the information of the three-dimensional point, the prediction mode being determined from among a plurality of predetermined prediction modes on a per group basis, the group being a unit for prediction processing, and (ii) a total number of the plurality of predetermined prediction modes; and determining a prediction mode to be used for decoding the information of the three-dimensional point to be the prediction mode indicated in the information received, using the total number of the plurality of predetermined prediction modes.

According to the above aspect, the decoding device receives the prediction mode determined for each group and the total number of prediction modes from the encoding device during decoding of the information of the three-dimensional points, and thus may be able to reduce the amount of information to be received. If a prediction mode were to be determined for each three-dimensional point, it may be necessary to receive information indicating the prediction mode determined for each three-dimensional point. According to this aspect, the decoding device receives information indicating the prediction mode determined for each group, and thus may be able to reduce the amount of information to be received compared to a case where information indicating the prediction mode determined for each three-dimensional point is received. As seen from the above, the decoding device is capable of improving decoding processing related to three-dimensional data.

(18) The decoding method according to (17), wherein the information of the three-dimensional point is attribute information or position information.

According to this aspect, the decoding device may be able to reduce the amount of information to be received by using attribute information or position information as the information of the three-dimensional points. As seen from the above, the decoding device is capable of improving decoding processing related to three-dimensional data.

Note that these general or specific aspects may be implemented using a system, a device, an integrated circuit, a computer program, or a computer-readable recording medium such as a CD-ROM, or any combination of systems, devices, integrated circuits, computer programs, or recording media.

Hereinafter, an embodiment of the present disclosure will be described in detail with reference to the drawings.

The embodiments described below each illustrate a general or specific example of the present disclosure. The numerical values, shapes, materials, elements, the arrangement and connection of the elements, steps, order of the steps, etc., shown in the following embodiments are mere examples, and therefore do not limit the scope of the present invention. Accordingly, among the elements in the following embodiments, those not recited in any of the independent claims defining the broadest concept are described as optional elements.

[Embodiment]

In the present embodiment, an encoding method and a decoding method will be described.

<Expressions and terms>

The following expressions and terms will be used herein.

(1) Three-dimensional mesh

A three-dimensional mesh is a set of a plurality of faces and indicates, for example, a three-dimensional object. In addition, a three-dimensional mesh is mainly constituted of vertex information, connection information, and attribute information. A three-dimensional mesh may be expressed as a polygon mesh or a mesh. In addition, a three-dimensional mesh may have a temporal change. A three-dimensional mesh may include metadata related to vertex information, connection information, and attribute information or other additional information.

(2) Vertex information

Vertex information is information indicating a vertex. For example, vertex information indicates a position of a vertex in a three-dimensional space. In addition, a vertex corresponds to a vertex of a face that constitutes a three-dimensional mesh. Vertex information may be expressed as "geometry". In addition, vertex information may also be expressed as position information.

(3) Connection information

Connection information is information indicating a connection between vertices. For example, connection information indicates a connection for constructing a face or an edge of a three-dimensional mesh. Connection information may be expressed as "connectivity". In addition, connection information may also be expressed as face information.

(4) Attribute information

Attribute information is information indicating an attribute of a vertex or a face. For example, attribute information indicates an attribute such as a color, an image, a normal vector, and the like associated with a vertex or a face. Attribute information may be expressed as "texture".

(5) Face

A face is an element that constitutes a three-dimensional mesh. Specifically, a face is a polygon on a plane in a three-dimensional space. For example, a face can be determined as a triangle in the three-dimensional space.

(6) Plane

A plane is a two-dimensional plane in a three-dimensional space. For example, a polygon is formed on a plane and a plurality of polygons are formed on a plurality of planes.

(7) Bitstream

A bitstream corresponds to encoded information. A bitstream can also be expressed as a stream, an encoded bitstream, a compressed bitstream, or an encoded signal.

(8) Encoding and decoding

The expression "encode" may be replaced with expressions such as store, include, write, describe, signalize, send out, notify, save, or compress and such expressions may be interchangeably used. For example, encoding information may mean including information in a bitstream. In addition, encoding information in a bitstream may mean encoding the information and generating a bitstream that includes the encoded information.

In addition, the expression "decode" may be replaced with expressions such as read, interpret, scan, load, derive, acquire, receive, extract, restore, reconstruct, decompress, or expand and such expressions may be interchangeably used. For example, decoding information may mean acquiring information from a bitstream. In addition, decoding information from a bitstream may mean decoding the bitstream and acquiring information included in the bitstream.

(9) Ordinal numbers

**[0029]** In the description, an ordinal number such as first, second, or the like may be affixed to a constituent element or the like. Such ordinal numbers may be replaced as necessary. In addition, an ordinal number may be newly affixed to or removed from a constituent element or the like. Furthermore, the ordinal numbers may be affixed to elements in order to identify the elements and may not correspond to any meaningful order.

<Three-dimensional mesh>

FIG. 1 is a conceptual diagram illustrating a three-dimensional mesh according to the present embodiment. The three-dimensional mesh is constituted of a plurality of faces. For example, each face is a triangle. Vertices of the triangles are determined in a three-dimensional space. In addition, a three-dimensional mesh indicates a three-dimensional object. Each face may have a color or an image.

FIG. 2 is a conceptual diagram illustrating basic elements of a three-dimensional mesh according to the present embodiment. The three-dimensional mesh is constituted of vertex information, connection information, and attribute information. Vertex information indicates a position of a vertex of a face in a three-dimensional space. Connection information indicates a connection between vertices. A face can be identified based on vertex information and connection information. In other words, an uncolored three-dimensional object is formed in a three-dimensional space based on vertex information and connection information.

Attribute information may be associated with a vertex or associated with a face. Attribute information associated with a vertex may be expressed as "attribute per point". Attribute information associated with a vertex may indicate an attribute of the vertex itself or indicate an attribute of a face connected to the vertex.

For example, a color may be associated with a vertex as attribute information. The color associated with the vertex may be the color of the vertex or the color of a face connected to the vertex. The color of the face may be an average of a plurality of colors associated with a plurality of vertices of the face. In addition, a normal vector may be associated with a vertex or a face as attribute information. Such a normal vector can express a front and a rear of a face.

In addition, a two-dimensional image may be associated with a face as attribute information. The two-dimensional image associated with a face is also expressed as a texture image or an "attribute map". In addition, information indicating mapping between a face and a two-dimensional image may be associated with the face as attribute information. Such information indicating mapping may be expressed as mapping information, vertex information of a texture image, texture coordinates, or an "attribute UV coordinate".

Furthermore, information on a color, an image, a moving image, and the like to be used as attribute information may be expressed as "parametric space".

A texture is reflected in a three-dimensional object based on such attribute information. In other words, a colored three-dimensional object is formed in a three-dimensional space based on vertex information, connection information, and attribute information.

Note that while attribute information is associated with a vertex or a face in the description given above, alternatively, attribute information may be associated with an edge.

FIG. 3 is a conceptual diagram illustrating mapping according to the present embodiment. For example, a region of a two-dimensional image on a two-dimensional plane can be mapped to a face of a three-dimensional mesh in a three-dimensional space. Specifically, coordinate information of a region in the two-dimensional image is associated with a face of the three-dimensional mesh. Accordingly, an image of the mapped region in the two-dimensional image is reflected in the face of the three-dimensional mesh.

The use of mapping enables a two-dimensional image to be used as attribute information to be separated from the three-dimensional mesh. For example, in encoding of the three-dimensional mesh, the two-dimensional image may be encoded based on an image encoding system or a video encoding system.

<System configuration>

FIG. 4 is a block diagram illustrating a configuration example of an encoding/decoding system according to the present embodiment. In FIG. 4, the encoding/decoding system includes encoding device 100 and decoding device 200.

For example, encoding device 100 acquires a three-dimensional mesh and encodes the three-dimensional mesh into a bitstream. In addition, encoding device 100 outputs the bitstream to network 300. For example, the bitstream includes an encoded three-dimensional mesh and control information for decoding the encoded three-dimensional mesh. Encoding of the three-dimensional mesh causes information of the three-dimensional mesh to be compressed.

Network 300 transmits the bitstream from encoding device 100 to decoding device 200. Network 300 may be the Internet, a wide area network (WAN), a local area network (LAN), or a combination thereof. Network 300 is not necessarily limited to two-way communication and may be a unidirectional communication network for terrestrial digital broadcasting, satellite broadcasting, or the like.

In addition, network 300 may be replaced with a recording medium such as a DVD (digital versatile disc), a BD (Blu-Ray Disc (registered trademark)), or the like.

Decoding device 200 acquires a bitstream and decodes a three-dimensional mesh from the bitstream. Decoding of the three-dimensional mesh causes information of the three-dimensional mesh to be expanded. For example, decoding device 200 decodes a three-dimensional mesh according to a decoding method corresponding to an encoding method used by encoding device 100 to encode the three-dimensional mesh. In other words, encoding device 100 and decoding device 200 perform encoding and decoding according to an encoding method and a decoding method which correspond to each other.

Note that the three-dimensional mesh before encoding can also be expressed as an original three-dimensional mesh. In addition, the three-dimensional mesh after decoding is also expressed as a reconstructed three-dimensional mesh.

<Encoding device>

FIG. 5 is a block diagram illustrating a configuration example of encoding device 100 according to the present embodiment. For example, encoding device 100 includes vertex information encoder 101, connection information encoder 102, and attribute information encoder 103.

Vertex information encoder 101 is an electric circuit which encodes vertex information. For example, vertex information encoder 101 encodes vertex information into a bitstream according to a format defined with respect to the vertex information.

Connection information encoder 102 is an electric circuit which encodes connection information. For example, connection information encoder 102 encodes connection information into a bitstream according to a format defined with respect to the connection information.

Attribute information encoder 103 is an electric circuit which encodes attribute information. For example, attribute information encoder 103 encodes attribute information into a bitstream according to a format defined with respect to the attribute information.

Variable-length coding or fixed length coding may be used for encoding vertex information, connection information, and attribute information. The variable-length coding may accommodate Huffman coding, context-adaptive binary arithmetic coding (CABAC), or the like.

Vertex information encoder 101, connection information encoder 102, and attribute information encoder 103 may be integrated. Alternatively, each of vertex information encoder 101, connection information encoder 102, and attribute information encoder 103 may be further divided into a plurality of constituent elements.

FIG. 6 is a block diagram illustrating another configuration example of encoding device 100 according to the present embodiment. For example, in addition to the components illustrated in FIG. 5, encoding device 100 includes preprocessor 104 and postprocessor 105.

Preprocessor 104 is an electric circuit which performs processing before encoding of vertex information, connection information, and attribute information. For example, preprocessor 104 may perform transformation processing, demultiplexing, multiplexing, or the like with respect to a three-dimensional mesh before encoding. More specifically, for example, preprocessor 104 may demultiplex vertex information, connection information, and attribute information from the three-dimensional mesh before encoding.

Postprocessor 105 is an electric circuit which performs processing after the encoding of vertex information, connection information, and attribute information. For example, postprocessor 105 may perform transformation processing, demultiplexing, multiplexing, or the like with respect to vertex information, connection information, and attribute information after encoding. More specifically, for example, postprocessor 105 may multiplex vertex information, connection information, and attribute information after encoding into a bitstream. In addition, for example, postprocessor 105 may further perform variable-length coding with respect to vertex information, connection information, and attribute information after the encoding.

<Decoding device>

FIG. 7 is a block diagram illustrating a configuration example of decoding device 200 according to the present embodiment. For example, decoding device 200 includes vertex information decoder 201, connection information decoder 202, and attribute information decoder 203.

Vertex information decoder 201 is an electric circuit which decodes vertex information. For example, vertex information decoder 201 decodes vertex information from a bitstream according to a format defined with respect to the vertex information.

Connection information decoder 202 is an electric circuit which decodes connection information. For example, connection information decoder 202 decodes connection information from a bitstream according to a format defined with respect to the connection information.

Attribute information decoder 203 is an electric circuit which decodes attribute information. For example, attribute information decoder 203 decodes attribute information from a bitstream according to a format defined with respect to the attribute information.

Variable-length decoding or fixed length decoding may be used for decoding vertex information, connection information, and attribute information. The variable-length decoding may accommodate Huffman coding, context-adaptive binary arithmetic coding (CABAC), or the like.

Vertex information decoder 201, connection information decoder 202, and attribute information decoder 203 may be integrated. Alternatively, each of vertex information decoder 201, connection information decoder 202, and attribute information decoder 203 may be further divided into a plurality of constituent elements.

FIG. 8 is a block diagram illustrating another configuration example of decoding device 200 according to the present embodiment. For example, in addition to the components illustrated in FIG. 7, decoding device 200 includes preprocessor 204 and postprocessor 205.

Preprocessor 204 is an electric circuit which performs processing before decoding of vertex information, connection information, and attribute information. For example, preprocessor 204 may perform transformation processing, demultiplexing, multiplexing, or the like with respect to a bitstream before decoding of vertex information, connection information, and attribute information.

More specifically, for example, preprocessor 204 may demultiplex, from a bitstream, a sub-bitstream corresponding to vertex information, a sub-bitstream corresponding to connection information, and a sub-bitstream corresponding to attribute information. In addition, for example, preprocessor 204 may perform variable-length decoding with respect to the bitstream in advance before decoding of vertex information, connection information, and attribute information.

Postprocessor 205 is an electric circuit which performs processing after the decoding of vertex information, connection information, and attribute information. For example, postprocessor 205 may perform transformation processing, demultiplexing, multiplexing, or the like with respect to vertex information, connection information, and attribute information after decoding. More specifically, for example, postprocessor 205 may multiplex vertex information, connection information, and attribute information after decoding into a three-dimensional mesh.

<Bitstream>

Vertex information, connection information, and attribute information are encoded and stored in a bitstream. A relationship between these pieces of information and the bitstream will be described below.

FIG. 9 is a conceptual diagram illustrating a configuration example of a bitstream according to the present embodiment. In this example, connection information, vertex information, and attribute information are integrated in the bitstream. For example, connection information, vertex information, and attribute information may be included in one file.

In addition, a plurality of portions of the pieces of information may be sequentially stored such as a first portion of connection information, a first portion of vertex information, a first portion of attribute information, a second portion of connection information, a second portion of vertex information, a second portion of attribute information, and so on. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 10 is a conceptual diagram illustrating another configuration example of a bitstream according to the present embodiment. In the example, a plurality of files are included in a bitstream and connection information, vertex information, and attribute information are respectively stored in different files. While a file including connection information, a file including vertex information, and a file including attribute information are illustrated here, storage formats are not limited to this example. For example, two types of information among connection information, vertex information, and attribute information may be included in one file and the one remaining type of information may be included in another file.

Alternatively, the pieces of information can be stored by being divided into a larger number of files. For example, a plurality of portions of connection information may be stored in a plurality of files, a plurality of portions of vertex information may be stored in a plurality of files, and a plurality of portions of attribute information may be stored in a plurality of files. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 11 is a conceptual diagram illustrating another configuration example of a bitstream according to the present embodiment. In the example, a bitstream is constituted of a plurality of separable sub-bitstreams and connection information, vertex information, and attribute information are respectively stored in different sub-bitstreams.

While a sub-bitstream including connection information, a sub-bitstream including vertex information, and a sub-bitstream including attribute information are illustrated here, storage formats are not limited to this example.

For example, two types of information among connection information, vertex information, and attribute information may be included in one sub-bitstream and the one remaining type of information may be included in another sub-bitstream. Specifically, attribute information such as a two-dimensional image may be stored in a sub-bitstream conforming to an image encoding system separately from a sub-bitstream of connection information and vertex information.

In addition, each sub-bitstream may include a plurality of files. Furthermore, a plurality of portions of connection information may be stored in a plurality of files, a plurality of portions of vertex information may be stored in a plurality of files, and a plurality of portions of attribute information may be stored in a plurality of files.

Furthermore, an order of storage of connection information, vertex information, and attribute information is not limited to the example illustrated in FIG. 9, FIG. 10, and FIG. 11, and an order of storage that differs from this example may be used. For example, vertex information, connection information, and attribute information may be stored in a bitstream in this order. Alternatively, in an order other than this order, e.g., in any of orders: connection information, attribute information, and vertex information; vertex information, attribute information, and connection information; attribute information, connection information, and vertex information; and attribute information, vertex information, and connection information, these pieces of information may be stored in a bitstream.

Furthermore, each of connection information, vertex information, and attribute information may be divided into a plurality of data items, and the plurality of data items may be stored in a bitstream in a periodic order or in a random order.

<Specific example>

FIG. 12 is a block diagram illustrating a specific example of the encoding/decoding system according to the present embodiment. In FIG. 12, the encoding/decoding system includes three-dimensional data encoding system 110, three-dimensional data decoding system 210, and external connector 310.

Three-dimensional data encoding system 110 includes controller 111, input/output processor 112, three-dimensional data encoder 113, three-dimensional data generator 115, and system multiplexer 114. Three-dimensional data decoding system 210 includes controller 211, input/output processor 212, three-dimensional data decoder 213, system demultiplexer 214, presenter 215, and user interface 216.

In three-dimensional data encoding system 110, sensor data is input from a sensor terminal to three-dimensional data generator 115. Three-dimensional data generator 115 generates three-dimensional data that is point cloud data, mesh data, or the like from the sensor data and inputs the three-dimensional data to three-dimensional data encoder 113.

For example, three-dimensional data generator 115 generates vertex information and generates connection information and attribute information which correspond to the vertex information. Three-dimensional data generator 115 may process vertex information when generating connection information and attribute information. For example, three-dimensional data generator 115 may reduce a data amount by deleting overlapping vertices or transform vertex information (position shift, rotation, normalization, or the like). In addition, three-dimensional data generator 115 may render attribute information.

While three-dimensional data generator 115 is a constituent element of three-dimensional data encoding system 110 in FIG. 12, three-dimensional data generator 115 may be disposed on the outside independent of three-dimensional data encoding system 110.

For example, a sensor terminal that provides sensor data for generating three-dimensional data may be a mobile object such as an automobile, a flying object such as an airplane, a mobile terminal, a camera, or the like. Alternatively, a range sensor such as LIDAR, a millimeter-wave radar, an infrared sensor, or a range finder, a stereo camera, a combination of a plurality of monocular cameras, or the like may be used as the sensor terminal.

The sensor data may be a distance (position) of an object, a monocular camera image, a stereo camera image, a color, a reflectance, an attitude or an orientation of a sensor, a gyro, a sensing position (GPS information or elevation), a velocity, an acceleration, a time of day of sensing, air temperature, air pressure, humidity, magnetism, or the like.

Three-dimensional data encoder 113 corresponds to encoding device 100 illustrated in FIG. 5 and the like. For example, three-dimensional data encoder 113 encodes three-dimensional data and generates encoded data. In addition, three-dimensional data encoder 113 generates control information when encoding the three-dimensional data. Furthermore, three-dimensional data encoder 113 inputs the encoded data to system multiplexer 114 together with the control information.

The encoding system of three-dimensional data may be an encoding system using geometry or an encoding system using a video codec. In this case, an encoding system using geometry may also be expressed as a geometry-based encoding system. An encoding system using a video codec may also be expressed as a video-based encoding system.

System multiplexer 114 multiplexes encoded data and control information input from three-dimensional data encoder 113 and generates multiplexed data using a prescribed multiplexing system. System multiplexer 114 may multiplex other media such as video, audio, subtitles, application data, or document files, reference time information, or the like together with the encoded data and control information of three-dimensional data. Furthermore, system multiplexer 114 may multiplex attribute information related to sensor data or three-dimensional data.

For example, multiplexed data has a file format for accumulation, a packet format for transmission, or the like. ISOBMFF or an ISOBMFF-based system may be used as an accumulation system or a transmission system. Alternatively, MPEG-DASH, MMT, MPEG-2 TS Systems, RTP, or the like may be used.

In addition, multiplexed data is output as a transmission signal by input/output processor 112 to external connector 310. The multiplexed data may be transmitted as a transmission signal in a wired manner or in a wireless manner. Alternatively, the multiplexed data is accumulated in an internal memory or a storage device. The multiplexed data may be transmitted via the Internet to a cloud server or stored in an external storage device.

For example, the transmission or accumulation of the multiplexed data is performed by a method in accordance with a medium for transmission or accumulation such as broadcasting or communication. As a communication protocol, http, ftp, TCP, UDP, IP, or a combination thereof may be used. In addition, a pull-type communication scheme may be used or a push-type communication scheme may be used.

Ethernet (registered trademark), USB, RS-232C, HDMI (registered trademark), a coaxial cable, or the like may be used for wired transmission. In addition, 3GPP (registered trademark), 3G/4G/5G as specified by IEEE, a wireless LAN, Bluetooth, or a millimeter-wave may be used for wireless transmission. Furthermore, for example, DVB-T2, DVB-S2, DVB-C2, ATSC 3.0, ISDB-S3, or the like may be used as a broadcasting system.

Note that sensor data may be input to three-dimensional data generator 115 or system multiplexer 114. In addition, three-dimensional data or encoded data may be output as-is as a transmission signal to external connector 310 via input/output processor 112. The transmission signal output from three-dimensional data encoding system 110 is input to three-dimensional data decoding system 210 via external connector 310.

In addition, each operation of three-dimensional data encoding system 110 may be controlled by controller 111 which executes application programs.

In three-dimensional data decoding system 210, a transmission signal is input to input/output processor 212. Input/output processor 212 decodes multiplexed data having a file format or a packet format from the transmission signal and inputs the multiplexed data to system demultiplexer 214. System demultiplexer 214 acquires encoded data and control information from the multiplexed data and inputs the encoded data and the control information to three-dimensional data decoder 213. System demultiplexer 214 may extract other media, reference time information, or the like from the multiplexed data.

Three-dimensional data decoder 213 corresponds to decoding device 200 illustrated in FIG. 7 and the like. For example, three-dimensional data decoder 213 decodes three-dimensional data from the encoded data based on an encoding system specified in advance. Subsequently, the three-dimensional data is presented to a user by presenter 215.

In addition, additional information such as sensor data may be input to presenter 215. Presenter 215 may present three-dimensional data based on the additional information. In addition, an instruction by the user may be input to user interface 216 from a user terminal. Furthermore, presenter 215 may present three-dimensional data based on the input instruction.

Note that input/output processor 212 may acquire three-dimensional data and encoded data from external connector 310.

In addition, each operation of three-dimensional data decoding system 210 may be controlled by controller 211 which executes application programs.

FIG. 13 is a conceptual diagram illustrating a configuration example of point cloud data according to the present embodiment. Point cloud data refers to data of a point cloud that indicates a three-dimensional object.

Specifically, a point cloud is constituted of a plurality of points and has position information which indicates a three-dimensional coordinate position of each point and attribute information which indicates an attribute of each point. The position information is also expressed as geometry.

For example, a type of attribute information may be a color, a reflectance, or the like. Attribute information related to one type may be associated with one point, attribute information related to a plurality of different types may be associated with one point, or attribute information having a plurality of values with respect to a same type may be associated with one point.

FIG. 14 is a conceptual diagram illustrating a data file example of the point cloud data according to the present embodiment. The example is an example of a case where items of position information and items of attribute information have a one-to-one correspondence and the example indicates position information and attribute information of N-number of points which constitute the point cloud data. In this example, position information is information indicating a three-dimensional coordinate position by three axes of x, y, and z and attribute information is information indicating a color by RGB. As a representative data file of point cloud data, a PLY file or the like can be used.

FIG. 15 is a conceptual diagram illustrating a configuration example of mesh data according to the present embodiment. Mesh data is data used in CG (computer graphics) or the like and is data of a three-dimensional mesh which represents a three-dimensional shape of an object by a plurality of faces. Each face is also expressed as a polygon and has a polygonal shape such as a triangle or a quadrilateral.

Specifically, in addition to the plurality of points which constitute a point cloud, a three-dimensional mesh is constituted of a plurality of edges and a plurality of faces. Each point is also expressed as a vertex or a position. Each edge corresponds to a line segment which connects two vertices. Each face corresponds to an area enclosed by three or more edges.

In addition, a three-dimensional mesh has position information indicating three-dimensional coordinate positions of vertices. The position information is also expressed as vertex information or geometry. Furthermore, a three-dimensional mesh has connection information indicating a relationship among a plurality of vertices constituting an edge or a face. The connection information is also expressed as connectivity. In addition, a three-dimensional mesh has attribute information indicating an attribute with respect to a vertex, an edge, or a face. The attribute information in a three-dimensional mesh is also expressed as a texture.

For example, attribute information may indicate a color, a reflectance, or a normal vector with respect to a vertex, an edge, or a face. An orientation of a normal vector can express a front and a rear of a face.

An object file or the like may be used as a data file format of mesh data.

FIG. 16 is a conceptual diagram illustrating a data file example of the mesh data according to the present embodiment. In the example, a data file includes pieces of position information G(1) to G(N) and pieces of attribute information A1(1) to A1(N) of N-number of vertices which constitute a three-dimensional mesh. In addition, in the example, M-number of pieces of attribute information A2(1) to A2(M) are included. An item of attribute information need not correspond one-to-one to a vertex and need not correspond one-to-one to a face. In addition, attribute information need not exist.

Connection information is indicated by a combination of indexes of vertices. n [1, 3, 4] indicates a face of a triangle constituted of three vertices n = 1, n = 3, and n = 4. In addition, m [2, 4, 6] indicates that pieces of attribute information m = 2, m = 4, and m = 6 respectively correspond to the three vertices.

In addition, a substantive content of the attribute information may be described in a separate file. Furthermore, a pointer with respect to the content may be associated with a vertex, a face, or the like. For example, attribute information indicating an image with respect to a face may be stored in a two-dimensional attribute map file. In addition, a file name of the attribute map and a two-dimensional coordinate value in the attribute map may be described in pieces of attribute information A2(1) to A2(M). Methods of designating attribute information with respect to a face are not limited to these methods and any kind of method may be used.

FIG. 17 is a conceptual diagram illustrating a type of three-dimensional data according to the present embodiment. Point cloud data and mesh data may either indicate a static object or a dynamic object. A static object is an object that does not temporally change and a dynamic object is an object that temporally changes. A static object may correspond to three-dimensional data with respect to an arbitrary time point.

For example, point cloud data with respect to an arbitrary time point may be expressed as a PCC frame. In addition, mesh data with respect to an arbitrary time point may be expressed as a mesh frame. Furthermore, a PCC frame and a mesh frame may be simply expressed as a frame.

In addition, an area of an object may be limited to a certain range in a similar manner to ordinary video data or need not be limited in a similar manner to map data. Furthermore, a density of points or faces may be set in various ways. Sparse point cloud data or sparse mesh data may be used or dense point cloud data or dense mesh data may be used.

Next, encoding and decoding of a point cloud or a three-dimensional mesh will be described. A device, processing, or a syntax for encoding and decoding vertex information of a three-dimensional mesh according to the present disclosure may be applied to the encoding and decoding of a point cloud. A device, processing, or a syntax for encoding and decoding a point cloud according to the present disclosure may be applied to the encoding and decoding of vertex information of a three-dimensional mesh.

In addition, a device, processing, or a syntax for encoding and decoding attribute information of a point cloud according to the present disclosure may be applied to the encoding and decoding of connection information or attribute information of a three-dimensional mesh. Furthermore, a device, processing, or a syntax for encoding and decoding connection information or attribute information of a three-dimensional mesh according to the present disclosure may be applied to the encoding and decoding of attribute information of a point cloud.

Furthermore, at least a part of processing may be commonalized between the encoding and decoding of point cloud data and the encoding and decoding of mesh data. This can reduce the size and complexity of circuits and software programs.

FIG. 18 is a block diagram illustrating a configuration example of three-dimensional data encoder 113 according to the present embodiment. In this example, three-dimensional data encoder 113 includes vertex information encoder 121, attribute information encoder 122, metadata encoder 123, and multiplexer 124. Vertex information encoder 121, attribute information encoder 122, and multiplexer 124 may correspond to vertex information encoder 101, attribute information encoder 103, postprocessor 105, and the like illustrated in FIG. 6.

In addition, in this example, three-dimensional data encoder 113 encodes three-dimensional data according to a geometry-based encoding system. Encoding according to the geometry-based encoding system takes a three-dimensional structure into consideration. Furthermore, in encoding according to the geometry-based encoding system, attribute information is encoded using configuration information obtained during encoding of vertex information.

Specifically, first, vertex information, attribute information, and metadata included in three-dimensional data generated from sensor data are respectively input to vertex information encoder 121, attribute information encoder 122, and metadata encoder 123. In this case, connection information included in three-dimensional data may be handled in a similar manner to attribute information. In addition, in the case of point cloud data, position information may be handled as vertex information.

Vertex information encoder 121 encodes vertex information into compressed vertex information and outputs the compressed vertex information to multiplexer 124 as encoded data. In addition, vertex information encoder 121 generates metadata of the compressed vertex information and outputs the metadata to multiplexer 124. Furthermore, vertex information encoder 121 generates configuration information and outputs the configuration information to attribute information encoder 122.

Attribute information encoder 122 encodes attribute information into compressed attribute information using the configuration information generated by vertex information encoder 121 and outputs the compressed attribute information to multiplexer 124 as encoded data. In addition, attribute information encoder 122 generates metadata of the compressed attribute information and outputs the metadata to multiplexer 124.

Metadata encoder 123 encodes compressible metadata into compressed metadata and outputs the compressed metadata to multiplexer 124 as encoded data. The metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 19 is a block diagram illustrating a configuration example of three-dimensional data decoder 213 according to the present embodiment. In this example, three-dimensional data decoder 213 includes vertex information decoder 221, attribute information decoder 222, metadata decoder 223, and demultiplexer 224. Vertex information decoder 221, attribute information decoder 222, and demultiplexer 224 may correspond to vertex information decoder 201, attribute information decoder 203, preprocessor 204, and the like illustrated in FIG. 8.

In addition, in this example, three-dimensional data decoder 213 decodes three-dimensional data according to a geometry-based encoding system. Decoding according to the geometry-based encoding system takes a three-dimensional structure into consideration. Furthermore, in decoding according to the geometry-based encoding system, attribute information is decoded using configuration information obtained during decoding of vertex information.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information and the metadata of the compressed vertex information are input to vertex information decoder 221. The compressed attribute information and the metadata of the compressed attribute information are input to attribute information decoder 222. The metadata is input to metadata decoder 223.

Vertex information decoder 221 decodes vertex information from the compressed vertex information using the metadata of the compressed vertex information. In addition, vertex information decoder 221 generates configuration information and outputs the configuration information to attribute information decoder 222. Attribute information decoder 222 decodes attribute information from the compressed attribute information using the configuration information generated by vertex information decoder 221 and the metadata of the compressed attribute information. Metadata decoder 223 decodes metadata from the compressed metadata. The metadata decoded by metadata decoder 223 may be used to decode vertex information and to decode attribute information.

Subsequently, the vertex information, the attribute information, and the metadata are output from three-dimensional data decoder 213 as three-dimensional data. For example, the metadata is metadata of vertex information and attribute information and can be used in an application program.

FIG. 20 is a block diagram illustrating another configuration example of three-dimensional data encoder 113 according to the present embodiment. In this example, three-dimensional data encoder 113 includes vertex image generator 131, attribute image generator 132, metadata generator 133, video encoder 134, metadata encoder 123, and multiplexer 124. Vertex image generator 131, attribute image generator 132, and video encoder 134 may correspond to vertex information encoder 101, attribute information encoder 103, and the like illustrated in FIG. 6.

In addition, in this example, three-dimensional data encoder 113 encodes three-dimensional data according to a video-based encoding system. In encoding according to the video-based encoding system, a plurality of two-dimensional images are generated from three-dimensional data and the plurality of two-dimensional images are encoded according to a video encoding system. In this case, the video encoding system may be HEVC (high efficiency video coding), VVC (versatile video coding), or the like.

Specifically, first, vertex information and attribute information included in three-dimensional data generated from sensor data are input to metadata generator 133. In addition, the vertex information and the attribute information are respectively input to vertex image generator 131 and attribute image generator 132. Furthermore, the metadata included in the three-dimensional data is input to metadata encoder 123. In this case, connection information included in three-dimensional data may be handled in a similar manner to attribute information. In addition, in the case of point cloud data, position information may be handled as vertex information.

Metadata generator 133 generates map information of a plurality of two-dimensional images from the vertex information and the attribute information. In addition, metadata generator 133 inputs the map information into vertex image generator 131, attribute image generator 132, and metadata encoder 123.

Vertex image generator 131 generates a vertex image based on the vertex information and the map information and inputs the vertex image into video encoder 134. Attribute image generator 132 generates an attribute image based on the attribute information and the map information and inputs the attribute image into video encoder 134.

Video encoder 134 respectively encodes the vertex image and the attribute image into compressed vertex information and compressed attribute information according to the video encoding system and outputs the compressed vertex information and the compressed attribute information to multiplexer 124 as encoded data. In addition, video encoder 134 generates metadata of the compressed vertex information and metadata of the compressed attribute information and outputs the pieces of metadata to multiplexer 124.

Metadata encoder 123 encodes compressible metadata into compressed metadata and outputs the compressed metadata to multiplexer 124 as encoded data. Compressible metadata includes map information. In addition, the metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 21 is a block diagram illustrating another configuration example of three-dimensional data decoder 213 according to the present embodiment. In this example, three-dimensional data decoder 213 includes vertex information generator 231, attribute information generator 232, video decoder 234, metadata decoder 223, and demultiplexer 224. Vertex information generator 231, attribute information generator 232, and video decoder 234 may correspond to vertex information decoder 201, attribute information decoder 203, and the like illustrated in FIG. 8.

In addition, in this example, three-dimensional data decoder 213 decodes three-dimensional data according to a video-based encoding system. In decoding according to the video-based encoding system, a plurality of two-dimensional images are decoded according to a video encoding system and three-dimensional data is generated from the plurality of two-dimensional images. In this case, the video encoding system may be HEVC (high efficiency video coding), VVC (versatile video coding), or the like.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information, the metadata of the compressed vertex information, the compressed attribute information, and the metadata of the compressed attribute information are input to video decoder 234. The compressed metadata is input to metadata decoder 223.

Video decoder 234 decodes a vertex image according to the video encoding system. In doing so, video decoder 234 decodes the vertex image from the compressed vertex information using the metadata of the compressed vertex information. In addition, video decoder 234 inputs the vertex image into vertex information generator 231. Furthermore, video decoder 234 decodes an attribute image according to the video encoding system. In doing so, video decoder 234 decodes the attribute image from the compressed attribute information using the metadata of the compressed attribute information. In addition, video decoder 234 inputs the attribute image into attribute information generator 232.

Metadata decoder 223 decodes metadata from the compressed metadata. The metadata decoded by metadata decoder 223 includes map information to be used to generate vertex information and to generate attribute information. In addition, the metadata decoded by metadata decoder 223 may be used to decode the vertex image and to decode the attribute image.

Vertex information generator 231 reproduces vertex information from the vertex image according to the map information included in the metadata decoded by metadata decoder 223. Attribute information generator 232 reproduces attribute information from the attribute image according to the map information included in the metadata decoded by metadata decoder 223.

Subsequently, the vertex information, the attribute information, and the metadata are output from three-dimensional data decoder 213 as three-dimensional data. For example, the metadata is metadata of vertex information and attribute information and can be used in an application program.

FIG. 22 is a conceptual diagram illustrating a specific example of encoding processing according to the present embodiment. FIG. 22 illustrates three-dimensional data encoder 113 and description encoder 148. In this example, three-dimensional data encoder 113 includes two-dimensional data encoder 141 and mesh data encoder 142. Two-dimensional data encoder 141 includes texture encoder 143. Mesh data encoder 142 includes vertex information encoder 144 and connection information encoder 145.

Vertex information encoder 144, connection information encoder 145, and texture encoder 143 may correspond to vertex information encoder 101, connection information encoder 102, attribute information encoder 103, and the like illustrated in FIG. 6.

For example, two-dimensional data encoder 141 operates as texture encoder 143 and generates a texture file by encoding a texture corresponding to attribute information as two-dimensional data according to an image encoding system or a video encoding system.

In addition, mesh data encoder 142 operates as vertex information encoder 144 and connection information encoder 145 and generates a mesh file by encoding vertex information and connection information. Mesh data encoder 142 may further encode mapping information with respect to a texture. The encoded mapping information may be included in a mesh file.

In addition, description encoder 148 generates a description file by encoding a description corresponding to metadata such as text data. Description encoder 148 may encode a description in the system layer. For example, description encoder 148 may be included in system multiplexer 114 illustrated in FIG. 12.

Due to the operation described above, a bitstream including a texture file, a mesh file, and a description file is generated. The files may be multiplexed in the bitstream in a file format such as gITF (graphics language transmission format) or USD (universal scene description).

Note that three-dimensional data encoder 113 may include two mesh data encoders as mesh data encoder 142. For example, one mesh data encoder encodes vertex information and connection information of a static three-dimensional mesh and the other mesh data encoder encodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

FIG. 23 is a conceptual diagram illustrating a specific example of decoding processing according to the present embodiment. FIG. 23 illustrates three-dimensional data decoder 213, description decoder 248, and presenter 247. In this example, three-dimensional data decoder 213 includes two-dimensional data decoder 241, mesh data decoder 242, and mesh reconstructor 246. Two-dimensional data decoder 241 includes texture decoder 243. Mesh data decoder 242 includes vertex information decoder 244 and connection information decoder 245.

Vertex information decoder 244, connection information decoder 245, texture decoder 243, and mesh reconstructor 246 may correspond to vertex information decoder 201, connection information decoder 202, attribute information decoder 203, postprocessor 205, and the like illustrated in FIG. 8. Presenter 247 may correspond to presenter 215 and the like illustrated in FIG. 12.

For example, two-dimensional data decoder 241 operates as texture decoder 243 and decodes a texture corresponding to attribute information from a texture file as two-dimensional data according to an image encoding system or a video encoding system.

In addition, mesh data decoder 242 operates as vertex information decoder 244 and connection information decoder 245 and decodes vertex information and connection information from a mesh file. Mesh data decoder 242 may further decode mapping information with respect to a texture from the mesh file.

Furthermore, description decoder 248 decodes a description corresponding to metadata such as text data from a description file. Description decoder 248 may decode a description in the system layer. For example, description decoder 248 may be included in system demultiplexer 214 illustrated in FIG. 12.

Mesh reconstructor 246 reconstructs a three-dimensional mesh from vertex information, connection information, and a texture according to a description. Presenter 247 renders and outputs the three-dimensional mesh according to the description.

Due to the operation described above, a three-dimensional mesh is reconstructed and output from a bitstream including a texture file, a mesh file, and a description file.

Note that three-dimensional data decoder 213 may include two mesh data decoders as mesh data decoder 242. For example, one mesh data decoder decodes vertex information and connection information of a static three-dimensional mesh and the other mesh data decoder decodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

An encoding system of a dynamic three-dimensional mesh may be called DMC (dynamic mesh coding). In addition, a video-based encoding system of a dynamic three-dimensional mesh may be called V-DMC (video-based dynamic mesh coding).

An encoding system of a point cloud may be called PCC (point cloud compression). A video-based encoding system of a point cloud may be called V-PCC (video-based point cloud compression). In addition, a geometry-based encoding system of a point cloud may be called G-PCC (geometry-based point cloud compression).

<Implementation example>

FIG. 24 is a block diagram illustrating an implementation example of encoding device 100 according to the present embodiment. Encoding device 100 includes circuit 151 and memory 152. For example, a plurality of constituent elements of encoding device 100 illustrated in FIG. 5 and the like are implemented by circuit 151 and memory 152 illustrated in FIG. 24.

Circuit 151 is a circuit which performs information processing and which is capable of accessing memory 152. For example, circuit 151 is a dedicated or general-purpose electric circuit which encodes a three-dimensional mesh. Circuit 151 may be a processor such as a CPU. Alternatively, circuit 151 may be a set of a plurality of electric circuits.

Memory 152 is a dedicated or general-purpose memory that stores information used by circuit 151 to encode a three-dimensional mesh. Memory 152 may be an electric circuit and may be connected to circuit 151. In addition, memory 152 may be included in circuit 151. Alternatively, memory 152 may be a set of a plurality of electric circuits. Furthermore, memory 152 may be a magnetic disk, an optical disk, or the like or may be expressed as a storage, a recording medium, or the like. In addition, memory 152 may be a non-volatile memory or a volatile memory.

For example, memory 152 may store a three-dimensional mesh or a bitstream. In addition, memory 152 may store a program used by circuit 151 to encode a three-dimensional mesh.

Note that in encoding device 100, all of the plurality of constituent elements illustrated in FIG. 5 and the like need not be implemented and all of the plurality of processing steps described herein need not be performed. A part of the plurality of constituent elements illustrated in FIG. 5 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in encoding device 100.

FIG. 25 is a block diagram illustrating an implementation example of decoding device 200 according to the present embodiment. Decoding device 200 includes circuit 251 and memory 252. For example, a plurality of constituent elements of decoding device 200 illustrated in FIG. 7 and the like are implemented by circuit 251 and memory 252 illustrated in FIG. 25.

Circuit 251 is a circuit which performs information processing and which is capable of accessing memory 252. For example, circuit 251 is a dedicated or general-purpose electric circuit which decodes a three-dimensional mesh. Circuit 251 may be a processor such as a CPU. Alternatively, circuit 251 may be a set of a plurality of electric circuits.

Memory 252 is a dedicated or general-purpose memory that stores information used by circuit 251 to decode a three-dimensional mesh. Memory 252 may be an electric circuit and may be connected to circuit 251. In addition, memory 252 may be included in circuit 251. Alternatively, memory 252 may be a set of a plurality of electric circuits. Furthermore, memory 252 may be a magnetic disk, an optical disk, or the like or may be expressed as a storage, a recording medium, or the like. In addition, memory 252 may be a non-volatile memory or a volatile memory.

For example, memory 252 may store a three-dimensional mesh or a bitstream. In addition, memory 252 may store a program used by circuit 251 to decode a three-dimensional mesh.

Note that in decoding device 200, all of the plurality of constituent elements illustrated in FIG. 7 and the like need not be implemented and all of the plurality of processing steps described herein need not be performed. A part of the plurality of constituent elements illustrated in FIG. 7 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in decoding device 200.

An encoding method and a decoding method including steps performed by each constituent element of encoding device 100 and decoding device 200 according to the present disclosure may be executed by any device or system. For example, a part of or all of the encoding method and the decoding method may be executed by a computer including a processor, a memory, an input/output circuit, and the like. In doing so, the encoding method and the decoding method may be executed by having the computer execute a program that enables the computer to execute the encoding method and the decoding method.

In addition, a program or a bitstream may be recorded on a non-transitory computer-readable recording medium such as a CD-ROM.

An example of a program may be a bitstream. For example, a bitstream including an encoded three-dimensional mesh includes a syntax element that enables decoding device 200 to decode the three-dimensional mesh. In addition, the bitstream causes decoding device 200 to decode the three-dimensional mesh according to the syntax element included in the bitstream. Therefore, a bitstream can perform a similar role to a program.

The bitstream described above may be an encoded bitstream including an encoded three-dimensional mesh or a multiplexed bitstream including an encoded three-dimensional mesh and other information.

In addition, each constituent element of encoding device 100 and decoding device 200 may be constituted of dedicated hardware, general-purpose hardware which executes the program or the like described above, or a combination thereof. Furthermore, the general-purpose hardware may be constituted of a memory on which a program is recorded, a general-purpose processor which reads the program from the memory and executes the program, and the like. In this case, the memory may be a semiconductor memory, a hard disk, or the like and the general-purpose processor may be a CPU or the like.

Furthermore, the dedicated hardware may be constituted of a memory, a dedicated processor, and the like. For example, the dedicated processor may execute the encoding method and the decoding method by referring to a memory for recording data.

In addition, as described above, the respective constituent elements of encoding device 100 and decoding device 200 may be electric circuits. The electric circuits may constitute one electric circuit as a whole or may be respectively different electric circuits. Furthermore, the electric circuits may correspond to dedicated hardware or to general-purpose hardware which executes the program or the like described above. Moreover, encoding device 100 and decoding device 200 may be implemented as integrated circuits.

In addition, encoding device 100 may be a transmitting device which transmits a three-dimensional mesh. Decoding device 200 may be a receiving device which receives a three-dimensional mesh.

<Inter Prediction and Intra Prediction>

In general, a three-dimensional model represents an object digitally such that a user can explore a model using zooming, panning, and/or rotation in all three dimensions while rendering it temporally. One way to construct such a representation is to construct a three-dimensional mesh using triangles. The three-dimensional model stores the positions of the vertices of the triangles, connectivity of the vertices of the triangles with each other, and the attributes associated therewith (such as a normal, UV patches, etc.). Storing all of these types of information in an uncompressed form needs very large storage space. Therefore, a very large bandwidth for transmission of these items of information. The triangles forming the three-dimensional mesh often have a repetitive pattern and similar attributes especially in the temporal and spatial neighborhood. The repetition can be used to formulate efficient encoding and decoding methods for storage and transmission.

FIG. 26 is a block diagram illustrating a configuration example of the encoding/decoding system according to the present embodiment.

The encoding/decoding system includes encoding device 100 and decoding device 200. The encoding/decoding system receives a three-dimensional mesh frame that is input in the form of three-dimensional coordinates, connection information (connectivity), and associated attributes of vertices. Encoding device 100 is responsible for encoding all related information into a bitstream (compressed bitstream). The bitstream may be formed by a plurality of bitstreams. The bitstream is transmitted to decoding device 200 via a transmission path. Decoding device 200 decodes the bitstream to produce a three-dimensional model (three-dimensional mesh frame) using the decoded vertices' three-dimensional coordinates, connection information, and associated attributes.

FIG. 27 is a block diagram illustrating another configuration example of encoding device 100 according to the present embodiment.

In this example, encoding device 100 includes preprocessor 521 and encoding processor 522.

Preprocessor 521 reads an input three-dimensional mesh frame, processes the three-dimensional mesh frame to extract a base mesh, displacement information, and an attribute map, and output the base mesh, displacement information, and the attribute map to encoding processor 522. One example of the displacement information is displacement vectors.

Encoding processor 522 individually compresses the base mesh, the displacement information, and the attribute map and couples them to produce a bitstream.

FIG. 28 is a block diagram illustrating another configuration example of decoding device 200 according to the present embodiment.

In this example, decoding device 200 includes decoding processor 622 and postprocessor 623.

Decoding processor 622 reads a bitstream, separates an encoded base mesh, encoded displacement information, and an encoded attribute map from the read bitstream, and individually decodes and outputs them to postprocessor 623. One example of the displacement information is displacement vectors.

Postprocessor 623 processes the base mesh using the displacement information and the attribute map to produce a three-dimensional mesh frame. The produced three-dimensional mesh frame is output to a display and displayed on the display, for example. By repeating such processing, three-dimensional mesh frames are repeatedly displayed on the display.

FIG. 29 is a block diagram illustrating yet another configuration example of encoding device 100 according to the present embodiment.

In this example, encoding device 100 includes volumetric capturer 511, projector 512, base mesh encoder 513, displacement encoder 514, and attributer encoder 515, and optionally includes one or more encoders 516 of other types.

Volumetric capturer 511 captures a content and outputs the captured content to projector 512.

Projector 512 projects the content onto a three-dimensional mesh frame that includes vertex geometry coordinates (vertex coordinates indicating the position of a vertex), texture coordinates, and connectivity data (connection information). The data is output to base mesh encoder 513, displacement encoder 514, and attributer encoder 515, and optionally to one or more encoders 516 of other types. Each encoder compresses the data into a bitstream.

FIG. 30 is a block diagram illustrating yet another configuration example of decoding device 200 according to the present embodiment.

In this example, decoding device 200 includes base mesh decoder 613, displacement decoder 614, attribute decoder 615, one or more decoders 616 of other types, and three-dimensional reconstructor 617.

A bitstream is sent to base mesh decoder 613, displacement decoder 614, and attribute decoder 615 and optionally to one or more decoders 616 of other types. These decoders decode the bitstream to produce decoded data including vertex geometry coordinates, texture coordinates, and connectivity data. The decoded data is then sent to three-dimensional reconstructor 617, where a three-dimensional mesh frame is reconstructed.

FIG. 31 is a block diagram illustrating a detailed configuration example of decoding device 200 according to the present embodiment. Specifically, FIG. 31 illustrates an example of the configuration of a geometry coordinate decoder included in decoding device 200.

In this example, decoding device 200 includes frame header decoder 631, vertex geometry coordinate predictor 632, vertex geometry coordinate difference decoder 633, and reconstructor 634.

Frame header decoder 631 reads a bitstream, decodes a frame header in the bitstream, and determines whether to intra-decode (intra-predict) or inter-decode (inter-predict) frame data.

When the inter-decoding is selected, the frame data included in the bitstream is output to vertex geometry coordinate predictor 632.

Vertex geometry coordinate predictor 632 outputs prediction information to reconstructor 634. One example of the prediction information is motion vectors.

Reconstructor 634 outputs three-dimensional coordinates of a vertex (vertex geometry coordinates) using vertex coordinates from a frame decoded in the past and the prediction information.

On the other hand, when the intra-decoding is selected, the frame data included in the bitstream is output to vertex geometry coordinate difference decoder 633.

In order to produce vertex coordinates, vertex geometry coordinate difference decoder 633 decodes the frame data encoded as a difference between coordinates of vertices included in the frame. Only one of the vertex geometry coordinates from vertex geometry coordinate difference decoder 633 and the vertex geometry coordinates from reconstructor 634 is used for producing the decoded three-dimensional mesh frame.

FIG. 32 is a diagram for describing coordinates of vertices in a three-dimensional mesh according to the present embodiment. Specifically, FIG. 32 illustrates an example in which the whole of a three-dimensional mesh frame is decoded using coordinates (positions) of actual vertices included in the bitstream.

The coordinates of vertex A included in the three-dimensional mesh frame at a time (t) are decoded to be (6, 8, 9) in the Cartesian coordinate system (x, y, z) as illustrated in (a) in FIG. 32. Similarly, the coordinates of vertex B are decoded to be (10, 6, 7), and the coordinates of vertex C are decoded to be (14, 8, 9). Vertices D to G are also decoded in the same manner.

FIG. 33 is a diagram for describing prediction information according to the present embodiment. Specifically, FIG. 33 illustrates another example in which the whole of a three-dimensional mesh frame at a time (t) is decoded using a frame at a time (t-1) (past frame) and prediction information included in the bitstream.

Coordinates (6, 8, 9) of vertex A in the frame to be decoded (present frame) are decoded by summing coordinates (4, 7, 8) of vertex A in the past frame and values (2, 1, 1) relating to vertex A indicated by the prediction information. Similarly, coordinates (10, 6, 7) of vertex B in the present frame are decoded by summing coordinates (8, 6, 7) of vertex B in the past frame and values (2, 0, 0) relating to vertex B indicated by the prediction information.

As one method of encoding a three-dimensional mesh frame, it can be contemplated to divide an original three-dimensional mesh (original mesh) into smaller meshes (submeshes) and encode each submesh independently. The vertices in the three-dimensional mesh frame are divided such that information indicating coordinates of vertices in each partition and connection information on the vertices can be independently encoded. Each small mesh resulting from the division is referred to as a submesh.

FIG. 34 is a diagram for describing an example of a mesh (original mesh) according to the present embodiment. FIG. 35 is a diagram for describing an example of division of the mesh into submeshes according to the present embodiment. Specifically, FIG. 35 is a diagram illustrating division of the mesh illustrated in FIG. 34 into two submeshes.

Here, vertices A, B, and C of the original mesh are duplicated to form vertices A1, B1, and C1 and vertices A2, B2, and C2, thereby creating (producing) two submeshes (first submesh and second submesh) each of which can be independently encoded and decoded. The first submesh and the second submesh are meshes that can be independently decoded.

As described above, the mesh can be divided into a plurality of parts smaller than the mesh and can be encoded on a division basis. In the division of the mesh, the vertices of the mesh are divided such that the coordinates of vertices included in each division and the connection information on the vertices can be independently encoded.

Note that the mesh illustrated in FIG. 34 is an original mesh and may be referred to as a full mesh in contrast with the submesh.

<Calculation of Adjacent Points>

Next, an encoding method and a decoding method for the prediction information output from vertex geometry coordinate predictor 632 illustrated in FIG. 31 will be described in detail.

Note that the following description will be made using an example in which the prediction information is a motion vector of a vertex (in other words, a three-dimensional point) included in the base mesh.

Note that the prediction information is not necessarily limited to motion vectors and may be other information of three-dimensional points. For example, the prediction information may be position information (geometry) or attribute information (attribute) of three-dimensional points.

Here, the position information includes coordinates (x coordinate, y coordinate, z coordinate) with respect to a point, for example. The attribute information includes color information (such as RGB or YUV), a reflectance, a normal vector, and the like of each three-dimensional point, for example. Note that the attribute information may be information represented by a vector.

Furthermore, when the prediction information output by vertex geometry coordinate predictor 632 is a motion vector, vertex geometry coordinate predictor 632 may be referred to as a motion decoder.

Note that the following description will be made using an integer value as a motion vector (to be specific, a value of a motion vector). For example, when the motion vector is in 8-bit precision, the motion vector assumes an integer value from 0 to 255. When the value of the motion vector is in 10-bit precision, the motion vector assumes an integer value from 0 to 1023.

Note that when the bit precision of the motion vector is a decimal precision, the decimal fraction may be multiplied by a scale value and then rounded to an integer value.

Note that the scale value may be added to the bitstream, such as the header.

FIG. 36 is a diagram for describing a positional relationship between three-dimensional points according to the present embodiment.

As an encoding method for a motion vector of a three-dimensional point, it can be contemplated to calculate a prediction value of a motion vector of a three-dimensional point and encode the difference (prediction residual) between the original value of the motion vector and the prediction value. For example, when the value of a motion vector of three-dimensional point p is Ap, and the prediction value is Pp, encoding device 100 encodes absolute difference value Diffp = | Ap-Pp| that indicates the absolute value of the difference therebetween. In this case, if prediction value Pp can be produced with high precision, the value of absolute difference value Diffp decreases. Therefore, for example, if encoding device 100 performs entropy encoding using an encoding table in which the number of bits produced decreases as the value becomes smaller, the code amount can be reduced.

As a method in which encoding device 100 produces a prediction value of a motion vector, it can be contemplated to use a motion vector of another three-dimensional point around the three-dimensional point to be encoded. Here, the "three-dimensional point around the three-dimensional point" refers to another three-dimensional point within a predetermined distance (within a predetermined range) from the three-dimensional point. For example, provided that there are three-dimensional point p = (x1, y1, z1), which is a three-dimensional point to be encoded, and three-dimensional point q = (x2, y2, z2), when Euclidean distance $d(p, q) = \sqrt{((x1 - y1)^2 + (x2 - y2)^2 + (x3 - y3)^2)}$ between three-dimensional point p and three-dimensional point q is smaller than threshold THd, encoding device 100 determines that the position of three-dimensional point q is close to the position of three-dimensional point p and determines to use the value of the motion vector of three-dimensional point q for production of the prediction value of the motion vector of three-dimensional point p.

Note that the distance calculation method may be another method, and the Mahalanobis distance or the like may be used.

Furthermore, the predetermined distance can be arbitrarily determined and is not particularly limited.

Furthermore, for example, encoding device 100 may determine not to use a three-dimensional point at a distance greater than the predetermined distance from the three-dimensional point to be encoded (outside of the predetermined range) for prediction. When there is three-dimensional point r, and distance d(p, r) between three-dimensional point p and three-dimensional point r is equal to or greater than threshold THd, for example, encoding device 100 may determine not to use three-dimensional point r for prediction.

Note that encoding device 100 may add the value of threshold THd to the header of the bitstream.

When encoding the motion vector of the three-dimensional point to be encoded using a prediction value, if a motion vector of a three-dimensional point around the three-dimensional point used for production of the prediction value is used, for example, encoding device 100 uses an already encoded motion vector or an already decoded motion vector.

Furthermore, when decoding the motion vector of the three-dimensional point to be decoded using a prediction value, if a motion vector of a three-dimensional point around the three-dimensional point used for production of the prediction value is used, decoding device 200 uses an already decoded motion vector.

In this way, the same prediction value is produced in encoding and decoding. Therefore, decoding device 200 can correctly decode the bitstream of three-dimensional points produced by encoding device 100.

Note that although the "point around the three-dimensional point" has been described as referring to another three-dimensional point in a predetermined range from the three-dimensional point, this is not intended to be limiting. For example, in the case of three-dimensional point D (that is, vertex D) illustrated in FIG. 33, there are three-dimensional points A, three-dimensional point B, three-dimensional point C, three-dimensional point E, three-dimensional point F, and three-dimensional point G as three-dimensional points around the three-dimensional point, and a three-dimensional point around the three-dimensional point (in other words, an adjacent point) may be selected under one or more of the conditions A and B described below. That is, the adjacent point is a point selected under a condition and is referenced for predicting information of the three-dimensional point to be encoded. The adjacent point may be referred to also as a reference three-dimensional point, a reference point, or a reference vertex, for example.

Condition A: a three-dimensional point having connectivity with the current three-dimensional point.

Condition B: a three-dimensional point encoded or decoded before the current three-dimensional point.

For example, in the case of selecting a three-dimensional point that meets the conditions A and B described above as an adjacent point, when the three-dimensional points are encoded or decoded in the order of three-dimensional points A, B, C, D, E, F, and G, three-dimensional points A and C may be selected as adjacent points of three-dimensional point D. Since three-dimensional points A and C have connectivity with three-dimensional point D, the values of the motion vectors thereof are likely to be close to each other. Furthermore, since three-dimensional points A and C are encoded or decoded before three-dimensional point D, the motion vectors of three-dimensional points A and C can be used for calculation of the prediction value of the motion vector of three-dimensional point D.

In this way, the precision of the prediction value of the motion vector of three-dimensional point D can be improved, and the encoding efficiency can be improved.

Note that as a condition for selecting adjacent points of a three-dimensional point, the number of adjacent points may be limited to be equal to or smaller than a predetermined value (NumNeiCnt), in addition to the conditions A and B described above. For example, by setting NumNeiCnt = 3, the number of adjacent points of a three-dimensional point may be limited to 3 or less.

In this way, the memory space for storing the information of the adjacent points of the three-dimensional point can be reduced, and the processing amount for predicting (calculating) the motion vector can be reduced.

Note that the predetermined value can be arbitrarily determined and is not particularly limited.

Furthermore, for example, encoding device 100 may add the predetermined value described above, or in other words, NumNeiCnt indicating the maximum value of the number of adjacent points, to the bitstream by adding the predetermined value to the header of the data unit before encoding, for example.

In this way, decoding device 200 can properly decode the bitstream with the maximum number of adjacent points limited to NumNeiCnt or less by decoding the header of the bitstream.

Note that when there are a larger number of three-dimensional points that meet the conditions A and B described above than NumNeiCnt as adjacent points, adjacent points may be selected in ascending order of the distance from the three-dimensional point to be encoded or decoded. For example, in the case where NumNeiCnt = 3, as adjacent points of three-dimensional point D, if there are five three-dimensional points A, C, H, I, and J that meet the conditions A and B described above, and the ascending order of the distance from three-dimensional point D is A > C > H > I > J, three-dimensional points A, C, and H may be selected as adjacent points of three-dimensional point D. Three-dimensional points A, C, and H have connectivity with three-dimensional point D and are close to three-dimensional point D, so that the values of the motion vectors thereof are likely to be close to the value of the motion vector of three-dimensional point D. In addition, three-dimensional points A, C, and H are encoded or decoded before three-dimensional point D. Therefore, the motion vectors of three-dimensional points A, C, and H can be used for calculation of the prediction value of the motion vector of three-dimensional point D.

In this way, the precision of the prediction value of the motion vector of three-dimensional point D can be improved. In addition, since the number of adjacent points is limited, the memory space for storing information on the adjacent points of the three-dimensional point can be reduced, and the processing amount for calculating (predicting) the motion vector can be reduced.

Note that when the connectivity with the three-dimensional point to be encoded or decoded (referred to also as a current three-dimensional point, hereinafter) is used as the condition A for selecting adjacent points of the current three-dimensional point, the connectivity that can be used is not limited to the connectivity in the frame to be encoded or decoded (referred to also as a current frame, hereinafter). For example, connectivity in an already encoded or decoded frame may be used. For example, in the case of the example illustrated in FIG. 33, when adjacent points of each three-dimensional point (each current three-dimensional point) in the frame (present frame) at time (t) are selected under the condition A described above, the connectivity of each corresponding three-dimensional point in the frame (past frame) at time (t-1) may be used. More specifically, when selecting adjacent points of three-dimensional point D in the present frame under the condition A described above, encoding device 100 or decoding device 200 may reference to the connectivity of three-dimensional point D in the past frame to select three-dimensional points A, C, and G, and select, from among them, already encoded or decoded three-dimensional points A and C as adjacent points. For the frame encoded or decoded before the current frame, such as the past frame, encoding device 100 and decoding device 200 can calculate the connectivity and distance between three-dimensional points and therefore can properly calculate adjacent points of the current three-dimensional point using the condition A described above or the distance (distance information) between the three-dimensional points.

Note that although an example in which a past frame is used as a frame preceding the current frame is illustrated in the present embodiment, this is not intended to be limiting, and any already encoded or decoded frame can be used.

Accordingly, encoding device 100 and decoding device 200 can properly calculate adjacent points of the current three-dimensional point using the connectivity and/or distance.

Note that the present embodiment may be applied to a case where the correspondence between three-dimensional points in the current frame and three-dimensional points in the already encoded or decoded frame is known. For example, in the case of the example illustrated in FIG. 33, the correspondence between the present frame and the past frame is known for three-dimensional points A, B, C, D, E, F, and G, so that adjacent points of the three-dimensional point in the present frame can be calculated using the connectivity and/or distance in the past frame as illustrated in the present embodiment.

Note that when the correspondence between three-dimensional points in the current frame and three-dimensional points in the already encoded or decoded frame is not known, encoding device 100 and decoding device 200 may calculate (select) an adjacent point using the connectivity of three-dimensional points in the current frame without using the distance.

In this way, even when the correspondence with three-dimensional points in the encoded or decoded frame is not known, adjacent points can be calculated.

Note that encoding device 100 may add, to the bitstream, information indicating whether the correspondence between three-dimensional points in the frame to be encoded and three-dimensional points in an already encoded or decoded frame is known.

In this way, decoding device 200 can know whether the correspondence between three-dimensional points in the frame to be encoded (the frame that is encoded by encoding device 100 and is to be decoded by decoding device 200) and three-dimensional points in already decoded the frame is known. For example, decoding device 200 can switch the calculation method for adjacent points in such a manner that decoding device 200 calculates adjacent points of the three-dimensional point in the frame to be decoded using the connectivity and/or distance in the decoded frame when the correspondence between three-dimensional points is known, and calculates adjacent points using the connectivity of three-dimensional points in the frame to be decoded without using the distance when the correspondence between three-dimensional points is not known.

Note that, in decoding, when the distances between the three-dimensional point to be decoded and adjacent points in the frame to be decoded cannot be calculated before decoding the position information of the three-dimensional point to be decoded, decoding device 200 may calculate adjacent points of the three-dimensional point to be decoded using the distances between the three-dimensional point corresponding to the three-dimensional point to be decoded and adjacent points in the already decoded frame.

FIG. 37 is a diagram for describing distances between three-dimensional points according to the present embodiment.

For example, in the case of the example illustrated in FIG. 37, as the distance between each three-dimensional point and an adjacent point thereof in the present frame at time (t), the distance between the correspondence three-dimensional point and the corresponding adjacent point in the past frame at time (t-1) may be used. More specifically, as the distances between three-dimensional point D and adjacent points A, C, and G in the present frame, the distances between three-dimensional point D and adjacent points A, C, and G in the past frame may be used. For the frame decoded before the frame to be decoded, such as the past frame, decoding device 200 can calculate the distances between the three-dimensional points with reliability and therefore can properly calculate adjacent points of the three-dimensional point to be decoded using the distances.

Note that although an example in which a past frame is used as a frame preceding the frame to be decoded is illustrated in the present embodiment, this is not intended to be limiting, and any already decoded frame can be used.

In this way, decoding device 200 can properly calculate adjacent points close to the three-dimensional point to be decoded and therefore can calculate (predict) the three-dimensional motion vector to be decoded with high precision. This improves the encoding efficiency.

Note that when decoding device 200 calculates, in decoding, adjacent points of the three-dimensional point to be decoded using the distances between the three-dimensional point corresponding to the three-dimensional point to be decoded and adjacent points in an already decoded frame, encoding device 100 may, in conformity with decoding device 200 in encoding, calculate adjacent points of the three-dimensional point to be encoded using the distances between the three-dimensional point corresponding to the three-dimensional point to be encoded and adjacent points in an already encoded frame.

In this way, the same calculation method for adjacent points can be used in encoding and decoding, and decoding device 200 can properly decode the bitstream produced by encoding.

Note that the same holds true for the connectivity, and encoding device 100 and decoding device 200 may calculate the connectivity of the current three-dimensional point using the connectivity between the three-dimensional point corresponding to the current three-dimensional point and adjacent points in the already encoded or decoded frame.

In this way, the connectivity and the distance can be calculated at the same time using information of the already encoded or decoded frame, so that the processing amount can be reduced.

Note that encoding device 100 and decoding device 200 may select an appropriate adjacent point using the connectivity in the current frame and the distances between the three-dimensional point corresponding to the current three-dimensional point and adjacent points in the already encoded or decoded frame.

In this way, encoding device 100 and decoding device 200 can calculate an adjacent point that has connectivity with the current three-dimensional point and is close to the current three-dimensional point in the current frame using information of the already encoded or decoded frame. Therefore, the motion vector of the current three-dimensional point is calculated (predicted) with high precision, and the encoding efficiency is improved.

Note that when adjacent points are calculated without using the distance, adjacent points may be calculated using connectivity in the current frame. In this way, the processing amount can be reduced.

Furthermore, when the distance is not used, and the number of adjacent points is limited by NumNeiCnt, encoding device 100 and decoding device 200 may stop calculating adjacent points when the number of adjacent points reaches NumNeiCnt when increasing the adjacent points of the current three-dimensional point. In this way, the processing amount can be reduced.

Furthermore, when the number of adjacent points reaches NumNeiCnt when increasing the adjacent points of the current three-dimensional point, encoding device 100 and decoding device 200 may replace at least one adjacent point of the adjacent points already stored as adjacent points with a newly found adjacent point in the subsequent process. In this way, the encoding efficiency can be improved while limiting the number of adjacent points.

FIG. 38 is a flowchart illustrating a selection process for adjacent points according to the present embodiment. Note that the flow illustrated in FIG. 38 is a specific example of the procedure performed by each of encoding device 100 and decoding device 200 when calculating adjacent points of a current three-dimensional point.

First, encoding device 100 and decoding device 200 select, from among a plurality of three-dimensional points included in the current frame, three-dimensional points having connectivity with the current three-dimensional point as first adjacent point candidates (S101).

Encoding device 100 and decoding device 200 then select, from among the plurality of first adjacent point candidates selected in step S101, three-dimensional points encoded or decoded before the current three-dimensional point as second adjacent point candidates (S102). For example, encoding device 100 selects, from among the plurality of first adjacent point candidates, three-dimensional points encoded before the current three-dimensional point as second adjacent point candidates. Furthermore, for example, decoding device 200 selects, from among the plurality of first adjacent point candidates, three-dimensional points decoded before the current three-dimensional point as second adjacent point candidates.

Encoding device 100 and decoding device 200 then calculate the distance between the current three-dimensional point and each of the plurality of second adjacent point candidates selected in step S102 (S103).

Encoding device 100 and decoding device 200 then select, from among the plurality of second adjacent point candidates selected in step S102, a number of three-dimensional points equal to or less than the maximum adjacent point count (NumNeiCnt described above) in ascending order of the distance, to thereby select the adjacent points of the current three-dimensional point (S104).

FIG. 39 is a diagram for describing a selection process for adjacent points according to the present embodiment. Note that in the example illustrated in FIG. 39, the current three-dimensional point is three-dimensional point f. Furthermore, in the example illustrated in FIG. 39, three-dimensional points a, b, c, d, e, f, g, and h are encoded or decoded in this order. That is, in the example illustrated in FIG. 39, three-dimensional points a, b, c, d, and e are encoded or decoded three-dimensional points. Furthermore, in the example illustrated in FIG. 39, three-dimensional points having connectivity are linked by a solid line. Furthermore, in the example illustrated in FIG. 39, the distance between three-dimensional points f and x (x denotes a, b, c, d, e, g, or h) is denoted as D(x), and three-dimensional points d, b, c, a, and e are close to three-dimensional point f in this order. Furthermore, in the example illustrated in FIG. 39, the maximum adjacent point count (NumNeiCnt described above) is 3.

For example, in step S101, encoding device 100 and decoding device 200 select three-dimensional points a, b, c, d, e, g, and h as first adjacent point candidates, as illustrated in (a) in FIG. 39.

Furthermore, for example, in step S102, encoding device 100 and decoding device 200 select three-dimensional points a, b, c, d, and e as second adjacent point candidates, as illustrated in (b) in FIG. 39.

Furthermore, for example, in step S104, encoding device 100 and decoding device 200 select three-dimensional points b, c, and d as first adjacent points, as illustrated in (c) in FIG. 39.

Note that the flowchart illustrated in FIG. 38 is just an example, and the order in which steps S101 to S104 are performed can be arbitrarily changed. For example, when step S101 and step S102 are interchanged, encoding device 100 and decoding device 200 may select three-dimensional points encoded or decoded before the current three-dimensional point as first adjacent point candidates in the processing in step S102, and then select, from among the first adjacent point candidates, three-dimensional points having connectivity with the current three-dimensional point as second adjacent point candidates in the processing in step S101. In this way, the flexibility of the implementation can be improved.

Furthermore, for example, in the process from step S101 to step S104, some processing may be performed in parallel. For example, if the processing in step S103 is performed while the processing in step S102 is performed, the distance between the current three-dimensional point and each of the second adjacent point candidates can be calculated earlier in parallel with the selection processing. In this way, the processing time can be reduced.

Note that a motion group (MG) may be provided as a prediction unit according to the encoding order or the decoding order. When encoding or decoding the motion vectors of three-dimensional points, encoding device 100 and decoding device 200 may encode or decode the motion vectors on a MG basis. For example, the number (MGSize) of three-dimensional points included in one MG may be prescribed, and encoding device 100 and decoding device 200 may encode or decode the three-dimensional points by dividing the three-dimensional points into a plurality of MGs in accordance with the encoding order or the decoding order.

Note that the encoding order and the decoding order of the motion vectors of three-dimensional points can be any order. For example, encoding device 100 and decoding device 200 may generate a level of detail (referred to as a LoD, hereinafter) and encode or decode the motion vectors on a LoD basis. Alternatively, encoding device 100 and decoding device 200 may encode or decode the motion vectors in the encoding order or the decoding order of the position information of the three-dimensional points (that is, vertices) without generating LoD. Alternatively, encoding device 100 and decoding device 200 may generate Morton codes (Morton codes) using the position information of the three-dimensional points and encode or decode the motion vectors in the order of the Morton codes.

Next, with reference to FIGS. 40 to 42, specific examples of the motion group will be described. Note that in FIGS. 40, 42, and 43, MG0, MG1, and MGN denote examples of the motion group. Note that N denotes an integer equal to or greater than 2, for example, and the number of motion groups may be 2, or 3 or more. Furthermore, the plurality of three-dimensional points (specifically, information of the three-dimensional points) indicated by circles in the drawings are encoded or decoded from left. That is, the plurality of three-dimensional points illustrated in the drawings are sequentially encoded or decoded, beginning with the three-dimensional points belonging to the MG0. Furthermore, three-dimensional points belonging to the same MG are encoded or decoded from left.

FIG. 40 is a diagram illustrating a first example of reference destinations of motion groups according to the present embodiment.

In the first example, it is defined that the three-dimensional points belonging to the same motion group, or in other words, the three-dimensional points in the same motion group, are mutually non-referenceable. That is, in the first example, the motion vectors of the three-dimensional points belonging to the same group as the current three-dimensional point are not used for calculation of the prediction value of the motion vector of the current three-dimensional point. For example, the three-dimensional points in the same motion group are not added to adjacent points.

Furthermore, in the first example, the motion vectors of the three-dimensional points belonging to a different motion group than the current three-dimensional point are used for calculation of the prediction value of the motion vector of the current three-dimensional point. Specifically, in the first example, it is defined that encoded or decoded three-dimensional points in a different motion group are referenceable. That is, in the first example, the motion vectors of encoded or decoded three-dimensional points among the three-dimensional points belonging to a different motion group than the current three-dimensional point are used for calculation of the prediction value of the motion vector of the current three-dimensional point.

For example, in the example illustrated in FIG. 40, for calculation of the prediction value of the motion vector of a current three-dimensional point belonging to MG1, the motion vectors of the three-dimensional points belonging to MG1 are not used, and the motion vector of the three-dimensional points belonging to MG0 are used. Furthermore, in the example illustrated in FIG. 40, for calculation of the prediction value of the motion vector of the current three-dimensional point belonging to MG1, the motion vectors of the three-dimensional points belonging to MGN (specifically, MGN in the case where N is an integer equal to or greater than 2) are not used.

Note that, for example, encoded or decoded three-dimensional points in a different motion group may be defined as not being added to adjacent points.

FIG. 41 is a diagram illustrating an example of a syntax of a base mesh header according to the present embodiment.

As with the syntax illustrated in FIG. 41, the size (data size) of the motion group may be described in the header of the bitstream or the like. For example, when the size (MGSize) of the motion group is 16, encoding device 100 may add MGSize = 16 to the header of the bitstream. Alternatively, provided that MGSize is $2^n$ (n: an integer equal to or greater than 0), encoding device 100 may add the value of n to the header of the bitstream.

Note that encoding device 100 and decoding device 200 may encode or decode the three-dimensional points in the same motion group in parallel.

FIG. 42 is a diagram illustrating a second example of reference destinations of motion groups according to the present embodiment.

In the second example, it is defined that encoded or decoded three-dimensional points in the same motion group are referenceable. In the second example, it is also defined that encoded or decoded three-dimensional points in a different motion group are referenceable. In the second example, it is also defined that three-dimensional points yet to be encoded or decoded are non-referenceable. That is, in the second example, only the motion vector of already encoded or decoded three-dimensional points are used for calculation of the prediction value of the motion vector of the current three-dimensional point. For example, encoded or decoded three-dimensional points in the same motion group may be added to adjacent points. Furthermore, for example, encoded or decoded three-dimensional points in a different motion group may be added to adjacent points. On the other hand, for example, three-dimensional points yet to be encoded or decoded are not added to adjacent points, whether the three-dimensional points are in the same motion group or in a different motion group.

In the example illustrated in FIG. 42, for example, the motion vectors of encoded or decoded three-dimensional points among the three-dimensional points belonging to MG1 may be used for calculation of the prediction value of the motion vector of a current three-dimensional point belonging to MG1, while the motion vectors of three-dimensional points yet to be encoded or decoded are not used. Furthermore, in the example illustrated in FIG. 42, the motion vectors of the three-dimensional points belonging to MG0 may be used for calculation of the prediction value of the motion vector of the current three-dimensional point belonging to MG1, while the motion vectors of the three-dimensional points belonging to MGN (specifically, MGN in the case where N is an integer equal to or greater than 2) are not used.

Note that in the second example, again, the size of the motion group may be described in the header of the bitstream or the like. For example, when the size (MGSize) of the motion group is 16, encoding device 100 may add MGSize = 16 to the header of the bitstream. Alternatively, provided that MGSize is $2^n$, encoding device 100 may add the value of n to the header of the bitstream.

As described above, by defining that three-dimensional points in the same motion group can also be referenced if the three-dimensional points are already encoded or decoded, the prediction precision can be improved, and the encoding efficiency can be improved.

FIG. 43 is a diagram illustrating a third example of reference destinations of motion groups according to the present embodiment.

In the third example, it is defined that encoded or decoded three-dimensional points in the same motion group are referenceable. In the third example, however, it is defined that three-dimensional points yet to be encoded or decoded are non-referenceable. For example, encoded or decoded three-dimensional points in the same motion group may be added to adjacent points. On the other hand, for example, three-dimensional points yet to be encoded or decoded are not added to adjacent points even if the three-dimensional points are in the same motion group.

Furthermore, in the third example, it is defined that the three-dimensional points in a different motion group are non-referenceable. For example, the three-dimensional points in a different motion group are not added to adjacent points.

In the example illustrated in FIG. 43, for example, among the three-dimensional points belonging to MG1, the motion vectors of encoded or decoded three-dimensional points may be used for calculation of the prediction value of the motion vector of a current three-dimensional point belonging to MG1, while the motion vectors of three-dimensional points yet to be encoded or decoded are not used. Furthermore, in the example illustrated in FIG. 43, the motion vectors of the three-dimensional points belonging to a motion group other than MG1 are not used for calculation of the prediction value of the motion vector of the current three-dimensional point belonging to MG1.

Note that in the third example, again, the size of the motion group may be described in the header of the bitstream or the like. For example, when the size (MGSize) of the motion group is 16, encoding device 100 may add MGSize = 16 to the header of the bitstream. Alternatively, provided that MGSize is $2^n$, encoding device 100 may add the value of n to the header of the bitstream.

As described above, by prohibiting reference between motion groups and making the motion groups independent from each other, encoding device 100 and decoding device 200 can encode or decode information of three-dimensional points in a plurality of motion groups in parallel.

Furthermore, by defining that encoded or decoded three-dimensional points in the same motion group are referenceable as described above, the prediction precision can be improved, and the encoding efficiency can be improved.

Note that the number of three-dimensional points belonging to each motion group can be arbitrarily determined and is not particularly limited. In addition, the number of three-dimensional points belonging to each motion group may be the same as or different from the other groups.

Note that when a full mesh, which is a mesh yet to be divided into one or more submeshes, is encoded or decoded after being divided into one or more submeshes, encoding device 100 and decoding device 200 may divide the three-dimensional points in each submesh into motion groups in accordance with the encoding order or the decoding order, and encode or decode the motion vectors of the three-dimensional points on a motion group basis.

FIG. 44 is a diagram for describing a relationship between vertices forming a mesh (original mesh) and a motion group according to the present embodiment. FIG. 45 is a diagram for describing a relationship between vertices forming submeshes (a first submesh and a second submesh) and motion groups according to the present embodiment. Note that the first submesh and the second submesh illustrated in FIG. 45 are meshes produced by dividing the original mesh illustrated in FIG. 44.

In the example illustrated in FIGS. 44 and 45, three-dimensional points A, B, and C forming the original mesh (full mesh) are duplicated to form three-dimensional points A1, B1, and C1 forming the first submesh and three-dimensional points A2, B2, and C2 forming the second submesh, respectively, as a result of division of the original mesh into the submeshes. For example, encoding device 100 may assign the motion vectors of three-dimensional points A1, B1, C1, A2, B2, and C2 to the motion groups in their respective submeshes to encode them in the method shown in the example described above.

In this way, encoding device 100 can encode the motion vectors of three-dimensional points in each submesh by selecting appropriate adjacent points from the three-dimensional points in the submesh while assigning the motion vectors to the motion group in the submesh.

Note that any three-dimensional point belonging to a submesh different from the submesh of the three-dimensional point to be encoded need not be included in adjacent points. In this way, since information is not referenced between submeshes, each submesh can be independently encoded or decoded.

Furthermore, three-dimensional points belonging to different submeshes need not be included in the same motion group. In this way, information can be prevented from being referenced between submeshes, and encoding device 100 and decoding device 200 can independently encode or decode each submesh.

As described above, for example, encoding device 100 and decoding device 200 determine, using distance information (information indicating the distance between three-dimensional points), vertices to be referenced in the process of predicting information of a vertex (current three-dimensional point) included in a three-dimensional mesh. It should be noted that the information of the vertex may be any information of a three-dimensional point such as position information or attribute information.

Furthermore, for example, the information of the vertex is a motion vector of vertex coordinates.

Furthermore, for example, the prediction process is an inter prediction process.

Furthermore, for example, encoding device 100 and decoding device 200 determine a combination of adjacent points.

Furthermore, for example, the distance information is a difference value between coordinates of a processing target point (current three-dimensional point) and coordinates of the adjacent points.

Furthermore, for example, encoding device 100 and decoding device 200 determine, as the adjacent points, vertices for which the difference value is less than or equal to a predetermined value.

Furthermore, for example, encoding device 100 and decoding device 200 determine, as the adjacent points, a predetermined number of vertices selected in an ascending order of their difference values.

Furthermore, for example, the predetermined number is encoded into a bitstream.

Furthermore, for example, the distance information is calculated using information of a reference frame.

Furthermore, for example, encoding device 100 and decoding device 200 derive the distance information by using a point corresponding to the processing target point included in the reference frame.

Furthermore, for example, the reference frame is a frame that precedes the processing target frame in display order.

Furthermore, for example, the reference frame is a frame that precedes the processing target frame in encoding order or decoding order.

Furthermore, for example, information other than the distance information is derived using information of the processing target frame.

Furthermore, for example, encoding device 100 and decoding device 200 select a point having connectivity, by using the processing target point included in the processing target frame.

Furthermore, for example, encoding device 100 and decoding device 200 determine the adjacent points by using other information in addition to the distance information. It should be noted that the one or more other information to be used together with the distance information may be arbitrarily combined and used.

Furthermore, for example, encoding device 100 and decoding device 200 determine, as the adjacent points, vertices having connectivity with the processing target point.

Furthermore, for example, encoding device 100 and decoding device 200 determine, as adjacent points, vertices encoded or decoded before the processing target point. For example, encoding device 100 determines, as adjacent points, vertices encoded before the processing target point (three-dimensional point to be encoded). Furthermore, for example, decoding device 200 determines, as adjacent points, vertices decoded before the processing target point (three-dimensional point to be decoded).

Furthermore, for example, encoding device 100 and decoding device 200 determine, as adjacent points, vertices belonging to the same submesh as the processing target point.

Furthermore, for example, encoding device 100 and decoding device 200 determine, as adjacent points, vertices belonging to the same motion group as the processing target point.

Furthermore, for example, encoding device 100 and decoding device 200 determine, as adjacent points, vertices belonging to a different motion group than the processing target point.

Furthermore, for example, when the number of vertices that are adjacent point candidates is greater than a predetermined value, encoding device 100 and decoding device 200 select a predetermined number of vertices from among the candidate vertices in at least any of the methods described above.

<Representative Example>

FIG. 46 is a flowchart illustrating an example of basic encoding processing according to the present embodiment. For example, circuit 151 of encoding device 100 illustrated in FIG. 24, in operation, performs the encoding processing illustrated in FIG. 46.

Encoding device 100 executes an encoding method for encoding information of a three-dimensional point in a current frame to be encoded.

First, encoding device 100 selects one or more reference three-dimensional points from among three-dimensional points in a current frame (S201).

Next, encoding device 100 calculates, using first information of each of the one or more reference three-dimensional points, a prediction value of second information of a current three-dimensional point to be encoded in the current frame (S202).

Here, when selecting the one or more reference three-dimensional points (S201), encoding device 100 selects the one or more reference three-dimensional points, based on distances between the current three-dimensional point and each of the three-dimensional points.

The first information and the second information are information (specifically, prediction information) indicating a motion vector, for example. Each of the first information and the second information can be any information of a three-dimensional point, such as position information or attribute information. Furthermore, the reference three-dimensional point is the adjacent point described above, for example. Furthermore, the three-dimensional point is the vertex described above, for example. That is, the reference three-dimensional point is a point that is referenced to predict information of a three-dimensional point (vertex) to be encoded in a three-dimensional point cloud or a three-dimensional mesh and is selected under a condition. The condition may be the conditions described above, for example. One condition may be used or a plurality of conditions may be used in combination for selecting reference three-dimensional points. Furthermore, each of the plurality of three-dimensional points and the current three-dimensional point in the current frame is a vertex forming a three-dimensional mesh included in the current frame, for example. The current frame is the present frame described above, for example. Note that the information of the plurality of three-dimensional points and the current three-dimensional point need not include connection information. That is, the three-dimensional point cloud encoded by encoding device 100 may or may not be a three-dimensional mesh.

It is considered that, as the distance between three-dimensional points is closer, the information of the three-dimensional points will also be closer. For this reason, for example, it is considered that, by calculating the prediction value using, as the reference three-dimensional point, a three-dimensional point that is close to a current three-dimensional point, the prediction residual can be reduced. If the prediction residual can be reduced, the amount of code of a bitstream including information on the prediction residual can be reduced. Therefore, by selecting one or more reference three-dimensional points, based on the distances between the current three-dimensional point and each of the three-dimensional points, encoding device 100 can reduce the code amount.

Furthermore, for example, encoding device 100 calculates a prediction residual that is the difference between the prediction value and the value indicated by the second information, and generates a bitstream including prediction residual information indicating the prediction residual calculated. For example, encoding device 100 calculates the prediction residual after executing step S202, and further generates the bitstream.

The prediction residual is, for example, the above-described difference absolute value Diffp, and the prediction residual information is, for example, information indicating the difference absolute value Diffp.

Accordingly, encoding device 100 can generate a bitstream having reduced code amount.

Furthermore, for example, the first information of each of the one or more reference three-dimensional points indicates a motion vector of each of the one or more reference three-dimensional points, and the second information indicates a motion vector of the current three-dimensional point.

Specifically, the first information is information indicating a motion vector that indicates the amount of displacement from the coordinates of a three-dimensional point in the reference frame that corresponds to a reference three-dimensional point to the coordinates of the reference three-dimensional point in the current frame. The second information is information indicating a motion vector that indicates the amount of displacement from the coordinates of a three-dimensional point in the reference frame that corresponds to the current three-dimensional point to the coordinates of the current three-dimensional point in the current frame. The first information and the second information are the prediction information described above, for example. The reference frame is the past frame described above, for example.

Accordingly, encoding device 100 can encode the motion vectors.

Furthermore, for example, in the calculating of the prediction value (S202), encoding device 100 calculates the prediction value by using inter prediction. In other words, encoding device 100 calculates the prediction value by using information of a frame of a time different from the current frame.

Accordingly, encoding device 100 can calculate the prediction value.

Furthermore, for example, in the selecting of the one or more reference three-dimensional points, encoding device 100 calculates the distances by calculating the difference between coordinates of the current three-dimensional point and coordinates of each of the three-dimensional points.

Accordingly, encoding device 100 can calculate the distances between the current three-dimensional point and each of the three-dimensional points.

Furthermore, for example, in the selecting of the one or more reference three-dimensional points, encoding device 100 selects one or more three-dimensional points for which the distances are less than or equal to a predetermined value, as the one or more reference three-dimensional points, from among the three-dimensional points.

The predetermined value is, for example, the above-described threshold THd. The predetermined value may be determined arbitrarily in advance, and is not particularly limited.

Accordingly, encoding device 100 can select a three-dimensional point that is close to the current three-dimensional point, from among the three-dimensional points.

Furthermore, for example, in the selecting of the one or more reference three-dimensional points, encoding device 100 selects the one or more reference three-dimensional points by selecting, from among the three-dimensional points, a predetermined number of three-dimensional points in an ascending order of the distances.

Accordingly, encoding device 100 can select an appropriate number of reference three-dimensional points for calculating the prediction value.

Furthermore, for example, encoding device 100 generates a bitstream including predetermined number information indicating the predetermined number. For example, encoding device 100 generates a bitstream including prediction residual information and the predetermined number information.

The predetermined number is, for example, the above-described maximum adjacent point count (NumNeiCnt).

Accordingly, decoding device 200 can select reference three-dimensional points by using the predetermined number information obtained from the bitstream.

Furthermore, for example, in the selecting of the one or more reference three-dimensional points, encoding device 100 calculates the distances by using coordinates of a three-dimensional point corresponding to the current three-dimensional point, in a reference frame.

Accordingly, decoding device 200 can calculate the distances in the same manner as encoding device 100, without having to decode the coordinates of the current three-dimensional point in the current frame.

Furthermore, for example, the reference frame is a frame that precedes the current frame in display order.

Accordingly, encoding device 100 can encode the current frame by using a frame to be displayed in a display device earlier than the current frame, that is, by using a past frame.

Furthermore, for example, the reference frame is a frame that precedes the current frame in encoding order.

Accordingly, encoding device 100 can encode the current frame by using an encoded frame.

Furthermore, for example, in the selecting of the one or more reference three-dimensional points, encoding device 100 selects the one or more reference three-dimensional points by using the distances and information other than the distances.

The information other than the distance is, for example, connection information (connectivity). The information other than the distance may be, for example, the above-described threshold THd, the above-described NumNeiCnt, and/or information regarding the above-described motion group, and so on.

Accordingly, by appropriately selecting the information other than the distance, encoding device 100 can further reduce the code amount.

Furthermore, for example, the information other than the distances is connection information indicating whether the current three-dimensional point is connected to each of the three-dimensional points, and, in the selecting of the one or more reference three-dimensional points, encoding device 100 selects one or more three-dimensional points that are connected to the current three-dimensional point, among the three-dimensional points, as the one or more reference three-dimensional points.

In the case of three-dimensional points that are connected, it is considered that the information of such three-dimensional points will also be closer compared to three-dimensional points that are not connected. For this reason, for example, since it is considered that, by calculating the prediction value using, as the reference three-dimensional point, a three-dimensional point that is connected to the current three-dimensional point, the prediction residual can be reduced, and thus encoding device 100 can further reduce the code amount.

FIG. 47 is a flowchart illustrating an example of basic decoding processing according to the present embodiment. For example, circuit 251 of decoding device 200 illustrated in FIG. 25, in operation, performs the decoding processing illustrated in FIG. 47.

Decoding device 200 executes a decoding method for decoding information of a three-dimensional point in a current frame to be decoded.

First, decoding device 200 selects one or more reference three-dimensional points from among three-dimensional points in the current frame (S301).

Next, decoding device 200 calculates, using first information of each of the one or more reference three-dimensional points, a prediction value of second information of a current three-dimensional point to be decoded in the current frame (S302).

Here, when selecting the one or more reference three-dimensional points (S301), decoding device 200 selects the one or more reference three-dimensional points, based on distances between the current three-dimensional point and each of the three-dimensional points.

It is considered that, as the distance between three-dimensional points is closer, the information of the three-dimensional points will also be closer. For this reason, for example, it is considered that, by calculating the prediction value using, as the reference three-dimensional point, a three-dimensional point that is close to a current three-dimensional point, the prediction residual can be reduced. If the prediction residual can be reduced, the amount of code of a bitstream including information on the prediction residual can be reduced. Therefore, by selecting one or more reference three-dimensional points, based on the distances between the current three-dimensional point and each of the three-dimensional points, decoding device 200 can decode the information of the three-dimensional point by using information having reduced code amount.

Furthermore, for example, decoding device 200 obtains, from a bitstream, prediction residual information indicating a prediction residual; and calculates the second information, based on the prediction residual and the prediction value. For example, after step S302, decoding device 200 calculates the second information by using the prediction residual and the prediction value. The timing at which decoding device 200 obtains the prediction residual information may be arbitrary as long as it is before calculating the second information.

Accordingly, decoding device 200 can decode the information of the three-dimensional point by using information of the bitstream having reduced code amount.

Furthermore, for example, the first information of each of the one or more reference three-dimensional points indicates a motion vector of each of the one or more reference three-dimensional points, and the second information indicates a motion vector of the current three-dimensional point.

Accordingly, decoding device 200 can decode the motion vectors.

Furthermore, for example, in the calculating of the prediction value (S302), decoding device 200 calculates the prediction value by using inter prediction.

Accordingly, decoding device 200 can calculate the prediction value.

Furthermore, for example, in the selecting of the one or more reference three-dimensional points, decoding device 200 calculates the distances by calculating the difference between coordinates of the current three-dimensional point and coordinates of each of the three-dimensional points.

Accordingly, decoding device 200 can calculate the distances between the current three-dimensional point and each of the three-dimensional points.

Furthermore, for example, in the selecting of the one or more reference three-dimensional points, decoding device 200 selects one or more three-dimensional points for which the distances are less than or equal to a predetermined value, as the one or more reference three-dimensional points, from among the three-dimensional points.

Accordingly, decoding device 200 can select a three-dimensional point that is close to the current three-dimensional point, from among the three-dimensional points.

Furthermore, for example, in the selecting of the one or more reference three-dimensional points, decoding device 200 selects the one or more reference three-dimensional points by selecting, from among the three-dimensional points, a predetermined number of three-dimensional points in an ascending order of the distances.

Accordingly, decoding device 200 can select an appropriate number of reference three-dimensional points for calculating the prediction value.

Furthermore, for example, decoding device 200 may obtain predetermined number information from a bitstream. For example, decoding device 200 obtains the predetermined number information from the bitstream before step S301.

Accordingly, decoding device 200 can select the appropriate number of reference three-dimensional points for calculating the prediction value, by using the predetermined number information obtained from the bitstream.

Furthermore, for example, in the selecting of the one or more reference three-dimensional points, decoding device 200 calculates the distances by using coordinates of a three-dimensional point corresponding to the current three-dimensional point, in a reference frame.

Accordingly, decoding device 200 can calculate the distances in the same manner as encoding device 100, without having to decode the coordinates of the current three-dimensional point in the current frame.

Furthermore, for example, the reference frame is a frame that precedes the current frame in display order.

Accordingly, decoding device 200 can decode the current frame by using a frame to be displayed in a display device earlier than the current frame, that is, by using a past frame.

Furthermore, for example, the reference frame is a frame preceding the current frame in decoding order.

Accordingly, decoding device 200 can decode the current frame by using a decoded frame.

Furthermore, for example, in the selecting of the one or more reference three-dimensional points, decoding device 200 selects the one or more reference three-dimensional points by using the distances and information other than the distances.

Accordingly, by appropriately selecting the information other than the distance, decoding device 200 can decode the information of the three-dimensional point by using information having a further reduced code amount.

Furthermore, for example, the information other than the distances is connection information indicating whether the current three-dimensional point is connected to each of the three-dimensional points, and, in the selecting of the one or more reference three-dimensional points, decoding device 200 selects one or more three-dimensional points that are connected to the current three-dimensional point, among the three-dimensional points, as the one or more reference three-dimensional points.

In the case of three-dimensional points that are connected, it is considered that the information of such three-dimensional points will also be closer compared to three-dimensional points that are not connected. For this reason, for example, since it is considered that, by calculating the predicted value using, as the reference three-dimensional point, a three-dimensional point that is connected to the current three-dimensional point, the prediction residual can be reduced, and thus decoding device 200 can decode the information of the three-dimensional point by using information having a further reduced code amount.

Hereinafter, the method for generating LoD will be described.

FIG. 48 and FIG. 49 are explanatory diagrams each illustrating a method of generating LoD according to the present embodiment.

When encoding motion vectors of three-dimensional points, the encoding device may classify each three-dimensional point into one or more hierarchical levels using position information of the three-dimensional points before encoding. Here, each hierarchical level used for classification is called Level of Detail (LoD). LoD is assigned an identifier (for example, a number) that uniquely indicates the LoD. For example, the Oth LoD is also called LoD0, the 1st LoD is also called LoD1, the nth LoD is also called LoDn, and the (n-1)th LoD is also called LoD(n-1).

The method for generating LoD will be described using FIG. 48 and FIG. 49. Note that when the encoding device or decoding device cannot calculate position information or distance information of three-dimensional points in a frame to be encoded or to be decoded, position information or distance information of three-dimensional points corresponding to the above three-dimensional points in a frame that has already been encoded or decoded may be used. In this way, three-dimensional points to be encoded or to be decoded may be able to be classified into one or more hierarchical levels and efficiently encoded.

FIG. 48 illustrates three-dimensional points to be encoded, namely point a0, point a1, point a2, point b0, point b1, point b2, point c0, point c1, and point c2. Note that $d(x, y)$ indicates the distance between point x and point y.

By setting the threshold values for each layer of LoD to be larger for higher layers (layers closer to LoD0), the higher layers become point clouds with greater distances between three-dimensional points (also called sparse point clouds), and the lower layers become point clouds with shorter distances between three-dimensional points (also called dense point clouds). Here, LoD0 is the highest layer.

Point y belongs to the same LoD as point x when the distance $d(x, y)$ from point x is greater than the threshold of the LoD to which point x belongs and is less than or equal to the threshold of the LoD above that LoD. Note that when point x belongs to LoD0, which is the highest layer, point y belongs to the same LoD as point x when the distance $d(x, y)$ from point x is greater than the threshold of the LoD to which point x belongs.

First, the encoding device selects point a0 as an initial point and assigns it to LoD0. Next, the encoding device extracts point a1 whose distance from point a0 is greater than the threshold Thres_LoD[0] of LoD0 and assigns it to LoD0. Next, the encoding device extracts point a2 whose distance from point a1 is greater than the threshold Thres_LoD[0] of LoD0 and assigns it to LoD0. In this way, the encoding device configures LoD0 such that the distance between each point within LoD0 is greater than the threshold Thres_LoD[0].

Next, the encoding device selects point b0 to which a LoD has not yet been assigned and assigns it to LoD1. Next, the encoding device selects point b1 whose distance from point b0 is greater than the threshold Thres_LoD[1] of LoD1 and to which no LoD has been assigned yet, and assigns it to LoD1. Next, the encoding device selects point b2 whose distance from point b1 is greater than the threshold Thres_LoD[1] of LoD1 and to which no LoD has been assigned yet, and assigns it to LoD1. In this way, the encoding device configures LoD1 such that the distance between each point within LoD1 is greater than the threshold Thres_LoD[1].

Next, the encoding device selects point c0 to which a LoD has not yet been assigned and assigns it to LoD2. Next, the encoding device selects point c1 whose distance from point c0 is greater than the threshold Thres_LoD[2] of LoD2 and to which no LoD has been assigned yet, and assigns it to LoD2. Next, the encoding device selects point c2 whose distance from point c1 is greater than the threshold Thres_LoD[2] of LoD2 and to which no LoD has been assigned yet, and assigns it to LoD2. In this way, LoD2 is configured such that the distance between each point within LoD2 is greater than the threshold Thres_LoD[2].

The threshold of each LoD may be added to the header of the bitstream. For example, in the case of FIG. 48, the thresholds Thres_LoD[0], Thres_LoD[1], and Thres_LoD[2] may be added to the header of the bitstream.

All three-dimensional points to which no LoD has been assigned yet may be assigned to the lowest layer of LoD. In such cases, this has the advantageous effect that the code amount of the header can be reduced by not adding the threshold of the lowest layer of LoD to the header. For example, in the case of FIG. 48, the encoding device may add the thresholds Thres_LoD[0] and Thres_LoD[1] to the header while not adding Thres_LoD[2] to the header, and the decoding device may estimate Thres_LoD[2] as the value 0.

The number of LoD layers may be added to the header. Accordingly, whether the LoD is the lowest layer can be determined by the decoding device.

Note that when the LoD hierarchy has one layer, that is, when encoding motion vectors of three-dimensional points without generating LoD, the encoding device may omit the LoD generation processing described in the above example. Alternatively, the encoding device may apply the LoD generation method described in the above example with the LoD hierarchy set to 1. In such cases, the encoding device may execute the LoD generation processing assuming that all three-dimensional points belong to the same LoD. Accordingly, the encoding device can reduce the processing time for generating the LoD.

Note that the motion vector encoding or decoding described in the present embodiment may also be applied to methods other than the LoD generation method described above. For example, even when the LoD hierarchy to which three-dimensional points belong is predetermined, encoding efficiency may be improved by applying the motion vector encoding method or decoding method described in the present embodiment.

The selection method for initial three-dimensional points when configuring each LoD may depend on the encoding order during motion vector encoding. For example, the encoding device selects, as initial point a0 of LoD0, the three-dimensional point that was first encoded during motion vector encoding, and selects points a1 and a2 based on point a0 to configure LoD0. The encoding device may then select, as initial point b0 of LoD1, the three-dimensional point whose motion vector was encoded earliest among the three-dimensional points that do not currently belong to LoD0. Stated differently, the encoding device may select, as initial point n0 of LoDn, the three-dimensional point whose motion vector was encoded earliest among the three-dimensional points that do not belong to LoDs at levels LoD(n-1) and below. Accordingly, during decoding as well, by using a similar initial point selection method (specifically, a method of selecting, as initial point n0 of LoDn, the three-dimensional point whose motion vector was decoded earliest among the three-dimensional points that do not belong to LoDs at levels LoD(n-1) and below), the same LoD as during encoding can be configured, and the bitstream can be appropriately decoded.

FIG. 50 is an explanatory diagram illustrating a method for generating a prediction value of a motion vector according to the present embodiment.

The encoding device can generate a prediction value of a motion vector of a three-dimensional point using LoD information.

The encoding device may, for example, when encoding in order starting from the three-dimensional points included in LoD0, generate LoD1 using the encoded and decoded motion vectors included in LoD0 and LoD1. In this way, the encoding device can generate a prediction value of a motion vector of a three-dimensional point included in LoDn using the encoded and decoded motion vectors included in LoDn' (where n'≤n).

The prediction value of a motion vector of a three-dimensional point can be generated by calculating an average of motion vectors of a certain number or fewer of three-dimensional points among the three-dimensional points that are encoded and decoded adjacent points of the three-dimensional point to be encoded. The certain number is, for example, the number of adjacent points of the three-dimensional point to be encoded (for example, N points). In such cases, the value N is added to the header or the like of the bitstream.

Note that the value N indicating the number of adjacent points (i.e., N points) used for calculating the prediction value may be added for each three-dimensional point that generates a prediction value. With this, the encoding device can select appropriate N adjacent points for each three-dimensional point that is a target for generating a prediction value, so the accuracy of the prediction value can be improved and the prediction residual can be reduced. The encoding device may also add the value N to the header of the bitstream and fix it within the bitstream (in other words, the value N may be commonly used as a fixed value in encoding of three-dimensional points included in the bitstream). With this, the encoding device no longer needs to encode or decode the value N for each three-dimensional point, so the processing amount can be reduced. The encoding device may also encode the value N separately for each LoD. With this, the encoding device may be able to improve encoding efficiency by selecting an appropriate value N for each LoD.

The prediction value of a motion vector of a three-dimensional point may be calculated from a weighted average value of N encoded and decoded adjacent points. The encoding device may, for example, perform weighted averaging using distance information between the three-dimensional point to be encoded and each of the N adjacent points. This will be described with reference to FIG. 50.

When the encoding device performs encoding using separate values N for each LoD, the encoding device may, for example, set the value of N to be larger for higher layers of LoD and set the value of N to be smaller for lower layers. In higher layers of LoD, since the distances between three-dimensional points belonging to the LoD are relatively large, by setting the value of N to be large, it may be possible to improve prediction accuracy by selecting and averaging a relatively large number of surrounding three-dimensional points. In lower layers of LoD, since the distances between three-dimensional points belonging to the LoD are relatively small, by setting the value of N to be small, it may be possible to perform efficient prediction while inhibiting the processing amount of averaging.

The prediction value of point P belonging to LoDN is generated from reconstructed point P' belonging to LoDN' (where N'≤N). Here, suppose that adjacent points are selected with point P' based on connectivity and distance.

Note that the prediction value of a motion vector may be calculated from an unweighted average value. Accordingly, the processing amount can be reduced.

As illustrated in FIG. 50, point a2 is predicted from point a0 and point a1. Point b2 is predicted from point a0, point a1, point a2, point b0, and point b1. Note that the points selected as adjacent points to be used for prediction may change depending on the number N of adjacent points used for prediction. For example, when N=5, point a0, point a1, point a2, point b0, and point b1 are selected as adjacent points of point b2, and when N=4, point a0, point a1, point a2, and point b1 may be selected based on distance information.

For example, when a weighted average value of adjacent points is used for prediction, prediction value a2p of point a2 is calculated from a weighted average of point a0 and point a1 (see Expression 1 and Expression 2). Here, $A_i$ is the value of the motion vector of point ai.

[Math. 1]

$$a2p = \sum_{i=0}^{1} w_i \times A_i$$

(Expression 1)

where:

[Math. 2]

$$w_i = \frac{1/d(a2, ai)}{\sum_{j=0}^{1} 1/d(a2, aj)}$$

(Expression 2)

Prediction value b2p of point b2 is calculated from a weighted average of point a0, point a1, point a2, point b0, and point b1 (see Expression 3, Expression 4, and Expression 5). Here, $B_i$ is the value of the motion vector of point bi.

[Math. 3]

$$b2p = \sum_{i=0}^{2} wa_i \times A_i + \sum_{i=0}^{1} wb_i \times B_i$$

(Expression 3)

where:

[Math. 4]

$$wa_i = \frac{1/d(b2, ai)}{\sum_{j=0}^{2} 1/d(b2, aj) + \sum_{j=0}^{1} 1/d(b2, bj)}$$

(Expression 4)

[Math. 5]

$$wb_i = \frac{1/d(b2, bi)}{\sum_{j=0}^{2} 1/d(b2, aj) + \sum_{j=0}^{1} 1/d(b2, bj)}$$

(Expression 5)

When encoding values of motion vectors of three-dimensional points, the encoding device may calculate a difference value (also referred to as a prediction residual, see Expression 6 and Expression 7 below) between a prediction value generated from adjacent points of the three-dimensional point and the three-dimensional point, and encode using quantization of the calculated prediction residual. Here, prediction residual a2r is the prediction residual of point a2, and prediction residual b2r is the prediction residual of point b2.

[Math. 6]

$$a2r = A_2 - a2p$$

(Expression 6)

[Math. 7]

$$b2r = B_2 - b2p$$

(Expression 7)

For example, the encoding device can perform quantization by dividing the prediction residual by a quantization scale. In such cases, the smaller the quantization scale, the smaller the error (quantization error) that can occur due to quantization, and conversely, the larger the quantization scale, the larger the quantization error.

The value obtained by quantizing prediction residual a2r is defined as quantization value a2q, and the value obtained by quantizing prediction residual b2r is defined as quantization value b2q (see Expression 8 and Expression 9 below). QS_LoD0 is the quantization scale of LoD0, and QS_LoD1 is the quantization scale of LoD1.

[Math. 8]

$$a2q = \frac{a2r + \dfrac{QS\_LoD0}{2}}{QS\_LoD0}$$

(Expression 8)

[Math. 9]

$$b2q = \frac{b2r + \dfrac{QS\_LoD1}{2}}{QS\_LoD1}$$

(Expression 9)

Note that the encoding device may change the value of the quantization scale for each LoD. For example, the quantization scale can be made smaller for higher-layer LoDs and larger for lower-layer LoDs. Since there is a possibility the motion vector values of three-dimensional points belonging to higher layers may be used as prediction values for motion vectors of three-dimensional points belonging to lower layers, encoding efficiency can be improved by reducing the quantization scale of higher layers to inhibit quantization errors that can occur in higher layers and thereby improve the accuracy of prediction values. Note that the encoding device may add the quantization scale to a header or the like for each LoD. Accordingly, the encoding device can contribute to the decoding device correctly decoding the quantization scale and appropriately decoding the bitstream.

Note that the encoding device may convert the prediction residual after quantization from a signed integer value to an unsigned integer value. For example, the encoding device may convert quantization value a2q, which is a signed integer value, to quantization value a2u, which is an unsigned integer value, as follows.

When quantization value a2q is less than 0; a2u = -1 - (2 × a2q)

In other cases;

$$a2u = 2 \times a2q$$

$$(\text{Expression } 10)$$

For example, the encoding device may convert quantization value b2q, which is a signed integer value, to quantization value b2u, which is an unsigned integer value, as follows.
When quantization value b2q is less than 0; b2u = -1 - (2 × b2q)
In other cases;

$$b2u = 2 \times b2q$$

$$(\text{Expression } 11)$$

With this, the encoding device has the advantage that it does not need to consider the occurrence of negative integers when entropy encoding the prediction residual.
Note that the encoding device does not necessarily need to convert from a signed integer value to an unsigned integer value, and may, for example, separately entropy encode the sign bit.
Note that the encoding method for the prediction residual is not limited to this, and for example, the encoding device may arithmetically encode a sign bit representing the positive or negative of the prediction residual and binarized data of the absolute value of the prediction residual on a bit-by-bit basis using context. With this, the encoding device may be able to improve encoding efficiency of the prediction residual of the motion vector.
Note that when quantization of the prediction residual of the motion vector is not necessary, this processing may be skipped and the prediction residual may be arithmetically encoded as-is. Accordingly, the processing time can be reduced.
The encoding device can decode the prediction residual after quantization by inverse quantization and reconstruction, and use it for prediction of three-dimensional points to be encoded subsequent to the encoding target three-dimensional point. More specifically, the encoding device can calculate an inverse quantization value by multiplying the prediction residual after quantization by a quantization scale, and obtain a decoded value by adding the inverse quantization value and the prediction value. For example, the encoding device can calculate inverse quantization value a2iq from quantization value a2q as follows, and can also calculate inverse quantization value b2iq from quantization value b2q as follows.

$$a2iq = a2q \times QS\_LoD0$$
$$b2iq = b2q \times QS\_LoD1$$

$$(\text{Expression } 12)$$

The encoding device can calculate reconstructed value a2rec from inverse quantization value a2iq as follows, and can also calculate reconstructed value b2rec from inverse quantization value b2iq as follows.

$$a2rec = a2iq + a2p$$
$$b2rec = b2iq + b2p$$

$$(\text{Expression } 13)$$

Note that the present embodiment shows a method in which the encoding device configures a plurality of LoDs to generate prediction values of motion vectors of three-dimensional points, but the method is not necessarily limited thereto. For example, the method may be applied when configuring a single-layer LoD to generate prediction values of motion vectors of three-dimensional points, or when generating prediction values of motion vectors of three-dimensional points without generating LoDs.
In such cases, since all three-dimensional points belong to the same LoD (for example, LoD0), when the encoding device encodes or decodes in order starting from the three-dimensional points included in LoD0, the encoding device may generate prediction values of three-dimensional points belonging to LoD0 using the encoded and decoded motion vectors included in LoD0. In this way, the encoding device may be able to reduce processing time by encoding without generating a plurality of layers of LoDs.
Note that when quantization of the prediction residual of the motion vector is not necessary, the encoding device may skip the quantization and inverse quantization processing and add the arithmetically decoded prediction residual directly to the prediction value to obtain a decoded value. Accordingly, the processing time can be reduced.

FIG. 51 is an explanatory diagram illustrating an example of syntax according to the present embodiment.

The example of syntax illustrated in FIG. 51 illustrates an example of the configuration of information included in a bitstream generated by the encoding device.

The syntax illustrated in FIG. 51 includes NumLoD, NumOfPoint[i], Thres_LoD[i], NumNeiCnt[i], THd[i], and QS [i].

NumLoD indicates the number of LoD layers.

NumOfPoint[i] indicates the number of three-dimensional points belonging to layer i. Note that when the encoding device adds the total number of three-dimensional points AllNumOfPoint to a separate header, NumOfPoint[NumLoD-1] (that is, the number of three-dimensional points belonging to the lowest layer) may not be added to the header. In such cases, NumOfPoint[NumLoD-1] can be calculated according to Expression 14 shown below.

[Math. 10]

$$\mathrm{NumOfPoint[NumLoD-1]} = \mathrm{AllNumOfPoint} - \sum_{j=0}^{NumLoD-2} NumOfPoint[j]$$

$$(\text{Expression } 14)$$

Thres_LoD[i] indicates the LoD threshold for layer i. The encoding device configures LoDi such that the distance between each point within LoDi is greater than the threshold Thres_LoD[i]. Note that the value of Thres_LoD[NumLoD-1] (that is, the LoD threshold for the lowest layer) may not be added to the header. In such cases, Thres_LoD[NumLoD-1] can be estimated as 0. Accordingly, the code amount of the header can be reduced.

NumNeiCnt[i] indicates the upper limit value of the number of adjacent points used for generating prediction values of three-dimensional points belonging to layer i. When the number of adjacent points M is less than NumNeiCnt[i] (that is, when M<NumNeiCnt[i]), the encoding device may calculate the prediction value using M adjacent points. When there is no need to vary the value of NumNeiCnt[i] for each LoD, the encoding device may add one NumNeiCnt to the header.

THd[i] indicates the upper limit value of the distance of three-dimensional points used for prediction of three-dimensional points that are targets for encoding or decoding in layer i. The encoding device may not use three-dimensional points whose distance from the three-dimensional point that is the target for encoding or decoding is greater than THd[i] for prediction. Note that when there is no need to vary the value of THd[i] for each LoD, one THd may be added to the header.

QS[i] indicates the quantization scale for layer i.

Note that the encoding device may entropy encode NumLoD, Thres_LoD[i], NumNeiCnt[i], THd[i], or QS[i] and add them to the header. For example, the encoding device may binarize each value and perform arithmetic encoding. The encoding device may encode with a fixed length to reduce the processing amount.

Note that the encoding device does not necessarily need to add NumLoD, Thres_LoD[i], NumNeiCnt[i], THd[i], or QS[i] to the header, and they may be defined by, for example, a profile or level in a standard or the like. Accordingly, the bit amount of the header can be reduced.

FIG. 52 is an explanatory diagram illustrating an example of syntax according to the present embodiment.

The example of syntax illustrated in FIG. 52 illustrates an example of the configuration of information included in a bitstream generated by the encoding device.

The syntax illustrated in FIG. 52 may include mvd_is_zero[k], mvd_is_one[k], mvd_minus2[k], and mvd_sign[k] for each of the 0th to NumLoD-th layers of LoD (also referred to as the jth layer).

mvd_is_zero[k] is information indicating whether the absolute value of the prediction residual of the kth component of the motion vector of the ith three-dimensional point (i.e., vertex[i]) included in the jth layer of LoD is 0. A value of 1 indicates that the absolute value of the prediction residual of the kth component is 0, and a value of 0 may indicate that the absolute value of the prediction residual of the kth component is greater than or equal to 1.

mvd_is_one[k] is information indicating whether the absolute value of the prediction residual of the kth component of the motion vector of the ith three-dimensional point (i.e., vertex[i]) included in the jth layer of LoD is 1. A value of 1 indicates that the absolute value of the prediction residual of the kth component is 1, and a value of 0 may indicate that the absolute value of the prediction residual of the kth component is greater than or equal to 2.

Note that when mvd_is_one[k] is not included in the bitstream, the decoding device may estimate its value as 0. This prevents an indefinite value from being set for mvd_is_one[k] during decoding, and enables appropriate decoding processing to be performed.

mvd_minus2[k] is information indicating a value obtained by subtracting the value 2 from the absolute value of the prediction residual of the kth component of the motion vector of the ith three-dimensional point (vertex[i]) included in the jth layer of LoD.

Note that when mvd_minus2[k] is not included in the bitstream, the decoding device may estimate its value as 0. This prevents an indefinite value from being set for mvd_minus2[k] during decoding, and enables appropriate decoding processing to be performed.

mvd_sign[k] indicates the sign bit of the motion vector of the kth component of the ith three-dimensional point (vertex[i]) included in the jth layer of LoD. A value of 1 indicates that the prediction residual of the kth component is negative, and a value of 0 may indicate that the prediction residual of the kth component is positive.

Note that for the kth component, when the motion vector is represented in a Cartesian coordinate system, the first component may indicate the x component, the second component may indicate the y component, and the third component may indicate the z component. When the motion vector is represented in a polar coordinate system, the first component may indicate distance r, the second component may indicate horizontal angle Φ, and the third component may indicate vertical angle Θ. This enables a common syntax structure to be used whether the motion vector is represented in a Cartesian coordinate system or in a polar coordinate system.

Note that the prediction residual mvd[k] of the kth component of the motion vector of the ith three-dimensional point (i.e., vertex[i]) may be calculated through the arithmetic processing illustrated in FIG. 53 using the above information.

By introducing the syntax configuration illustrated in FIG. 52, the encoding device can reduce the frequency of encoding mvd_is_one[k], mvd_minus2[k], and mvd_sign[k] and adding them to the bitstream when encoding prediction residuals that tend to result in mvd[k]=0, for example, and may thereby be able to improve encoding efficiency. When encoding prediction residuals that tend to result in mvd[k]=1 or 0, for example, the encoding device can reduce the frequency of encoding mvd_minus2[k] and adding it to the bitstream, and may thereby be able to improve encoding efficiency.

Note that the present embodiment shows an example assuming cases where prediction residuals tend to result in mvd[k]=0 or 1, but the embodiment is not necessarily limited thereto, and similar processing may be applied to any mvd[k]. For example, when encoding prediction residuals that tend to result in mvd[k]=2, mvd_is_two[k] and mvd_minus3[k] may be newly introduced. With this, when encoding prediction residuals that tend to result in mvd[k]=2, the frequency of encoding mvd_minus3[k] and adding it to the bitstream can be reduced, and as a result, encoding efficiency may be able to be improved. Note that, in this case, mvd[k] may be calculated through the arithmetic processing illustrated in FIG. 54.

Note that the encoding device may binarize at least one of mvd_is_zero[k], mvd_is_one[k], mvd_minus2[k], and mvd_sign[k] and apply arithmetic encoding using context. For example, since mvd_is_zero[k], mvd_is_one[k], and mvd_sign[k] are each 1 bit, the encoding device may assign one context to each of the above and encode while updating the occurrence probability based on the occurrence frequency of 0 and 1. In this way, the encoding efficiency may be able to be improved. The encoding device may binarize mvd_minus2[k] using Exponential Golomb, assign contexts to each bit, and encode while updating the occurrence probability based on the occurrence frequency of 0 and 1. In this way, the encoding efficiency may be able to be improved.

Note that the encoding device may assign separate contexts for each component of mvd as the context to assign to mvd_is_zero[k], mvd_is_one[k], mvd_minus2[k], and mvd_sign[k]. In this way, the encoding efficiency may be able to be improved when the value of mvd differs for each component. Note that the encoding device may assign the same context for each component of mvd as the context to assign to mvd_is_zero[k], mvd_is_one[k], mvd_minus2[k], and mvd_sign[k]. In this way, the encoding efficiency may be able to be improved when the values of each component of mvd are close.

Hereinafter, a process by the encoding device will be described.

FIG. 55 is a flowchart illustrating an example of processing by the encoding device according to the present embodiment.

In step S1001, the encoding device generates one or more LoDs (see FIG. 48 and FIG. 49).

In step S1002, the encoding device performs start processing for loop A that repeatedly executes the processing of steps S1003 to S1011 described below. In loop A, focus is placed on each of the one or more LoDs generated in step S1001, processing is performed for the focused LoD, and ultimately control is carried out so that processing is performed for all LoDs. Note that the LoD being focused on is also referred to as the focused LoD. Loop A can also be referred to as an LoD loop.

In step S1003, the encoding device performs start processing for loop B that repeatedly executes the processing of steps S1004 to S1010 described below. In loop B, focus is placed on each of the three-dimensional points belonging to the focused LoD, processing is performed for the focused three-dimensional point, and ultimately control is carried out so that processing is performed for all three-dimensional points. Note that the three-dimensional point being focused on is also referred to as point P.

In step S1004, the encoding device searches for neighboring points of point P (see FIG. 36 through FIG. 45).

In step S1005, the encoding device calculates the weighted average of the neighboring points searched for in step S1004 and sets it as the prediction value of point P (see FIG. 50).

In step S1006, the encoding device calculates the prediction residual of point P using the prediction value of point P set in step S1005 (see Expression 6 and Expression 7 above).

In step S1007, the encoding device calculates the quantization value of point P using the prediction residual calculated in step S1006 (see Expression 8 and Expression 9 above).

In step S1008, the encoding device encodes the quantization values calculated in step S1007.

In step S1009, the encoding device calculates inverse quantization values by inverse quantizing the quantization values calculated in step S1007.

In step S1010, the encoding device calculates the reconstructed value using the inverse quantization values calculated in step S1009.

In step S1011, the encoding device performs end processing for loop B. More specifically, the encoding device determines whether the processing of steps S1004 to S1010 has been executed for all three-dimensional points belonging to the focused LoD, and if not executed, carries out control so that processing is executed with focus placed on three-dimensional points that have not yet been executed.

In step S1012, the encoding device performs end processing for loop A. More specifically, the encoding device determines whether the processing of steps S1003 to S1011 has been executed for all LoDs, and if not executed, carries out control so that processing is executed with focus placed on LoDs that have not yet been executed.

Note that when the LoD hierarchy that the encoding device should generate in step S1001 has one layer, prediction values of motion vectors of three-dimensional points can be generated without generating LoD. In such cases, the processing of step S1001 and step S1012 may be omitted. In such cases, the encoding device may execute the processing of steps S1002 to S1011 with LoD=1 (that is, only LoD1 exists). Accordingly, the encoding device can reduce the processing time.

Note that when quantization of the prediction residual of the motion vector is not necessary, the encoding device may skip the quantization processing (step S1007) and the inverse quantization processing (step S1009) and add the arithmetically decoded prediction residual directly to the prediction value to obtain a decoded value. Accordingly, the processing time can be reduced.

The decoding device may convert the decoded prediction residual after quantization from an unsigned integer value to a signed integer value by a method reverse to that of the encoding device. Accordingly, when entropy encoding the prediction residual, a bitstream generated without considering the occurrence of negative integers can be appropriately decoded.

Note that it is not necessarily required to convert from an unsigned integer value to a signed integer value. For example, when decoding a bitstream generated by separately entropy encoding the sign bit, the decoding device may decode the sign bit. Note that the decoding method for the prediction residual by the decoding device is not limited to this, and for example, a sign bit representing the positive or negative of the prediction residual and binarized data of the absolute value of the prediction residual may be arithmetically decoded on a bit-by-bit basis using context. With this, the decoding device can appropriately decode a bitstream with improved encoding efficiency of the prediction residual of the motion vector.

The decoding device decodes, by inverse quantization and reconstruction, the prediction residual after quantization converted to a signed integer value, and uses it for prediction of three-dimensional points to be decoded subsequent to the decoding target three-dimensional point. More specifically, the decoding device calculates an inverse quantization value by multiplying the prediction residual after quantization by a decoded quantization scale, and obtains a decoded value by adding the inverse quantization value and the prediction value.

For example, decoded unsigned quantization value a2u is converted to signed value a2q as follows. Note that ">>" indicates a bit shift operation.

When LSB (least significant bit) of a2u is 1; a2q = -((a2u + 1) >> 1)
In other cases;

$$a2q = (a2u >> 1)$$

$$(Expression\ 15)$$

For example, decoded unsigned quantization value b2u is converted to signed value b2q as follows.

When LSB of b2u is 1; b2q = -((b2u + 1) >> 1)
In other cases;

$$b2q = (b2u >> 1)$$

$$(Expression\ 16)$$

The decoding device calculates reconstructed values after inverse quantization. Reconstructed values can be used for prediction of three-dimensional points to be decoded subsequent to the decoding target three-dimensional point.

For example, the decoding device can calculate inverse quantization value a2iq from quantization value a2q as follows, and can also calculate inverse quantization value b2iq from quantization value b2q as follows.

$$a2iq = a2q \times QS\_LoD0$$
$$b2iq = b2q \times QS\_LoD1$$

(Expression 17)

The decoding device can calculate reconstructed value a2rec from inverse quantization value a2iq as follows, and can also calculate reconstructed value b2rec from inverse quantization value b2iq as follows.

$$a2rec = a2iq + a2p$$
$$b2rec = b2iq + b2p$$

(Expression 18)

FIG. 56 is a flowchart illustrating an example of a process by the decoding device according to the present embodiment.

In step S1101, the decoding device generates one or more LoDs from the input bitstream (see FIG. 48 and FIG. 49).

In step S1102, the decoding device performs start processing for loop A that repeatedly executes the processing of steps S1103 to S1109 described below. In loop A, focus is placed on each of the one or more LoDs generated in step S1101, processing is performed for the focused LoD, and ultimately control is carried out so that processing is performed for all LoDs. Note that the LoD being focused on is also referred to as the focused LoD. Loop A can also be referred to as an LoD loop.

In step S1103, the decoding device performs start processing for loop B that repeatedly executes the processing of steps S1104 to S1108 described below. In loop B, focus is placed on each of the three-dimensional points belonging to the focused LoD, processing is performed for the focused three-dimensional point, and ultimately control is carried out so that processing is performed for all three-dimensional points. Note that the three-dimensional point being focused on is also referred to as point P.

In step S1104, the decoding device searches for neighboring points of point P (see FIG. 36 through FIG. 45).

In step S1105, the decoding device calculates the weighted average of the neighboring points searched for in step S1104 and sets it as the prediction value of point P (see FIG. 50).

In step S1106, the decoding device decodes the quantization values of point P.

In step S1107, the decoding device obtains inverse quantization values by inverse quantizing the quantization values of point P decoded in step S1106.

In step S1108, the decoding device calculates the reconstructed value of point P using the inverse quantization values obtained in step S1107.

In step S1109, the decoding device performs end processing for loop B. More specifically, the decoding device determines whether the processing of steps S1104 to S1108 has been executed for all three-dimensional points belonging to the focused LoD, and if not executed, carries out control so that processing is executed with focus placed on three-dimensional points that have not yet been executed.

In step S1110, the decoding device performs end processing for loop A. More specifically, the decoding device determines whether the processing of steps S1103 to S1109 has been executed for all LoDs, and if not executed, carries out control so that processing is executed with focus placed on LoDs that have not yet been executed.

Note that when the LoD hierarchy that the decoding device should generate in step S1101 has one layer, prediction values of motion vectors of three-dimensional points can be generated without generating LoD. In such cases, the processing of step S1102 and step S1110 may be omitted. In such cases, the decoding device may execute the processing of steps S1103 to S1108 with LoD=1 (that is, only LoD1 exists). Accordingly, the decoding device can reduce the processing time.

Note that when inverse quantization of the prediction residual of the motion vector is not necessary, the decoding device may skip the inverse quantization processing (step S1107) and add the arithmetically decoded prediction residual directly to the prediction value to obtain a decoded value. Accordingly, the processing time can be reduced.

In the above description, an example has been shown in which the encoding device calculates and generates an average of motion vectors of a certain number or fewer of three-dimensional points among the encoded and decoded adjacent points of the three-dimensional point to be encoded as the prediction value of the motion vector of the three-dimensional point, but the method is not necessarily limited thereto, and prediction values can be generated using other methods.

For example, the encoding device may use the motion vector of the three-dimensional point with the shortest distance among the three-dimensional points that are encoded and decoded adjacent points of the three-dimensional point to be encoded directly as the prediction value. The encoding device may also add a prediction mode value (PredMode) for each three-dimensional point to enable selection of prediction values. For example, the encoding device can provide a total number M of prediction modes, assign an average value to prediction mode 0, assign a motion vector of three-dimensional point A to prediction mode 1, ..., assign a motion vector of three-dimensional point Z to prediction mode M-1, and add the prediction mode used for prediction to the bitstream for each three-dimensional point. The three-dimensional points A to Z to which motion vectors are assigned from prediction mode 1 to prediction mode M-1 may be used in order from those closest to the three-dimensional point to be encoded among the three-dimensional points that are encoded and decoded adjacent points of the three-dimensional point to be encoded.

FIG. 57 is an explanatory diagram illustrating an example of prediction value information of motion vectors according to the present embodiment. FIG. 58 is an explanatory diagram illustrating a method of generating a prediction value of a motion vector according to the present embodiment.

FIG. 57 illustrates an example of prediction value information used for prediction of point b2 when the number N of adjacent three-dimensional points used for prediction is 4 and the number M of prediction modes is 5. The prediction value information includes, for each of one or more prediction modes, information indicating a prediction value used in the prediction mode. The prediction value information example illustrated in FIG. 57 is a table that indicates, for each of one or more prediction modes, a prediction value used in the prediction mode.

In the example illustrated in FIG. 57, the prediction values used for prediction of point b2 are, for example, point a0, point a1, point a2, and point b1, which are adjacent three-dimensional points (see FIG. 58). Corresponding to this, "average value of point a0, point a1, point a2, and point b1" is assigned as the prediction value for prediction mode 0.

In FIG. 57, "point b1" is assigned as the prediction value for prediction mode 1. "Point b2" is assigned as the prediction value for prediction mode 2. "Point a1" is assigned as the prediction value for prediction mode 3. "Point a0" is assigned as the prediction value for prediction mode 4.

Note that the numerical value that uniquely indicates the prediction mode is also referred to as the prediction mode value. Here, the explanation will be made assuming that the prediction mode value of prediction mode m is m. As an example, prediction mode values are used in order from small integer values.

The assignment of prediction mode values may be determined in order of distance from the three-dimensional point to be encoded. For example, the encoding device can assign relatively smaller prediction mode values to three-dimensional points that have smaller distances from the three-dimensional point to be encoded. In the above example, the three-dimensional point with the smallest distance from three-dimensional point b2 to be encoded (that is, the three-dimensional point closest to three-dimensional point b2) can be point b1, the three-dimensional point with the next smallest distance from three-dimensional point b2 can be point a2, the three-dimensional point with the next smallest distance from three-dimensional point b2 can be point a1, and the three-dimensional point with the next smallest distance from three-dimensional point b2 can be point a0.

With this, since the distance is small, the difference between the motion vector and the prediction value is relatively small, so smaller prediction mode values can be assigned to points that have a relatively high probability of being easily selected as prediction values, and thus the number of bits for encoding the prediction mode values can be reduced. Smaller prediction mode values may be preferentially assigned to three-dimensional points that belong to the same LoD as the three-dimensional point to be encoded.

FIG. 59 illustrates an example of prediction value information used for prediction of point a2 when the number N of adjacent three-dimensional points used for prediction is 2 and the number M of prediction modes is 5.

In the prediction value information example illustrated in FIG. 59, the prediction values used for prediction of point a2 are, for example, point a0 and point a1, which are adjacent three-dimensional points. Corresponding to this, in FIG. 59, "average value of point a0 and point a1" is assigned as the prediction value for prediction mode 0.

"Point a1" is assigned as the prediction value for prediction mode 1. "Point a0" is assigned as the prediction value for prediction mode 2.

Note that when the number of adjacent points is less than 4, information indicating that the prediction mode is not used (described as "not available" in the figure) may be set for prediction modes to which prediction values are unassigned.

Note that an example of prediction value information when the motion vector is represented in a Cartesian coordinate system (XYZ coordinate system) is illustrated in FIG. 60.

In the example illustrated in FIG. 60, the values used for prediction of point b2 are, for example, point a0, point a1, point a2, and point b1, which are adjacent three-dimensional points (see FIG. 58). Corresponding to this, in FIG. 60, (Xave, Yave, Zave), which are the coordinates of "average value of point a0, point a1, point a2, and point b1", is assigned as the prediction value for prediction mode 0. Here, Xave can be calculated as an average or weighted average of Xb1, Xa2, Xa1, and Xa0. Yave can be calculated as an average or weighted average of Yb1, Yb2, Ya1, and Ya0. Zave can be calculated as an average or weighted average of Zb1, Zb2, Za1, and Za0.

(Xb1, Yb1, Zb1), which are the coordinates of "point b1", is assigned as the prediction value for prediction mode 1. (Xa2, Ya2, Za2), which are the coordinates of "point b2", is assigned as the prediction value for prediction mode 2. (Xa1, Ya1, Za1), which are the coordinates of "point a1", is assigned as the prediction value for prediction mode 3. (Xa0, Ya0, Za0), which are the coordinates of "point a0", is assigned as the prediction value for prediction mode 4.

For example, the encoding device may select prediction mode 2 (that is, prediction mode value 2) and encode the XYZ components of the motion vector of the three-dimensional point to be encoded using prediction values Xa2, Ya2, and Za2, respectively. In such cases, the encoding device adds prediction mode value 2 to the bitstream.

Note that although the above example describes the case where the motion vector is in a Cartesian coordinate system, the embodiment is not necessarily limited thereto, and may be applied to motion vectors expressed in, for example, a polar coordinate system.

Note that the number of prediction modes M may be added to the bitstream. The number of prediction modes M may be defined by a value in a profile or level in a standard or the like, without being added to the bitstream. The number of prediction modes M may also be a value calculated from the number of three-dimensional points N used for prediction (for example, M = N + 1).

Note that for quantities containing a plurality of components, such as motion vectors, the encoding device may establish a separate prediction mode for each component. This will be described hereinafter.

For example, when motion vectors are represented in a Cartesian coordinate system (that is, an XYZ coordinate system), the encoding device may prepare prediction modes for each of the X component, Y component, and Z component of the motion vector (referred to as "prediction mode (X), prediction mode (Y), and prediction mode (Z)", respectively) and independently select prediction mode values for each. Examples of prediction mode (X), prediction mode (Y), and prediction mode (Z) are illustrated in FIG. 61, FIG. 62, and FIG. 63.

FIG. 61 is an explanatory diagram illustrating an example of prediction value information for the X component of motion vectors according to the present embodiment. The prediction value information example illustrated in FIG. 61 indicates, for each of one or more prediction modes for the X component of motion vectors (that is, prediction mode (X)), a prediction value used in the prediction mode.

In FIG. 61, Xave is calculated as a weighted average of Xb1, Xa2, Xa1, and Xa0.

The encoding device may, for example, select prediction mode 2 (in other words, a prediction mode with a prediction mode value of 2) as prediction mode (X) and encode the X component of the motion vector of the three-dimensional point to be encoded using prediction value Xa2. In such cases, the encoding device adds 2, which is a prediction mode value, to the bitstream.

FIG. 62 is an explanatory diagram illustrating an example of prediction value information for the Y component of motion vectors according to the present embodiment. The prediction value information example illustrated in FIG. 62 indicates, for each of one or more prediction modes for the Y component of motion vectors (that is, prediction mode (Y)), a prediction value used in the prediction mode.

In FIG. 62, Yave is calculated as a weighted average of Yb1, Ya2, Ya1, and Ya0.

The encoding device may, for example, select prediction mode 1 (in other words, a prediction mode with a prediction mode value of 1) as prediction mode (Y) and encode the Y component of the motion vector of the three-dimensional point to be encoded using prediction value Yb1. In such cases, the encoding device adds 1, which is a prediction mode value, to the bitstream.

FIG. 63 is an explanatory diagram illustrating an example of prediction value information for the Z component of motion vectors according to the present embodiment. The prediction value information example illustrated in FIG. 63 indicates, for each of one or more prediction modes for the Z component of motion vectors (that is, prediction mode (Z)), a prediction value used in the prediction mode.

In FIG. 63, Zave is calculated as a weighted average of Zb1, Za2, Za1, and Za0.

The encoding device may, for example, select prediction mode 4 (in other words, a prediction mode with a prediction mode value of 4) as prediction mode (Z) and encode the Z component of the motion vector of the three-dimensional point to be encoded using prediction value Za0. In such cases, the encoding device adds the value of 4, which is a prediction mode value, to the bitstream.

Note that when the encoding device selects a prediction mode value for each of the above components, the encoding device may add the prediction mode for each component to the bitstream.

Note that the encoding device may use the same prediction mode for some of the plurality of components of the motion vector. For example, when motion vectors are represented in a Cartesian coordinate system (an XYZ coordinate system), a prediction mode (X) may be prepared for the X component and a prediction mode (YZ) may be prepared for the YZ component, with prediction mode values selected independently for each. An example of prediction mode (X) is illustrated in FIG. 61, and an example of prediction mode (YZ) is illustrated in FIG. 64.

FIG. 64 is an explanatory diagram illustrating an example of prediction value information for the YZ component of motion vectors according to the present embodiment. The prediction value information example illustrated in FIG. 64 indicates, for each of one or more prediction modes for the YZ component of motion vectors (that is, prediction mode (YZ)), a prediction value used in the prediction mode.

In FIG. 64, Yave can be calculated as an average or weighted average of Yb1, Ya2, Ya1, and Ya0. Zave can be calculated as an average or weighted average of Zb1, Za2, Za1, and Za0.

The encoding device may, for example, select prediction mode 1 (in other words, a prediction mode with a prediction mode value of 1) as prediction mode (YZ) and encode the Y component and Z component of the motion vector of the three-dimensional point to be encoded using prediction values Yb1 and Zb1, respectively.

Note that when the encoding device selects prediction mode values for the X component and the YZ component as described above, the encoding device may add the prediction mode values for the X component and the YZ component to the bitstream.

The encoding device may select the prediction mode during encoding by residual optimization. This will be described below.

For example, the encoding device can calculate the cost, cost(P), when various prediction modes P are selected, and select the prediction mode that minimizes cost(P). The encoding device may, for example, calculate the cost, cost(P), using prediction residual residual(P) when the prediction value of prediction mode P is used, the number of bits, bit(P), required to encode the prediction mode value P, and adjustment parameter $\lambda$ value according to Expression 19 below.

$$cost(P) = abs(residual(P)) + \lambda \times bit(P)$$

$$(Expression\ 19)$$

Note that in Expression 19, abs(x) means the absolute value of x. Note that the square value of x may be used instead of abs(x).

By using Expression 19, the encoding device can select a prediction mode that takes into account the balance between the magnitude of the prediction residual and the number of bits required to encode the prediction mode value.

Note that the encoding device may change the value of adjustment parameter $\lambda$ according to the value of the quantization scale. For example, when the quantization scale is small (in other words, when the bit rate is high), the encoding device may select a prediction mode that reduces the prediction residual, residual(P), by reducing the $\lambda$ value. This makes it possible to improve the prediction accuracy as much as possible.

The encoding device may also select an appropriate prediction mode by increasing the $\lambda$ value when the quantization scale is large (in other words, when the bit rate is low), while taking into account the number of bits, bit(P), required to encode the prediction mode value P.

The encoding device calculates the prediction residual residual(P) by subtracting the prediction value of prediction mode P from the motion vector of the three-dimensional point to be encoded. Note that the encoding device may, instead of the prediction residual residual(P) at the time of cost calculation, inverse quantize the prediction residual residual(P) after quantization, add it to the prediction value to obtain a decoded value, and reflect the difference (encoding error) between the motion vector of the original three-dimensional point and the decoded value when prediction mode P is used in the cost value. Accordingly, the encoding device can select a prediction mode with a small encoding error.

Note that the method of calculating the cost cost(P) when selecting a prediction mode is not limited to the above content, and any method may be used. For example, the encoding device may use, as the cost cost(P), a value obtained by adding the number of bits required to encode the prediction residual residual(P) and bit(P). With this, the encoding device can select a prediction mode that minimizes the number of bits required for encoding and can reduce the code amount, in other words, may be able to improve encoding efficiency. Note that the number of bits required to encode the prediction residual residual(P) may be the code amount when the binarized data of the prediction residual residual(P) is arithmetically encoded. Accordingly, the encoding device can calculate a more accurate required number of bits using the prediction residual residual(P), and thus can select a more appropriate prediction mode.

The encoding device can use, as the number of bits bit(P) required to encode the prediction mode value P, for example, the number of bits after binarization, when the prediction mode value is to be binarized and encoded. For example, when the number of prediction modes M=5, the prediction mode value may be binarized with a truncated unary code having a maximum value of 5 as illustrated in FIG. 65. In such cases, the number of bits bit(P) required to encode prediction mode value 0 can be 1 bit, the number of bits bit(P) required to encode prediction mode value 1 can be 2 bits, the number of bits bit(P) required to encode prediction mode value 2 can be 3 bits, and the number of bits bit(P) required to encode prediction mode values 3 and 4 can be 4 bits. By using a truncated unary code, smaller prediction mode values can potentially require fewer bits for encoding the prediction mode value P.

That is, for example, when an average value is assigned to prediction mode 0, and for prediction modes 1 to 4, relatively smaller prediction mode values are assigned to three-dimensional points that have smaller distances from the three-dimensional point to be encoded, and smaller prediction mode values tend to be selected more easily, the code amount may be able to be reduced.

When the maximum value of the prediction mode value is not determined, the encoding device may binarize the prediction mode value with a unary code as illustrated in FIG. 66.

When the occurrence probabilities of the respective prediction modes are relatively close, the encoding device may binarize the prediction mode value with a fixed code as illustrated in FIG. 67. In this way, the code amount may be able to be reduced.

Note that the encoding device may arithmetically encode the binarized data of the prediction mode P as the number of bits bit(P) required to encode the prediction mode P, and use the code amount after arithmetic encoding as the value of bit(P). Accordingly, a cost can be calculated using a more accurate required number of bits bit(P), and thus a more appropriate prediction mode can be selected.

FIG. 68 is an explanatory diagram illustrating an example of prediction modes and binarized data according to the present embodiment. FIG. 69 is a flowchart illustrating an example of encoding processing of prediction mode values according to the present embodiment. FIG. 70 is a flowchart illustrating an example of decoding processing of prediction mode values according to the present embodiment. Binarization and arithmetic encoding of prediction mode values will be described with reference to FIG. 68 through FIG. 70.

As illustrated in FIG. 69, the encoding device can binarize a prediction mode value (PredMode) (step S1201), then perform arithmetic encoding (step S1202) and add it to the bitstream. The encoding device may, for example, binarize the prediction mode value with a truncated unary code using the value of the number of prediction modes M. In such cases, the maximum number of bits after binarization is M-1.

As illustrated in FIG. 70, the decoding device generates binarized data in truncated unary code by performing arithmetic decoding on the bitstream using the number of prediction modes M (step S1301), and can calculate the prediction mode values from the binarized data in truncated unary code (step S1302).

The encoding device may perform arithmetic encoding on the binarized data using context (also called an encoding table). In such cases, the encoding device may improve encoding efficiency by, for example, switching context for each bit of the binarized data during encoding.

The encoding device may, to reduce the number of contexts, encode the leading bit (also called "one bit" or "one bit portion") of the binarized data using context A, and encode the remaining bits (also called "remaining bit" or "remaining bit portion") using context B. Context A is also referred to as the context for one bit. Context B is also referred to as the context for remaining bits. In this way, the number of encoding tables can be inhibited while improving encoding efficiency by switching context according to bit position. Note that when encoding remaining bits, context may be switched for each bit to perform arithmetic encoding and decoding.

For example, the encoding device can perform arithmetic encoding of the prediction mode value binarized using truncated unary code by switching context between the one bit portion and the remaining bit portion. Note that the occurrence probability of 0 and 1 in each context may be updated according to the value of the binarized data that actually occurred. Moreover, the occurrence probability of 0 and 1 in either context may be fixed to inhibit the number of occurrence probability updates and reduce processing load. For example, the encoding device may update the occurrence probability for the one bit portion and fix the occurrence probability for the remaining bit portion.

For example, as illustrated in FIG. 68, when prediction mode 3 is selected, the one bit of 1 is arithmetic encoded using the context for the one bit portion, and the remaining bits of 110 are arithmetic encoded using the context for the remaining bit portion.

When the encoding device binarizes and encodes the prediction mode value with a truncated unary code using the number of prediction modes M, the encoding device may add the number of prediction modes M to the header or the like of the bitstream so that the decoding device can identify the prediction mode from the decoded binarized data. The encoding device may define the value of MaxM, which is a possible value of the number of prediction modes, in a standard or the like, and may add the value of MaxM-M (where M≤MaxM) to the header. The encoding device may define the number of prediction modes M by a value in a profile or level in a standard or the like, without adding it to the stream.

FIG. 71 is an explanatory diagram illustrating an example of prediction value information of motion vectors according to the present embodiment. FIG. 72 is an explanatory diagram illustrating an example of prediction modes and binarized data according to the present embodiment. FIG. 73 is a flowchart illustrating an example of encoding processing of prediction mode values according to the present embodiment. FIG. 74 is a flowchart illustrating an example of decoding processing of prediction mode values according to the present embodiment. Binarization and arithmetic encoding of prediction mode values will be described with reference to FIG. 71 through FIG. 74.

Although an example has been shown of binarizing prediction mode values (PredMode) with a truncated unary code using the value of the number of prediction modes M as a binarization method, the binarization method is not necessarily limited to this. The encoding device may, for example, binarize the prediction mode value with a truncated unary code using the number of prediction modes L (where L≤M) to which prediction values are assigned.

For example, when the number of prediction modes M is 5 and there are 2 adjacent points available for prediction of the three-dimensional point to be encoded, there may be cases where 3 prediction modes are available (also described as "available") and 2 are not available (described as "not available"). In the example illustrated in FIG. 71, prediction modes with prediction mode values of 0, 1, and 2 are available, and prediction modes with prediction mode values of 3 and 4 are not available.

In such cases, the encoding device may be able to reduce the number of bits of the binarized data by binarizing the prediction mode value with a truncated unary code using the number L of prediction modes to which prediction modes are assigned as the maximum value, compared to when binarizing the prediction mode value with a truncated unary code using the number of prediction modes M.

In the example illustrated in FIG. 72, a case is shown where three prediction modes (prediction mode 0, 1, and 2) are binarized with a truncated unary code.

In this way, the encoding device may reduce the number of bits of the binarized data of the prediction mode value by binarizing with a truncated unary code using the number L of prediction modes to which prediction values are assigned as the maximum value.

The encoding device may also perform arithmetic encoding on the binarized data using context. In such cases, encoding efficiency may be improved by, for example, switching context for each bit of the binarized data during encoding. The encoding device may, to reduce the number of contexts, encode the leading bit one bit of the binarized data using context A, and encode the remaining bit using context B. For example, as illustrated in FIG. 72, when prediction mode 2 is selected, the one bit of 1 is arithmetic encoded using the context for the one bit portion, and the remaining bit of 1 is arithmetic encoded using the context for the remaining bit portion (see FIG. 72). In this way, the number of contexts can be inhibited while improving encoding efficiency by switching context according to bit position. Note that when encoding remaining bits, context may be switched for each bit to perform arithmetic encoding and decoding.

When the encoding device binarizes and encodes using a truncated unary code with the number L of prediction modes to which prediction values are assigned, the decoding device may calculate the number L by assigning prediction values to prediction modes in the same manner as during encoding by the encoding device so that the prediction mode can be identified from the decoded binarized data, and may decode the prediction mode value.

As illustrated in FIG. 73, the encoding device calculates the number L of prediction modes to which prediction values are assigned (step S1301), binarizes the prediction mode values in truncated unary code using the calculated L (step S1302), and performs arithmetic encoding on the binarized data in truncated unary code (step S1303).

As illustrated in FIG. 74, the decoding device calculates the number L of prediction modes to which prediction values are assigned (step S1401), generates binarized data in truncated unary code by performing arithmetic decoding on the bitstream using the calculated L (step S1402), and calculates the prediction mode values from the binarized data in truncated unary code (step S1403).

FIG. 75 is a flowchart illustrating an example of processing by which the encoding device according to the present embodiment determines a prediction mode. FIG. 76 is an explanatory diagram illustrating an example of a process in which the encoding device calculates a maximum absolute difference value of motion vectors according to the present embodiment. FIG. 77 is a flowchart illustrating an example of a process by which the decoding device according to the present embodiment determines a prediction mode.

The encoding device need not add the prediction mode for every motion vector. For example, when a certain condition is satisfied, the encoding device may fix the prediction mode and not add the prediction mode to the bitstream, and when the condition is not satisfied, the encoding device may select the prediction mode from among a plurality of prediction mode candidates and encode it into the bitstream.

For example, when a certain condition A is satisfied, the encoding device may fix the prediction mode to prediction mode 0 and calculate a prediction value from an average value of adjacent points, and when condition A is not satisfied, the encoding device may select the prediction mode from among a plurality of prediction mode candidates and encode it into the bitstream.

As a certain condition A, for example, a condition including a maximum absolute difference value maxdiff of motion vectors a[0] to a[N-1] of N adjacent points (encoded and decoded) for the three-dimensional point to be encoded can be used. More specifically, as a certain condition A, a condition can be used in which the prediction mode is fixed to prediction mode 0 when the above maximum absolute difference value maxdiff is smaller than threshold Thfix, and otherwise, the prediction mode is selected from among a plurality of prediction mode candidates and encoded.

In this manner, the encoding device can generate an appropriate prediction value without generating an amount of code for encoding the prediction mode, by fixing the prediction mode to prediction mode 0 (that is, the prediction mode that uses an average value as a prediction value) and not encoding the prediction mode when the maximum absolute difference value of motion vectors of adjacent points is smaller than a threshold. This is based on the rationale that the differences in motion vectors of the three-dimensional points are relatively small, and even if other prediction modes are selected, the differences that occur in the prediction values are considered to be relatively small.

Note that although the above example shows fixing the prediction mode to prediction mode 0, the embodiment is not necessarily limited to this. For example, if a prediction mode that uses an average value as a prediction value is assigned to prediction mode 1, the prediction mode may be fixed to prediction mode 1.

Note that the N adjacent three-dimensional points used for prediction can be N encoded and decoded three-dimensional points whose distance from the three-dimensional point to be encoded is smaller than threshold THd. The encoding device may add the maximum value of N as NumNeiCnt to the bitstream. Note that when the number of adjacent points is less than the value of NumNeiCnt, the value of N need not always match the value of NumNeiCnt.

The processes performed by the encoding device will be described with reference to FIG. 75 and FIG. 76.

In step S1501, the encoding device calculates the maximum absolute difference value maxdiff of motion vectors of N adjacent points adjacent to the three-dimensional point to be encoded. An example of a process for calculating the maximum absolute difference value maxdiff using motion vectors a[0] to a[N-1] of N adjacent points adjacent to the three-dimensional point to be encoded is illustrated in FIG. 76. Note that in FIG. 76, the motion vectors of the adjacent points are encoded and decoded motion vectors.

In step S1502, the encoding device determines whether the maximum absolute difference value maxdiff calculated in step S1501 is smaller than the threshold Thfix. If it is determined that the maximum absolute difference value maxdiff is smaller than the threshold Thfix (Yes in step S1502), the process proceeds to step S1503; otherwise (No in step S1502), the process proceeds to step S1504. Note that the encoding device may encode threshold Thfix and add it to a header or the like of the stream.

In step S1503, the encoding device determines the prediction mode to be prediction mode 0 (that is, the prediction mode that uses an average value).

In step S1504, the encoding device selects a prediction mode.

In step S1505, the encoding device performs arithmetic encoding on the prediction mode value of the prediction mode selected in step S1504.

Note that the encoding device may be able to add threshold Thfix to a header or the like of the bitstream, and the encoding device may be able to change threshold Thfix and perform encoding. For example, when encoding at high bit rates, the encoding device may make threshold Thfix smaller and add it to the header, to increase cases where a prediction mode is selected for encoding, so that the prediction residual becomes as small as possible. When encoding at low bit rates, the encoding device may make threshold Thfix larger and add it to the header, to increase cases where a prediction mode is fixed for encoding, so that the bit amount for encoding the prediction mode can be inhibited while improving encoding efficiency. The encoding device may define threshold Thfix by a value in a profile or level in a standard or the like, without adding it to the bitstream.

The processes performed by the decoding device will be described with reference to FIG. 77.

In step S1601, the decoding device calculates the maximum absolute difference value maxdiff of motion vectors of N adjacent points adjacent to the three-dimensional point to be decoded.

In step S1602, the decoding device determines whether the maximum absolute difference value maxdiff calculated in step S1601 is smaller than the threshold Thfix. If it is determined that the maximum absolute difference value maxdiff is smaller than the threshold Thfix (Yes in step S1602), the process proceeds to step S1603; otherwise (No in step S1602), the process proceeds to step S1604. Note that the decoding device may decode a header or the like of the stream to set threshold Thfix.

In step S1603, the decoding device determines the prediction mode to be prediction mode 0 (that is, the prediction mode that uses an average value).

In step S1604, the decoding device decodes the prediction mode value from the bitstream.

Note that although the above example shows the prediction mode being fixed to prediction mode 0 when the maximum absolute difference value of motion vectors of adjacent points used for prediction is smaller than threshold Thfix [i], the embodiment is not necessarily limited to this, and the prediction mode may be fixed to any one of prediction mode 0 to prediction mode M-1. In that case, the prediction mode value of the fixed prediction mode may be added to the bitstream.

FIG. 78 is an explanatory diagram illustrating an example of syntax according to the present embodiment.

The example of syntax illustrated in FIG. 78 illustrates an example of the configuration of information included in a bitstream generated by the encoding device.

The syntax illustrated in FIG. 78 includes NumLoD, NumNeiCnt[i], NumPredMode[i], Thfix[i], and NumOfPoint[i].

NumLoD indicates the number of LoD layers.

NumNeiCnt[i] indicates the upper limit value of the number of adjacent points used for generating prediction values of three-dimensional points belonging to layer i. When the number of adjacent points M is less than NumNeiCnt[i] (that is, when M<NumNeiCnt[i]), the encoding device may calculate the prediction value using M adjacent points. When there is no need to vary the value of NumNeiCnt[i] for each LoD, the encoding device may add one NumNeiCnt to the header.

NumPredMode[i] indicates the total number (that is, M) of prediction modes used for prediction of motion vectors in layer i. The value of MaxM, which is a possible value of the number of prediction modes, may be defined in a standard or the like, and the encoding device may add the value of MaxM-M (where 0<M≤MaxM) as NumPredMode[i] to the header and binarize and encode the maximum value MaxM-1 with truncated unary code. The encoding device may also define the number of prediction modes NumPredMode[i] by a value in a profile or level in a standard or the like, without adding it to the stream. The number of prediction modes may also be NumNeiCnt[i] + NumPredMode[i]. When there is no need to vary the value of NumPredMode[i] for each LoD, the encoding device may add one NumPredMode to the header.

Thfix[i] indicates the threshold for the maximum absolute difference value for determining whether to fix the prediction mode for layer i. When the maximum absolute difference value of motion vectors of adjacent points used for prediction is smaller than Thfix[i], the prediction mode is fixed to prediction mode 0. Note that the encoding device may define Thfix[i] by a value in a profile or level in a standard or the like, without adding it to the stream. When there is no need to vary the value of Thfix[i] for each LoD, the encoding device may add one Thfix to the header.

NumOfPoint[i] indicates the number of three-dimensional points belonging to layer i. Note that when the encoding device adds the total number of three-dimensional points AllNumOfPoint to a separate header, NumOfPoint[NumLoD-1] (the number of three-dimensional points belonging to the lowest layer) may not be added to the header. In such cases, NumOfPoint[NumLoD-1] is calculated according to Expression 20 shown below. Accordingly, the code amount of the header can be reduced.

[Math. 11]

$$\text{NumOfPoint}[\text{NumLoD} - 1] = \text{AllNumOfPoint} - \sum_{j=0}^{NumLoD-2} NumOfPoint[j]$$

(Expression 20)

Note that as a setting example for NumPredMode[i], since the distances between three-dimensional points belonging to LoD are relatively large, higher layers where the difference between motion vectors and prediction values is relatively large can have larger values set for NumPredMode[i], thereby increasing the selectable prediction modes. Lower layers where the difference between motion vectors and prediction values is relatively small can have smaller values set for NumPredMode[i], thereby reducing the bit amount required for encoding prediction modes. With these setting examples, encoding efficiency can be improved by increasing the selectable prediction modes in higher layers to reduce prediction residuals, while reducing the code amount of prediction modes in lower layers.

Note that as a setting example for Thfix[i], since the distances between three-dimensional points belonging to LoD are relatively large, higher layers where the difference between motion vectors and prediction values is relatively large can have smaller values set for Thfix[i], thereby increasing the cases where prediction modes are selected. Lower layers where the difference between motion vectors and prediction values is relatively small can have larger values set for Thfix[i], thereby fixing the prediction mode to inhibit the bit amount required for encoding prediction modes. With these setting examples, encoding efficiency can be improved by increasing the cases where prediction modes are selected in higher layers to reduce prediction residuals, while fixing the prediction mode in lower layers to inhibit the code amount of prediction modes.

Note that the encoding device may entropy encode the above NumLoD, NumNeiCnt[i], NumPredMode[i], Thfix[i], and NumOfPoint[i] and add them to the header. For example, each value may be binarized and arithmetic encoding may be performed. It may encode with a fixed length to reduce the processing amount.

FIG. 79 is an explanatory diagram illustrating an example of syntax according to the present embodiment.

The example of syntax illustrated in FIG. 79 illustrates an example of the configuration of information included in a bitstream generated by the encoding device.

The syntax illustrated in FIG. 79 may include PredMode, mvd_is_zero[k], mvd_is_one[k], mvd_minus2[k], and mvd_sign[k] for each of the 0th to NumLoD-th layers of LoD (also referred to as the jth layer).

PredMode indicates a prediction mode for encoding or decoding a motion vector of an ith three-dimensional point, and takes a value included in a range from 0 to M-1 (where M is the total number of prediction modes). When PredMode is not included in the bitstream (in other words, when the if statement condition "maxdiff >= Thfix[i] && NumPredMode[i] > 1" is not satisfied), PredMode may be estimated as 0. Note that the estimated value of PredMode is not limited to 0, and may be any value included in the range from 0 to M-1. The encoding device may separately add an estimated value for when PredMode is not included in the bitstream to a header or the like. PredMode may be binarized with a truncated unary code using the number of prediction modes to which prediction values are assigned and arithmetically encoded.

Note that mvd_is_zero[k], mvd_is_one[k], mvd_minus2[k], and mvd_sign[k] are the same as the data of the same names illustrated in FIG. 52, so detailed description thereof is omitted.

FIG. 80, FIG. 81, FIG. 82, and FIG. 83 are flowcharts illustrating an example of processing by the encoding device according to the present embodiment. Examples of processes performed by the encoding device will be described with reference to FIG. 80, FIG. 81, FIG. 82, and FIG. 83.

The processes of steps S1701 to S1704 and steps S1706 to S1712 included in the processing by the encoding device illustrated in FIG. 80 are the same as the processes of S1001 to S1004 and steps S1006 to S1012 illustrated in FIG. 55.

In step S1705, the encoding device determines the prediction value of point P. The detailed processing included in step S1705 will be described with reference to FIG. 81.

In step S1801 illustrated in FIG. 81, the encoding device calculates the weighted average value of motion vectors of N adjacent points available for prediction and assigns the calculated weighted average value to prediction mode 0.

In step S1802, the encoding device calculates the maximum absolute difference value maxdiff of motion vectors of N adjacent points.

In step S1803, the encoding device determines whether the maximum absolute difference value maxdiff calculated in step S1802 is smaller than the threshold Thfix. If it is determined that the maximum absolute difference value maxdiff is smaller than the threshold Thfix (Yes in step S1803), the process proceeds to step S1804; otherwise (No in step S1803), the process proceeds to step S1805.

In step S1804, the encoding device determines the prediction mode to be prediction mode 0 (that is, the prediction mode that uses an average value).

In step S1805, the encoding device determines the prediction mode by selection. The processing included in step S1805 will be described in detail later.

In step S1806, the encoding device performs arithmetic encoding on the prediction mode value of the prediction mode selected in step S1805. Note that the encoding device may binarize the prediction mode value PredMode with a truncated unary code using the number of prediction modes to which prediction values are assigned and arithmetically encode it.

The prediction mode determined in step S1804 or S1805 is used to determine the prediction value in step S1705 (see FIG. 80).

The processing included in step S1805 will be described with reference to FIG. 82.

In step S1811 illustrated in FIG. 82, the encoding device assigns motion vectors of N adjacent points to prediction mode 1 through prediction mode N in order from those with smaller distances from the three-dimensional point to be encoded. Accordingly, the encoding device generates N+1 prediction modes. Note that when N+1 exceeds the maximum number of prediction modes M (NumPredMode) added to the bitstream, the encoding device may generate M prediction modes from prediction mode 1 to prediction mode M (in other words, the encoding device may not generate prediction modes M+1 and later).

In step S1812, the encoding device calculates the cost of each prediction mode and selects the prediction mode that minimizes the cost. The prediction mode that minimizes the cost is the prediction mode whose cost matches the minimum cost calculated by the processing illustrated in FIG. 83. The selected prediction mode corresponds to the prediction mode selected in step S1805 (see FIG. 81).

The processing included in step S1812 will be described with reference to FIG. 83.

In step S1821 illustrated in FIG. 83, the encoding device substitutes 0 into the variable i and substitutes infinity (also written as "∞") into the variable mincost. Note that when implemented as a program, infinity can be substituted with a very large numerical value (more specifically, the maximum value allowed by the variable type used, or a value close to the maximum value).

In step S1822, the encoding device calculates the cost cost[i] of the prediction mode value PredMode[i] of the ith prediction mode.

In step S1823, the encoding device determines whether the cost cost[i] calculated in step S1822 is smaller than the variable mincost. If it is determined that the cost cost[i] is smaller than the variable mincost (Yes in step S1823), the process proceeds to step S1824; otherwise (No in step S1823), the process proceeds to step S1825.

In step S1824, the encoding device substitutes the cost cost[i] into the variable mincost and sets the prediction mode to the prediction mode whose prediction mode value is PredMode[i].

In step S1825, the encoding device substitutes into the variable i a value obtained by adding 1 to the variable i.

In step S1826, the encoding device determines whether the variable i is smaller than the number of prediction modes. If it is determined that the variable i is smaller than the number of prediction modes (Yes in step S1826), the process proceeds to step S1822; otherwise (No in step S1826), the series of processes illustrated in FIG. 83 is terminated. The variable mincost at the time point when the series of processes illustrated in FIG. 83 is terminated indicates the minimum cost and is used in step S1812 (see FIG. 82).

FIG. 84, FIG. 85, and FIG. 86 are flowcharts illustrating examples of processes performed by the decoding device according to the present embodiment. With reference to FIG. 84, FIG. 85, and FIG. 86, examples of processes performed by the decoding device will be described.

In step S1901 illustrated in FIG. 84, the decoding device generates one or more LoDs from the input bitstream (see FIG. 48 and FIG. 49).

In step S1902, the decoding device performs start processing for loop A that repeatedly executes the processing of steps S1903 to S1909 described below. In loop A, focus is placed on each of the one or more LoDs generated in step S1901, processing is performed for the focused LoD, and ultimately control is carried out so that processing is performed for all LoDs. Note that the LoD being focused on is also referred to as the focused LoD. Loop A can also be referred to as an LoD loop.

In step S1903, the decoding device performs start processing for loop B that repeatedly executes the processing of steps S1904 to S1908 described below. In loop B, focus is placed on each of the three-dimensional points belonging to the focused LoD, processing is performed for the focused three-dimensional point, and ultimately control is carried out so that processing is performed for all three-dimensional points. Note that the three-dimensional point being focused on is also referred to as point P.

In step S1904, the decoding device searches for neighboring points of point P (see FIG. 36 through FIG. 45).

In step S1905, the decoding device determines the prediction values of point P. The detailed processing included in step S1905 will be described in detail later.

In step S1906, the decoding device decodes the quantization values of point P.

In step S1907, the decoding device calculates inverse quantization values of point P. More specifically, the decoding device determines the inverse quantization values of point P using the quantization values decoded in step S1906 as prediction residuals.

In step S1908, the decoding device calculates the reconstructed value of point P using the inverse quantization values obtained in step S1907.

In step S1909, the decoding device performs end processing for loop B. More specifically, the decoding device determines whether the processing of steps S1904 to S1908 has been executed for all three-dimensional points belonging to the focused LoD, and if not executed, carries out control so that processing is executed with focus placed on three-dimensional points that have not yet been executed.

In step S1910, the decoding device performs end processing for loop A. More specifically, the decoding device determines whether the processing of steps S1903 to S1909 has been executed for all LoDs, and if not executed, carries out control so that processing is executed with focus placed on LoDs that have not yet been executed.

The detailed processing included in step S1905 in FIG. 84 will be described below.

In step S2001 illustrated in FIG. 85, the decoding device calculates the weighted average value of motion vectors of N adjacent points available for prediction and assigns the calculated weighted average value to prediction mode 0.

In step S2002, the decoding device calculates the maximum absolute difference value maxdiff of motion vectors of N adjacent points.

In step S2003, the decoding device determines whether the maximum absolute difference value maxdiff calculated in step S2002 is smaller than the threshold Thfix. If it is determined that the maximum absolute difference value maxdiff is smaller than the threshold Thfix (Yes in step S2003), the process proceeds to step S2004; otherwise (No in step S2003), the process proceeds to step S2005.

In step S2004, the decoding device determines the prediction mode to be prediction mode 0 (that is, the prediction mode that uses an average value).

In step S2005, the decoding device determines the prediction mode to be the prediction mode indicated by the prediction mode value decoded from the bitstream. The processing included in step S2005 will be described in detail later.

The prediction mode determined in step S2004 or S2005 is used to determine the prediction value in step S1905 (see FIG. 84).

The processing included in step S2005 will be described with reference to FIG. 86.

In step S2011 illustrated in FIG. 86, the decoding device assigns motion vectors of N adjacent points to prediction mode 1 through prediction mode N in order from those with smaller distances from the three-dimensional point to be decoded. Accordingly, the decoding device generates N+1 prediction modes. Note that when N+1 exceeds the maximum number of prediction modes M (NumPredMode) added to the bitstream, the decoding device may generate M prediction modes from prediction mode 1 to prediction mode M (in other words, the decoding device may not generate prediction modes M+1 and later).

In step S2012, the decoding device performs arithmetic decoding on the prediction mode value using the number of prediction modes to which prediction values are assigned. The prediction mode value obtained by arithmetic decoding in step S2012 corresponds to the prediction mode value obtained in step S2005 (see FIG. 85).

FIG. 87 is a block diagram illustrating an example of a configuration of encoding unit 1000 according to the present embodiment. Encoding unit 1000 is provided in an encoding device and outputs a bitstream into which input three-dimensional points are encoded.

As illustrated in FIG. 87, encoding unit 1000 includes LoD generator 1001, neighbor searcher 1002, predictor 1003, residual calculator 1004, quantizer 1005, arithmetic encoding unit 1006, inverse quantizer 1007, reconstructor 1008, and memory 1009. At least part of LoD generator 1001, neighbor searcher 1002, predictor 1003, residual calculator 1004, quantizer 1005, arithmetic encoding unit 1006, inverse quantizer 1007, and reconstructor 1008 may be implemented by a processor (such as a central processing unit (CPU)) included in the encoding device executing a program using memory.

LoD generator 1001 generates LoD using position information of three-dimensional points. More specifically, LoD generator 1001 receives input of position information of three-dimensional points (also referred to as "input three-dimensional points") and generates LoD using the position information of the input three-dimensional points that was input. Note that when the LoD hierarchy has one layer, that is, when generating prediction values of motion vectors of three-dimensional points without generating LoD, encoding unit 1000 need not include LoD generation unit 1001. In that case, encoding unit 1000 may perform processing with LoD=1 in the LoD loop (see, for example, FIG. 55). Stated differently, encoding unit 1000 may perform only processing with LoD1 as the focused LoD. Accordingly, the processing time can be reduced.

Neighbor searcher 1002 calculates adjacent points for each of the input three-dimensional points input into LoD generator 1001.

Predictor 1003 generates a prediction value of a motion vector of a three-dimensional point to be encoded. Predictor 1003 assigns prediction values to prediction mode 0 through prediction mode M-1 as candidates for prediction modes used in encoding. Predictor 1003 selects a prediction mode to be used for prediction of a three-dimensional point to be encoded from among prediction mode 0 through prediction mode M-1, and provides a prediction mode value of the selected prediction mode to arithmetic encoding unit 1006 and reconstructor 1008.

Residual calculator 1004 generates a prediction residual of a motion vector of a three-dimensional point to be encoded.

Quantizer 1005 quantizes a prediction residual of a motion vector of a three-dimensional point to be encoded.

Arithmetic encoding unit 1006 generates a bitstream by performing arithmetic encoding on the prediction residual quantized by quantizer 1005. Arithmetic encoding unit 1006 may binarize the prediction residual before arithmetic encoding and perform arithmetic encoding on the binarized prediction residual. Arithmetic encoding unit 1006 outputs the generated bitstream. Note that arithmetic encoding unit 1006 may generate and encode various header information. Arithmetic encoding unit 1006 may obtain a prediction mode value of the prediction mode used for encoding and perform arithmetic encoding on the prediction mode value to add it to the bitstream.

Inverse quantizer 1007 performs inverse quantization on the prediction residual quantized by quantizer 1005.

Reconstructor 1008 reconstructs the motion vector or position information of the three-dimensional point to be encoded by adding the prediction value generated by predictor 1003 and the inverse quantized prediction residual generated by inverse quantizer 1007. The reconstructed motion vector or position information is also referred to as a decoded value, and reconstructing the motion vector or position information is also referred to as generating a decoded value. Reconstructor 1008 stores the generated decoded value in memory 1009.

Memory 1009 is a storage device that stores the decoded values (i.e., position information or motion vector of three-dimensional points) generated by reconstructor 1008. Decoded values stored in memory 1009 may be used for prediction of three-dimensional points that have not yet been encoded.

Note that when quantization of the prediction residual of the motion vector is not necessary, quantizer 1005 and inverse quantizer 1007 may be omitted, and reconstructor 1008 may add the prediction residual generated by residual calculator 1004 directly to the prediction value to obtain a decoded value. Accordingly, the processing time can be reduced.

FIG. 88 is a block diagram illustrating an example of a configuration of decoding unit 1100 according to the present embodiment. Decoding unit 1100 is provided in a decoding device and outputs three-dimensional points obtained by decoding an input bitstream.

As illustrated in FIG. 88, decoding unit 1100 includes LoD generator 1101, neighbor searcher 1102, predictor 1103, arithmetic decoding unit 1104, inverse quantizer 1105, reconstructor 1106, and memory 1107. At least part of LoD generator 1101, neighbor searcher 1102, predictor 1103, arithmetic decoding unit 1104, inverse quantizer 1105, and reconstructor 1106 may be implemented by a processor (such as a central processing unit (CPU)) included in the decoding device executing a program using memory.

LoD generator 1101 generates LoD using position information of three-dimensional points. Note that when the LoD hierarchy has one layer, that is, when generating prediction values of motion vectors of three-dimensional points without generating LoD, decoding unit 1100 need not include LoD generation unit 1101. In that case, decoding unit 1100 may perform processing with LoD=1 in the LoD loop (see, for example, FIG. 56). Stated differently, decoding unit 1100 may perform only processing with LoD1 as the focused LoD. Accordingly, the processing time can be reduced.

Neighbor searcher 1102 calculates adjacent points for each of the three-dimensional points.

Predictor 1103 generates a prediction value of the motion vector of the three-dimensional point to be decoded. Predictor 1103 obtains the prediction mode value used in the decoding from arithmetic decoding unit 1104.

Arithmetic decoding unit 1104 performs arithmetic decoding on the prediction residual included in the bitstream. Note that arithmetic decoding unit 1104 may decode various header information. Arithmetic decoding unit 1104 may perform arithmetic decoding on prediction mode values included in the bitstream and provide the arithmetically decoded prediction mode values to predictor 1103.

Inverse quantizer 1105 performs inverse quantization on the prediction residual decoded by arithmetic decoding unit 1104.

Reconstructor 1106 generates a decoded value by adding the prediction value generated by predictor 1103 and the prediction residual inverse quantized by inverse quantizer 1105. Reconstructor 1106 can output the generated decoded value as a decoded three-dimensional point.

Memory 1107 is a storage device that stores the decoded values (i.e., position information or motion vector of decoded three-dimensional points) generated by reconstructor 1106. Decoded values stored in memory 1107 may be used for prediction of three-dimensional points that have not yet been decoded.

Note that when inverse quantization of the prediction residual of the motion vector is not necessary, inverse quantizer 1105 may be omitted, and reconstructor 1106 may add the arithmetically decoded prediction residual directly to the prediction value to obtain a decoded value. Accordingly, the processing time can be reduced.

In the description of FIG. 75 through FIG. 77 above, an example was given in which the encoding device and decoding device calculate a maximum absolute difference value of motion vectors of N adjacent points available for prediction, switch between fixing the prediction mode or selecting a prediction mode from among a plurality of prediction mode candidates according to the calculated maximum absolute difference value, and add it to the bitstream, but the embodiment is not necessarily limited to this.

FIG. 89 is a flowchart illustrating an example of processing by which the encoding device according to the present embodiment determines a prediction mode. FIG. 90 is an explanatory diagram illustrating an example of a process in which the encoding device calculates a maximum absolute difference value of motion vectors according to the present embodiment. FIG. 91 is a flowchart illustrating an example of a process by which the decoding device according to the present embodiment determines a prediction mode.

For example, the encoding device may determine whether to fix or select the prediction mode under the same conditions as described above, and add the result as a prediction mode fixed flag to the bitstream. The prediction mode fixed flag indicates, for example, that a value of 1 indicates a mode for fixing the prediction mode, and a value of 0 indicates a mode for selecting the prediction mode.

With this, by decoding the prediction mode fixed flag added to the bitstream, the decoding device can determine whether the encoding device fixed the prediction mode or selected the prediction mode and encoded the prediction mode value. The decoding device can determine that the prediction mode value is not encoded in the bitstream when the prediction mode is fixed by the encoding device. When the prediction mode is selected by the encoding device, the decoding device can determine that it is necessary to decode the prediction mode in the bitstream, and can correctly decode it. With this, the decoding device can arithmetically decode the prediction mode value without calculating the maximum absolute difference value of motion vectors at the three-dimensional points of N adjacent points available for prediction. As a result, arithmetic decoding of the bitstream and LoD generation can be executed in parallel, and the overall throughput of decoding processing can be improved.

Note that the encoding device may add the prediction mode fixed flag for each three-dimensional point. With this, the encoding device can switch between fixing or selecting a prediction mode for each three-dimensional point, and may be able to improve encoding efficiency. Note that the encoding device may enable the prediction mode fixed flag to be set for each LoD. For example, for higher layers where the difference between motion vectors and prediction values is relatively large, the prediction mode fixed flag may be set to 0 to enable selection of prediction modes. For lower layers where the difference between motion vectors and prediction values is relatively small, the prediction mode fixed flag may be set to 1 to fix the prediction mode, thereby reducing the code amount for adding prediction modes.

The processes performed by the encoding device will be described with reference to FIG. 89 and FIG. 90.

Among the processes illustrated in FIG. 89, steps S2101 to S2102, S2104, and S2106 to S2107 are the same as steps S1501 to S1502, S1503, and S1504 to S1505 in FIG. 75, respectively. The example of the calculation process for the maximum absolute difference value maxdiff by the encoding device (see FIG. 90) is the same as the example illustrated in FIG. 76.

When the encoding device determines that the maximum absolute difference value maxdiff is smaller than the threshold Thfix (Yes in step S2102), it sets the prediction mode fixed flag to 1 and performs arithmetic encoding on the prediction residual (step S2103), and then determines the prediction mode to be prediction mode 0.

When the encoding device determines that the maximum absolute difference value maxdiff is not smaller than the threshold Thfix (No in step S2102), it sets the prediction mode fixed flag to 0 and performs arithmetic encoding on the prediction residual (step S2105), and then selects a prediction mode and performs arithmetic encoding on the prediction mode value of the selected prediction mode (steps S2106 and S2107).

The processes performed by the decoding device will be described with reference to FIG. 91.

In step S2201, the decoding device performs arithmetic decoding on the prediction mode fixed flag.

In step S2202, the decoding device determines whether the prediction mode fixed flag is 1. If it is determined that the prediction mode fixed flag is 1 (Yes in step S2202), the process proceeds to step S2203; otherwise (No in step S2202), the process proceeds to step S2204.

In step S2203, the decoding device determines the prediction mode to be prediction mode 0 (i.e., the prediction mode that uses an average value).

In step S2204, the decoding device decodes the prediction mode value from the bitstream.

Note that although the above example shows the prediction mode being fixed to prediction mode 0 when the maximum absolute difference value of motion vectors of adjacent points used for prediction is smaller than threshold Thfix [i], the embodiment is not necessarily limited to this, and the prediction mode may be fixed to any one of prediction mode 0 to prediction mode M-1. The prediction mode value of the fixed prediction mode may be added to the bitstream.

FIG. 92 is an explanatory diagram illustrating an example of syntax according to the present embodiment. The example of syntax illustrated in FIG. 92 is an example of syntax for a case where a prediction mode that is fixed (also referred to as a fixed prediction mode) is provided for each three-dimensional point.

The syntax illustrated in FIG. 92 may include fixedPredMode, PredMode, mvd_is_zero[k], mvd_is_one[k], mvd_minus2[k], and mvd_sign[k] for each of the Oth to NumLoD-th layers of LoD (also referred to as the jth layer).

fixedPredMode is a flag indicating whether or not to fix the prediction mode. For example, a value of 1 may indicate fixing the prediction mode, and a value of 0 may indicate selecting the prediction mode. fixedPredMode indicates whether or not to fix the prediction mode for encoding or decoding a motion vector of an ith three-dimensional point. Note that fixedPredMode may be set for each LoD layer (see FIG. 93).

PredMode indicates a prediction mode for encoding or decoding a motion vector of an ith three-dimensional point. PredMode takes a value included in a range from 0 to M-1 (where M is the total number of prediction modes). When PredMode is not included in the bitstream (in other words, when if statement condition "!fixedPredMode && NumPred-Mode[i] > 1" is not satisfied), PredMode may be estimated as 0. Note that the estimated value of PredMode is not limited to 0, and may be any value included in the range from 0 to M-1. The encoding device may separately add an estimated value for when PredMode is not included in the bitstream to a header or the like. PredMode may be binarized with a truncated unary code using the number of prediction modes to which prediction values are assigned and arithmetically encoded.

The encoding device may encode the value of the total number of prediction modes M as NumPredMode to the header. Accordingly, the decoding device can decode NumPredMode in the header to calculate the total number of prediction modes M, and can decode PredMode using the total number of prediction modes M. Accordingly, the decoding device can generate LoD, calculate adjacent points available for prediction, and execute arithmetic decoding of the bitstream without waiting for calculation of the number of prediction modes to which prediction values are assigned. Accordingly, the decoding device can execute arithmetic decoding of the bitstream and execute LoD generation in parallel, and can thus improve the overall throughput of decoding processing.

mvd_is_zero[k], mvd_is_one[k], mvd_minus2[k], and mvd_sign[k] are the same as the data of the same names illustrated in FIG. 52, so detailed description thereof is omitted.

FIG. 93 is an explanatory diagram illustrating an example of syntax according to the present embodiment. The example of syntax illustrated in FIG. 93 is an example of syntax for a case where a fixed prediction mode is provided for each LoD level.

The syntax illustrated in FIG. 93 may include fixedPredMode, PredMode, mvd_is_zero[k], mvd_is_one[k], mvd_minus2[k], and mvd_sign[k] for each of the Oth to NumLoD-th layers of LoD (also referred to as the jth layer).

fixedPredMode is a flag indicating whether or not to fix the prediction mode. For example, a value of 1 may indicate fixing the prediction mode, and a value of 0 may indicate selecting the prediction mode. fixedPredMode is set for each LoD layer.

PredMode is the same as the data of the same name illustrated in FIG. 92, so detailed description thereof is omitted.

mvd_is_zero[k], mvd_is_one[k], mvd_minus2[k], and mvd_sign[k] are the same as the data of the same names illustrated in FIG. 52, so detailed description thereof is omitted.

FIG. 94 is an explanatory diagram illustrating an example of encoding processing of prediction mode values according to the present embodiment.

In step S2301, the encoding device binarizes the prediction mode value with a truncated unary code using the total number of prediction modes M.

In step S2302, the encoding device performs arithmetic encoding on the binarized data in truncated unary code obtained by the binarization in step S2301.

In step S2303, the encoding device encodes and adds the total number of prediction modes M as NumPredMode to the header.

FIG. 95 is an explanatory diagram illustrating an example of decoding processing of prediction mode values according to the present embodiment.

In step S2401, the decoding device decodes NumPredMode in the header of the obtained bitstream to set the total number of prediction modes M.

In step S2402, the decoding device performs arithmetic decoding on PredMode using the total number of prediction modes M to generate binarized data in truncated unary code.

In step S2403, the decoding device calculates the prediction mode value from the binarized data in truncated unary code.

FIG. 96 is a flowchart illustrating an example of processing by the encoding device according to the present embodiment. FIG. 96 illustrates detailed processing included in step S1705 (see FIG. 80).

In step S2501, the encoding device calculates the weighted average value of motion vectors of N adjacent points available for prediction and assigns the calculated weighted average value to prediction mode 0.

In step S2502, the encoding device calculates the maximum absolute difference value maxdiff of motion vectors of N adjacent points.

In step S2503, the encoding device determines whether the maximum absolute difference value maxdiff calculated in step S2502 is smaller than the threshold Thfix. If it is determined that the maximum absolute difference value maxdiff is smaller than the threshold Thfix (Yes in step S2503), the process proceeds to step S2504; otherwise (No in step S2503), the process proceeds to step S2506.

In step S2504, the encoding device sets the prediction mode fixed flag to 1 and performs arithmetic encoding on the prediction residual.

In step S2505, the encoding device determines the prediction mode to be prediction mode 0 (that is, the prediction mode that uses an average value).

In step S2506, the encoding device sets the prediction mode fixed flag to 0 and performs arithmetic encoding on the prediction residual.

In step S2507, the encoding device determines the prediction mode by selection. The processing included in step S2507 will be described in detail later.

In step S2508, the encoding device performs arithmetic encoding on the prediction mode value of the prediction mode selected in step S2507. Note that the encoding device may binarize the prediction mode value PredMode with a truncated unary code using the total number of prediction modes M and arithmetically encode it. The encoding device may encode and add the total number of prediction modes M as NumPredMode to the header. Accordingly, the decoding device can correctly decode the prediction mode PredMode by decoding NumPredMode in the header. Note that when NumPredMode=1, PredMode need not be encoded. Accordingly, the code amount when NumPredMode=1 can be reduced.

The prediction mode determined in step S2505 or S2508 is used to determine the prediction value in step S1705 (see FIG. 80).

The processing included in step S2507 will be described with reference to FIG. 97.

In step S2511 illustrated in FIG. 97, the encoding device assigns motion vectors of N adjacent points to prediction mode 1 through prediction mode N in order from those with smaller distances from the three-dimensional point to be encoded. Accordingly, the encoding device generates N+1 prediction modes. Note that when N+1 exceeds the maximum number of prediction modes M (NumPredMode) added to the bitstream, the encoding device may generate M prediction modes from prediction mode 1 to prediction mode M (in other words, the encoding device may not generate prediction modes M+1 and later).

In step S2512, the encoding device calculates the cost of each prediction mode and selects the prediction mode that minimizes the cost. The prediction mode that minimizes the cost is the prediction mode whose cost matches the minimum cost calculated by the processing illustrated in FIG. 98. The selected prediction mode corresponds to the prediction mode selected in step S2507 (see FIG. 96).

The processing included in step S2512 will be described with reference to FIG. 98.

In step S2521 illustrated in FIG. 98, the encoding device substitutes 0 into the variable i and substitutes infinity (also written as "∞") into the variable mincost. Note that when implemented as a program, infinity can be substituted with a very large numerical value (more specifically, the maximum value allowed by the variable type used, or a value close to the maximum value).

In step S2522, the encoding device calculates the cost cost[i] of the prediction mode value PredMode[i] of the ith prediction mode.

In step S2523, the encoding device determines whether the cost cost[i] calculated in step S2522 is smaller than the variable mincost. If it is determined that the cost cost[i] is smaller than the variable mincost (Yes in step S2523), the process proceeds to step S2524; otherwise (No in step S2523), the process proceeds to step S2525.

In step S2524, the encoding device substitutes the cost cost[i] into the variable mincost and sets the prediction mode to the prediction mode whose prediction mode value is PredMode[i].

In step S2525, the encoding device substitutes into the variable i a value obtained by adding 1 to the variable i.

In step S2526, the encoding device determines whether the variable i is smaller than the number of prediction modes. If it is determined that the variable i is smaller than the number of prediction modes (Yes in step S2526), the process proceeds to step S2522; otherwise (No in step S2526), the series of processes illustrated in FIG. 98 is terminated. The variable mincost at the time point when the series of processes illustrated in FIG. 98 is terminated indicates the minimum cost and is used in step S2512 (see FIG. 97).

FIG. 99 is a flowchart illustrating an example of a process performed by the decoding device according to the present embodiment.

In step S2601, the decoding device performs arithmetic decoding on the prediction mode fixed flag.

In step S2602, the decoding device determines whether the prediction mode fixed flag arithmetically decoded in step S2601 is 1. If it is determined that the prediction mode fixed flag is 1 (Yes in step S2602), the process proceeds to step S2603; otherwise (No in step S2602), the process proceeds to step S2604.

In step S2603, the decoding device determines the prediction mode to be prediction mode 0 (i.e., the prediction mode that uses an average value).

In step S2604, the decoding device determines the prediction mode to be the prediction mode indicated by the prediction mode value decoded from the bitstream. Note that the decoding device may arithmetically decode the prediction mode value PredMode using the total number of prediction modes M obtained by decoding the header. Note that when the total number of prediction modes M=1, the prediction mode value PredMode need not be decoded, and PredMode=0 may be estimated.

The prediction mode determined in step S2603 or S2604 is used to determine the prediction value in step S1905 (see FIG. 84).

In the description with reference to FIG. 75 through FIG. 77, an example was given in which the encoding device and decoding device calculate a maximum absolute difference value of motion vectors at three-dimensional points of N adjacent points available for prediction, switch between fixing the prediction mode or selecting a prediction mode from among a plurality of prediction mode candidates according to the calculated maximum absolute difference value, and add it to the bitstream, but the embodiment is not necessarily limited to this.

FIG. 100 is a flowchart illustrating an example of processing by which the encoding device according to the present embodiment determines a prediction mode. FIG. 101 is a flowchart illustrating an example of a process by which the decoding device according to the present embodiment determines a prediction mode.

For example, the encoding device may always select a prediction mode from among a plurality of prediction mode candidates and add the prediction mode to the bitstream (see steps S2601 and S2602, FIG. 100).

In such cases, the decoding device may always decode the prediction mode from the bitstream (see step S2701, FIG. 101).

With this, the decoding device can correctly decode the bitstream by always decoding the prediction mode added to the bitstream. The decoding device can arithmetically decode the prediction mode without calculating the maximum absolute difference value of motion vectors at the three-dimensional points of N adjacent points available for prediction. As a result, arithmetic decoding of the bitstream and LoD generation can be executed in parallel, and the overall throughput of decoding processing can be improved.

Note that when the total number of prediction modes M=1, the decoding device can estimate that the prediction mode value is 0, so in that case, the encoding device need not add the prediction mode value to the bitstream. This makes it possible to reduce the code amount when the total number of prediction modes M=1.

FIG. 102 is an explanatory diagram illustrating an example of syntax according to the present embodiment.

The example of syntax illustrated in FIG. 102 illustrates an example of the configuration of information included in a bitstream generated by the encoding device.

The syntax illustrated in FIG. 102 may include PredMode, mvd_is_zero[k], mvd_is_one[k], mvd_minus2[k], and mvd_sign[k] for each of the 0th to NumLoD-th layers of LoD (also referred to as the jth layer).

PredMode indicates a prediction mode for encoding or decoding a motion vector of an ith three-dimensional point, and takes a value included in a range from 0 to M-1 (where M is the total number of prediction modes). When PredMode is not included in the bitstream (in other words, when the if statement condition "NumPredMode[i] > 1" is not satisfied), PredMode may be estimated as 0. Note that the estimated value of PredMode is not limited to 0, and may be any value included in the range from 0 to M-1. The encoding device may separately add an estimated value for when PredMode is not included in the bitstream to a header or the like. PredMode may be binarized with a truncated unary code using the number of prediction modes to which prediction values are assigned and arithmetically encoded.

The encoding device may encode the value of the total number of prediction modes M as NumPredMode to the header. Accordingly, the decoding device can decode NumPredMode in the header to calculate the total number of prediction modes M, and can decode PredMode using the total number of prediction modes M, so the decoding device can execute arithmetic decoding of the bitstream without waiting for the decoding device to generate LoD, calculate adjacent points available for prediction, and calculate the number of prediction modes to which prediction values are assigned. Accordingly, the decoding device can execute arithmetic decoding of the bitstream and execute LoD generation in parallel, and can thus improve the overall throughput of decoding processing.

Note that mvd_is_zero[k], mvd_is_one[k], mvd_minus2[k], and mvd_sign[k] are the same as the data of the same names illustrated in FIG. 52, so detailed description thereof is omitted.

FIG. 103 is an explanatory diagram illustrating an example of encoding processing of prediction mode values according to the present embodiment.

In step S2801, the encoding device binarizes the prediction mode value with a truncated unary code using the total number of prediction modes M.

In step S2802, the encoding device performs arithmetic encoding on the binarized data in truncated unary code obtained by the binarization in step S2801.

In step S2803, the encoding device encodes and adds the total number of prediction modes M as NumPredMode to the header.

FIG. 104 is an explanatory diagram illustrating an example of decoding processing of prediction mode values according to the present embodiment.

In step S2901, the decoding device decodes NumPredMode in the header of the obtained bitstream to set the total number of prediction modes M.

In step S2902, the decoding device performs arithmetic decoding on PredMode using the total number of prediction modes M to generate binarized data in truncated unary code.

In step S2903, the decoding device calculates the prediction mode value from the binarized data in truncated unary code.

FIG. 105 is a flowchart illustrating an example of processing by the encoding device according to the present embodiment. FIG. 105 illustrates detailed processing included in step S1705 (see FIG. 80).

In step S3001, the encoding device calculates the weighted average value of motion vectors of N adjacent points available for prediction and assigns the calculated weighted average value to prediction mode 0.

In step S3002, the encoding device determines the prediction mode by selection. The encoding device is also capable of always (in other words, without making a determination regarding the maximum absolute difference value of motion vectors (step S1803 (see FIG. 81) or step S2503 (see FIG. 96))) selecting a prediction mode from among a plurality of prediction mode candidates and adding the prediction mode to the bitstream. The processing included in step S3002 will be described in detail later.

In step S3003, the encoding device performs arithmetic encoding on the prediction mode value of the prediction mode selected in step S2507. Note that the encoding device may binarize the prediction mode value PredMode with a truncated unary code using the total number of prediction modes M and arithmetically encode it. The encoding device may encode and add the total number of prediction modes M as NumPredMode to the header. Accordingly, the decoding device can correctly decode the prediction mode PredMode by decoding NumPredMode in the header. Note that when NumPredMode=1, PredMode need not be encoded. Accordingly, the code amount when NumPredMode=1 can be reduced.

The prediction mode determined in step S3003 is used to determine the prediction value in step S1705 (see FIG. 80).

The processing included in step S3002 will be described with reference to FIG. 106.

In step S3011 illustrated in FIG. 106, the encoding device assigns motion vectors of N adjacent points to prediction mode 1 through prediction mode N in order from those with smaller distances from the three-dimensional point to be encoded. Accordingly, the encoding device generates N+1 prediction modes. Note that when N+1 exceeds the maximum number of prediction modes M (NumPredMode) added to the bitstream, the encoding device may generate M prediction modes from prediction mode 1 to prediction mode M (in other words, the encoding device may not generate prediction modes M+1 and later).

In step S3012, the encoding device calculates the cost of each prediction mode and selects the prediction mode that minimizes the cost. The prediction mode that minimizes the cost is the prediction mode whose cost matches the minimum cost calculated by the processing illustrated in FIG. 107. The selected prediction mode corresponds to the prediction mode selected in step S3002 (see FIG. 105).

The processing included in step S3012 will be described with reference to FIG. 107.

In step S3021 illustrated in FIG. 107, the encoding device substitutes 0 into the variable i and substitutes infinity (also written as "∞") into the variable mincost. Note that when implemented as a program, infinity can be substituted with a very large numerical value (more specifically, the maximum value allowed by the variable type used, or a value close to the maximum value).

In step S3022, the encoding device calculates the cost cost[i] of the prediction mode value PredMode[i] of the ith prediction mode.

In step S3023, the encoding device determines whether the cost cost[i] calculated in step S3022 is smaller than the variable mincost. If it is determined that the cost cost[i] is smaller than the variable mincost (Yes in step S3023), the process proceeds to step S3024; otherwise (No in step S3023), the process proceeds to step S3025.

In step S3024, the encoding device substitutes the cost cost[i] into the variable mincost and sets the prediction mode to the prediction mode whose prediction mode value is PredMode[i].

In step S3025, the encoding device substitutes into the variable i a value obtained by adding 1 to the variable i.

In step S3026, the encoding device determines whether the variable i is smaller than the number of prediction modes. If it is determined that the variable i is smaller than the number of prediction modes (Yes in step S3026), the process proceeds to step S3022; otherwise (No in step S3026), the series of processes illustrated in FIG. 107 is terminated. The variable mincost at the time point when the series of processes illustrated in FIG. 107 is terminated indicates the minimum cost and is used in step S3012 (see FIG. 106).

FIG. 108 is a flowchart illustrating an example of a process by the decoding device according to the present embodiment.

In step S3101, the decoding device determines the prediction mode to be the prediction mode indicated by the prediction mode value decoded from the bitstream. The decoding device is also capable of always (in other words, without making a determination regarding the maximum absolute difference value of motion vectors (step S2003 (see FIG. 85)) or a determination regarding the prediction mode fixed flag (step S2602 (see FIG. 99))) determining the prediction mode to be the prediction mode indicated by the prediction mode value decoded from the bitstream. Note that the decoding device may arithmetically decode the prediction mode value PredMode using the total number of prediction modes M obtained by decoding the header. Note that when the total number of prediction modes M=1, the prediction mode value PredMode need not be decoded, and PredMode=0 may be estimated.

The prediction mode determined in step S3101 is used to determine the prediction value in step S1905 (see FIG. 84).

Hereinafter, an example of prediction values for prediction modes where prediction values have not been assigned will be described.

When the encoding device binarizes the prediction mode value (PredMode) with a truncated unary code using the total number of prediction modes M and arithmetically encodes it, there may be instances where certain prediction modes receive no prediction values assignment. This situation can arise depending on the number of encoded and decoded adjacent points available for prediction. This will be described with reference to FIG. 109 to FIG. 111.

FIG. 109 is an explanatory diagram illustrating an example of prediction value information of motion vectors according to the present embodiment. FIG. 110 is an explanatory diagram illustrating an example of prediction modes and binarized data according to the present embodiment. FIG. 111 is an explanatory diagram illustrating an example of prediction value information of motion vectors according to the present embodiment.

As illustrated in FIG. 109, for example, when the total number of prediction modes M is 5 and there are 2 adjacent points available for prediction of the three-dimensional point to be encoded, in the prediction value information that the encoding device has, an average value is assigned as the prediction value for prediction mode 0, 2 three-dimensional points (namely point a1 and point a2) are assigned as the prediction values for prediction mode 1 and prediction mode 2, and prediction mode 1 and prediction mode 2 are available for encoding.

Prediction values are not assigned to prediction mode 3 and prediction mode 4, and prediction mode 3 and prediction mode 4 are not available for encoding. In such cases, the encoding device may have indefinite values set as the prediction value for prediction mode 3 and the prediction value for prediction mode 4 (for example, also referred to as indefinite value A and indefinite value B, respectively).

Under the premise that the encoding device binarizes the prediction mode value with a truncated unary code using the value of the total number of prediction modes M (namely 5) (see FIG. 110) and encodes the prediction residual, it is technically possible to select prediction mode 3 or prediction mode 4, and in other words, the encoding device selecting prediction mode 3 or prediction mode 4 and adding the prediction mode value of the selected prediction mode to the bitstream is not excluded and may be permitted. Therefore, it is possible that the encoding device might select prediction mode 3 or prediction mode 4, for example, due to a malfunction or unintended processing. When the encoding device selects prediction mode 3 or prediction mode 4, the encoding device will encode prediction mode value 3 or prediction mode value 4 and add it to the bitstream.

In that case, the decoding device decodes the prediction mode value added to the bitstream. Here, in the prediction value information that the decoding device has, indefinite values may be set as the prediction value for prediction mode 3 and the prediction value for prediction mode 4 (for example, also referred to as indefinite value C and prediction value D, respectively) (see FIG. 111). There is a possibility that indefinite values in the prediction value information that the decoding device has (for example, indefinite value C and prediction value D) and the indefinite values in the prediction value information that the encoding device has (for example, indefinite value A and prediction value B) might be different. In such cases, the motion vector that the decoding device decoded may be inconsistent with the motion vector that the encoding device encoded. This inconsistency affects predictions subsequent to the prediction of the motion vector, and therefore may hinder proper decoding of the bitstream using predictions subsequent to the prediction of the motion vector.

For example, the encoding device selects prediction mode 3 and encodes the bitstream using indefinite value A as the prediction value. The encoding device obtains binarized data "1110" by binarizing prediction mode value 3 with a truncated unary code using the total number of prediction modes 5. The decoding device may decode 3 as the prediction mode value from the binarized data "1110" and decode the bitstream using indefinite value C as the prediction value. In such cases, since the indefinite value C that the decoding device used as the prediction value differs from the indefinite value A that the encoding device used as the prediction value, there is a chance that the decoding device might not be able to appropriately decode the bitstream.

Therefore, the encoding device and the decoding device may set a common initial value in advance as the prediction value for prediction modes to which prediction values are not assigned. This will be described with reference to FIG. 112 to FIG. 114.

FIG. 112 is an explanatory diagram illustrating an example of prediction value information of motion vectors according to the present embodiment. FIG. 113 is an explanatory diagram illustrating an example of prediction value information of motion vectors according to the present embodiment.

In the prediction value information that the encoding device has (see FIG. 112) and the prediction value information that the decoding device has (see FIG. 113), a common initial value is set in advance as the prediction value for prediction modes to which prediction values are not assigned.

For example, the encoding device selects prediction mode 3 and encodes the bitstream using initial value 0 as the prediction value. The encoding device obtains binarized data "1110" by binarizing prediction mode value 3 with a truncated unary code using the total number of prediction modes 5. The decoding device decodes 3 as the prediction mode value from the binarized data "1110" and decodes the bitstream using initial value 0 as the prediction value. In such cases, since the initial value 0 that the decoding device used as the prediction value matches the initial value 0 that the encoding device used as the prediction value, the decoding device can appropriately decode the bitstream.

In this manner, even if the encoding device generates a prediction residual using a prediction mode to which no prediction value is assigned (in other words, a prediction mode for which an initial value is set) due to a malfunction or the like and adds that prediction mode value to the bitstream, the decoding device can decode the prediction mode value from the bitstream and obtain a decoded value using the same initial value as the encoding device, so the bitstream can be correctly decoded.

Note that the initial value can be set to, for example, 0. Stated differently, when the motion vector is in a Cartesian coordinate system (XYZ coordinate system), the encoding device and the decoding device may set the value (0, 0, 0) as the initial value.

Note that although the above describes setting an initial value for prediction modes to which no prediction value was assigned as the method for setting the initial value, the embodiment is not necessarily limited to this. Another example will be described with reference to FIG. 115 and FIG. 116. For example, the encoding device and the decoding device may set initial values (for example, the value 0) for the prediction values of all prediction modes in advance (see FIG. 114), and then update the prediction values with the average value of adjacent points available for prediction, or with adjacent points available for prediction (see FIG. 115).

Note that the initial value is not limited to the value 0, and may be any value as long as it is the same value (in other words, a common value) between the encoding device and the decoding device.

Note that a bitstream encoded by selecting a prediction mode to which no prediction value is assigned (i.e., a prediction mode for which "not available" is set) may be defined as a "standards violation" in standards or the like. The decoding device may output a "standards violation" when a prediction mode to which no prediction value is assigned is decoded from the bitstream. In this manner, the decoding device can be prevented from selecting a prediction mode to which no prediction value is assigned.

Hereinafter, another example of prediction values for prediction modes where prediction values have not been assigned will be described.

As illustrated in FIG. 109, when the encoding device binarizes the prediction mode value (PredMode) with a truncated unary code using the total number of prediction modes M and arithmetically encodes it, there may be instances where certain prediction modes receive no prediction values assignment. This situation can arise depending on the number of encoded and decoded adjacent points available for prediction.

In such cases, the encoding device and the decoding device may detect prediction modes to which prediction values are not assigned, and when prediction modes to which prediction values are not assigned exist, assign new prediction values to the prediction modes to which prediction values are not assigned. In this way, the encoding efficiency can be improved. This will be described with reference to FIG. 116 and FIG. 117.

FIG. 116 and FIG. 117 are explanatory diagrams each illustrating an example of prediction value information of motion vectors according to the present embodiment.

In the prediction value information that the encoding device has (see FIG. 116) and the prediction value information that the decoding device has (see FIG. 117), a common new prediction value ("New predictor") is set in advance as a prediction value for prediction mode 3 to which prediction values are not assigned. The new prediction value may be any value, and can be a value different from the prediction values assigned to other prediction modes.

For example, the encoding device selects prediction mode 3 and encodes the bitstream using a new prediction value. The encoding device obtains binarized data "1110" by binarizing prediction mode value 3 with a truncated unary code using the total number of prediction modes 5. The decoding device decodes 3 as the prediction mode value from the binarized data "1110" and decodes the bitstream using a new prediction value. In such cases, since the new prediction value that the decoding device used matches the new prediction value that the encoding device used, the decoding device can appropriately decode the bitstream.

Note that, in this case, prediction modes 0 to 3 are available (indicated as "available" in the figure).

The new prediction value may be, for example, an intermediate value (median) of the range of possible values of the motion vector. This will be described with reference to FIG. 118 and FIG. 119.

FIG. 118 and FIG. 119 are explanatory diagrams each illustrating an example of prediction value information of motion vectors according to the present embodiment.

In the prediction value information that the encoding device has (see FIG. 118) and the prediction value information that the decoding device has (see FIG. 119), an intermediate value is set in advance as a common new prediction value for prediction mode 3 to which prediction values are not assigned.

For example, the encoding device selects prediction mode 3 and encodes the bitstream using an intermediate value as the prediction value. The encoding device obtains binarized data "1110" by binarizing prediction mode value 3 with a truncated unary code using the total number of prediction modes 5. The decoding device decodes 3 as the prediction mode value from the binarized data "1110" and decodes the bitstream using an intermediate value as the prediction value. In such cases, since the intermediate value that the decoding device used as the prediction value matches the intermediate value that the encoding device used as the prediction value, the decoding device can appropriately decode the bitstream.

For example, when the bit precision of the X component, Y component, and Z component of the motion vector is 8-bit precision (in other words, the range of values that each component can take is 0 to 255), the intermediate value can be, for example, 127, which is the intermediate value in the range of 0 to 255 for each component. In such cases, the prediction value of the motion vector is expressed as (127, 127, 127).

For example, when the bit precision of the X component, Y component, and Z component of the motion vector is 10-bit precision (in other words, the range of values that each component can take is 0 to 1023), the intermediate value can be, for example, 511, which is the intermediate value in the range of 0 to 1023 for each component. In such cases, the prediction value of the motion vector is expressed as (511, 511, 511).

The components of the motion vector can also be set to values that are various combinations of the above intermediate values or 0. For example, when the bit precision of the motion vector is 8-bit precision, the prediction value of the motion vector can be set to (127, 0, 0), (0, 127, 0), or (0, 127, 127), etc.

When prediction modes are determined for each component of a motion vector, prediction modes to which prediction values are not assigned may be detected for each component, and when components of prediction modes to which prediction values are not assigned exist, new prediction values may be assigned to the components of prediction modes to which prediction values are not assigned. For example, when the bit precision of each component of the motion vector is 8-bit precision, 127 as an intermediate value may be assigned as the component of prediction modes to which prediction values are not assigned.

Note that while an example of an intermediate value as a new prediction value has been given, the method is not necessarily limited thereto; any value may be assigned, such as the maximum value or minimum value among values that can be taken as prediction values.

Note that an arbitrary value $\alpha$ can also be used as a new prediction value. This will be described with reference to FIG. 120 and FIG. 121.

FIG. 120 and FIG. 121 are explanatory diagrams each illustrating an example of prediction value information of motion vectors according to the present embodiment.

In the prediction value information that the encoding device has (see FIG. 120) and the prediction value information that the decoding device has (see FIG. 121), value $\alpha$ is set in advance as a common prediction value for prediction mode 3 to which prediction values are not assigned.

For example, the encoding device selects prediction mode 3 and encodes the bitstream using value $\alpha$ as the prediction value. The encoding device obtains binarized data "1110" by binarizing prediction mode value 3 with a truncated unary code using the total number of prediction modes 5. The decoding device decodes 3 as the prediction mode value from the binarized data "1110" and decodes the bitstream using value $\alpha$ as the prediction value. In such cases, since the value $\alpha$ that the decoding device used as the prediction value matches the value $\alpha$ that the encoding device used as the prediction value, the decoding device can appropriately decode the bitstream.

Note that the encoding device may add the value $\alpha$ used as the prediction value to a header or the like of the bitstream. The decoding device may obtain the value $\alpha$ by decoding the value $\alpha$ added to the header and use it as the prediction value.

When the encoding device detects a plurality of prediction modes to which prediction values are not assigned, it may assign a plurality of new prediction values. This will be described with reference to FIG. 122 and FIG. 123.

FIG. 122 and FIG. 123 are explanatory diagrams each illustrating an example of prediction value information of motion vectors according to the present embodiment.

For example, when the encoding device detects P prediction modes to which prediction values are not assigned, it may assign new prediction values to Q (where Q≤P) prediction modes among the P prediction modes.

For example, when the encoding device has a total number of prediction modes M=5 and the number of adjacent points available for prediction is 2, it can detect that prediction values are not assigned to two prediction modes (specifically, prediction mode 3 and prediction mode 4), and generate and assign two new prediction values (a new prediction value 1 (also referred to as New predictor 1) and a new prediction value 2 (also referred to as New predictor 2)) to the two prediction modes described above (see FIG. 122). The decoding device can also, similarly to the encoding device, generate and assign two new prediction values to the two prediction modes described above (see FIG. 123).

Note that, in this case, prediction modes 0 to 4 are available (indicated as "available" in the figure).

For example, the encoding device selects prediction mode 3 and encodes the bitstream using a new prediction value 1 (New predictor 1). The encoding device obtains binarized data "1110" by binarizing prediction mode value 3 with a truncated unary code using the total number of prediction modes 5. The decoding device decodes 3 as the prediction mode value from the binarized data "1110" and decodes the bitstream using a new prediction value 1. In such cases, since the new prediction value 1 that the decoding device used matches the new prediction value 1 that the encoding device used, the decoding device can appropriately decode the bitstream.

In this way, the encoding device can further improve encoding efficiency by assigning a greater number of new prediction values to prediction modes to which prediction values are not assigned. The encoding device can further improve encoding efficiency by assigning as many new prediction values as possible to prediction modes to which prediction values are not assigned.

When the encoding device detects a plurality of prediction modes to which prediction values are not assigned, it may assign intermediate values, maximum values, minimum values, or the like as the plurality of new prediction values. This will be described with reference to FIG. 124 and FIG. 125.

FIG. 124 and FIG. 125 are explanatory diagrams each illustrating an example of prediction value information of motion vectors according to the present embodiment.

When the encoding device detects two prediction modes to which prediction values are not assigned, for example, it may assign an intermediate value as new prediction value 1 to one of the detected two prediction modes, and assign a maximum value (or minimum value, etc.) as new prediction value 2 to the other (see FIG. 124). The decoding device can also, similarly to the encoding device, assign an intermediate value as new prediction value 1 to one of the detected two prediction modes, and assign a maximum value (or minimum value, etc.) as new prediction value 2 to the other (see FIG. 125).

Note that, in this case, prediction modes 0 to 4 are available (indicated as "available" in the figure).

Note that the encoding device may limit the number of prediction modes to which prediction values are newly assigned. This will be described with reference to FIG. 126 and FIG. 127.

FIG. 126 and FIG. 127 are explanatory diagrams each illustrating an example of prediction value information of motion vectors according to the present embodiment.

For example, the encoding device may set the upper limit of the number of prediction modes to which prediction values are newly assigned to R, and may assign new prediction values to one to R prediction modes.

For example, when R=1, when the encoding device detects two prediction modes to which prediction values are not assigned, it may assign an intermediate value to one prediction mode. In this way, the processing amount can be inhibited while improving the encoding efficiency.

For example, when the encoding device has a total number of prediction modes M=5 and the number of adjacent points available for prediction is 2, it can detect that prediction values are not assigned to two prediction modes (specifically, prediction mode 3 and prediction mode 4), and generate and assign a new prediction value (also referred to as New prediction value A) to one of the two prediction modes described above (see FIG. 126). The decoding device can also, similarly to the encoding device, generate and assign a new prediction value to the one prediction mode described above (see FIG. 127).

Note that, in this case, prediction modes 0 to 3 are available (indicated as "available" in the figure).

Note that the encoding device may add the value of R to a header or the like of the bitstream, or the value may be defined by a profile or level in a standard or the like.

FIG. 128 is a flowchart illustrating an example of processing performed by the encoding device according to the present embodiment. FIG. 128 illustrates detailed processing included in step S1705 (see FIG. 80).

In step S3201, the encoding device sets initial values for the prediction values of all prediction modes. The initial value is, for example, 0.

In step S3202, the encoding device calculates the weighted average value of motion vectors of N adjacent points available for prediction and assigns the calculated weighted average value to prediction mode 0.

In step S3203, the encoding device calculates the maximum absolute difference value maxdiff of motion vectors of N adjacent points.

In step S3204, the encoding device determines whether the maximum absolute difference value maxdiff calculated in step S3203 is smaller than the threshold Thfix. If it is determined that the maximum absolute difference value maxdiff is smaller than the threshold Thfix (Yes in step S3204), the process proceeds to step S3205; otherwise (No in step S3204), the process proceeds to step S3207.

In step S3205, the encoding device sets the prediction mode fixed flag to 1 and performs arithmetic encoding on the prediction residual.

In step S3206, the encoding device determines the prediction mode to be prediction mode 0 (that is, the prediction mode that uses an average value).

In step S3207, the encoding device sets the prediction mode fixed flag to 0 and performs arithmetic encoding on the prediction residual.

In step S3208, the encoding device determines a prediction mode by selection. The processing included in step S3208 will be described in detail later.

In step S3209, the encoding device performs arithmetic encoding on the prediction mode value of the prediction mode selected in step S3208. Note that the encoding device may binarize the prediction mode value PredMode with a truncated unary code using the total number of prediction modes M and arithmetically encode it. The encoding device may encode and add the total number of prediction modes M as NumPredMode to the header. Accordingly, the decoding device can correctly decode the prediction mode PredMode by decoding NumPredMode in the header. Note that when NumPredMode=1, PredMode need not be encoded. Accordingly, the code amount when NumPredMode=1 can be reduced.

The prediction mode determined in step S3206 or S3209 is used to determine the prediction value in step S1705 (see FIG. 80).

The processing included in step S3208 will be described with reference to FIG. 129.

In step S3211 illustrated in FIG. 129, the encoding device assigns motion vectors of N adjacent points to prediction mode 1 through prediction mode N in order from those with smaller distances from the three-dimensional point to be encoded. Accordingly, the encoding device generates N+1 prediction modes. Note that when N+1 exceeds the maximum number of prediction modes M (NumPredMode) added to the bitstream, the encoding device may generate M prediction modes from prediction mode 1 to prediction mode M (in other words, the encoding device may not generate prediction modes M+1 and later).

In step S3212, the encoding device detects prediction modes to which prediction values are not assigned and assigns prediction values to the detected prediction modes.

In step S3213, the encoding device calculates the cost of each prediction mode and selects the prediction mode that minimizes the cost. The prediction mode that minimizes the cost is the prediction mode whose cost matches the minimum cost calculated by the processing illustrated in FIG. 130. The selected prediction mode corresponds to the prediction mode selected in step S3208 (see FIG. 128).

The processing included in step S3213 will be described with reference to FIG. 130.

In step S3221 illustrated in FIG. 130, the encoding device substitutes 0 into the variable i and substitutes infinity (also written as "∞") into the variable mincost. Note that when implemented as a program, infinity can be substituted with a very large numerical value (more specifically, the maximum value allowed by the variable type used, or a value close to the maximum value).

In step S3222, the encoding device calculates the cost cost[i] of the prediction mode value PredMode[i] of the ith prediction mode.

In step S3223, the encoding device determines whether the cost cost[i] calculated in step S3222 is smaller than the variable mincost. If it is determined that the cost cost[i] is smaller than the variable mincost (Yes in step S3223), the process proceeds to step S3224; otherwise (No in step S3223), the process proceeds to step S3225.

In step S3224, the encoding device substitutes the cost cost[i] into the variable mincost and sets the prediction mode to the prediction mode whose prediction mode value is PredMode[i].

In step S3225, the encoding device substitutes into the variable i a value obtained by adding 1 to the variable i.

In step S3226, the encoding device determines whether the variable i is smaller than the number of prediction modes. If it is determined that the variable i is smaller than the number of prediction modes (Yes in step S3226), the process proceeds to step S3222; otherwise (No in step S3226), the series of processes illustrated in FIG. 130 is terminated. The variable mincost at the time point when the series of processes illustrated in FIG. 130 is terminated indicates the minimum cost and is used in step S3213 (see FIG. 129).

FIG. 131 and FIG. 132 are flowcharts illustrating examples of processes performed by the decoding device according to the present embodiment. With reference to FIG. 131 and FIG. 132, examples of processes performed by the decoding device will be described.

In step S3301, the decoding device generates one or more LoDs from the input bitstream (see FIG. 48 and FIG. 49).

In step S3302, the decoding device decodes the prediction mode value and the quantization values of point P from the input bitstream.

In step S3303, the decoding device performs start processing for loop A that repeatedly executes the processing of steps S3304 to S3309 described below. In loop A, focus is placed on each of the one or more LoDs generated in step S3301, processing is performed for the focused LoD, and ultimately control is carried out so that processing is performed for all LoDs. Note that the LoD being focused on is also referred to as the focused LoD. Loop A can also be referred to as an LoD loop.

In step S3304, the decoding device performs start processing for loop B that repeatedly executes the processing of steps S3305 to S3308 described below. In loop B, focus is placed on each of the three-dimensional points belonging to the focused LoD, processing is performed for the focused three-dimensional point, and ultimately control is carried out so that processing is performed for all three-dimensional points. Note that the three-dimensional point being focused on is also referred to as point P.

In step S3305, the decoding device searches for neighboring points of point P (see FIG. 36 through FIG. 45).

In step S3306, the decoding device determines the prediction values of point P. More specifically, the decoding device determines the prediction value of point P using the prediction mode value decoded in step S3302.

In step S3307, the decoding device calculates inverse quantization values of point P. More specifically, the decoding device calculates the inverse quantization values of point P using the quantization values decoded in step S3302 as prediction residuals.

In step S3308, the decoding device calculates the reconstructed value of point P using the inverse quantization values obtained in step S3307.

In step S3309, the decoding device performs end processing for loop B. More specifically, the decoding device determines whether the processing of steps S3305 to S3308 has been executed for all three-dimensional points belonging to the focused LoD, and if not executed, carries out control so that processing is executed with focus placed on three-dimensional points that have not yet been executed.

In step S3310, the decoding device performs end processing for loop A. More specifically, the decoding device determines whether the processing of steps S3304 to S3309 has been executed for all LoDs, and if not executed, carries out control so that processing is executed with focus placed on LoDs that have not yet been executed.

Note that either of steps S3301 and S3302 may be executed first, or they may be executed simultaneously.

In addition to the number of three-dimensional points NumOfPoint for each hierarchy being added to the header portion or the like, since the decoding processing of the prediction mode value PredMode in the bitstream and the processing for calculating adjacent points available for prediction after LoD generation are made independent, the decoding device can independently execute step S3301 and the processing of step S3305 that uses the LoD generated in step S3301, and the processing of step S3302. Therefore, the decoding device may execute the processing of steps S3301 and S3305 and the processing of step S3302 in parallel. Accordingly, the overall processing time can be reduced.

Note that when the LoD hierarchy that the decoding device should generate in step S3301 has one layer, prediction values of motion vectors of three-dimensional points can be generated without generating LoD. In such cases, the processing of step S3303 and step S3310 may be omitted. In such cases, the decoding device may execute the processing of steps S3304 to S3309 with LoD=1 (that is, only LoD1 exists). Accordingly, the decoding device can reduce the processing time.

Note that when inverse quantization of the prediction residual of the motion vector is not necessary, the decoding device may skip the inverse quantization processing (step S3307) and add the arithmetically decoded prediction residual directly to the prediction value to obtain a decoded value. Accordingly, the processing time can be reduced.

The processing included in step S3306 will be described with reference to FIG. 132.

In step S3321, the decoding device sets initial values for the prediction values of all prediction modes. The initial value is, for example, 0.

In step S3322, the decoding device calculates the weighted average value of motion vectors of N adjacent points available for prediction and assigns the calculated weighted average value to prediction mode 0.

In step S3323, the decoding device assigns motion vectors of N adjacent points to prediction mode 1 through prediction mode N in order from those with smaller distances from the three-dimensional point to be decoded. Accordingly, the decoding device generates N+1 prediction modes. Note that when N+1 exceeds the maximum number of prediction modes M (NumPredMode) added to the bitstream, the decoding device may generate M prediction modes from prediction mode 1 to prediction mode M (in other words, the decoding device may not generate prediction modes M+1 and later).

In step S3324, the decoding device detects prediction modes to which prediction values are not assigned and assigns prediction values to the detected prediction modes.

In step S3325, the decoding device calculates the prediction value predicted in the prediction mode indicated by the prediction mode value decoded in step S3302. The prediction value calculated by the decoding device becomes the prediction value determined in step S3306 (see FIG. 131).

The processing executed by the encoding device and decoding device described above for detecting prediction modes to which prediction values are not assigned and assigning prediction values (step S3212 (see FIG. 129), step S3324 (see FIG. 132)) will be described hereinafter.

FIG. 133 is a flowchart illustrating an example of processing for assigning prediction values according to the present embodiment. FIG. 133 illustrates processing for assigning one new prediction value.

Note that although here, a case where the encoding device assigns prediction values is described by way of example, the decoding device can also execute similar processing.

In step S3401, the encoding device detects the number P of prediction modes to which prediction values are not assigned.

In step S3402, the encoding device determines whether the number P detected in step S3401 is greater than 0. If it is determined that the number P is greater than 0, the process proceeds to step S3403; otherwise, the series of processes illustrated in FIG. 133 is terminated.

In step S3403, the encoding device additionally assigns one prediction value to a prediction mode to which a prediction value is not assigned. The encoding device can assign any one of an intermediate value, a maximum value, a minimum value, and a value $\alpha$ to a prediction mode as the prediction value. After completing step S3403, the encoding device terminates the series of processes illustrated in FIG. 133.

Note that when the encoding device assigns the value $\alpha$ to a prediction mode as the prediction value in step S3403, the encoding device may add the value $\alpha$ to a header or the like of the bitstream and encode the bitstream. In such cases, the decoding device can obtain the value $\alpha$ by decoding the header or the like of the bitstream. The value $\alpha$ may be defined by level or profile in a standard or the like.

Through the series of processes illustrated in FIG. 133, the encoding device can additionally assign a new prediction value to one prediction mode.

FIG. 134 is a flowchart illustrating an example of processing for assigning prediction values according to the present embodiment. FIG. 134 illustrates processing for assigning a plurality of new prediction values.

Note that although here, a case where the encoding device assigns prediction values is described by way of example, the decoding device can also execute similar processing.

In step S3501, the encoding device detects the number P of prediction modes to which prediction values are not assigned.

In step S3502, the encoding device determines whether the number P detected in step S3501 is greater than 0. If it is determined that the number P is greater than 0, the process proceeds to step S3503; otherwise, the series of processes illustrated in FIG. 134 is terminated.

In step S3503, the encoding device additionally assigns one prediction value to a prediction mode to which a prediction value is not assigned. The encoding device can assign any one of an intermediate value, a maximum value, a minimum value, and a value $\alpha$ to a prediction mode in the listed order as the prediction value.

In step S3504, the encoding device substitutes P-1 into P, in other words, decreases P by 1. Subsequently, the encoding device proceeds to step S3502.

Through the series of processes illustrated in FIG. 134, the encoding device can additionally assign a new prediction value to P prediction modes.

FIG. 135 is a flowchart illustrating an example of processing for assigning prediction values according to the present embodiment. FIG. 135 illustrates processing for assigning R new prediction values. Note that when R is greater than or equal to the number P of prediction modes to which prediction values are not assigned, P new prediction values are assigned.

Note that although here, a case where the encoding device assigns prediction values is described by way of example, the decoding device can also execute similar processing.

In step S3601, the encoding device detects the number P of prediction modes to which prediction values are not assigned.

In step S3602, the encoding device substitutes 0 into r.

In step S3603, the encoding device determines whether the number P detected in step S3601 is greater than 0 and r is smaller than R. If it is determined that the number P is greater than 0 and r is smaller than R, the process proceeds to step S3604; otherwise, the series of processes illustrated in FIG. 135 is terminated.

In step S3604, the encoding device additionally assigns one prediction value to a prediction mode to which a prediction value is not assigned. The encoding device can assign any one of an intermediate value, a maximum value, a minimum value, and a value $\alpha$ to a prediction mode in the listed order as the prediction value.

In step S3605, the encoding device substitutes P-1 into P, in other words, decreases P by 1.

In step S3606, the encoding device substitutes r+1 into r, in other words, increases r by 1. Subsequently, the encoding device proceeds to step S3603.

Through the series of processes illustrated in FIG. 135, the encoding device can additionally assign a new prediction value to R prediction modes.

The encoding device may calculate a prediction value of attribute information of a three-dimensional point from a weighted average value of N adjacent points. For example, the encoding device can perform weighted averaging using the motion vector values of each of the N adjacent points.

As an example of weighted averaging, for example, the encoding device may calculate an average value of motion vectors of three-dimensional points of N adjacent points, and perform averaging by adding higher weights to motion vector values of adjacent points that are closer to the average value, to calculate a prediction value.

With this, the encoding device can generate a prediction value by prioritizing motion vector values of adjacent points that are closer to the average value of motion vectors of N adjacent points, thereby lowering the priority of motion vectors that are far from the average value to generate a prediction value, and may be able to improve encoding efficiency.

Note that instead of the average value, a median value of N adjacent points may be calculated, and averaging may be performed by adding higher weights to values closer to the median value, to calculate a prediction value.

FIG. 136 is an explanatory diagram illustrating a method for calculating a prediction value according to the present embodiment.

In FIG. 136, point a2 is predicted from point a0 and point a1. Point a5 is predicted from point a0, point a1, point a2, point a3, and point a4. Note that the points selected as adjacent points to be used for prediction may change depending on the number N of adjacent points used for prediction. For example, when N=5, point a0, point a1, point a2, point a3, and point a4 are selected as adjacent points of point a5, and when N=4, point a0, point a1, point a2, and point a4 may be selected based on distance information.

Note that LoD may be generated from a higher layer (i.e., LoD0). Moreover, LoD may be generated from a lower layer (i.e., LoD2).

For example, when a weighted average value of adjacent points is used for prediction, prediction value a2p of point a2 is calculated from a weighted average of point a0 and point a1 (see Expression 21, Expression 22, and Expression 23). Here, $A_i$ is the value of the motion vector of point ai. Ave is the average value of $A_i$. A median value of $A_i$ may be used as Ave. A squared value of (ai-ave) may be used instead of |ai-ave|, and a squared value of (aj-ave) may be used instead of |aj-ave|.

[Math. 12]

$$a2p = \sum_{i=0}^{1} w_i \times A_i$$

$$(\text{Expression 21})$$

[Math. 13]

$$w_i = \frac{\dfrac{1}{|ai - ave|}}{\sum_{j=0}^{1} \dfrac{1}{|aj - ave|}}$$

$$(\text{Expression 22})$$

[Math. 14]

$$ave = \frac{\sum_{i=0}^{1} A_i}{2}$$

$$(\text{Expression 23})$$

Prediction value a5p of point a5 is calculated from a weighted average of point a0, point a1, point a2, point a3, and point a4 (see Expression 24, Expression 25, and Expression 26).

[Math. 15]

$$a5p = \sum_{i=0}^{4} w_i \times A_i$$

$$(\text{Expression 24})$$

[Math. 16]

$$w_i = \frac{\frac{1}{|ai - ave|}}{\sum_{j=0}^{4} \frac{1}{|aj - ave|}}$$

(Expression 25)

[Math. 17]

$$ave = \frac{\sum_{i=0}^{4} A_i}{5}$$

(Expression 26)

Note that here, when ai and ave have the same value, |ai-ave|=0, making it difficult to appropriately calculate the value of $w_i$. Therefore, when |ai-ave|=0, calculation may be performed with |ai-ave|=1. In this way, the value of $w_i$ can be calculated.

When aj and ave have the same value, |aj-ave|=0, making it difficult to appropriately calculate the value of $w_j$. Therefore, when |aj-ave|=0, calculation may be performed with |aj-ave|=1. In this way, the value of $w_j$ can be calculated.

Prediction value aNp of point aN is calculated from a weighted average of point aN-4, point aN-3, point aN-2, and point aN-1 (see Expression 27, Expression 28, and Expression 29).

[Math. 18]

$$aNp = \sum_{i=N-4}^{N-1} w_i \times A_i$$

(Expression 27)

[Math. 19]

$$w_i = \frac{\frac{1}{|ai - ave|}}{\sum_{j=N-4}^{N-1} \frac{1}{|aj - ave|}}$$

(Expression 28)

[Math. 20]

$$ave = \frac{\sum_{i=N-4}^{N-1} A_i}{4}$$

(Expression 29)

Note that here, when ai and ave have the same value, |ai-ave|=0, making it difficult to appropriately calculate the value of $w_i$. Therefore, when |ai-ave|=0, calculation may be performed with |ai-ave|=1. In this way, the value of $w_i$ can be calculated.

When aj and ave have the same value, |aj-ave|=0, making it difficult to appropriately calculate the value of $w_j$. Therefore, when |aj-ave|=0, calculation may be performed with |aj-ave|=1. In this way, the value of $w_j$ can be calculated.

The encoding device may calculate a prediction value of a motion vector of a three-dimensional point from a weighted average value of N adjacent points. For example, the encoding device can perform weighted averaging using distance information and motion vector values of each of N three-dimensional points surrounding the three-dimensional point to be encoded and the three-dimensional point to be encoded.

As an example of weighted averaging, for example, the encoding device may add higher weights to motion vector values that are closer in distance to the three-dimensional point to be encoded, and add higher weights to motion vector values that are closer to the average value of motion vectors of surrounding N three-dimensional points, and perform averaging to calculate a prediction value.

With this, the encoding device may be able to improve encoding efficiency by generating a prediction value by prioritizing motion vector values of surrounding three-dimensional points that are close in distance to the three-dimensional point to be encoded and motion vector values of surrounding adjacent points that are close to the average value of motion vectors of N adjacent points. Note that instead of the average value, a median value of N adjacent points may be calculated, and averaging may be performed by adding higher weights to motion vector values closer to the median value, to calculate a prediction value.

With reference to FIG. 136, a method for calculating a prediction value according to the present embodiment will be described.

For example, when a weighted average value of distance information and motion vectors of adjacent points is used for prediction, prediction value a2p of point a2 is calculated from a weighted average of point a0 and point a1 (see Expression 30, Expression 31, and Expression 32). Here, $A_i$ is the value of the motion vector of point ai. Ave is the average value of $A_i$. A Median value of $A_i$ may be used as Ave. A squared value of (ai-ave) may be used instead of |ai-ave|, and a squared value of (aj-ave) may be used instead of |aj-ave|.

[Math. 21]

$$a2p = \sum_{i=0}^{1} w_i \times A_i$$

(Expression 30)

[Math. 22]

$$w_i = \frac{\dfrac{1}{d(a2, ai)} \times \dfrac{1}{|ai - ave|}}{\sum_{j=0}^{1} \dfrac{1}{d(a2, aj)} \times \dfrac{1}{|aj - ave|}}$$

(Expression 31)

[Math. 23]

$$ave = \frac{\sum_{i=0}^{1} A_i}{2}$$

(Expression 32)

Prediction value a5p of point a5 is calculated from a weighted average of point a0, point a1, point a2, point a3, and point a4 (see Expression 33, Expression 34, and Expression 35).

[Math. 24]

$$a5p = \sum_{i=0}^{4} w_i \times A_i$$

(Expression 33)

[Math. 25]

$$w_i = \frac{\dfrac{1}{d(a5, ai)} \times \dfrac{1}{|ai - ave|}}{\sum_{j=0}^{4} \dfrac{1}{d(a5, aj)} \times \dfrac{1}{|aj - ave|}}$$

(Expression 34)

[Math. 26]

$$ave = \frac{\sum_{i=0}^{4} A_i}{5}$$

(Expression 35)

Note that here, when ai and ave have the same value, |ai-ave|=0, making it difficult to appropriately calculate the value of $w_i$. Therefore, when |ai-ave|=0, calculation may be performed with |ai-ave|=1. In this way, the value of $w_i$ can be calculated.

When aj and ave have the same value, |aj-ave|=0, making it difficult to appropriately calculate the value of $w_j$. Therefore, when |aj-ave|=0, calculation may be performed with |aj-ave|=1. In this way, the value of $w_j$ can be calculated.

When d(a5, ai)=0, it is difficult to appropriately calculate the value of $w_i$. Therefore, when d(a5,ai)=0, calculation may be performed with d(a5,ai)=1. In this way, the value of $w_i$ can be calculated.

When d(a5, aj)=0, it is difficult to appropriately calculate the value of $w_i$. Therefore, when d(a5,aj)=0, calculation may be performed with d(a5,aj)=1. In this way, the value of $w_i$ can be calculated.

Prediction value aNp of point aN is calculated from a weighted average of point aN-4, point aN-3, point aN-2, and point aN-1 (see Expression 36, Expression 37, and Expression 38).

[Math. 27]

$$aNp = \sum_{i=N-4}^{N-1} w_i \times A_i$$

(Expression 36)

[Math. 28]

$$w_i = \frac{\frac{1}{d(aN,ai)} \times \frac{1}{|ai - ave|}}{\sum_{j=N-4}^{N-1} \frac{1}{d(aN,aj)} \times \frac{1}{|aj - ave|}}$$

(Expression 37)

[Math. 29]

$$ave = \frac{\sum_{i=N-4}^{N-1} A_i}{4}$$

(Expression 38)

Note that when d(aN, ai)=0, it is difficult to appropriately calculate the value of $w_i$. Therefore, when d(aN,ai)=0, calculation may be performed with d(aN,ai)=1. In this way, the value of $w_i$ can be calculated.

When d(aN, aj)=0, it is difficult to appropriately calculate the value of $w_i$. Therefore, when d(aN,aj)=0, calculation may be performed with d(aN,aj)=1. In this way, the value of $w_i$ can be calculated.

When the encoding device adds a prediction mode value (PredMode) for each three-dimensional point to generate prediction values of motion vectors of three-dimensional points, as an example of a method for assigning prediction values to each prediction mode, an example of assigning motion vectors of adjacent points as prediction values to each prediction mode using distance information from the three-dimensional point to be encoded has been given, but the method is not necessarily limited thereto; the method for assigning prediction values to prediction modes may be changed by some method.

For example, the encoding device may calculate a median value from the prediction values assigned to each prediction mode, and assign the calculated median value to prediction mode 0. In this way, the encoding device may assign a median value as a prediction value to a prediction mode having a small prediction mode value. With this, the encoding device can generate prediction value candidates that prioritize the median value of motion vectors of adjacent points, so encoding efficiency can be improved.

The change in assignment of prediction values using the median value will be described with reference to FIG. 137 to FIG. 139.

FIG. 137 is an explanatory diagram illustrating an example of prediction value information of motion vectors according to the embodiment. FIG. 138 is an explanatory diagram illustrating a method for generating a prediction value of a motion vector according to the present embodiment. FIG. 139 is an explanatory diagram illustrating an example of prediction value information of motion vectors according to the present embodiment.

In the example illustrated in FIG. 138, the number N of three-dimensional points used for prediction is 4, and the number M of prediction modes is 4. Point a2 is predicted from point a0 and point a1. Point b2 is predicted from point a0, point a1, point a2, point b0, and point b1.

Here, an example is illustrated where point b1, point a2, point a1, and point a0 are in order of proximity to the three-dimensional point to be encoded, and motion vectors of three-dimensional points with closer distances are assigned to prediction modes with smaller prediction mode values. The magnitude of each prediction value is assumed to be b1>a1>a0>a2.

The encoding device calculates the median value of the prediction values of the prediction modes. For example, the encoding device can sort n prediction values assigned to prediction modes in ascending or descending order, and use the (n/2)th value as the median value. Note that the median value calculation method may be switched between cases where the value of n is odd and cases where it is even.

For example, when n is odd, the encoding device can use, as the median value, the (n/2)th prediction value (with decimal places rounded down) among the 0th to (n-1)th prediction values after sorting. When n is even, the encoding device can use the (n/2-1)th prediction value and the n/2th prediction value among the 0th to (n-1)th prediction values after sorting as median value candidates A and B, and adopt either A or B as the median value by some method. For example, of A and B, the one that has a closer distance to the three-dimensional point to be encoded can be used as the median value.

In the case of the example illustrated in FIG. 138, since n=4, the median value can be calculated using the median value calculation method for cases where n is even. For example, when b1, a1, a0, and a2 are sorted in ascending order, the result is a2, a0, a1, b1. In such cases, the (n/2-1)th prediction value is a0, the n/2th is a1, and these are used as median value candidates A and B. Since a1 is closer to the three-dimensional point to be encoded than a0, a1 is selected as the median value.

In such cases, as illustrated in FIG. 139, the encoding device assigns the prediction value a1 selected as the median value to prediction mode 0, and assigns the prediction value b1 that was originally assigned to prediction mode 0 to prediction mode 2 to which prediction value a1 had been assigned. Stated differently, the encoding device swaps the prediction values of prediction mode 0 and prediction mode 2. With this, the encoding device can generate prediction value candidates that prioritize the median value of motion vectors of adjacent points, and encoding efficiency can be improved.

Note that although the above example shows using the median value as the method for assigning prediction values to prediction modes, the embodiment is not necessarily limited to this. For example, the encoding device may calculate an average value from the prediction values assigned to each prediction mode, and assign a prediction value close to the average value to prediction mode 0. With this, prediction value candidates that prioritize motion vectors close to the average of motion vectors of adjacent points can be generated, so encoding efficiency can be improved.

Note that the encoding device may first calculate a median value from motion vectors of adjacent points and assign it to prediction mode 0, and assign motion vectors of surrounding three-dimensional points other than the median value to prediction mode 1 and subsequent prediction modes using distance information of those three-dimensional points.

The encoding device may add information indicating whether to prioritize the median value (also referred to as median value priority information) to a header or the like. When the median value priority information indicates prioritizing the median value, the encoding device may assign the median value to prediction mode 0 using the above method, and otherwise may assign prediction values to prediction modes regardless of the median value. With this, the encoding device may be able to improve encoding efficiency by adaptively switching between cases where it wants to prioritize the median value and cases where it does not while performing encoding. The decoding device can appropriately decode the bitstream based on the median value priority information added to a header or the like.

Note that as an example of prediction value assignment change that prioritizes the median value, an example was shown of assigning the median value to prediction mode 0 and swapping the prediction value that was originally assigned to prediction mode 0 with the prediction mode to which the median value had been assigned, but the embodiment is not necessarily limited to this.

FIG. 140 is an explanatory diagram illustrating an example of prediction value information of motion vectors according to the present embodiment.

For example, as illustrated in FIG. 140, the encoding device may assign the median value to prediction mode 0, assign the prediction value that was originally assigned to prediction mode 0 to prediction mode 1, assign the prediction value that was originally assigned to prediction mode 1 to prediction mode 2, and so on, shifting the prediction values assigned to each prediction mode until a value is reassigned to the prediction mode to which the median value was originally assigned. With this, prediction value information that prioritizes prediction value candidates with close distances while prioritizing the median value of motion vectors of adjacent points can be generated, and encoding efficiency can be improved.

An example of prediction value assignment that prioritizes the median value or average value was shown, but the embodiment is not necessarily limited to this.

FIG. 141 and FIG. 142 are explanatory diagrams each illustrating an example of prediction value information of motion vectors according to the present embodiment.

For example, as illustrated in FIG. 141, the encoding device calculates statistical information of the prediction values of the prediction modes. The statistical information can be, for example, a median value, average value, variance, or standard deviation of adjacent points. The encoding device can change the assignment of prediction values based on the calculated statistical information (see FIG. 142).

A variation of the setting of prediction values for the three-dimensional point a to be encoded in the frame to be encoded will be described with reference to FIG. 143 through FIG. 146.

FIG. 143 is an explanatory diagram illustrating an example of points to be encoded according to the present embodiment. FIG. 144 is an explanatory diagram illustrating an example of prediction value information of motion vectors according to the present embodiment. FIG. 145 is an explanatory diagram illustrating an example of temporal mv according to the present embodiment. FIG. 146 is an explanatory diagram illustrating an example of prediction value information of motion vectors according to the present embodiment.

The encoding device may set the prediction value for the three-dimensional point a to be encoded (see FIG. 143) in the frame to be encoded like the prediction value information illustrated in FIG. 144. More specifically, the encoding device may set 0 (no prediction) as the prediction value for prediction mode 0, and may set the average value of the motion vectors of adjacent points a, b, and c (mv0, mv1, and mv2, respectively) as the prediction value for prediction mode 1. The encoding device may set the motion vectors of adjacent points a, b, and c (mv0, mv1, and mv2, respectively) as the prediction values for prediction modes 2, 3, and 4, respectively.

Note that the prediction values assigned to each prediction mode are not limited to these, and other prediction values may be assigned.

The encoding device may, for example, assign motion vectors within a reference frame (see FIG. 145) that is different from the frame to be encoded to prediction values. More specifically, the encoding device can use the motion vector of corresponding point a' of the three-dimensional point a to be encoded in a reference frame that has already been encoded or decoded (hereinafter referred to as temporal mv) as the prediction value for the three-dimensional point a to be encoded. When the target object is moving with constant motion, the motion vector value of the three-dimensional point to be encoded tends to be relatively close to the motion vector value of the corresponding point of the three-dimensional point to be encoded in the reference frame, so adding temporal mv as a prediction value to prediction candidates may be able to improve encoding efficiency.

An example of prediction value information when the prediction value of prediction mode 5 is added as temporal mv is illustrated in FIG. 146. Note that temporal mv may be added as the prediction value for other prediction modes (i.e., any of prediction modes 0 to 4). Moreover, the prediction value of any of the prediction modes in the prediction value information illustrated in FIG. 144 may be changed to temporal mv.

Note that the encoding device may calculate temporal mv for each MG in the reference frame and store it in memory, and use the temporal mv of the MG to which corresponding point a' belongs as the temporal mv of corresponding point a'. Accordingly, the memory amount can be reduced.

Note that the encoding device may calculate the temporal mv of the MG from the motion vectors of the three-dimensional points that belong to the MG. For example, the average value of the motion vectors of the three-dimensional points that belong to the MG may be used as the temporal mv of the MG. With this, while reducing the memory amount for storing temporal mv, encoding efficiency may be able to be improved by adding temporal mv to prediction candidates.

For example, the encoding device may calculate a global motion vector (hereinafter, global mv) of the frame to be encoded, and add the global mv to prediction candidates as a prediction value. The encoding device can calculate the global mv from, for example, the average value of the motion vectors in the frame to be encoded or the reference frame. The encoding device may add the calculated global mv to the bitstream. Accordingly, the decoding device can decode the global mv that the encoding device added as a prediction candidate from the bitstream, and can add the same global mv as the encoding device to prediction candidates.

The encoding device may, for example, select at least two or more motion vectors from the motion vectors added to prediction candidates, and add the average value of the selected two or more motion vectors to prediction candidates as a new prediction value. In this way, the encoding efficiency may be able to be improved.

The encoding device may, for example, store one or more motion vectors used in the past in memory as a new prediction value, and add at least one motion vector among them to prediction candidates as a new prediction value. In this way, the encoding efficiency may be able to be improved. Note that the encoding device may periodically or irregularly store motion vectors used for encoding or decoding in memory (that is, the memory that stores the one or more motion vectors used in the past described above), and may delete old motion vectors from the memory after a certain amount of time or more has elapsed since they were stored. In this way, the encoding device can assign new motion vectors to prediction candidates by updating the motion vectors stored in memory, and may be able to improve encoding efficiency.

In the description with reference to FIG. 40, an example was given in which when the encoding device encodes motion vectors of three-dimensional points, prediction units (Motion Group, MG) are provided according to the encoding or decoding order, and encoding or decoding is performed for each MG. For example, the encoding device can define the number of three-dimensional points included in an MG (MGSize), and divide the three-dimensional points into a plurality of MGs according to the encoding or decoding order to perform encoding or decoding.

Here, the encoding device may enable the prediction mode for encoding motion vectors to be set for each MG. In such cases, since the three-dimensional points included in the same MG share the prediction mode, the same value may be set for the three-dimensional points included in the same MG. With this, the encoding device may be able to improve encoding efficiency by reducing the code amount of the prediction mode value.

Note that the unit for setting the prediction mode is not limited to each MG, and may be based on any grouping of three-dimensional points.

An example of motion group definition will be described with reference to FIG. 147.

FIG. 147 is an explanatory diagram illustrating an example of reference destinations of motion groups according to the present embodiment.

In the example of reference destinations of motion groups illustrated in FIG. 147 (also referred to as the fourth example), encoded or decoded three-dimensional points within the same motion group are defined as referenceable. In the fourth example, encoded or decoded three-dimensional points within different motion groups are defined as referenceable. In the second example, three-dimensional points that have not been encoded or decoded are defined as non-referenceable. Stated differently, in the second example, only motion vectors of three-dimensional points that have already been encoded or decoded are used for calculating the prediction value of the motion vector of the target three-dimensional point. For example, encoded or decoded three-dimensional points within the same motion group may be added as adjacent points. For example, encoded or decoded three-dimensional points within different motion groups may be added as adjacent points. However, for example, three-dimensional points that have not been encoded or decoded are not added as adjacent points, whether they are within the same motion group or within different motion groups.

For example, in the example illustrated in FIG. 147, in calculating the prediction value of the motion vector of the target three-dimensional point that belongs to MG1, among the three-dimensional points that belong to MG1, motion vectors of encoded or decoded three-dimensional points may be used, and motion vectors of three-dimensional points that have not been encoded or decoded are not used. In the example illustrated in FIG. 147, in calculating the prediction value of the motion vector of the target three-dimensional point that belongs to MG1, motion vectors of three-dimensional points that belong to MG0 may be used, but motion vectors of three-dimensional points that belong to MGN (specifically, MGN where N is an integer greater than or equal to 2) are not used.

A prediction mode is set for each MG, and three-dimensional points within the same MG can be predicted and encoded using the same prediction mode. Here, the encoding device may determine whether to set a prediction mode for each MG. For example, the encoding device may calculate the prediction mode of the MG to which the three-dimensional point to be encoded belongs using the variance of motion vectors of decoded three-dimensional points within different MGs. The encoding device may set a prediction mode for the MG if the calculated variance is greater than or equal to a threshold, and otherwise may not set a prediction mode and estimate the prediction mode value as 0.

Note that in the fourth example, the size of the motion group may be described in a header or the like of the bitstream. For example, when the size of the motion group (MGSize) is 16, the encoding device may add MGSize=16 to the header of the bitstream. MGSize may be set to $2^n$, and encoding device 100 may add the value of n to the header of the bitstream.

In this way, even for three-dimensional points within the same motion group, by defining encoded or decoded three-dimensional points as referenceable, it may be possible to improve prediction accuracy and improve encoding efficiency. Moreover, by setting a prediction mode for each MG, overhead can be reduced compared to setting a prediction mode for each three-dimensional point, and encoding efficiency may be able to be improved.

FIG. 148 and FIG. 149 are explanatory diagrams each illustrating an example of syntax according to the present embodiment.

The example of syntax illustrated in FIG. 148 illustrates an example of the configuration of information included in a bitstream generated by the encoding device.

The syntax illustrated in FIG. 148 includes MGSize. MGSize indicates a unit for predicting motion vectors of three-dimensional points. A prediction mode value is set for every MGSize three-dimensional points, and three-dimensional points within the same MG are encoded or decoded using the same prediction mode.

The example of syntax illustrated in FIG. 149 illustrates an example of the configuration of information included in a bitstream generated by the encoding device.

The syntax illustrated in FIG. 149 may include PredMode, mvd_is_zero[k], mvd_is_one[k], mvd_minus2[k], and mvd_sign[k] for each of the 0th to NumLoD-th layers of LoD (also referred to as the jth layer).

PredMode indicates a prediction mode for encoding or decoding a motion vector of an ith three-dimensional point, and takes a value included in a range from 0 to M-1 (where M is the total number of prediction modes). When PredMode is not included in the bitstream (in other words, when the if statement condition "maxdiff >= Thfix[i] && NumPredMode[i] > 1" is not satisfied), PredMode may be estimated as 0. Note that the estimated value of PredMode is not limited to 0, and may be any value included in the range from 0 to M-1. The encoding device may separately add an estimated value for when PredMode is not included in the bitstream to a header or the like. PredMode may be binarized with a truncated unary code using the number of prediction modes to which prediction values are assigned and arithmetically encoded.

Note that mvd_is_zero[k], mvd_is_one[k], mvd_minus2[k], and mvd_sign[k] are the same as the data of the same names illustrated in FIG. 52, so detailed description thereof is omitted.

Hereinafter, an example of encoding processing in the present embodiment will be described.

FIG. 150 is a flowchart illustrating an example of encoding processing according to the present embodiment. The encoding processing illustrated in FIG. 150 is executed by an encoding device that encodes a motion vector of a vertex included in a three-dimensional mesh.

As illustrated in FIG. 150, in step S3701, the encoding device determines on a per group basis, from among a plurality of predetermined prediction modes, a prediction mode to be used for determining a prediction vector which is a prediction value of the motion vector, the group being a unit for determining the prediction vector.

In step S3702, the encoding device transmits information indicating the prediction mode determined in step S3701 and the total number of the predetermined plurality of prediction modes to the decoding device.

With this, the encoding device transmits the prediction mode determined for each group and the total number of prediction modes to the decoding device during encoding of the motion vector, and thus may be able to reduce the amount of information to be transmitted. If the encoding device were to determine a prediction mode for each vertex, it may be necessary to transmit information indicating the prediction mode determined for each vertex to the decoding device.

According to this aspect, the encoding device transmits information indicating the prediction mode determined for each group, and thus may be able to reduce the amount of information to be transmitted compared to a case where information indicating the prediction mode determined for each vertex is transmitted. As seen from the above, the encoding device is capable of improving encoding processing related to three-dimensional data.

For example, the motion vector may include an X component, a Y component, and a Z component. In such cases, the determining includes determining, as the prediction mode, on the per group basis, a first prediction mode that is a prediction mode for the X component, a second prediction mode that is a prediction mode for the Y component, and a third prediction mode that is a prediction mode for the Z component. The transmitting includes transmitting, as the information indicating the prediction mode, first information indicating the first prediction mode, second information indicating the second prediction mode, and third information indicating the third prediction mode.

With this, when the encoding device encodes a motion vector having an X component, a Y component, and a Z component, the encoding device encodes the motion vector using an appropriate prediction mode for each component, and thus may be able to reduce the amount of encoded data by reducing the prediction residual. Accordingly, the encoding device is capable of improving encoding processing related to three-dimensional data.

For example, the plurality of predetermined prediction modes may include at least a prediction mode that uses, as the prediction value, a median value of motion vectors of a plurality of points adjacent to the vertex.

With this, when the encoding device encodes a motion vector, the encoding device encodes the motion vector using the median value of motion vectors of a plurality of points as a prediction value, and thus may be able to reduce the amount of encoded data by reducing the prediction residual. For example, when the motion vector to be encoded is relatively close to the median value of motion vectors of a plurality of points, it may be possible to reduce the amount of encoded data. Accordingly, the encoding device is capable of improving encoding processing related to three-dimensional data.

For example, the plurality of predetermined prediction modes may include at least a prediction mode that uses, as the prediction value, a motion vector of a vertex corresponding to the vertex in a reference frame that is referenced during encoding of a frame including the vertex.

With this, when the encoding device encodes a motion vector, the encoding device encodes the motion vector using the motion vector of a vertex in the reference frame that corresponds to the vertex to be encoded as a prediction value, and thus may be able to reduce the amount of encoded data by reducing the prediction residual. For example, when the motion vector to be encoded is relatively close to the motion vector of the vertex corresponding to the vertex to be encoded in the reference frame, it may be possible to reduce the amount of encoded data. Accordingly, the encoding device is capable of improving encoding processing related to three-dimensional data.

For example, the plurality of predetermined prediction modes may include at least a prediction mode that uses a fixed value as the prediction value.

With this, when the encoding device encodes a motion vector, the encoding device encodes the motion vector using a fixed value as a prediction value, and thus may be able to reduce the amount of encoded data by reducing the prediction residual. For example, when the motion vector to be encoded is relatively close to a fixed value, it may be possible to reduce the amount of encoded data. Accordingly, the encoding device is capable of improving encoding processing related to three-dimensional data.

For example, the encoding device may set a prediction value of each of one or more prediction modes to which prediction values are not assigned to 0 among the plurality of predetermined prediction modes, and determine the prediction mode using the plurality of predetermined prediction modes after the setting.

With this, since the prediction values of one or more prediction modes to which prediction values are not assigned are set to 0, the encoding device can avoid encoding a motion vector using an indefinite value as a prediction value, even when encoding a motion vector using a prediction mode to which prediction values are not assigned. Accordingly, the encoding device is capable of improving encoding processing related to three-dimensional data.

Hereinafter, an example of decoding processing in the present embodiment will be described.

FIG. 151 is a flowchart illustrating an example of decoding processing according to the present embodiment. The decoding processing illustrated in FIG. 151 is executed by a decoding device that decodes a motion vector of a vertex included in a three-dimensional mesh.

As illustrated in FIG. 151, in step S3801, the decoding device receives, from an encoding device, (i) information indicating a prediction mode that is used for determining a prediction vector which is a prediction value of the motion vector, the prediction mode being determined on a per group basis, the group being a unit for determining the prediction vector, and (ii) the total number of the plurality of predetermined prediction modes.

In step S3802, the decoding device determines the prediction mode to be used for decoding the motion vector to be the prediction mode indicated in the information received, using the total number of the plurality of predetermined prediction modes indicated in the information received in step S3801.

With this, the decoding device receives the prediction mode determined for each group and the total number of prediction modes from the encoding device during decoding of the motion vector, and thus may be able to reduce the amount of information to be received. If a prediction mode were to be determined for each vertex, it may be necessary to receive information indicating the prediction mode determined for each vertex. According to this aspect, the decoding device receives information indicating the prediction mode determined for each group, and thus may be able to reduce the amount of information to be received compared to a case where information indicating the prediction mode determined for each vertex is received. As seen from the above, the decoding device is capable of improving decoding processing related to three-dimensional data.

For example, the motion vector may include an X component, a Y component, and a Z component. In such cases, the receiving includes receiving, as the information indicating the prediction mode, on the per group basis, first information indicating a first prediction mode that is a prediction mode for the X component, second information indicating a second prediction mode that is a prediction mode for the Y component, and third information indicating a third prediction mode that is a prediction mode for the Z component. The decoding device determines prediction modes to be used for decoding the X component, the Y component, and the Z component of the motion vector to respectively be the first prediction mode, the second prediction mode, and the third prediction mode indicated in the information received, using the total number of the plurality of predetermined prediction modes.

Accordingly, when the decoding device decodes a motion vector having an X component, a Y component, and a Z component, the decoding device may be able to receive less encoded data transmitted from the encoding device and decode the motion vector using an appropriate prediction mode for each component. Accordingly, the decoding device is capable of improving decoding processing related to three-dimensional data.

For example, the plurality of predetermined prediction modes may include at least a prediction mode that uses, as the prediction value, a median value of motion vectors of a plurality of points adjacent to the vertex.

Accordingly, when the decoding device decodes a motion vector, the decoding device decodes the motion vector using the median value of the motion vectors of a plurality of points as a prediction value, and thus may be able to decode the motion vector using a smaller prediction residual included in less encoded data transmitted from the encoding device. For example, when the motion vector to be encoded is relatively close to the median value of motion vectors of a plurality of points, it may be possible to decode the motion vector from less encoded data. Accordingly, the decoding device is capable of improving decoding processing related to three-dimensional data.

For example, the plurality of predetermined prediction modes may include at least a prediction mode that uses, as the prediction value, a motion vector of a vertex corresponding to the vertex in a reference frame that is referenced during encoding of a frame including the vertex.

Accordingly, when the decoding device decodes a motion vector, the decoding device decodes the motion vector using the motion vector of a vertex in the reference frame that corresponds to the vertex to be decoded as a prediction value, and thus may be able to decode the motion vector using a smaller prediction residual included in less encoded data transmitted from the encoding device. For example, when the motion vector to be decoded is relatively close to the motion vector of the vertex corresponding to the vertex to be decoded in the reference frame, it may be possible to decode the motion vector from less encoded data. Accordingly, the decoding device is capable of improving decoding processing related to three-dimensional data.

For example, the plurality of predetermined prediction modes may include at least a prediction mode that uses a fixed value as the prediction value.

Accordingly, when the decoding device decodes a motion vector, the decoding device decodes the motion vector using a fixed value as a prediction value, and thus may be able to decode the motion vector using a smaller prediction residual included in less encoded data transmitted from the encoding device. For example, when the motion vector to be decoded is relatively close to a fixed value, it may be possible to decode the motion vector from less encoded data. Accordingly, the decoding device is capable of improving decoding processing related to three-dimensional data.

For example, a prediction value of each of one or more prediction modes to which prediction values are not assigned among the plurality of predetermined prediction modes may be set to 0, and the prediction mode to be used for decoding the motion vector may be determined using the plurality of predetermined prediction modes after the setting.

With this, since the prediction values of one or more prediction modes to which prediction values are not assigned are set to 0, the decoding device can avoid decoding a motion vector using an indefinite value as a prediction value, even when decoding a motion vector using a prediction mode to which prediction values are not assigned. Accordingly, the decoding device is capable of improving decoding processing related to three-dimensional data.

Hereinafter, another example of encoding processing and a decoding device in the present embodiment will be described.

An encoding device that encodes information of a three-dimensional point may determine on a per group basis, from among a plurality of predetermined prediction modes, a prediction mode to be used for determining a prediction value of the information of the three-dimensional point, the group being a unit for prediction processing. In that case, the encoding device transmits information indicating the determined prediction mode and the total number of the plurality of predetermined prediction modes to the decoding device.

With this, the encoding device transmits the prediction mode determined for each group and the total number of prediction modes to the decoding device during encoding of the information of the three-dimensional points, and thus may be able to reduce the amount of information to be transmitted. If the encoding device were to determine a prediction mode for each three-dimensional point, it may be necessary to transmit information indicating the prediction mode determined for each three-dimensional point to the decoding device. According to this aspect, the encoding device transmits information indicating the prediction mode determined for each group, and thus may be able to reduce the amount of information to be transmitted compared to a case where information indicating the prediction mode determined for each three-dimensional point is transmitted. As seen from the above, the encoding device is capable of improving encoding processing related to three-dimensional data.

For example, the information of the three-dimensional points may be attribute information or position information.

With this, the encoding device may be able to reduce the amount of information to be transmitted by using attribute information or position information as the information of the three-dimensional points. As seen from the above, the encoding device is capable of improving encoding processing related to three-dimensional data.

A decoding device that decodes information of a three-dimensional point may receive, from an encoding device, (i) information indicating a prediction mode that is used for determining a prediction value of the information of the three-dimensional point, the prediction mode being determined from among a plurality of predetermined prediction modes on a per group basis, the group being a unit for prediction processing, and (ii) a total number of the plurality of predetermined prediction modes. In that case, the decoding device determines the prediction mode to be used for decoding the information of the three-dimensional point to be the prediction mode indicated in the information received, using the total number of the plurality of predetermined prediction modes.

According to the above aspect, the decoding device receives the prediction mode determined for each group and the total number of prediction modes from the encoding device during decoding of the information of the three-dimensional point, and thus may be able to reduce the amount of information to be received. If a prediction mode were to be determined for each three-dimensional point, it may be necessary to receive information indicating the prediction mode determined for each three-dimensional point. According to this aspect, the decoding device receives information indicating the prediction mode determined for each group, and thus may be able to reduce the amount of information to be received compared to a case where information indicating the prediction mode determined for each three-dimensional point is received. As seen from the above, the decoding device is capable of improving decoding processing related to three-dimensional data.

For example, the information of the three-dimensional points may be attribute information or position information.

According to this aspect, the decoding device may be able to reduce the amount of information to be received by using attribute information or position information as the information of the three-dimensional points. As seen from the above, the decoding device is capable of improving decoding processing related to three-dimensional data.

Note that when encoding attribute information of three-dimensional points, prediction units (PU) may be provided according to the encoding or decoding order, and the attribute information may be encoded or decoded for each PU. For example, the number of three-dimensional points included in PU (PuSize) is defined. In such cases, the three-dimensional data encoding device or three-dimensional data decoding device can divide the three-dimensional points into a plurality of PUs according to the encoding or decoding order to perform encoding or decoding.

Note that the encoding or decoding order of attribute information of three-dimensional points may be any order. For example, the three-dimensional data encoding device or three-dimensional data decoding device may generate level of detail (LoD) and sequentially perform encoding or decoding for each LoD layer.

<Other examples>

Although the aspects of the encoding device and the decoding device have thus far been described according to the embodiment, the aspects of the encoding device and the decoding device are not limited to the embodiment. Modifications that may be conceived by a person skilled in the art may be applied to the embodiment, and a plurality of constituent elements in the embodiment may be combined in any manner.

For example, processing performed by a specific constituent element in the embodiment may be performed by a different constituent element instead of the specific constituent element. Moreover, the order of processes may be changed or processes may be performed in parallel.

Moreover, as stated above, it is possible to implement, as an integrated circuit, at least part of the plurality of constituent elements in the present disclosure. At least part of the processes in the present disclosure may be used as an encoding method or a decoding method. A program for causing a computer to execute the encoding method or the decoding method may be used. Furthermore, a non-transitory computer-readable recording medium on which the program is recorded may be used. In addition, a bitstream for causing the decoding device to perform decoding processing may be used.

Moreover, at least part of the plurality of constituent elements and the processes in the present disclosure may be used as a transmitting device, a receiving device, a transmitting method, and a receiving method. A program for causing a computer to execute the transmitting method or the receiving method may be used. Furthermore, a non-transitory

**EP 4 742 160 A1**

computer-readable recording medium on which the program is recorded may be used.

[Industrial Applicability]

The present disclosure is useful in, for example, an encoding device, a decoding device, a transmitting device, a receiving device, and the like related to a three-dimensional mesh and can be applied to a computer graphics system, a three-dimensional data display system, and the like.

[Reference Signs List]

100 encoding device
101, 121, 144 vertex information encoder
102, 145 connection information encoder
103, 122 attribute information encoder
104, 204, 521 preprocessor
105, 205, 623 postprocessor
110 three-dimensional data encoding system
111, 211 controller
112, 212 input/output processor
113 three-dimensional data encoder
114 system multiplexer
115 three-dimensional data generator
123 metadata encoder
124 multiplexer
131 vertex image generator
132 attribute image generator
133 metadata generator
134 video encoder
141 two-dimensional data encoder
142 mesh data encoder
143 texture encoder
148 description encoder
151, 251 circuit
152, 252 memory
200 decoding device
201, 221, 244 vertex information decoder
202, 245 connection information decoder
203, 222 attribute information decoder
210 three-dimensional data decoding system
213 three-dimensional data decoder
214 system demultiplexer
215, 247 presenter
216 user interface
223 metadata decoder
224 demultiplexer
231 vertex information generator
232 attribute information generator
234 video decoder
241 two-dimensional data decoder
242 mesh data decoder
243 texture decoder
246 mesh reconstructor
248 description decoder
300 network
310 external connector
631 frame header decoder

# EP 4 742 160 A1

632 vertex geometry coordinate predictor
633 vertex geometry coordinate difference decoder
634 reconstructor
1000 encoding unit
1001, 1101 LoD generator
1002, 1102 neighbor searcher
1003, 1103 predictor
1004 residual calculator
1005 quantizer
1006 arithmetic encoding unit
1007, 1105 inverse quantizer
1008, 1106 reconstructor
1009, 1107 memory
1100 decoding unit
1104 arithmetic decoding unit

## Claims

1. An encoding method executed by an encoding device that encodes a motion vector of a vertex included in a three-dimensional mesh, the encoding method comprising:

   determining on a per group basis, from among a plurality of predetermined prediction modes, a prediction mode to be used for determining a prediction vector which is a prediction value of the motion vector, the group being a unit for determining the prediction vector; and
   transmitting (i) information indicating the prediction mode determined and (ii) a total number of the plurality of predetermined prediction modes to a decoding device.

2. The encoding method according to claim 1, wherein

   the motion vector includes an X component, a Y component, and a Z component,
   the determining includes determining, as the prediction mode, on the per group basis, a first prediction mode that is a prediction mode for the X component, a second prediction mode that is a prediction mode for the Y component, and a third prediction mode that is a prediction mode for the Z component, and
   the transmitting includes transmitting, as the information indicating the prediction mode, first information indicating the first prediction mode, second information indicating the second prediction mode, and third information indicating the third prediction mode.

3. The encoding method according to claim 1 or 2, wherein
   the plurality of predetermined prediction modes include at least a prediction mode that uses, as the prediction value, a median value of motion vectors of a plurality of points adjacent to the vertex.

4. The encoding method according to claim 1 or 2, wherein
   the plurality of predetermined prediction modes include at least a prediction mode that uses, as the prediction value, a motion vector of a vertex corresponding to the vertex in a reference frame that is referenced during encoding of a frame including the vertex.

5. The encoding method according to claim 1 or 2, wherein
   the plurality of predetermined prediction modes include at least a prediction mode that uses a fixed value as the prediction value.

6. The encoding method according to claim 1 or 2, further comprising:

   among the plurality of predetermined prediction modes, setting a prediction value of each of one or more prediction modes to which prediction values are not assigned to 0, wherein
   in the determining, the prediction mode is determined using the plurality of predetermined prediction modes after the setting.

80

7. A decoding method executed by a decoding device that decodes a motion vector of a vertex included in a three-dimensional mesh, the decoding method comprising:

   receiving, from an encoding device, (i) information indicating a prediction mode that is used for determining a prediction vector which is a prediction value of the motion vector, the prediction mode being determined from among a plurality of predetermined prediction modes on a per group basis, the group being a unit for determining the prediction vector, and (ii) a total number of the plurality of predetermined prediction modes; and

   determining a prediction mode to be used for decoding the motion vector to be the prediction mode indicated in the information received, using the total number of the plurality of predetermined prediction modes.

8. The decoding method according to claim 7, wherein

   the motion vector includes an X component, a Y component, and a Z component,

   the receiving includes receiving, as the information indicating the prediction mode, on the per group basis, first information indicating a first prediction mode that is a prediction mode for the X component, second information indicating a second prediction mode that is a prediction mode for the Y component, and third information indicating a third prediction mode that is a prediction mode for the Z component, and

   determining prediction modes to be used for decoding the X component, the Y component, and the Z component of the motion vector to respectively be the first prediction mode, the second prediction mode, and the third prediction mode indicated in the information received, using the total number of the plurality of predetermined prediction modes.

9. The decoding method according to claim 7 or 8, wherein
   the plurality of predetermined prediction modes include at least a prediction mode that uses, as the prediction value, a median value of motion vectors of a plurality of points adjacent to the vertex.

10. The decoding method according to claim 7 or 8, wherein
    the plurality of predetermined prediction modes include at least a prediction mode that uses, as the prediction value, a motion vector of a vertex corresponding to the vertex in a reference frame that is referenced during encoding of a frame including the vertex.

11. The decoding method according to claim 7 or 8, wherein
    the plurality of predetermined prediction modes include at least a prediction mode that uses a fixed value as the prediction value.

12. The decoding method according to claim 7 or 8, further comprising:

    among the plurality of predetermined prediction modes, setting a prediction value of each of one or more prediction modes to which prediction values are not assigned to 0, wherein

    in the determining, the prediction mode to be used for decoding the motion vector is determined using the plurality of predetermined prediction modes after the setting.

13. An encoding device that encodes a motion vector of a vertex included in a three-dimensional mesh, the encoding device comprising:

    memory; and
    a circuit having access to the memory, wherein
    in operation, the circuit:

       determines on a per group basis, from among a plurality of predetermined prediction modes, a prediction mode to be used for determining a prediction vector which is a prediction value of the motion vector, the group being a unit for determining the prediction vector; and

       transmits (i) information indicating the prediction mode determined and (ii) a total number of the plurality of predetermined prediction modes to a decoding device.

14. A decoding device that decodes a motion vector of a vertex included in a three-dimensional mesh, the decoding device comprising:

memory; and
a circuit having access to the memory, wherein
in operation, the circuit:

receives, from an encoding device, (i) information indicating a prediction mode that is used for determining a prediction vector which is a prediction value of the motion vector, the prediction mode being determined from among a plurality of predetermined prediction modes on a per group basis, the group being a unit for determining the prediction vector, and (ii) a total number of the plurality of predetermined prediction modes; and

determines a prediction mode to be used for decoding the motion vector to be the prediction mode indicated in the information received, using the total number of the plurality of predetermined prediction modes.

# FIG. 1

Three-dimensional mesh

# FIG. 2

Attribute information

Vertex information

Connection information

Attribute information

# FIG. 3

Three-dimensional mesh

Mapping
information

Two-dimensional image

## FIG. 4

# FIG. 5

100

Encoding device

101

Vertex information encoder

102

Connection information encoder

103

Attribute information encoder

Three-dimensional mesh

Bitstream

FIG. 6

100

Encoding device

104 Preprocessor

101 Vertex information encoder

102 Connection information encoder

103 Attribute information encoder

105 Postprocessor

Three-dimensional mesh

Bitstream

# FIG. 7

EP 4 742 160 A1

# FIG. 8

200

Decoding device

204

Preprocessor

201

Vertex
information
decoder

202

Connection
information
decoder

203

Attribute
information
decoder

205

Postprocessor

Bitstream

Three-dimensional mesh

# FIG. 9

| Bitstream | | |
|---|---|---|
| Connection information | Vertex information | Attribute information |

# FIG. 10

| Bitstream | | |
|---|---|---|
| File | File | File |
| Connection information | Vertex information | Attribute information |

# FIG. 11

Bitstream

| Sub-bitstream | Sub-bitstream | Sub-bitstream |
|---|---|---|
| Connection information | Vertex information | Attribute information |

# FIG. 12

EP 4 742 160 A1

FIG. 13

FIG. 14

| | Position information | Attribute information |
|---|---|---|
| n = 1 | $G(1) = (x_1, y_1, z_1)$ | $A(1) = (R_1, G_1, B_1)$ |
| n = 2 | $G(2) = (x_2, y_2, z_2)$ | $A(2) = (R_2, G_2, B_2)$ |
| ⋮ | ⋮ | ⋮ |
| n = N | $G(N) = (x_N, y_N, z_N)$ | $A(N) = (R_N, G_N, B_N)$ |

# FIG. 15

# FIG. 16

|  | Position information | Attribute information |
|---|---|---|
| $n = 1$ | $G(1) = (x_1, y_1, z_1)$ | $A1(1) = (R_1, G_1, B_1)$ |
| $n = 2$ | $G(2) = (x_2, y_2, z_2)$ | $A1(2) = (R_2, G_2, B_2)$ |
| ⋮ | ⋮ | ⋮ |
| $n = N$ | $G(N) = (x_N, y_N, z_N)$ | $A1(N) = (R_N, G_N, B_N)$ |

Vertex information

| $m = 1$ | $A2(1) = (U_1, V_1)$ |
|---|---|
| ⋮ | ⋮ |
| $m = M$ | $A2(M) = (U_M, V_M)$ |

Attribute information

| $k = 1$ | $n[1, 3, 4]$ | $m[2, 4, 6]$ |
|---|---|---|
| ⋮ | ⋮ | ⋮ |
| $k = K$ | $n[1, N-1, N]$ | $m[10, 20, M]$ |

Connection information

## FIG. 17

Static object

Frame #1

Dynamic object

Frame #1  Frame #2  Frame #3

Time

FIG. 18

EP 4 742 160 A1

FIG. 19

## FIG. 20

EP 4 742 160 A1

FIG. 21

Three-dimensional data decoder 213

Bitstream → Demultiplexer 224

Compressed vertex information / Metadata → Video decoder 234
Compressed attribute information / Metadata → Video decoder 234

Compressed metadata → Metadata decoder 223

Vertex image → Vertex information generator 231 → Vertex information

Attribute image → Attribute information generator 232 → Attribute information

Metadata

# FIG. 22

FIG. 23

EP 4 742 160 A1

# FIG. 24

100

Encoding device

151

Circuit

152

Memory

# FIG. 25

200

Decoding device

251

Circuit

252

Memory

# FIG. 26

Three-dimensional mesh frame →

100

Encoding device

→ Bitstream →

200

Decoding device

→ Three-dimensional mesh frame →

# FIG. 27

100

Encoding device

521

Preprocessor

522

Encoding processor

Three-dimensional mesh frame →

Base mesh →

Displacement information →

Attribute map →

→ Bitstream →

# FIG. 28

200

Decoding device

622

Base mesh

623

Bitstream → Decoding processor

Displacement information → Postprocessor → Three-dimensional mesh frame

Attribute map

# FIG. 29

# FIG. 30

200

FIG. 31

200

Decoding device

## FIG. 32

Three-dimensional coordinates decoded from bitstream

A(6, 8, 9)
B(10, 6, 7)
C(14, 8, 9)
D(10, 10, 11)
E(7, 12, 9)
F(14, 12, 9)
G(10, 14, 11)

(a)

Vertices of decoded three-dimensional mesh of frame at time (t)

G(10, 14, 11)
E(7, 12, 9)
F(14, 12, 9)
D(10, 10, 11)
A(6, 8, 9)
C(14, 8, 9)
B(10, 6, 7)

(b)

# FIG. 33

Vertices of three-dimensional mesh of frame (past frame) at time (t−1)

G(8,10,9)

E(5,9,8)  F(9,9,8)

D(8,8,9)

A(4,7,8)  C(9,7,8)

B(8,6,7)

(a)

Prediction information

For A(2, 1, 1)
For B(2, 0, 0)
For C(5, 1, 1)
For D(2, 2, 2)
For E(2, 3, 1)
For F(5, 3, 1)
For G(2, 4, 2)

(b)

Vertices of decoded three-dimensional mesh of frame (current frame) at time (t)

G(10, 14, 11)

E(7, 12, 9)  F(14, 12, 9)

D(10, 10, 11)

A(6, 8, 9)  C(14, 8, 9)

B(10, 6, 7)

(c)

EP 4 742 160 A1

# FIG. 34

Original mesh

# FIG. 35

Second submesh

First submesh

## FIG. 36

Three-dimensional point q
Position information (x2, y2, z2)
Motion vector Aq

Threshold THd

Three-dimensional point r
Position information (x3, y3, z3)
Motion vector Ar

Distance d(p,q) < threshold THd

Distance d(p,r) ≥ threshold THd

Three-dimensional point p
Position information (x1, y1, z1)
Motion vector Ap

# FIG. 37

| Vertices of three-dimensional mesh of frame (past frame) at time (t−1) | Prediction information (motion vector) | Vertices of decoded three-dimensional mesh of frame (current frame) at time (t) |
|---|---|---|
| G(8,10,9) E(5,9,8) F(9,9,8) D{8,8,9} A(4,7,8) C(9,7,8) B(8,6,7) | For A(2, 1, 1) For B(2, 0, 0) For C(5, 1, 1) For D(2, 2, 2) For E(2, 3, 1) For F(5, 3, 1) For G(2, 4, 2) Distance DA in past frame may be used instead of distance DA in current frame | G(10, 14, 11) E(7, 12, 9) F(14, 12, 9) D(10, 10, 11) A(6, 8, 9) C(14, 8, 9) B(10, 6, 7) |
| (a) | (b) | (c) |

EP 4 742 160 A1

# FIG. 38

START

S101

Select three-dimensional points having connectivity with target three-dimensional point as first adjacent point candidates

S102

Select, from first adjacent point candidates, three-dimensional points that have been encoded or decoded before target three-dimensional point as second adjacent point candidates

S103

Calculate distance between target three-dimensional point and second adjacent point candidates

S104

Select, from second adjacent point candidates, three-dimensional points equal to or less than maximum number of adjacent points as adjacent points of target three-dimensional point in order of proximity

END

# FIG. 39

(a)

· First adjacent point candidates: a, b, c, d, e, g, h

· Encoding order or decoding order: a→b→c→d→e→f→g→h

(b)

· Second adjacent point candidates: a, b, c, d, e

· D(d) < D(b) < D(c) < D(a) < D(e)
(D(x): distance between three-dimensional point f and point x)

(c)

· Adjacent points of target three-dimensional point f
when maximum number of adjacent points = 3: b, c, d

114

# FIG. 40

# FIG. 41

```
basemesh_header {
   ...
   MGSize
   ...
}
```

FIG. 42

Encoding order or decoding order

Referenceable

Referenceable

Non-referenceable

Referenceable

Three-dimensional point

MG0

MG1

MGN

# FIG. 43

EP 4 742 160 A1

## FIG. 44

MG (Motion Group)

A

B

C

Original mesh

## FIG. 45

MG1

MG0

A1

A2

B2

B1

C1

C2

Second submesh

First submesh

# FIG. 46

START

S201

Select one or more reference three-dimensional points from among plurality of three-dimensional points

S202

Calculate prediction value of second information of target three-dimensional point to be encoded using first information of each of one or more reference three-dimensional points

END

# FIG. 47

START

S301

Select one or more reference three-dimensional points from among plurality of three-dimensional points

S302

Calculate prediction value of second information of target three-dimensional point to be decoded using first information of each of one or more reference three-dimensional points

END

# FIG. 48

c1

b1

d(b0, b1) = 8          d(b1, b2) = 6

b0                                              a2

b2

a0          c2

d(a0, a1) = 11

c0

d(a1, a2) = 12

a1

d(x, y): distance between point x and point y

# FIG. 49

| (Points) | | | (LoD) | (Thres_LoD) | |
|---|---|---|---|---|---|
| a0 | a1 | a2 | LoD0 | Thres_LoD[0] = 10 | sparse |
| b0 | b1 | b2 | LoD1 | Thres_LoD[1] = 5 | ↕ |
| c0 c1 | c2 | | LoD2 | Thres_LoD[2] = 0 | dense |

# FIG. 50

| (Points) | (LoD) |
|---|---|
| a0    a1    a2 | LoD0 |
| b0    b1    b2 | LoD1 |
| c0   c1   c2 | LoD2 |

# FIG. 51

```
basemesh_header {
    ...
    NumLoD
    ...
    for (i = 0; i < NumLoD; i++) {
        NumOfPoint[i]
    }
    ...
    for (i = 0; i < NumLoD-1; i++) {
        Thres_Lod[i]
    }
    ...
    for (i = 0; i < NumLoD; i++) {
        NumNeiCnt[i]
    }
    ...
    for (i = 0; i < NumLoD; i++) {
        THd[i]
    }
    ...
    for (i = 0; i < NumLoD; i++) {
        QS[i]
    }
    ...
}
```

## FIG. 52

```
basemesh_mv_data {
    …
    for (j = 0; j < NumLoD; j++) {
        for (i = 0; i < NumOfPoint[j]; i++) {
            for (k = 0; k < 3; k++) {
                mvd_is_zero[k]
                if (mvd_is_zreo[k] == 0) {
                    mvd_is_one[k]
                    if (mvd_is_one[k] == 0)
                        mvd_minus2[k]
                    mvd_sign[k]
                }
            }
        }
    }
    …
}
```

## FIG. 53

```
if mvd_is_zero[k] == 1 then mvd[k] = 0
else if mvd_is_one[k] == 1 then mvd[k] = (1 – (mvd_sign[k] << 1) ) * 1
else mvd[k] = (1 – (mvd_sign[k] << 1) ) * (mvd_minus2[k] + 2)
```

## FIG. 54

```
if mvd_is_zero[k] == 1 then mvd[k] = 0
else if mvd_is_one[k] == 1 then mvd = (1 – (mvd_sign[k] << 1) ) * 1
else if mvd_is_two[k] == 1 then mvd[k] = (1 – (mvd_sign [k] << 1) ) * 2
else mvd = (1 – (mvd_sign[k] << 1) ) * (mvd_minus3[k] + 3)
```

# FIG. 55

START

Generate LoD — S1001

For each LoD
(Start loop A) — S1002

For each three-dimensional point
that belongs to focused LoD
(Start loop B) — S1003

Search for neighboring points of point P — S1004

Calculate weighted average of neighboring
points, set as prediction value of point P — S1005

Calculate prediction residual of point P — S1006

Calculate quantization value of point P — S1007

Encode quantization value of point P — S1008

Calculate inverse quantization value of point P — S1009

Calculate reconstructed value of point P — S1010

(End loop B) — S1011

(End loop A) — S1012

END

# FIG. 56

START

Generate LoD — S1101

For each LoD
(Start loop A) — S1102

For each three-dimensional point
that belongs to focused LoD
(Start loop B) — S1103

Search for neighboring points of point P — S1104

Calculate weighted average of neighboring
points, set as prediction value of point P — S1105

Decode quantization value of point P — S1106

Calculate inverse quantization value of point P — S1107

Calculate reconstructed value of point P — S1108

(End loop B) — S1109

(End loop A) — S1110

END

# FIG. 57

| Prediction mode | Prediction value |
|---|---|
| 0 | Average value of a0, a1, a2, and b1 |
| 1 | b1 |
| 2 | a2 |
| 3 | a1 |
| 4 | a0 |

# FIG. 58

# FIG. 59

| Prediction mode | Prediction value |
|---|---|
| 0 | Average value of a0 and a1 |
| 1 | a1 |
| 2 | a0 |
| 3 | not available |
| 4 | not available |

## FIG. 60

| Prediction mode | Prediction value |
|---|---|
| 0 | Average value of a0, a1, a2, and b1 (Xave, Yave, Zave) |
| 1 | b1 = (Xb1, Yb1, Zb1) |
| 2 | a2 = (Xa2, Ya2, Za2) |
| 3 | a1 = (Xa1, Ya1, Za1) |
| 4 | a0 = (Xa0, Ya0, Za0) |

## FIG. 61

| Prediction mode (X) | Prediction value |
|---|---|
| 0 | Average value of a0, a1, a2, and b1 Xave |
| 1 | b1 = Xb1 |
| 2 | a2 = Xa2 |
| 3 | a1 = Xa1 |
| 4 | a0 = Xa0 |

## FIG. 62

| Prediction mode (Y) | Prediction value |
|---|---|
| 0 | Average value of a0, a1, a2, and b1 Yave |
| 1 | b1 = Yb1 |
| 2 | a2 = Ya2 |
| 3 | a1 = Ya1 |
| 4 | a0 = Ya0 |

# FIG. 63

| Prediction mode (Z) | Prediction value |
|---|---|
| 0 | Average value of a0, a1, a2, and b1<br>Zave |
| 1 | b1 = Zb1 |
| 2 | a2 = Za2 |
| 3 | a1 = Za1 |
| 4 | a0 = Za0 |

# FIG. 64

| Prediction mode (YZ) | Prediction value |
|---|---|
| 0 | Average value of a0, a1, a2, and b1<br>(Yave, Zave) |
| 1 | b1 = (Yb1, Zb1) |
| 2 | a2 = (Ya2, Za2) |
| 3 | a1 = (Ya1, Za1) |
| 4 | a0 = (Ya0, Za0) |

# FIG. 65

| Prediction mode | Binarized data |
|---|---|
| 0 | 0 |
| 1 | 10 |
| 2 | 110 |
| 3 | 1110 |
| 4 | 1111 |

# FIG. 66

| Prediction mode | Binarized data |
|---|---|
| 0 | 0 |
| 1 | 10 |
| 2 | 110 |
| 3 | 1110 |
| 4 | 11110 |

# FIG. 67

| Prediction mode | Binarized data |
|---|---|
| 0 | 000 |
| 1 | 001 |
| 2 | 010 |
| 3 | 011 |
| 4 | 100 |

## FIG. 68

| Prediction mode | Binarized data |
|---|---|
| 0 | 0 |
| 1 | 10 |
| 2 | 110 |
| 3 | 1110 |
| 4 | 1111 |

When prediction mode 3 is selected

1     110

One bit     Remaining bits

Perform arithmetic encoding using context for "one bit"

Perform arithmetic encoding using context for "remaining bits"

# FIG. 69

START

Binarize prediction mode value with truncated unary code using number of prediction modes M ⌐S1201

Perform arithmetic encoding on binarized data in truncated unary code ⌐S1202

END

# FIG. 70

START

Perform arithmetic decoding on bitstream using number of prediction modes M to generate binarized data in truncated unary code ⌐S1301

Calculate prediction mode value from binarized data in truncated unary code ⌐S1302

END

# FIG. 71

| Prediction mode | Prediction value |
|---|---|
| 0 | Average value of a0 and a1 |
| 1 | a1 |
| 2 | a0 |
| 3 | not available |
| 4 | not available |

available (for modes 0, 1, 2)

# FIG. 72

| Prediction mode | Binarized data |
|---|---|
| 0 | 0 |
| 1 | 10 |
| 2 | 11 |

When prediction mode 2 is selected

| 1 | 1 |
|---|---|

One bit — Remaining bits

Perform arithmetic encoding using context for "one bit"

Perform arithmetic encoding using context for "remaining bits"

EP 4 742 160 A1

# FIG. 73

START

S1301
Calculate number L of prediction modes to which prediction values are assigned

S1302
Binarize prediction mode value with truncated unary code using L

S1303
Perform arithmetic encoding on binarized data in truncated unary code

END

# FIG. 74

START

S1401
Calculate number L of prediction modes to which prediction values are assigned

S1402
Generate binarized data in truncated unary code by performing arithmetic decoding on bitstream using L

S1403
Calculate prediction mode value from binarized data in truncated unary code

END

## FIG. 75

```
START
```

S1501

Calculate maximum absolute
difference value maxdiff of
motion vectors of N adjacent
points

S1502

maxdiff < Thfix ?  →No

Yes

S1503

Determine prediction mode as
prediction mode 0 (average
value)

S1504

Select prediction mode

S1505

Perform arithmetic encoding
on prediction mode value of
selected prediction mode

```
END
```

## FIG. 76

```
maxdiff = -1
for (i = 0; i < N; i++) {
    for (j = i+1; j < N; j++) {
        diff = abs(a[i] – a[j]);
        if (diff > maxdiff) {
            maxdiff = diff;
        }
    }
}
```

# FIG. 77

START

S1601

Calculate maximum absolute
difference value maxdiff of motion
vectors of N adjacent points

S1602

maxdiff < Thfix ?

No

Yes

S1603

Determine prediction mode
as prediction mode 0
(average value)

S1604

Decode prediction mode value
from bitstream

END

## FIG. 78

```
basemesh_header {
   ...
   NumLoD

   ...
   for (i = 0; i < NumLoD; i++) {
      NumNeiCnt[i]
   }

   ...
   for (i = 0; i < NumLoD; i++) {
      NumPredMode[i]
   }

   ...
   for (i = 0; i < NumLoD; i++) {
      Thfix[i]
   }

   ...
   for (i = 0; i < NumLoD; i++) {
      NumOfPoint[i]
   }
   ...
}
```

## FIG. 79

```
basemesh_mv_data {
   ...
   for (j = 0; j < NumLoD; j++) {
      for (i = 0; i < NumOfPoint[j]; i++) {
         if (maxdiff >= Thfix[i] && NumPredMode[i] > 1)
            PredMode
         for (k = 0; k < 3; k++) {
            mvd_is_zero[k]
            if (mvd_is_zero[k] == 0) {
               mvd_is_one[k]
               if (mvd_is_one[k] == 0)
                  mvd_minus2[k]
               mvd_sign[k]
            }
         }
      }
   }
   ...
}
```

# FIG. 80

START

Generate LoD ── S1701

For each LoD
(Start loop A) ── S1702

For each three-dimensional point
that belongs to focused LoD
(Start loop B) ── S1703

Search for neighboring points of point P ── S1704

Determine prediction value of point P ── S1705

Calculate prediction residual of point P ── S1706

Calculate quantization value of point P ── S1707

Encode quantization value of point P ── S1708

Calculate inverse quantization value of point P ── S1709

Calculate reconstructed value of point P ── S1710

(End loop B) ── S1711

(End loop A) ── S1712

END

# FIG. 81

S1705

START

S1801

Calculate weighted average value of motion vectors of N adjacent points available for prediction, assign to prediction mode 0

S1802

Calculate maximum absolute difference value maxdiff of motion vectors of N adjacent points

S1803

maxdiff < Thfix ?

No

Yes

S1804

Determine prediction mode as prediction mode 0 (average value)

S1805

Determine prediction mode by selection

S1806

Perform arithmetic encoding on prediction mode value of selected prediction mode

END

# FIG. 82

S1805

START

Assign motion vectors of N adjacent points to prediction mode 1 through prediction mode N in order from those with smaller distances from target point — S1811

Calculate cost of each prediction mode, select prediction mode that minimizes cost — S1812

END

# FIG. 83

```
                    ┌─────────────┐
                    │    START    │
                    └─────────────┘
                           │
                           ▼                    S1821
        ┌──────────────────────────────────────┐
        │          i = 0, mincost = ∞           │
        └──────────────────────────────────────┘
                           │
                           ▼                    S1822
        ┌──────────────────────────────────────┐
        │  Calculate cost cost[i] of ith        │
        │     prediction mode PredMode[i]       │
        └──────────────────────────────────────┘
                           │
                           ▼           S1823
              ◇────────────────────────◇   No
              │   cost[i] < mincost ?  │──────┐
              ◇────────────────────────◇      │
                        │ Yes                  │
                        ▼            S1824      │
        ┌──────────────────────────────────────┐  │
        │          mincost = cost[i]            │  │
        │   Set prediction mode to mode whose   │  │
        │ prediction mode value is PredMode[i]  │  │
        └──────────────────────────────────────┘  │
                        │◄─────────────────────────┘
                        ▼            S1825
        ┌──────────────────────────────────────┐
        │              i = i + 1                │
        └──────────────────────────────────────┘
                        │            S1826
              ◇────────────────────────◇   Yes
              │     i < number of      │──────┐
              │    prediction modes ?  │      │
              ◇────────────────────────◇      │
                        │ No                   │
                        ▼                      │
                    ┌─────────────┐            │
                    │     END     │            │
                    └─────────────┘            │
```

S1812

# FIG. 84

START

↓

Generate LoD ⎯ S1901

↓

For each LoD
(Start loop A) ⎯ S1902

↓

For each three-dimensional point
that belongs to focused LoD
(Start loop B) ⎯ S1903

↓

Search for neighboring points of point P ⎯ S1904

↓

Determine prediction value of point P ⎯ S1905

↓

Decode quantization value of point P ⎯ S1906

↓

Calculate inverse quantization value of point P ⎯ S1907

↓

Calculate reconstructed value of point P ⎯ S1908

↓

(End loop B) ⎯ S1909

↓

(End loop A) ⎯ S1910

↓

END

# FIG. 85

START

S1905

Calculate weighted average value of motion vectors of N adjacent points available for prediction, assign to prediction mode 0 ~S2001

Calculate maximum absolute difference value maxdiff of motion vectors of N adjacent points ~S2002

S2003
maxdiff < Thfix ?

No

Yes

Determine prediction mode as prediction mode 0 (average value) ~S2004

Determine prediction mode to be prediction mode of prediction mode value decoded from bitstream ~S2005

END

# FIG. 86

S2005

START

↓

S2011

Assign motion vectors of N adjacent points to prediction mode 1 through prediction mode N in order from those with smaller distances from target point

↓

S2012

Perform arithmetic decoding on prediction mode value using number of prediction modes to which prediction values are assigned

↓

END

# FIG. 87

Input three-dimensional points

# FIG. 88

Bitstream

1100

Decoding unit

LoD generator — 1101

Neighbor searcher — 1102

Predictor — 1103

Prediction mode value (PredMode)

Memory — 1107

Reconstructor — 1106

Arithmetic decoding unit — 1104

Inverse quantizer — 1105

Decoded three-dimensional point

# FIG. 89

```
              ( START )
                  │
                  ▼                    ┌─ S2101
    ┌──────────────────────────────┐
    │ Calculate maximum absolute   │
    │ difference value maxdiff of  │
    │ motion vectors of N adjacent │
    │ points                       │
    └──────────────────────────────┘
                  │
                  ▼          ┌─ S2102
              ╱       ╲              No
            ╱  maxdiff  ╲──────────────────┐
            ╲ < Thfix ? ╱                  │
              ╲       ╱                     │
                  │ Yes                      │
                  ▼      ┌─ S2103            ▼      ┌─ S2105
    ┌──────────────────────────┐  ┌──────────────────────────┐
    │ Set prediction mode fixed│  │ Set prediction mode fixed│
    │ flag to 1 and perform    │  │ flag to 0 and perform    │
    │ arithmetic encoding      │  │ arithmetic encoding      │
    └──────────────────────────┘  └──────────────────────────┘
                  │                            │
                  ▼      ┌─ S2104               ▼      ┌─ S2106
    ┌──────────────────────────┐  ┌──────────────────────────┐
    │ Determine prediction mode│  │ Determine prediction mode│
    │ as prediction mode 0     │  │ by selection             │
    │ (average value)          │  └──────────────────────────┘
    └──────────────────────────┘               │
                  │                            ▼      ┌─ S2107
                  │               ┌──────────────────────────┐
                  │               │ Perform arithmetic       │
                  │               │ encoding on prediction   │
                  │               │ mode value of selected   │
                  │               │ prediction mode          │
                  │               └──────────────────────────┘
                  │◄───────────────────────────┘
                  ▼
               ( END )
```

## FIG. 90

```
maxdiff = -1
for (i = 0; i < N; i++) {
    for (j = i+1; j < N; j++) {
        diff = abs(a[i] − a[j]);
        if (diff > maxdiff) {
            maxdiff = diff;
        }
    }
}
```

## FIG. 91

START

Perform arithmetic decoding on prediction mode fixed flag —S2201

Prediction mode fixed flag == 1? S2202

No

Yes

Determine prediction mode as prediction mode 0 (average value) —S2203

Decode prediction mode value from bitstream —S2204

END

## FIG. 92

```
basemesh_mv_data {
    …
    for (j = 0; j < NumLoD; j++) {
        for (i = 0; i < NumOfPoint[j]; i++) {
            fixedPredMode
            if (!fixedPredMode && NumPredMode[i] > 1)
                PredMode
            for (k = 0; k < 3; k++) {
                mvd_is_zero[k]
                if (mvd_is_zero[k] == 0) {
                    mvd_is_one[k]
                    if (mvd_is_one[k] == 0)
                        mvd_minus2[k]
                    mvd_sign[k]
                }
            }
        }
    }
    …
}
```

## FIG. 93

```
basemesh_mv_data {
    …
    for (j = 0; j < NumLoD; j++) {
        fixedPredMode
        for (i = 0; i < NumOfPoint[j]; i++) {
            if (!fixedPredMode && NumPredMode[i] > 1)
                PredMode
            for (k = 0; k < 3; k++) {
                mvd_is_zero[k]
                if (mvd_is_zero[k] == 0) {
                    mvd_is_one[k]
                    if (mvd_is_one[k] == 0)
                        mvd_minus2[k]
                    mvd_sign[k]
                }
            }
        }
    }
    …
}
```

# FIG. 94

START

S2301

Binarize prediction mode value with truncated unary code using total number of prediction modes M

S2302

Perform arithmetic encoding on binarized data in truncated unary code

S2303

Encode and add total number of prediction modes M as NumPredMode to header

END

# FIG. 95

START

S2401

Decode NumPredMode in header to set total number of prediction modes M

S2402

Perform arithmetic decoding on PredMode using total number of prediction modes M to generate binarized data in truncated unary code

S2403

Calculate prediction mode value from binarized data in truncated unary code

END

# FIG. 96

S1705

START

Calculate weighted average value of motion vectors of N adjacent points available for prediction, assign to prediction mode 0 — S2501

Calculate maximum absolute difference value maxdiff of motion vectors of N adjacent points — S2502

maxdiff < Thfix ? — S2503

**Yes** / **No**

Set prediction mode fixed flag to 1 and perform arithmetic encoding — S2504

Set prediction mode fixed flag to 0 and perform arithmetic encoding — S2506

Determine prediction mode as prediction mode 0 (average value) — S2505

Determine prediction mode by selection — S2507

Perform arithmetic encoding on prediction mode value of selected prediction mode — S2508

END

# FIG. 97

S2507

```
      START
        |
        v
```

S2511

Assign motion vectors of N adjacent points to prediction
mode 1 through prediction mode N in order from those
with smaller distances from target point

```
        |
        v
```

S2512

Calculate cost of each prediction mode,
select prediction mode that minimizes cost

```
        |
        v
       END
```

# FIG. 98

```
                    ┌─────────────┐
                    │    START    │
                    └──────┬──────┘
                           │                        S2512
                           ▼                      ╭─╮
            ┌──────────────────────────┐   S2521
            │    i = 0, mincost = ∞     │
            └──────────────┬───────────┘
                           │◄──────────────────────────────┐
                           ▼                                │
            ┌──────────────────────────┐   S2522           │
            │ Calculate cost cost[i] of ith prediction     │
            │       mode PredMode[i]    │                  │
            └──────────────┬───────────┘                   │
                           ▼           S2523                │
                      ╱─────────────╲            No         │
                    ╱  cost[i] < mincost ? ╲─────────┐      │
                      ╲─────────────╱                │      │
                           │ Yes                     │      │
                           ▼           S2524         │      │
            ┌──────────────────────────┐             │      │
            │      mincost = cost[i]    │             │      │
            │  Set prediction mode to mode whose      │      │
            │ prediction mode value is PredMode[i]    │      │
            └──────────────┬───────────┘             │      │
                           │◄────────────────────────┘      │
                           ▼           S2525                │
            ┌──────────────────────────┐                   │
            │         i = i + 1         │                   │
            └──────────────┬───────────┘                   │
                           ▼           S2526                │
                      ╱─────────────╲         Yes           │
                    ╱   i < number of  ╲──────────────────┘
                    ╲  prediction modes ? ╱
                      ╲─────────────╱
                           │ No
                           ▼
                    ┌─────────────┐
                    │     END     │
                    └─────────────┘
```

# FIG. 99

S1905

START

Perform arithmetic decoding on prediction mode fixed flag — S2601

Prediction mode fixed flag == 1? — S2602

No

Yes

Determine prediction mode as prediction mode 0 (average value) — S2603

Determine prediction mode to be prediction mode of prediction mode value decoded from bitstream — S2604

END

# FIG. 100

START

Select prediction mode — S2601

Perform arithmetic encoding on selected prediction mode — S2602

END

# FIG. 101

```
┌─────────────┐
│    START    │
└─────────────┘
       │
       ▼
```
S2701

```
┌──────────────────────────────────────────────┐
│     Decode prediction mode from bitstream      │
└──────────────────────────────────────────────┘
       │
       ▼
┌─────────────┐
│     END     │
└─────────────┘
```

# FIG. 102

```
basemesh_mv_data {
    …
    for (j = 0; j < NumLoD; j++) {
        for (i = 0; i < NumOfPoint[j]; i++) {
            if (NumPredMode[i] > 1)
                PredMode
            for (k = 0; k < 3; k++) {
                mvd_is_zero[k]
                if (mvd_is_zero[k] == 0) {
                    mvd_is_one[k]
                    if (mvd_is_one[k] == 0)
                        mvd_minus2[k]
                    mvd_sign[k]
                }
            }
        }
    }
    …
}
```

## FIG. 103

START

S2801

Binarize prediction mode value with truncated unary code using total number of prediction modes M

S2802

Perform arithmetic encoding on binarized data in truncated unary code

S2803

Encode and add total number of prediction modes M as NumPredMode to header

END

## FIG. 104

START

S2901

Decode NumPredMode in header to set total number of prediction modes M

S2902

Perform arithmetic decoding on PredMode using total number of prediction modes M to generate binarized data in truncated unary code

S2903

Calculate prediction mode value from binarized data in truncated unary code

END

# FIG. 105

S1705

```
START
```

↓

**S3001**

Calculate weighted average value of motion vectors of N adjacent points available for prediction, assign to prediction mode 0

↓

**S3002**

Determine prediction mode by selection

↓

**S3003**

Perform arithmetic encoding on prediction mode value of selected prediction mode

↓

```
END
```

# FIG. 106

S2507

```
START
```

↓

**S3011**

Assign motion vectors of N adjacent points to prediction mode 1 through prediction mode N in order from those with smaller distances from target point

↓

**S3012**

Calculate cost of each prediction mode, select prediction mode that minimizes cost

↓

```
END
```

# FIG. 107

```
            ( START )

                │
                ▼              ┌ S3021
        ┌──────────────────────┐
        │  i = 0, mincost = ∞  │
        └──────────────────────┘
                │
                ▼              ┌ S3022
        ┌──────────────────────────────────┐
        │ Calculate cost cost[i] of ith     │
        │ prediction mode PredMode[i]       │
        └──────────────────────────────────┘
                │
                ▼              ┌ S3023
            ◇ cost[i] < mincost ?  ◇ ─── No ──┐
                │                             │
               Yes                            │
                ▼              ┌ S3024         │
        ┌──────────────────────────────────┐  │
        │      mincost = cost[i]            │  │
        │ Set prediction mode to mode whose │  │
        │ prediction mode value is PredMode[i] │
        └──────────────────────────────────┘  │
                │ ◄───────────────────────────┘
                ▼              ┌ S3025
        ┌──────────────────────┐
        │     i = i + 1        │
        └──────────────────────┘
                │
                ▼              ┌ S3026
            ◇ i < number of prediction modes ? ◇ ─── Yes
                │
               No
                ▼
            ( END )
```

S2512

# FIG. 108

S1905

START

S3101

Determine prediction mode to be prediction mode
of prediction mode value decoded from bitstream

END

# FIG. 109

Prediction value information that encoding device has

| Prediction mode | Prediction value |
|---|---|
| 0 | Average value of a0 and a1 |
| 1 | a1 |
| 2 | a0 |
| 3 | Not available (indefinite value A) |
| 4 | Not available (indefinite value B) |

available

# FIG. 110

| Prediction mode | Binarized data |
|---|---|
| 0 | 0 |
| 1 | 10 |
| 2 | 110 |
| 3 | 1110 |
| 4 | 1111 |

# FIG. 111

Prediction value information that decoding device has

| Prediction mode | Prediction value | |
|---|---|---|
| 0 | Average value of a0 and a1 | available |
| 1 | a1 | |
| 2 | a0 | |
| 3 | Not available (indefinite value C) | |
| 4 | Not available (indefinite value D) | |

# FIG. 112

Prediction value information that encoding device has

| Prediction mode | Prediction value | |
|---|---|---|
| 0 | Average value of a0 and a1 | available |
| 1 | a1 | |
| 2 | a0 | |
| 3 | Initial value (0) | |
| 4 | Initial value (0) | |

# FIG. 113

Prediction value information that decoding device has

| Prediction mode | Prediction value | |
|---|---|---|
| 0 | Average value of a0 and a1 | available |
| 1 | a1 | |
| 2 | a0 | |
| 3 | Initial value (0) | |
| 4 | Initial value (0) | |

FIG. 114

| Prediction mode | Prediction value |
|:---:|:---:|
| 0 | Initial value (0) |
| 1 | Initial value (0) |
| 2 | Initial value (0) |
| 3 | Initial value (0) |
| 4 | Initial value (0) |

FIG. 115

| Prediction mode | Prediction value |
|:---:|:---:|
| 0 | Average value of a0 and a1 |
| 1 | a1 |
| 2 | a0 |
| 3 | Initial value (0) |
| 4 | Initial value (0) |

# FIG. 116

Prediction value information that encoding device has

| Prediction mode | Prediction value | |
|---|---|---|
| 0 | Average value of a0 and a1 | available |
| 1 | a1 | |
| 2 | a0 | |
| 3 | New predictor | |
| 4 | Initial value (0) | |

# FIG. 117

Prediction value information that decoding device has

| Prediction mode | Prediction value | |
|---|---|---|
| 0 | Average value of a0 and a1 | available |
| 1 | a1 | |
| 2 | a0 | |
| 3 | New predictor | |
| 4 | Initial value (0) | |

# FIG. 118

Prediction value information that encoding device has

| Prediction mode | Prediction value | |
|---|---|---|
| 0 | Average value of a0 and a1 | available |
| 1 | a1 | |
| 2 | a0 | |
| 3 | Intermediate value | |
| 4 | Initial value (0) | |

# FIG. 119

Prediction value information that decoding device has

| Prediction mode | Prediction value | |
|---|---|---|
| 0 | Average value of a0 and a1 | available |
| 1 | a1 | |
| 2 | a0 | |
| 3 | Intermediate value | |
| 4 | Initial value (0) | |

# FIG. 120

Prediction value information that encoding device has

| Prediction mode | Prediction value | |
|---|---|---|
| 0 | Average value of a0 and a1 | available |
| 1 | a1 | |
| 2 | a0 | |
| 3 | Value α | |
| 4 | Initial value (0) | |

# FIG. 121

Prediction value information that decoding device has

| Prediction mode | Prediction value | |
|---|---|---|
| 0 | Average value of a0 and a1 | available |
| 1 | a1 | |
| 2 | a0 | |
| 3 | Value α | |
| 4 | Initial value (0) | |

# FIG. 122

Prediction value information that encoding device has

| Prediction mode | Prediction value | |
|---|---|---|
| 0 | Average value of a0 and a1 | available |
| 1 | a1 | |
| 2 | a0 | |
| 3 | New predictor 1 | |
| 4 | New predictor 2 | |

# FIG. 123

Prediction value information that decoding device has

| Prediction mode | Prediction value | |
|---|---|---|
| 0 | Average value of a0 and a1 | available |
| 1 | a1 | |
| 2 | a0 | |
| 3 | New predictor 1 | |
| 4 | New predictor 2 | |

# FIG. 124

Prediction value information that encoding device has

| Prediction mode | Prediction value | |
|---|---|---|
| 0 | Average value of a0 and a1 | available |
| 1 | a1 | |
| 2 | a0 | |
| 3 | Intermediate value | |
| 4 | Maximum value | |

# FIG. 125

Prediction value information that decoding device has

| Prediction mode | Prediction value | |
|---|---|---|
| 0 | Average value of a0 and a1 | available |
| 1 | a1 | |
| 2 | a0 | |
| 3 | Intermediate value | |
| 4 | Maximum value | |

# FIG. 126

Prediction value information that encoding device has

| Prediction mode | Prediction value | |
|---|---|---|
| 0 | Average value of a0 and a1 | available |
| 1 | a1 | |
| 2 | a0 | |
| 3 | New prediction value A | |
| 4 | Initial value (0) | |

# FIG. 127

Prediction value information that decoding device has

| Prediction mode | Prediction value | |
|---|---|---|
| 0 | Average value of a0 and a1 | available |
| 1 | a1 | |
| 2 | a0 | |
| 3 | New prediction value A | |
| 4 | Initial value (0) | |

# FIG. 128

S1705

```
                    START
                      │
                      ▼
┌──────────────────────────────────┐  S3201
│ Set initial values (for example, │
│ value 0) for prediction values of│
│        all prediction modes      │
└──────────────────────────────────┘
                      │
                      ▼
┌──────────────────────────────────┐  S3202
│    Calculate weighted average    │
│   value of motion vectors of N   │
│  adjacent points available for   │
│ prediction, assign to prediction │
│             mode 0               │
└──────────────────────────────────┘
                      │
                      ▼
┌──────────────────────────────────┐  S3203
│   Calculate maximum absolute     │
│  difference value maxdiff of     │
│  motion vectors of N adjacent    │
│             points               │
└──────────────────────────────────┘
                      │
                      ▼
            ╱ S3204 ╲
           ╱ maxdiff  ╲        No
           ╲ < Thfix ? ╱ ───────────────┐
            ╲         ╱                  │
              │ Yes                      │
              ▼                          ▼
┌──────────────────────────┐  S3205  ┌──────────────────────────┐  S3207
│ Set prediction mode fixed│         │ Set prediction mode fixed│
│ flag to 1 and perform    │         │ flag to 0 and perform    │
│   arithmetic encoding    │         │   arithmetic encoding    │
└──────────────────────────┘         └──────────────────────────┘
              │                          │
              ▼                          ▼
┌──────────────────────────┐  S3206  ┌──────────────────────────┐  S3208
│ Determine prediction mode│         │ Determine prediction mode│
│   as 0 (average value)   │         │      by selection        │
└──────────────────────────┘         └──────────────────────────┘
              │                          │
              │                          ▼
              │              ┌──────────────────────────┐  S3209
              │              │ Perform arithmetic       │
              │              │ encoding on prediction   │
              │              │ mode value of selected   │
              │              │   prediction mode        │
              │              └──────────────────────────┘
              │                          │
              ▼◄─────────────────────────┘
            END
```

# FIG. 129

S3208

```
         ┌─────────────┐
         │    START    │
         └──────┬──────┘
                │
                ▼                                    S3211
┌────────────────────────────────────────────────────────┐
│  Assign motion vectors of N adjacent points to prediction│
│  mode 1 through prediction mode N in order from those    │
│     with smaller distances from target point             │
└────────────────────────┬───────────────────────────────┘
                         │
                         ▼                            S3212
┌────────────────────────────────────────────────────────┐
│  Detect prediction modes to which prediction values are  │
│       not assigned and assign prediction values          │
└────────────────────────┬───────────────────────────────┘
                         │
                         ▼                            S3213
┌────────────────────────────────────────────────────────┐
│         Calculate cost of each prediction mode,          │
│        select prediction mode that minimizes cost        │
└────────────────────────┬───────────────────────────────┘
                         │
                         ▼
                 ┌─────────────┐
                 │     END     │
                 └─────────────┘
```

# FIG. 130

# FIG. 131

```
┌──────────┐
│  START   │
└────┬─────┘
     ↓
┌─────────────────────────────────┐
│         Generate LoD            │── S3301
└─────────────────────────────────┘
     ↓
┌─────────────────────────────────┐
│ Decode prediction mode value and│── S3302
│   quantization value of point P │
└─────────────────────────────────┘
     ↓
┌─────────────────────────────────┐
│         For each LoD            │── S3303
│       (Start loop A)            │
└─────────────────────────────────┘
     ↓
┌─────────────────────────────────┐
│ For each three-dimensional point│── S3304
│   that belongs to focused LoD   │
│        (Start loop B)           │
└─────────────────────────────────┘
     ↓
┌─────────────────────────────────┐
│ Search for neighboring points of│── S3305
│            point P              │
└─────────────────────────────────┘
     ↓
┌─────────────────────────────────┐
│ Determine prediction value of   │── S3306
│            point P              │
└─────────────────────────────────┘
     ↓
┌─────────────────────────────────┐
│Calculate inverse quantization   │── S3307
│        value of point P         │
└─────────────────────────────────┘
     ↓
┌─────────────────────────────────┐
│Calculate reconstructed value of │── S3308
│            point P              │
└─────────────────────────────────┘
     ↓
┌─────────────────────────────────┐
│         (End loop B)            │── S3309
└─────────────────────────────────┘
     ↓
┌─────────────────────────────────┐
│         (End loop A)            │── S3310
└─────────────────────────────────┘
     ↓
┌──────────┐
│   END    │
└──────────┘
```

# FIG. 132

S3306

START

S3321

Set initial values (for example, value 0) for prediction values of all prediction modes

S3322

Calculate weighted average value of motion vectors of N adjacent points available for prediction, assign to prediction mode 0

S3323

Assign motion vectors of N adjacent points to prediction mode 1 through prediction mode N in order from those with smaller distances from target point

S3324

Detect prediction modes to which prediction values are not assigned and assign prediction values

S3325

Calculate prediction value predicted in prediction mode of decoded prediction mode value

END

# FIG. 133

START

S3401

Detect number P of prediction modes to which prediction values are not assigned

S3402

P > 0 ?

No

Yes

S3403

Additionally assign one prediction value

END

# FIG. 134

START

S3501

Detect number P of prediction modes to
which prediction values are not assigned

S3502

P > 0 ?

No

Yes

S3503

Additionally assign one prediction value

S3504

P = P - 1

END

# FIG. 135

```
                    ┌─────────┐
                    │  START  │
                    └─────────┘
                         │
                         ▼                    S3601
          ┌─────────────────────────────────┐
          │ Detect number P of prediction   │
          │ modes to which prediction       │
          │ values are not assigned         │
          └─────────────────────────────────┘
                         │
                         ▼                    S3602
          ┌─────────────────────────────────┐
          │            r = 0                 │
          └─────────────────────────────────┘
                         │
         ┌───────────────┤
         │               ▼            S3603
         │          ╱─────────────╲
         │        ╱                 ╲      No
         │       ╱  P > 0 and r < R ? ╲──────────┐
         │        ╲                 ╱            │
         │          ╲─────────────╱              │
         │               │ Yes                   │
         │               ▼              S3604     │
         │  ┌──────────────────────────────────┐ │
         │  │ Additionally assign one          │ │
         │  │ prediction value                 │ │
         │  └──────────────────────────────────┘ │
         │               │              S3605     │
         │  ┌──────────────────────────────────┐ │
         │  │           P = P - 1              │ │
         │  └──────────────────────────────────┘ │
         │               │              S3606     │
         │  ┌──────────────────────────────────┐ │
         │  │           r = r + 1              │ │
         │  └──────────────────────────────────┘ │
         │               │                        │
         └───────────────┘                        │
                                                  ▼
                                           ┌─────────┐
                                           │   END   │
                                           └─────────┘
```

# FIG. 136

(Points)      (LoD)

a0     a1     a2      LoD0

a3     a4     a5      LoD1

a6    a7    a8      LoD2

# FIG. 137

| Prediction mode | Prediction value |
|:---:|:---:|
| 0 | b1 |
| 1 | a2 |
| 2 | a1 |
| 3 | a0 |

→ Calculate median value

# FIG. 138

(Points)      (LoD)

a0     a1     a2      LoD0

b0     b1     b2      LoD1

c0    c1    c2      LoD2

## FIG. 139

| Prediction mode | Prediction value |
|:---:|:---:|
| 0 | a1 |
| 1 | a2 |
| 2 | b1 |
| 3 | a0 |

Median value

Change assignment of prediction values

## FIG. 140

| Prediction mode | Prediction value |
|:---:|:---:|
| 0 | a1 |
| 1 | b1 |
| 2 | a2 |
| 3 | a0 |

Median value

Change assignment of prediction values

## FIG. 141

| Prediction mode | Prediction value |
|:---:|:---:|
| 0 | b1 |
| 1 | a2 |
| 2 | a1 |
| 3 | a0 |

Calculate statistical information

## FIG. 142

| Prediction mode | Prediction value |
|:---:|:---:|
| 0 | a1 |
| 1 | a2 |
| 2 | b1 |
| 3 | a0 |

Change assignment of prediction values based on statistical information

## FIG. 143

Three-dimensional point a to be encoded

(Frame to be encoded)

## FIG. 144

| Prediction mode | Prediction value |
|:---:|:---:|
| 0 | 0 (no prediction) |
| 1 | Average value of mv0, mv1, and mv2 |
| 2 | mv0 |
| 3 | mv1 |
| 4 | mv2 |

# FIG. 145

temporal mv

Corresponding point a'
in reference frame

(Reference frame)

# FIG. 146

| Prediction mode | Prediction value |
|---|---|
| 0 | 0 (no prediction) |
| 1 | Average value of mv0, mv1, and mv2 |
| 2 | mv0 |
| 3 | mv1 |
| 4 | mv2 |
| 5 | temporal mv |

## FIG. 147

# FIG. 148

```
basemesh_header {
   …
   MGSize
   …
}
```

# FIG. 149

```
basemesh_mv_data {
   …
   for (j = 0; j < NumLoD; j++) {
      for (i = 0; i < NumOfPoint[j]; i = i+ MGSize) {
         if (maxdiff >= Thfix[i] && NumPredMode[i] > 1)
            PredMode
         for (mg = 0; mg < MGSize; mg++) {
            for (k = 0; k < 3; k++) {
               mvd_is_zero[k]
               if (mvd_is_zero[k] == 0) {
                  mvd_is_one[k]
                  if (mvd_is_one[k] == 0)
                     mvd_minus2[k]
                  mvd_sign[k]
               }
            }
         }
      }
   }
   …
}
```

# FIG. 150

START

S3701

Determine prediction mode on per group basis from plurality of predetermined prediction modes

S3702

Transmit information indicating prediction mode, total number of predetermined prediction modes to decoding device

END

# FIG. 151

START

S3801

Receive information indicating prediction mode, total number of predetermined prediction modes from encoding device

S3802

Determine prediction mode to be used for decoding motion vector to be prediction mode indicated in information received, using total number of predetermined prediction modes

END

## INTERNATIONAL SEARCH REPORT

| International application No. |
|---|
| **PCT/JP2024/024204** |

### A. CLASSIFICATION OF SUBJECT MATTER

*G06T 9/00*(2006.01)i; *H04N 19/52*(2014.01)i; *H04N 19/54*(2014.01)i
FI:    G06T9/00; H04N19/52; H04N19/54

According to International Patent Classification (IPC) or to both national classification and IPC

### B. FIELDS SEARCHED

Minimum documentation searched (classification system followed by classification symbols)

G06T9/00; H04N19/52; H04N19/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/211462 A1 (HYUNDAI MOTOR COMPANY) 06 October 2022 (2022-10-06) paragraphs [0034], [0035] | 1-14 |
| A | WO 2019/240215 A1 (PANASONIC INTELLECTUAL PROPERTY CORPORATION OF AMERICA) 19 December 2019 (2019-12-19) paragraphs [0674]-[0676] | 1-14 |
| E, A | JP 2024-97467 A (KDDI CORPORATION) 19 July 2024 (2024-07-19) paragraphs [0052]-[0059], [0100]-[0102], [0106], [0107] | 1-14 |

☐ Further documents are listed in the continuation of Box C.    ☑ See patent family annex.

| | | |
|---|---|---|
| * | Special categories of cited documents: | "T"   later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"   document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&"   document member of the same patent family |
| "P" | document published prior to the international filing date but later than the priority date claimed | |

| Date of the actual completion of the international search | Date of mailing of the international search report |
|---|---|
| **26 August 2024** | **03 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/024204**

| Patent document cited in search report | | | Publication date (day/month/year) | Patent family member(s) | Publication date (day/month/year) |
|---|---|---|---|---|---|
| WO | 2022/211462 | A1 | 06 October 2022 | JP 2024-513431 A paragraphs [0021], [0022] US 2024/0022766 A1 paragraphs [0035], [0036] KR 10-2022-0137548 A CN 117044209 A | |
| WO | 2019/240215 | A1 | 19 December 2019 | US 2021/0084289 A1 paragraphs [0783]-[0785] EP 3809373 A1 CN 112262412 A KR 10-2021-0018278 A | |
| JP | 2024-97467 | A | 19 July 2024 | (Family: none) | |

Form PCT/ISA/210 (patent family annex) (July 2022)

**EP 4 742 160 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006187015 A